# EUROPEAN PATENT APPLICATION

(11) **EP 0 966 145 A2**
(43) Date of publication of application: **22.12.1999**
(21) Application number: 99870128.8
(22) Date of filing: 21.06.1999
(51) Int. Cl.: H04M 7/00, H04L 12/66

(54) **IP telephony gateway**

(30) Priority: 19.06.1998 US 90038 P
(71) Applicant: Nortel Networks Corporation, Montreal, Quebec H2Y 3Y4 (CA)
(72) Inventor: Brivet, Mayeul, 94350 Villiers sur Marne (FR); Tripps, John, 75004 Paris (FR); Aubry, Isabelle c/o Nortel Europe S.A., Bussy-St-Georges, 77608 Marne-la-Vallée (FR)
(74) Representative: Bird, William Edward

(57) **Abstract**

The present invention provides an IP telephony gateway. According to a first aspect of the invention, the gateway provides communications between a switched circuit network (SCN) and an IP network. The gateway can handle calls between clients on the switched circuit network and IP clients on the IP network. The gateway provides supplementary call services/features for calls to/from IP clients on the IP network, thus providing IP clients with similar features to those that are available to terminals on a PBX. The gateway is preferably a PBX which supports the supplementary services/features.

Advantageously, the gateway can also provide supplementary call services/features to calls between IP clients on the IP network. This can be achieved by routing call control signaling for IP client - IP client calls via the gateway where the services can be controlled.

A further aspect of the invention provides an IP network in which IP clients have access to a range of supplementary call features/services. At least one of the supplementary features/services is provided by a gateway, such as a PBX, at an interface to the IP network. A call from an lP client is routed via the gateway to apply the supplementary feature/service.

## Description

The present invention relates to an IP line side IP telephony gateway and a network using the same as well as to methods of operating the gateway and the network, in particular to methods and apparatus for providing supplementary services to IP telephony networks.

### TECHNICAL BACKGROUND

Data networks operators, cable TV operators and other carriers want to offer customers good voice quality and telephony services over their IP networks. To achieve this goal, it is required to provide IP terminals (either client software running on PCs or specialized "IP phones") having the same level of functionality that is available to sets connected to a PBX. As carriers build new voice networks based on IP Telephony, they need a bridge to the legacy circuit switched networks. IP Telephony gateways provide this bridge between traditional circuit switched networks and emerging voice services based on IP networks and technology. A Line-side Gateway enables a circuit switched central office switch to provide line-side services to terminals deployed on IP data networks (i.e. IP-based replacement ofthe subscriber loop access). A Trunk-side Gateway enables a circuit switched central office switch to route inter-switch traffic via IP data networks, bypassing circuit switched trunk facilities.

Various terms such as "Internet Telephony", "Voice Over IP" (VolP), and "Voice and Fax over IP" (XolP) are used in the IP Telephony industry to describe IP network based telephony services. With respect to this invention, the term "IP Telephony" is used to describe voice and fax services transported over managed IP networks engineered for quality IP Telephony services as opposed to "Internet Telephony" which refers to voice & data transported over the unmanaged Internet.

The Internet is a collection of independent networks with high capacity in only some of the participating networks, limited security, service disruptions, and no standardized means to guarantee the Quality of Service (QoS) between the networks, or even within a network. Of these issues, the inability to guarantee a QoS across the networks is the main issue impacting telephony services such as voice which requires low latency in IP packet transmissions and fax which requires that all packets be delivered without losing information. As such, the Internet currently provides a poor platform for telephony services.

Managed IP networks, on the other hand, which typically have high capacity and can manage QoS criteria such as end to end latency and packet loss, provide a better platform for IP Telephony services. Hence, IP Telephony services will only be deployed successfully in the near term on managed IP networks.

IP Telephony began in about 1995 with PC hobbyist's using proprietary solutions to bypass the Public Switched Telephony Network (PSTN) by making PC to PC calls free through the Internet. The calling party typically accesses network database to identify PCs which are on-line and available to call. The calls are characterized by unpredictable voice quality and high latency due to the dependency on the Internet as the transport network. In order to capitalize on the difference in tariff structures between the PSTN and the Internet, IP Telephony Service Providers have launched IP Telephony services that can be used by the general public as well as businesses to make and receive long distance calls from standard phones and fax machines at significantly reduced rates. The calling party uses a multi-stage dialing plan to dial a local or toll free number to access the IP Telephony Service Provider's network, enter a billing ID such as a calling card or authorization code, and then dial the destination to be called. With Fax machines, an autodialer at the calling party's premises must be used with the IP Telephony service in order for it to be transparent to the Fax machine. As well, IP Telephony Gateway's must be positioned between circuited switched network and the IP network as a bridge between the packet switched IP network and the circuit switched world. As the user interface and voice quality of PC-based IP Telephony solutions continues to improve, the volume of IP Telephony calls originating on a device in the IP network and terminating to a device in the circuit switched network (and visa versa) will continue to increase. The device in the circuit switched network is typically a standard phone or fax machine. A PC running IP Telephony Client software is currently used as the device in the IP network. However, vendors are beginning to introduce IP Telephony terminals which give the user the option of using a standard phone interface to an IP Telephony service. An example of such as terminal is the M9617 USB phone recently introduced by Nortel Networks, Canada. An IP Telephony Gateway is required as a bridge between the IP network and the circuit switched network.

It is an object of the present invention to provide an IP line side IP telephony gateway and a network using the same as well as to methods of operating the gateway and the network which do not suffer from the problems of the prior art.

It is a further object of the present invention to provide an IP line side IP telephony gateway and a network using the same as well as to methods of operating the gateway and the network which allow optimum use of resources of the IP telephony gateway.

It is still a further object of the present invention to provide an IP line side IP telephony gateway and a network using the same as well as to methods of operating the gateway and the network provide an economical integration of components.

It is yet a further object of the present invention to provide an IP line side IP telephony gateway and a network using the same as well as to methods of operating the gateway and the network in particular to methods and apparatus for providing supplementary services to IP telephony networks.

### SUMMARY OF THE INVENTION

### Supplementary services/features

According to a first aspect of the invention, a gateway provides communications between a switched circuit network (SCN) and an IP network. The gateway can handle calls between clients on the switched circuit network and IP clients on the IP network. The gateway provides supplementary call services/features for calls to/from IP clients on the IP network, thus providing IP clients with similar features to those that are available to terminals on a PBX. The gateway is preferably a PBX which supports the supplementary services/features.

Advantageously, the gateway can also provide supplementary call services/features to calls between IP clients on the IP network. This can be achieved by routing call control signaling for IP client - IP client calls via the gateway where the services can be controlled.

A further aspect of the invention provides an IP network in which IP clients have access to a range of supplementary call features/services. At least one of the supplementary features/services is provided by a gateway, such as a PBX, at an interface to the IP network. A call from an IP client is routed via the gateway to apply the supplementary feature/service.

A switch/PBX is connected to an IP network and provides at least one supplementary call feature/service to an IP client in the IP network.

The features/services can be one or more of the following:
- originating restrictions;
- terminating restrictions;
- call forwarding (CFB, CFNA, CFU, CFNR);
- calling line identification (CLID);
- CLID restriction;
- calling name display;
- call transfer.
While call signaling for IP client - IP client calls is routed via the gateway, voice traffic is preferably routed directly between the IP terminals without passing via the gateway. When voice traffic for IP client - IP client calls is routed via the gateway, the gateway can arrange to route the voice traffic directly between an input and an output of the gateway without the need for a double decode/encode of the voice traffic thereby avoiding voice quality degradation. Advantageously some supplementary services can be provided by another part of the IP network. Advantageously, supplementary services can be provided by a gatekeeper. This can be achieved by signaling between the gateway and the gatekeeper or directly between the IP client and the gatekeeper. Advantageously, services can be provided by an application connected to the IP network, with signaling between the gateway and application via the IP network to apply the service.

### Gateway ports

According to a further aspect of the invention a connection between a gateway and an IP client in an IP network is provided by an IP line from the gateway. The gateway has a pool of IP line ports which can be used for the connections to the IP clients. The IP line ports are a shared resource which are assigned to a client for the duration of an IP call and then released back to the pool of IP line ports to be used by another client. Thus an IP line port is assigned to an IP line on a call-by-call basis. This reduces the number of ports that are required to serve a given number of IP clients in the IP network.

Preferably, while an IP line port is assigned to a client, the IP line port assumes the attributes of the client's line data. Thus subscriber services such as call forwarding, calling line ID and specialized dialing plans can be processed for that client while that client's line data is associated with the IP line port.

An IP client can be identified by a virtual directory number (VDN) and an available port by a physical terminal number.

The core switch can store information about the state of IP clients that it is serving, such as whether they are busy. Thus, upon receiving an incoming call from the switched circuit network, which is directed to a busy IP client, the switch can provide an appropriate treatment and reduce signaling within the system.

### Address resolution

According to a further aspect of the invention, conversion between address formats for calls to IP clients is performed at a gateway to an IP network. The conversion is between the LAN alias or directory number (DN) of a terminal and an IP address. According to one embodiment, an address table is downloaded from a gatekeeper for use at the gateway. According to a second embodiment the gateway stores a list of most recently used and/or most recently called addresses. In both embodiments, if an address cannot be converted using the information stored at the gateway, a request is made to the gatekeeper. In a preferred embodiment a gatekeeper handles all address resolution and a DN table is uploaded from the gateway to the gatekeeper. In further embodiments, the list of registered DN's is continuously updated.

The term call is intended to cover calls which convey voice, fax or data. The present invention relates to a multimedia IP line side gateway, preferably having a plurality of ports, e.g. 24 ports ITG Platform hardware, for example providing an H.323 Voice Services Gateway. The multimedia line side gateway according to the present invention may provide the following capabilities:
IP terminal to PSTN calls,
PSTN to IP terminal calls,
direct medium IP to IP calls with signaling via the Line Side Gateway,
direct medium IP to IP calls with signaling via the multimedia IP Line Side and a Trunk Side Gateway,
no double encoding/decoding for basic calls and supplementary services.

IP Line ports on the ITG card are a shared resource (concentration) within an multimedia switch partition.

A plurality of IP Line ports per ITG card (e.g. 16 or 24) depending on the required encoding.
voice, fax and modem call are supported. Supported modem protocols include V.21, V.22, V.22bis, V.32, V.32bis and V.34. Fax group 3 is supported as well.
echo cancellation, silence suppression, comfort noise injection

G.723. 1, G.729, G.729A, G.711 (A and MU laws) standard codecs are supported.

Address translations, routing, networking are supported.
The following Line Side features are also implemented:
access restrictions
billing capabilities

On board RADIUS Client for performance statistics.
multi-partition operation on the core switch, ITG cards being exclusive resources for each partition.

Supplementary services:
call diversion to Voice Mail as well as other destinations
call forward all calls
call forward busy (Hunt)
call forward no answer
call forward not registered
activation of call forward all calls as per H.450.3 Diversion standard
H.450.2 Call Transfer with and without consultation.
CLIP/CLIR
Calling/Connected Name
H.323 Call Waiting

### BRIEF DESCRIPTION OF THE DRAWINGS

Fig. 1 shows an arrangement of an IP telephony gateway in accordance with the present invention.

Figs. 2A to C, show, respectively, a conventional circuit switched telephone network, a network with IP telephony gateways in accordance with the present invention, and a network with trunk side gateways.

Fig. 3 is a schematic diagram of an integrated IP telephony gateway in accordance with an embodiment of the present invention.

Figs. 4A and B are schematic call routings for a calls involving an IP telephony gateway in accordance with the present invention.

Fig. 5 is a schematic representation of a network in accordance with an embodiment of the present invention with an IP telephony gateway in accordance with the present invention

Fig. 6 shows the routing of call components through an IP network in accordance with the present invention when the called and calling IP terminals are in different zones.

Fig. 7 is a schematic representation of a gateway in accordance with an embodiment of the present invention showing the connections to the ITG cards.

Fig. 8 is a schematic representation of connections between a core switch and ITG cards in accordance with an embodiment of the present invention.

Fig. 9. is a schematic representation of modules on an ITG card in accordance with an embodiment of the present invention.

Fig. 10 is a schematic representation of one way of connecting a gateway in accordance with the present invention and a gatekeeper.

Fig. 11 shows the protocol layers of a gatekeeper interface in accordance with an embodiment of the present invention.

Fig. 12 is a schematic representation of the connections between a gatekeeper interface in accordance with an embodiment of the present invention and ITG card modules.

Figs. 13 to 21 show messaging between gatekeeper and gateway in accordance with embodiments of the present invention.

Fig. 22 shows call paths for a call between an IP terminal and an SCN terminal for IP network in accordance with an embodiment of the present invention.

Figs. 23 and 24 show two different call paths for a call between two IP terminals in an IP network in accordance with the present invention.

Fig. 25 shows call paths for a call between two IP terminals in an IP network in accordance with the present invention when the IP terminals are in different zones.

Figs. 26 and 27 show message paths for a call between an SCN set and an IP terminal in accordance with an embodiment of the present invention.

Fig. 28 shows a key for the message flows of Figs. 29 to 34.

Fig. 29 shows SCN to IP call establishment message flows including an incoming IP to MMCS GW call in accordance with an embodiment of the present invention.

Fig. 30 shows a message flow for termination ofthe call shown in Fig. 29.

Fig. 31 shows IP to SCN call establishment message flows in accordance with an embodiment of the present invention.

Fig. 32 shows IP to IP call establishment message flows in accordance with an embodiment of the present invention.

Fig. 33 shows a message flow for release of the call shown in Fig. 32.

Fig. 34 shows IP to IP call establishment message flows in accordance with an embodiment of the present invention when the endpoint IP terminals have different gateways.

Fig. 35 shows a scheme for a supplementary service in an IP network in accordance with an embodiment of the present invention.

Fig. 36 is a key for the message flows of Figs. 37 to 41.

Fig. 37 shows a message flow for call transfer without consultation between two IP clients and an SCN set in accordance with an embodiment of the present invention.

Fig. 38 shows a message flow for call transfer without consultation between an IP client and two SCN sets in accordance with an embodiment of the present invention.

Fig. 39 shows a message flow for call transfer without consultation between three IP clients in accordance with an embodiment of the present invention.

Fig. 40 shows a message flow for call transfer with consultation between three IP clients in accordance with an embodiment of the present invention.

Fig. 41 shows a message flow for call transfer with consultation between two IP clients and an SCN set in accordance with an embodiment of the present invention

Fig. 42 shows an H 450.3 message flow for CFAC in accordance with an embodiment of the present invention.

Fig. 43 shows an H 450.3 message flow for CFAC remote activation in accordance with an embodiment of the present invention.

Fig. 44 shows the internal message flows for a CFAC remote activation in accordance with an embodiment of the present invention.

### Definitions

A basic call provides communication between two terminal devices of a network over which some form of information may be carried, e.g. voice, data, fax, video.

A supplementary service is a service which has no existence unless there is an active basic call.

H.323: ITU-T Recommendation for Packet based multimedia communications systems.

H.225.0: ITU-T Recommendation for Media Stream Packetization and Synchronization on Non-Guaranteed Quality of Service LANs.

H.245.0: ITU-T Recommendation for Control protocol for multimedia communication.

H.450.x: ITU-T Recommendation H.450.1 Line Transmission of non-telephone signals- supplementary services in H.323( .0 Generic functional, .1 call transfer, .2 call diversion)
The following four definitions are H.323 network entities.

Gateway: this H.323 entity provides an interface between H.323 network and non H.323 network (as the Switched Circuit Network). The present invention is not limited to H323 compliant gateways.

Gatekeeper: the Gatekeeper (GK) is an H323 entity on the network that provides address translation and controls access to the network for H323 terminals, Gateways, and Multipoint Control Unit (MCU). The present invention is not limited to H3232 compliant gatekeepers.

IP Client: IP Client is the terminology used in the whole document to name the terminals connected to the IP network (PCs, H.323 Terminal, IP Set, WebPhone, USB phone, or similar).

Zone: A zone is the collection of all endpoints, e.g. H 323 endpoints (IP Client, GW and MCU) managed by a single gatekeeper. A Zone includes at least one IP client, and may or may not include GW or MCUs.
The following four definitions are related to the core switch.

Virtual TN (VTN): VTN is a TN representing an IP Client in the core switch. It is used during call processing to handle particular IP Client capabilities and features.

IPSET: IPSET is used to designate the core switch representation of an IP client.

Physical TN (PTN): PTN is a TN representing one of the ITG cards ports. It is used during call processing to handle signaling as well as paths. There are preferably less PTNs than IP Clients in a system achieving the required concentration.

Phantom Loop: this is a type of superloop which is not associated to hardware physically shipped in the core switch. However, it takes resources as if it were a regular superloop. It is used to define IPSETs.

SCN set: set in the SCN which is not managed by MMCS.
The following two terms are widely used in the document.

MMCS Gateway: this designates the global IP telephony gateway based on the MMCS platform and made of the MMCS core switch and of the ITG cards.

ITG: this designates the ITG card itself.
The following three definitions are related to the ITG cards:

Leader: the leader ITG card is a unique card chosen to be the point of contact for all other ITG cards and for other customers or core switches too. Each leader preferably has to maintain the set of leader/backup leader of other customers or core switches of the network. The leader controls the pool and assignment of IP addresses of its follower cards.

Backup Leader: the backup leader ITG card is a unique card on a customer chosen to step in when, for some reason, the leader is disabled or out of service. The backup leader ITG card has to keep its database in synchronization with the leader card's database.

Follower: all ITG cards which are neither leader nor backup leader are named as follower cards.
The following three definitions are related to networks:

Extranet: it is used to designate a managed IP network engineered for quality IP telephony services (as opposed to internet which refers to the unmanaged IP network).

ELAN: is the core switch 10Base T LAN used for management and for part of the signaling between the core switch and the ITG.

Voice LAN: it is the 10/100 Base T LAN used for IP voice signaling between the ITG and the extranet.
The following two definitions are related to IP clients:

DN: is the digits directory number associated to a VTN in the core switch. It typically has 4 to 7 digits

E.164 number: it is the number of the IP client following the E.164 standard and allowing to uniquely define the IP client.

| **Abbreviations** | |
|---|---|
| ATM | Address Translation Module |
| API | Application Programming Interface. High level language software used as components in the development of an application. |
| ARP | Address Resolution Protocol |
| BCS | Business Communication Set |
| CDR | Call Detail Recording |
| CFAC | Call Forward All Calls |
| CFB | Call Forward Busy |
| CFNA | Call Forward No Answer |
| CFNR | Call Forward Not Registered |
| CFU | Call Forward Unconditional |
| CLS | CLass of Service |
| CPE | Customer Premises Equipment |
| CPU | Central Processing Unit |
| CS | Core Switch |
| DRAM | Dynamic Random Access Memory |
| DN | Directory Number |
| DID | Direct Inward Dialing |
| DSP | Digital Signaling Processor |
| EES | End to End Signaling |
| EDD | Data Dump |
| ELAN | Embedded LAN |
| EPROM | Erasable Programmable Read Only Memory |
| EXUT | Extended Universal Trunk |
| FS | Feature Specification |
| GK | GateKeeper |
| GW | GateWay |
| ICDA | Internal CDr Allowed |
| IE | Information Element |
| IP | Internet Protocol |
| IPLC | IP Line Card |
| IPLL | IP Local Loop |
| IPLS | IP Line Side |
| ISDN | Integrated Services Digital Network |
| ITG | IP Telephony Gateway |
| ITM | Individual Traffic Measurement |
| L/BL/F | Leader/Backup Leader/Follower |
| LAN | Local Area Network |
| MAT | Meridian Administration Tool. Windows 95 application used for configuring the Meridian 1 and MMCS switch. |
| MIX | Meridian Integrated XoiP |
| MMCS | Multimedia Carrier Switch |
| MWI | Message Waiting Indication |
| NPM | Network Protocol Module |
| NTP | Northern Telecom Publication. |
| OA&M | Operations, Administration and Maintenance |
| OS | Operating System |
| PBX | Private Branch eXchange. A telephony switch that is privately owned. |
| PSTN | Public Service Telephony Network |
| PTN | Physical TN |
| QOS | Quality Of Service |
| RADIUS | Remote Authentication Dial-In User Service |
| RFC | Remote Function Call OR Request For Comment |
| RM | Resource Manager |
| SCN | Switched Circuit Network |
| SNMP | System Network Management Protocol |
| SSD | Scan and Signal Distributor |
| TBD | To Be Determined |
| TCP | Transmission Control Protocol |
| TN | Terminal Number |
| TSGM | Telephony SignallinG Module |
| UDP | User Datagram Protocol |
| USB | Universal Serial Bus |
| UUIE | User to User IE |
| VPS | Voice Processor System |
| VTN | Virtual TN |
| WAN | Wide Area Network |
| XoIP | Voice or Fax over IP |
| XDLC | Extended Digital Line Card. |
| XPEC | Expanded Peripheral Equipment Controller Pack |

### DESCRIPTION OF THE ILLUSTRATIVE EMBODIMENTS

The present invention will be described with reference to certain embodiments and drawings but the present invention is not limited thereto but only by the claims. In particular the present invention will be described with reference to the H 323 suite of standards but the present invention is not limited thereto.

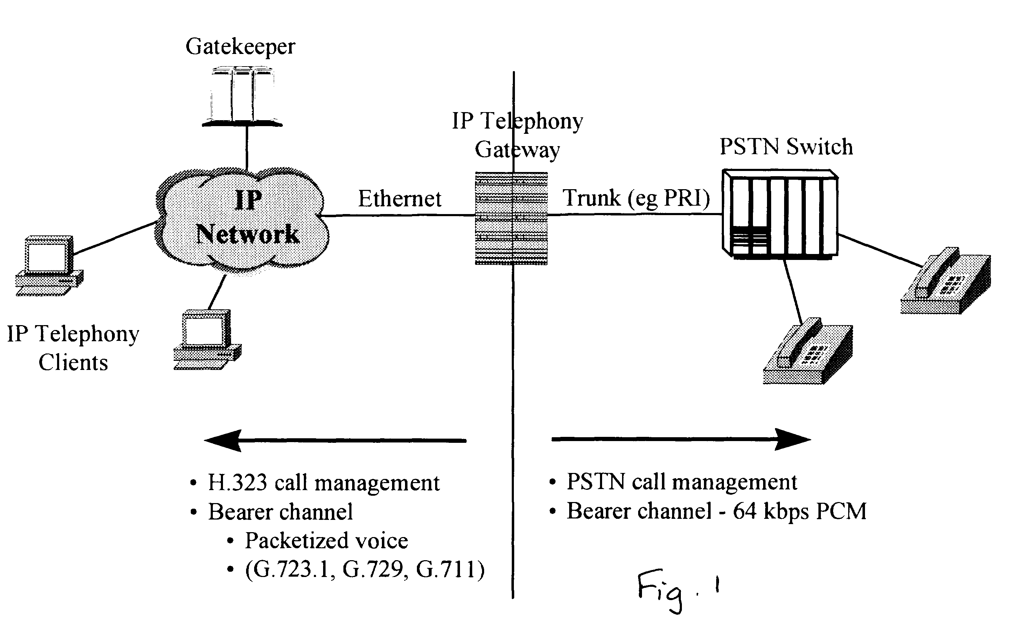

As shown schematically in Fig. 1 an IP Telephony gateway in accordance with the present invention provides a bridge between a circuit switched network and voice services based on an IP network and technology. A basic call originating from a PSTN telephone and terminating on an H.323-based terminal in an IP network is directed to the appropriate IP Telephony Gateway. This gateway performs the following minimum functions:
- translates between transmission formats
- terminates the PSTN signaling protocol and bearer channel
- terminates the H.323 signaling protocols and bearer channel
- provides bearer interworking facilities from the PSTN format (typically 64kbs PCM) to the appropriate IP bearer format implemented on the specific network (typically one of several compressed voice standards listed in the H.323 specifications).
- translates between communication procedures
- manages the PSTN-side call processing and signaling
- locates the correct H.323 gatekeeper for the called party
- originates and manage an H.323 call to the appropriate gatekeeper
A basic call originating from an H.323 terminal and terminating on a PSTN telephone would be handled in the same way in the other direction.

In some embodiments of the present invention the gatekeeper translates between addressing formats and domains. In accordance with the present invention the gateway and gatekeeper functionality can be integrated together into a single unit if needed to simplify deployment in applications such as toll arbitrage.

In support of the initial services envisioned for IP Telephony, IP gateways can appear both on the trunk side and on the line side of a circuit switch such as the MMCS.

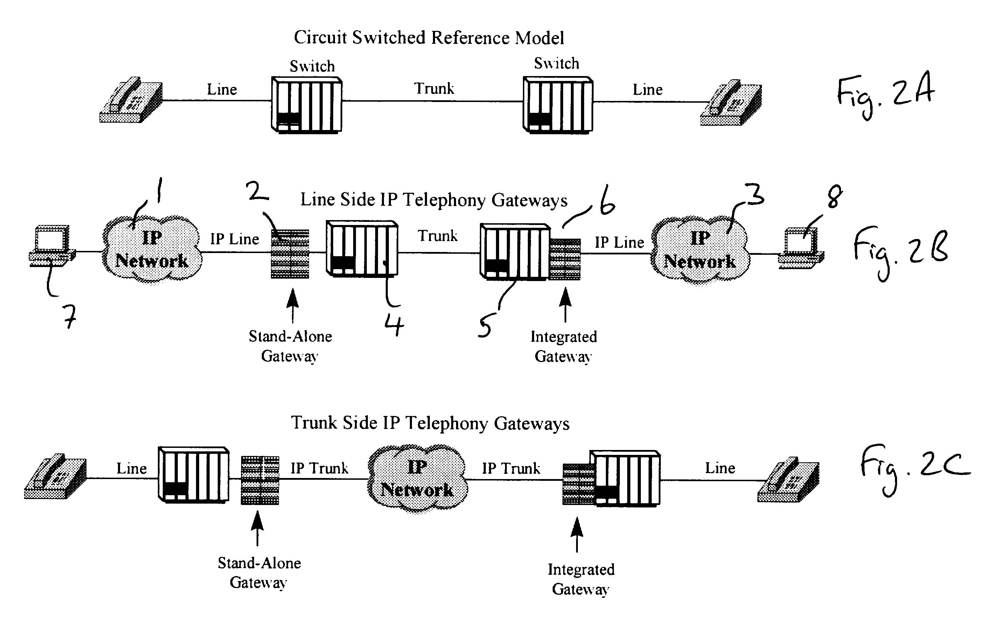

A Trunk-side Gateway (Fig. 2C) enables a circuit switched central office switch to route inter-switch traffic via IP data networks, bypassing circuit switched trunk facilities.

A Line-side Gateway 2, 6 (see Fig. 2B) enables a circuit switched central office switch 4, 5 to provide line-side services to terminals 7, 8 deployed on IP data networks 1, 3 (i.e. IP-based replacement of the subscriber loop access).

An gateway 6 may provide additional call processing services under the control of either an H.323 gatekeeper or a circuit switched office when the Gateway 6 is integrated with a feature rich switch 5, as is the case with embodiments of the present invention involving as it does an MMCS Gateway.

The gatekeeper can play an important central role by routing all call control messaging through it and by using the gatekeeper to provide services such as pre-paid billing, call forwarding leaving the gateways as only protocol. translators The potential advantages of such a Gatekeeper-Centric Architecture are:
- Simplified service provisioning
- Simplified configuration management
- Centralized billing
- Open APls for 3rd party service development
- Single interface point to PSTN IN/AIN
- Single service implementation, accessible to all Gateways
- Lower Gateway intelligence -> cheaper Gateways?
- Faster time to market for new services?
Potential Disadvantages of a Gatekeeper-Centric Architecture are:
- Gatekeeper is single point of failure
- Scalability - network signaling, Gatekeeper processor
- Handling of feature interactions
- Handling of race conditions
- Time to market of initial service offerings
The IP-networks and gateways in accordance with the present invention exploit the advantages of a Gatekeeper-centric architecture while addressing the issues of the centralized Gatekeeper approach.

Applications can be segmented into backhaul applications which utilize IP Trunks and access applications which utilize IP Lines. IP Telephony backhaul and access applications can be offered separately or combined by carriers into a service which utilizes both IP Trunk and IP Line capabilities. The present invention includes several IP trunk backhaul and IP Line access applications.

Corporations typically have separate connections for voice communications for data communications. IP Telephony provides a means for corporations to aggregate all of those connections into a single pipe to achieve savings in connectivity fees. IP Line access applications offer line side services over IP Telephony transport. IP Telephony as an alternative to twisted pair loop technology has value even in cases where it is only utilized in the local loop, with the circuit switched network is still being used for backhaul of the traffic to the destination point in the case of IP Line originated calls, or from the origination point in IP Line terminated calls.

A "virtual second line" utilizes IP Telephony to enable subscribers to be on-line (i.e. have a computer connection to an ISP) while making or receiving voice calls via IP Telephony. A growing number of corporate workers are bringing work home from their office/place of business occasionally after work and on weekends. Many of these workers may need to access their corporate data network to send and receive e-mail, download and upload files, and to access their corporate Intranet or the Internet. If they don't have a second line, they will tie up the family phone while they are on-line to the office. If the worker works part of the work day at home on a casual basis during business hours, the virtual second line will enable him/her to make calls to co-workers while on-line. Home based employees want all of the best residential services and all of the best business services, integrated but separable into small packages at a reasonable price. The business services can be accessed either via a dial up modem connection or an xDSL (or other high speed) connection. The IP Telephony voice line using the gateway and IP network in accordance with the present invention can provide services such as Conference, Transfer, Hold, Message Waiting, Voicemail Access, Class of Service, and private dialing plans.

"Road Warriors" are typically employees of corporations that need access to their corporate networks on a casual or roaming basis. Small Office Home Office (SOHO) subscribers may require their office to move with them (nomadic voice and data) as they move between business locations. In the case of the corporate Road Warrior, voice services delivered to the remote user will encompass the desktop capability that a featured set at the office would have such as Conference, Transfer, Hold, Message Waiting, Voicemail Access, Class of Service, and private dialing plans.

Phones which are part of a MADN group all ring simultaneously when an incoming call is presented to the pilot directory number of the MADN group. Any phone in the MADN group can answer the call. Once the call is answered, all phones in the MADN group stop ringing. This capability can be used in various situations in which multiple phones should ring when a call is presented to a pilot directory number. For example, executives typically have the directory number of their desk phone programmed into a MADN group with their secretary such that the secretary can screen incoming calls. MADN functionality has also been implemented on Service Node platforms to provide a network wide MADN as a "personal number service" in which multiple phones on separate switches can be rung simultaneously when a call is presented to a pilot directory number. However, one major disadvantage of a Service Node-based network wide MADN is that it is expensive to deploy since trunks are tied up to/from the Service Node as well as across the network to the phone that answers the call. In accordance with the present invention IP Telephony can be used to achieve the functionality of both a localized MADN as well as a network wide MADN by using IP Telephony Clients combined in conjunction with the MADN capabilities of the MMCS Gateway. IP Telephony is a much more cost effective approach to network wide MADN since remote IP Telephony Clients can be part of a MADN group without tying up expensive trunk facilities.

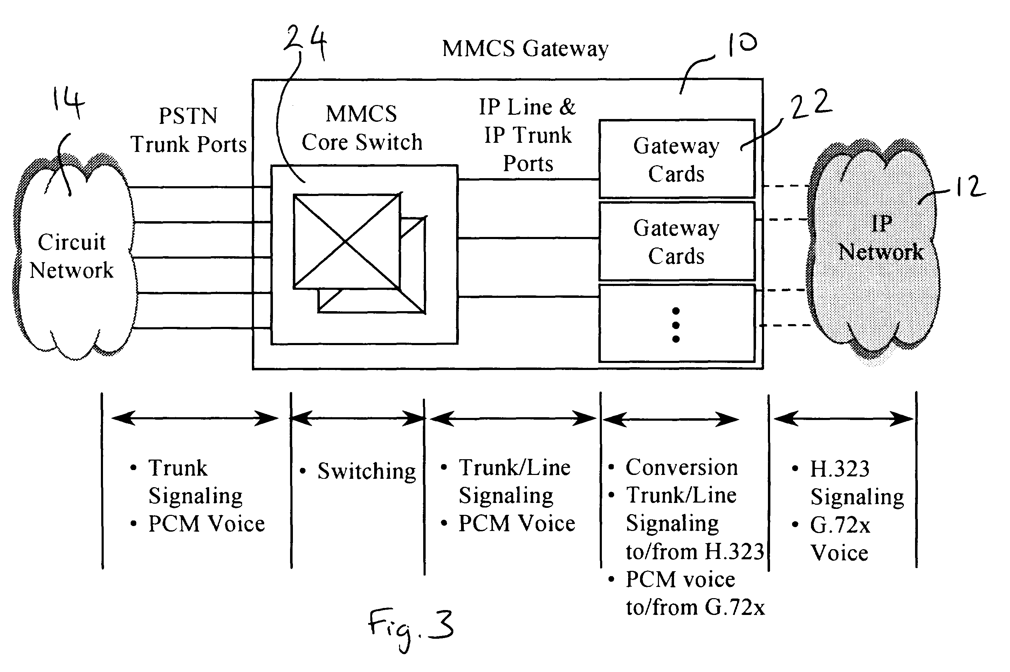

An MMCS Gateway 10 in accordance with an embodiment of the present invention is shown schematically in Fig. 3. It comprises a core switch 24 combined with gateway (ITG) cards 22. The main advantages of the integrated Gateway 10 versus stand-alone adjunct systems are:
1. Cost improvement
2. Integrated OA&M
3. Seamless integration of circuit switched and IP environments -- call processing and OA&M
The MMCS Gateway 10 can achieve the cost improvements and integrated OA&M benefits by integrating the IP Telephony Gateway (ITG) into the MMCS platform. In addition, the MMCS Gateway 10 achieves a more seamless integration ofthe circuit switched and IP networks by tightly coupling the MMCS core switch 24 with the IP Telephony Gateway 22. A call moves seamlessly between the circuit switched and IP environments during the course of the call to handle call setup, tear down, and mid-call features.

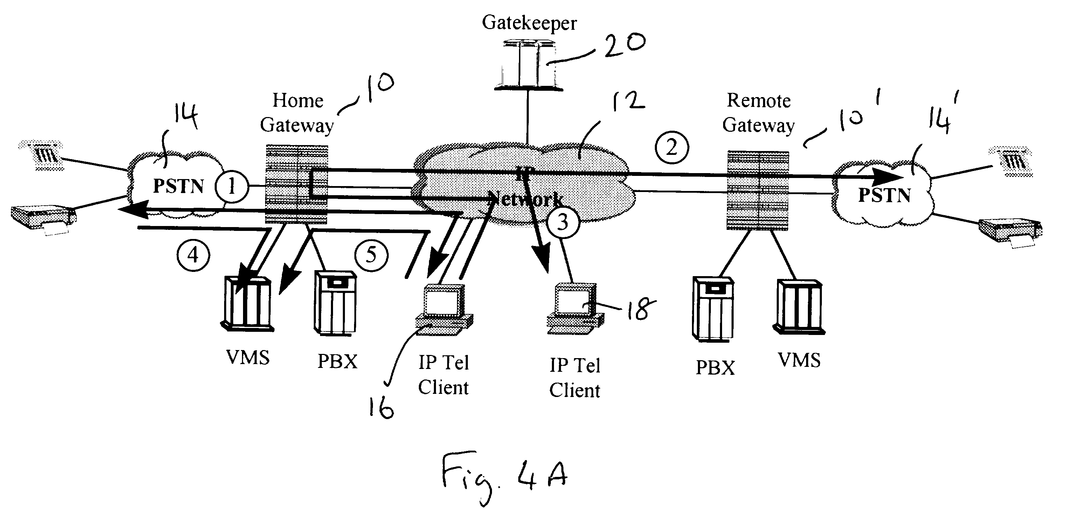

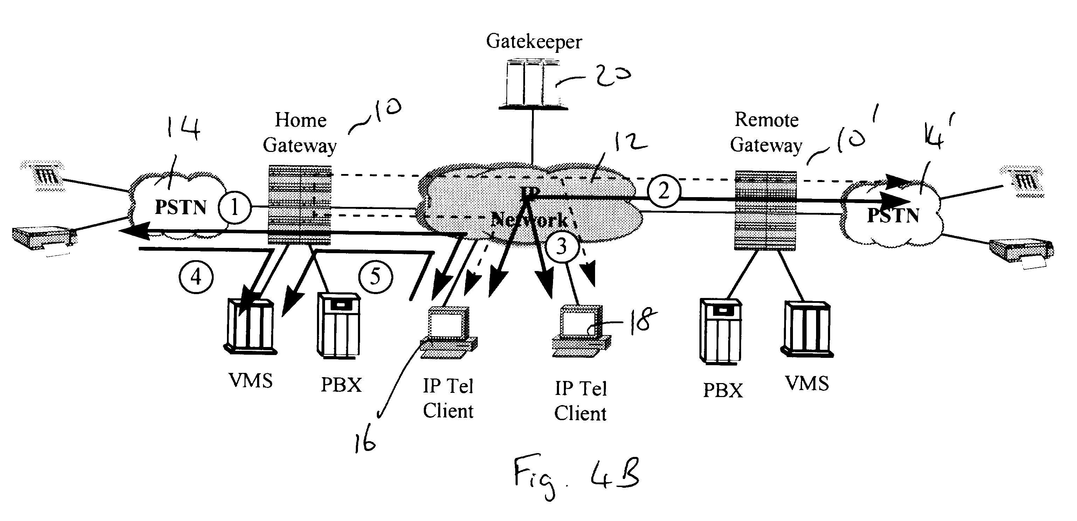

Figs. 4A and B demonstrate certain call scenarios supported by embodiments of the present invention. The call scenarios are identified by the numbers 1 through 5. With the network of Fig. 4A
1. Call Scenarios: (a) PSTN to IP Telephony Client 16, 18 through Home Gateway 10, (b) IP Telephony Client 16, 18 to PSTN through Home Gateway 10. The IP Telephony Client 16, 18 will appear as an "IP Line" on incoming calls from the PSTN and calls outgoing to the PSTN through the Home Gateway 10.
2,3. Call Scenario: All originating calls from an IP Telephony Client are sent to its Home Gateway 10 for processing. If the call is routed by the MMCS 24 back to the IP network 12 to either a Remote Gateway, or another IP Telephony Client, the MMCS 24 will instruct the Gateway cards 22 involved to bypass the G.7xx vocoders ("vocoder bypass") such that the call does not encounter a double encode/decode of the voice and hence suffer voice quality degradation. Note that the terminating IP Telephony Client 16, 18 my have another Home Gateway, and hence, the call may pass through two MMCS Gateways with the vocoders being bypassed.
4. Call Scenario: PSTN to Voice Mail (VMS) - this is an extension to call scenario 1. When a call forwarding condition is detected (Call Forward Busy, Call Forward No Answer, Call Forward Unconditional), the incoming PSTN will be forwarded to a voice mail system attached to the MMCS Gateway 10. Note: The forwarding destination is dependent on the programming of the call forwarding number and hence, does not have to be to voice mail.
5. Call Scenario: Because all calls from an IP Telephony Client 16, 18 pass through the Home Gateway 10, the call forwarding treatment of a call to an IP Telephony Client 16, 18 will be implemented by the call forwarding service logic of that IP Telephony Client's MMCS Home Gateway 10.
Although architecture of Fig. 4A enables access to the MMCS Gateway line side services in all call scenarios without degrading voice quality, the architecture has the disadvantage of tying up two Gateway ports for IP Telephony Client originated calls which terminate back into the IP network 12 either to another IP Telephony Client 16, 18 or to a Remote Gateway 10'. A more ideal situation would be to have the voice packets transmitted directly between the originating IP Telephony Client and the other IP Telephony end point with only the call control signaling passing through the MMCS Gateway 10. This would free up the MMCS Gateway ports for calls to/from the PSTN and is shown in Fig. 4B. In this architecture, the MMCS would play the role of an IP Telephony Gateway for calls to/from the PSTN as well as the role of a call processing server off the IP network 12. The MMCS Gateway 10 server functionality would be similar to that envisioned for an H.323 Gatekeeper under a gatekeeper-routed calls paradigm. For Fig. 4B:
1. Call Scenario: Same as for Fig. 4A.
2,3. Call Scenario: All originating calls from an IP Telephony Client 16, 18 are sent to its Home Gateway 10 for processing. If the call is routed by the MMCS 10 back to the IP network 12 to either a Remote Gateway 10', or another IP Telephony Client 18, 16, the MMCS 10 will instruct the IP Telephony Client 18, 16 to establish the voice path directly to the other IP Telephony end point 16, 18 while continuing to send the call signaling information to the MMCS 10.
4. Call Scenario: Same as for Fig. 4A.
5. Call Scenario: Because the call control signaling for all from an IP Telephony Client 16, 18 passes through the Home Gateway 10, the call forwarding treatment of a call to an IP Telephony Client 16, 18 will be implemented by the call forwarding service logic of that IP Telephony Client's MMCS Home Gateway 10.
The Gatekeeper 10 can comprise the following functions:
1. IP and E164 mapping for trunk operation and for line side access for IP devices on remote Gateways (in another free-calling area) using E164 as the mediation numbering plan for mediation across the network.
2 IP and E164 mapping service for IP to IP calls.
3. Interactive communication with the MMCS Gateway to be able to provide the proper IP address to external devices (remote gateway or local/remote IP device) for gateway access.
4. Registration of IP devices associated with a home gateway and managing current temporary IP addresses of the devices registered for mapping purposes.
5. Authentication that the user registering an IP device is an authorized user.
Other functions may also include:
1. For IP device to IP device communications, the gatekeeper should immediately forward a call for 'call treatment' to the IP device's home gateway once it has it has it been determined that the terminating IP device is 'not registered'.
2. Usage billing data for IP to IP device communications. The usage fee would be for the use of the 'managed IP extranet', an enhanced service over the 'free or general internet'.
3. Gatekeeper to Gatekeeper synchronization.
4. High level 'Root - DNS' - like server or Voice DNS (VDNS) maps E164 ranges to associated gateways in 'free calling areas'.

The Gateway 10 discriminates between voice, fax and data calls on a call by call basis and handles each appropriately. The solution should not be dependent upon the served PBX or VPN being configured with service specific numbers, and it should be possible to seamlessly detect the initiation and completion of a fax transaction during a voice call. The MMCS Gateway should be able to transport and receive the following media over the IP network:
*Voice:* The following encoding schemes are supported at a minimum: G.729A; G.723.1; G.711 u-law; G.711 A-law. The gateway 10 is able to dynamically change the codec used on a call by call basis.
*DTMF:* Voice calls traversing the gateways 10 are able to faithfully detect and relay in-band DTMF signals.
*Echo Suppression:* Echo suppression conforms to acceptable industry standards for quality echo suppression in the circuit switched network.
*Silence Suppression:* The IP Telephony codecs support silence suppression.
*Noise Suppression:* The IP Telephony codecs support noise suppression.
*Flexible Dialing Plans:*North American Numbering Plan, International Numbering Plan, and VPN numbering plan support.
*Network Class of Service:* Provides a means to control access to Gateway routes. Enables carriers to flexibly define QoS packages such as a "Take what you get" low cost/low QoS, a "Guaranteed" high cost/high QoS, and a "Selectable on a call by call basis" pay for QoS selected.
*Call Forwarding:* The MMCS Gateway 10, in conjunction with the Gatekeeper 20 supports all forms of call forwarding: Call Forward Busy (CFB), Call Forward No Answer (CFNA), and Call Forward Unconditional (CFU). As well, an additional type of call forwarding called "Call Forward Not Registered" (CFNR) is provided, since IP Telephony Clients will not always be registered or reachable.
*Call Forward Not Registered:* The CFNR feature uses the same destination as the CFNA feature. When an IP Telephony Client for an incoming call is not registered with the Gatekeeper, the call should be forwarded to the CFNA destination if one is programmed for the subscriber. If a CFNA destination has not been programmed, then the incoming call should receive an appropriate treatment.
*Line-side Alternate Routing*: When an IP Line is unavailable for termination due to Gateway card overload, network congestion, etc., the call should be treated as if the subscriber is not registered (i.e. the subscriber is not reachable) and the call is forwarded using the CFNA treatment. If the subscriber does not have CFNA, then the call is routed to an appropriate treatment.
*Call Forward Directory Numbers:* Call forwarding directory numbers may be stored in the subscriber line data in the MMCS Gateway 10. IP Line subscribers are able to access and program the call forwarding directory numbers via their IP Telephony Client interface.
*Terminating Restrictions:* An IP Telephony carrier is able to setup an IP Line such that call terminations to the IP Line are denied.
*Originating Restrictions:* When setting up an IP Line, an IP Telephony carrier has the following options in restricting the types of originations made from the Line:
*Denied Origination:* The IP Line is not allowed to originate any calls.
   *Local Calls Only:* The IP Line is not allowed to originate calls outside the free calling area.
*Local and North American LD:* The IP Line is allowed to originate all types of calls excepts for International long distance.
*Local, North American LD, International LD:* The IP Line is allowed to originate all types of calls.
*Selective Number Screening (e.g.* 976, 900): The IP Line is restricted from originating calls to selected numbers.

The requirements particularly for a corporate road warrior service are as follows:
*Single Directory Number:* A corporate road warrior has one directory number on his/her business card that callers can use to reach the road warrior, regardless of whether he/she is at the office or on the road.
*Single Voice Mail Box:* The road warrior is able to have all calls forwarded to the same voice mail box, regardless of whether the incoming call attempted to terminate to an office phone or to an IP Telephony Client. The road warrior has the option of using the Voice Mail System off a PBX, Centrex Central Office, or MMCS Gateway to provide the single voice mail box.
*Reachability:* The corporate road warrior service is able to reach the subscriber on an IP Telephony Client while the road warrior is out of the office traveling or at home, and on a desk phone while the road warrior is in the office.
*Subscriber Transparency:* The corporate road warrior service operates transparently to the subscriber. For example, the subscriber does not have to manually activate call forwarding from his/her desk phone to the IP Telephony Client when he/she leaves the office.

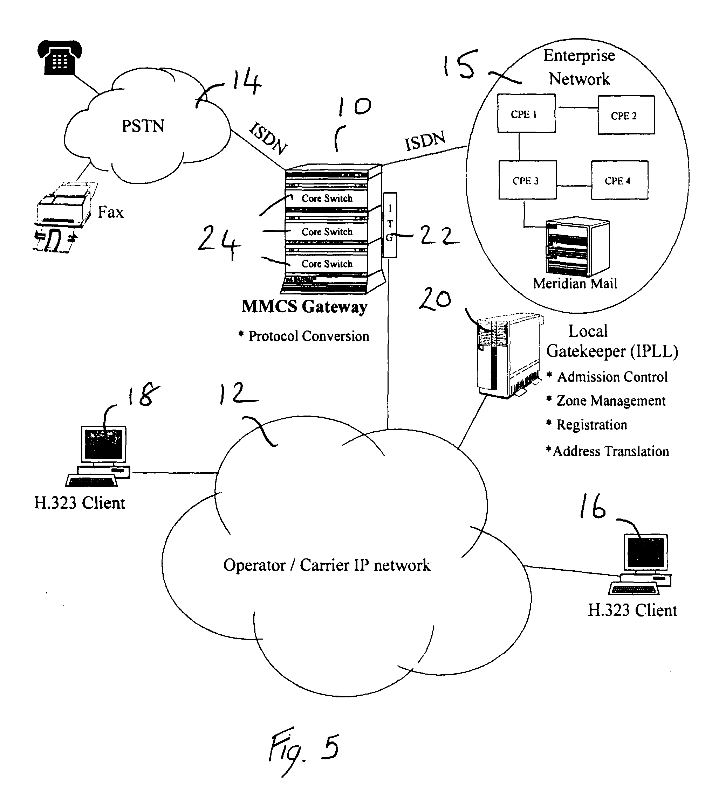

An embodiment of the integrated telephony gateway in accordance with present invention will be described in the following in detail. An ITG in accordance with this embodiment of the present invention emulates an analog trunk based gateway providing the ability to network switches such as Meridian 1 switches provided by Nortel networks, Canada while transmitting signaling and voice over an IP network. As shown schematically in Fig. 5, the integrated MMCS Line Side gateway 10 provides communications between a first network, which may be a Switched Circuit Network (14) such as a PSTN or an enterprise network 15 and a plurality of Clients 16, 18 connected on a IP Network which is preferably a managed IP network (extranet) 12 with controlled delays and quality of service (QoS). The enterprise network 15 and the SCN 14 may communicate with the gateway 10 over ISDN lines. The clients 16, 18 are preferably H323 compatible clients but the present invention is not limited thereto. Clients 16, 18 may be personal computers, workstations or telephone sets especially adapted to use IP telephony. The line side gateway 10 handles SCN calls to/from IP clients 16, 18 as well as IP client to IP client calls. The gateway 10 also communicates with another entity, the gatekeeper 20, mainly for control access, IP client registration and monitoring. The gatekeeper 20 may be H323 compliant but the present invention is not limited thereto. An ITG card device 22 on the gateway 10 is an interface processing voice and fax coming from the core switch 24 and the IP based packet network 12. Gateway 10 may be linked to trunk side gateway operation or may have such functionality integrated therein. Calls coming from one IP zone and going to another IP zone typically involve both line side and trunk side gateway operation.

The ITG (MIX) line side emulates an XDLC line card. The ITG (MIX) Gateway 10 assumes the customer has already installed a corporate IP network 12 and that routers are available for any WAN connectivity between networked systems, e.g. Meridian systems frim Nortel Networks, Canada. The configuration preferably includes 10/100 Base T Ethernet interfaces and support of the IP version 4 or 6 layer and addressing in a WAN. No restriction is anticipated on the physical medium on the WAN. If an H.323 FastConnect procedure is used during call establishment, tone is provided to the calling IP Client 16, 18 by the SCN 14 when the calling IP Client 16, 18 is alerting. In other cases, tones (or any means to represent tones on an IP client) are generated by the IP client 16, 18 itself In fact, at the time when tones need to be heard, there is no path established between the MMCS gateway 10 and the IP client 16, 18 and then, the IP client 16, 18 is not able to hear the tones provided by the MMCS gateway 10. The ITG cards 22 are preferably organized into leader and follower cards. All follower cards register to the Gatekeeper 20. Voice LAN is engineered so that all ITG cards 22 can have simultaneous calls without bandwidth shortage. It is also assumed that the IPLL Gatekeeper 20 provides routed call signaling, supports messaging for valid DN upload, accepts DNs of up to 10 digits and forwards set status to gateway 10.

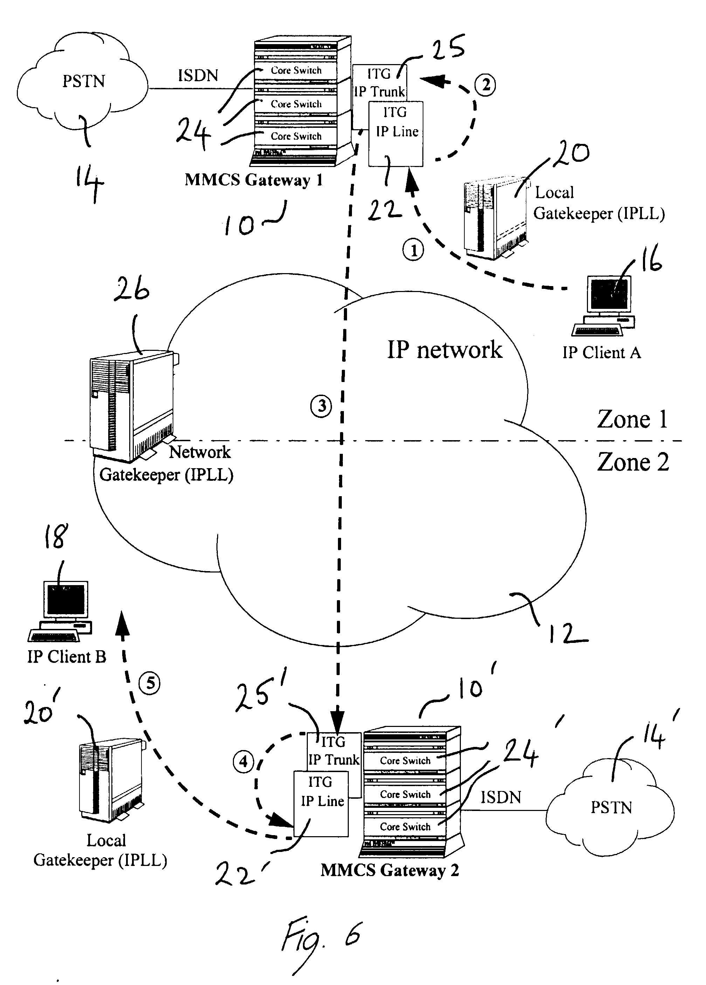

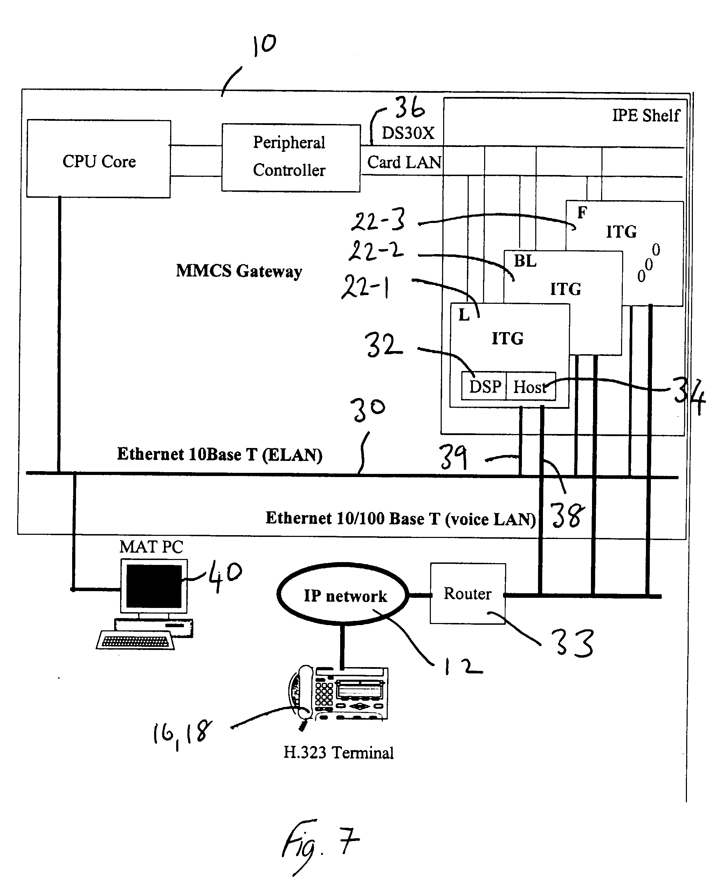

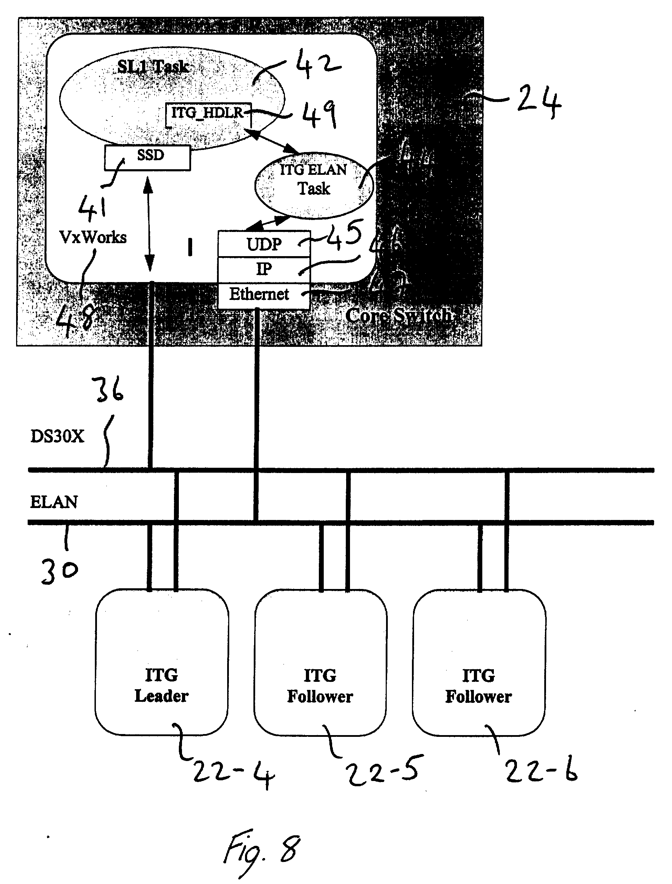

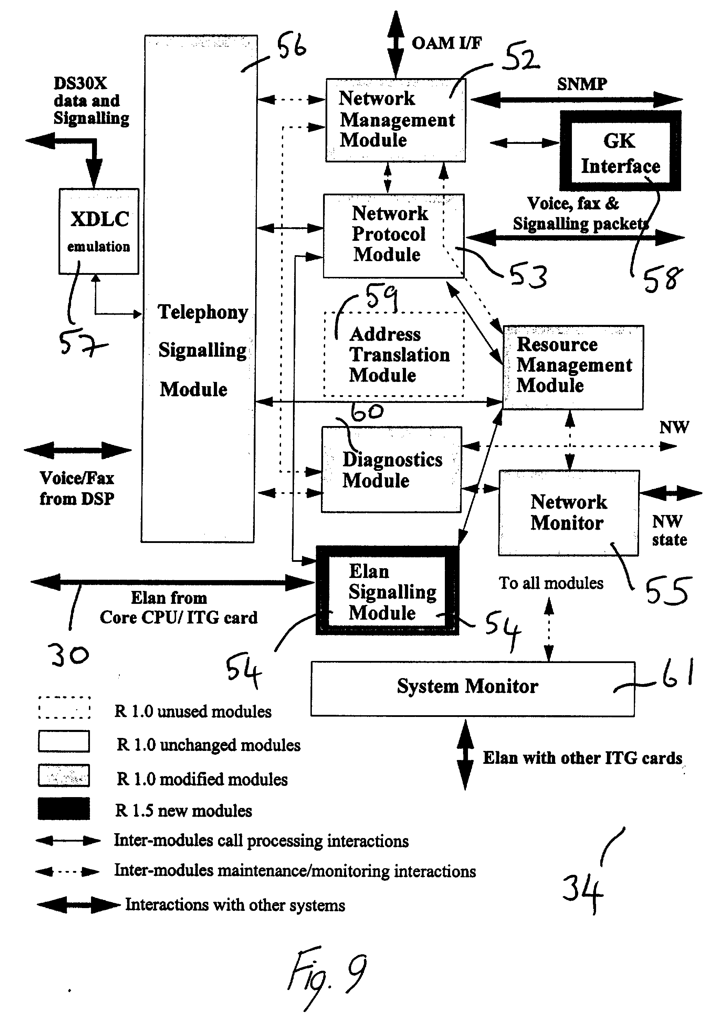

Fig. 6 shows schematically the signaling path of an IP client call from one zone to another IP client belonging to another zone. In this case two local gatekeepers 20 and 20' and two gateways 10, 10' are involved with an IP network 12 between having a network gatekeeper 26. A suitable message sequence may be:
**(1)** The call generated by IP client 16 is first routed to the MMCS 10 by the local GK 20 of client 16. In accordance with the present invention several ways of accessing the gatekeeper/gateway are possible. As alternatives, the call may be routed to the gateway 10 which then communicates with the gatekeeper 20 to obtain authorization of the call. Yet another alternative is that the call may first be routed to the gatekeeper which provides authorization. After receiving this, client 16 the begins setting up the call with gateway 10.
**(2)** The line side GW card 22 of the gateway 10 passes the call to the Core Switch 24 which processes it and re-routes it to an IP trunk ITG card 25. ITG trunk card 25 may be integrated with gateway 10.
**(3)** The trunk side IP GW determines that the call terminates on MMCS gateway (GW) 10'. The call is directly routed to MMCS GW 10' through the IP network 12.
**(4)** The trunk side card 25' of IP GW 10' transmits the call to the Core Switch 24' of gateway 10' which processes it and places it to the Line side ITG card 22'.
**(5)** The call is eventually routed by the Line Side GW 10' to IP client 18 via its local GK 20'.

Fig. 6 shows a possible schematic arrangement of the ITG (MIX) cards 22-1, 22-2, 22-3 within the gateway architecture. The ITG emulates an XDLC card and communicates to the core switch software via the DS-30X link 36. Two Ethernet ports may be available on each card 22-1, 22-2, 22-3. One port 38 (10/100 BaseT) is used for the IP voice signaling whereas the other one 39 is used as an interface with a MAT station 40 for management purpose as well as for a communications link between ITG cards 22-1, 22-2, 22-3.

For each customer data block defined on a core switch 24, there is one set of leader, optional backup leader and follower cards 22-1, 22-2, 22-3, which are available to that customer only. As the ITG cards 22-1, 22-2, 22-3 are VPS cards which emulate a Digital Line card (XDLC), IP Clients 16, 18 are represented in the Core Switch 24 by a BCS set (**IPSET**). Each IP client IPSET is identified by a Virtual TN (VTN) which is defined on a phantom loop. For each IP VTN involved in a call, an available TN on the ITG card is dynamically associated to this VTN in order to access this card. This TN, called the Physical TN (PTN) is only used for signaling (through Ethernet and SSD) and for speechpath between the Core Switch 24 and the ITG card 22-1, 22-2, 22-3. The IP Client capacities and the call processing is associated to its VTN. One aspect of the present invention is that the client profile is defined by the VTN and is dynamically linked to the call using the PTN at call set-up. This VTN/PTN mechanism permits definition of more IP Clients than physical resources (i.e. PTN) and hence allows pooling of PTN resources.

As an IP Client 16, 18 may support several simultaneous active "calls" on the same DN, an IP Client 16, 18 can be composed by several IPSETs (i.e. by several VTNs) which have the same DN. Preferably, each VTN has a single DN and all the VTNs which have the same DN are IPSET. For each call to a DN only one VTN is concerned. In case of a call to IP, when the called DN has several VTNs, the Core Switch 24 chooses one VTN which is idle and presents the call to the ITG card 22-1, 22-2, 22-3 for only this VTN. In case of a call from IP, when the calling DN has several VTNs, the Core Switch 24 chooses one VTN which is idle and all the call processing is done with this VTN. As an IP Client 16, 18 may support several call types (e.g. 2 data calls, a fax and a voice call), an IP Client 16, 18 can be composed by several IPSETs.

Preferably, an IP Client 16, 18 has to register on the Gatekeeper 20 before initiating or receiving a call. A new Registration / Unregistration state is introduced in the Core Switch 24 for each IPSET. This state is updated in the Core Switch 24 by message sent from the Gatekeeper 20 each time an IP client 16, 18 gets registered or unregistered. When the called IPSET is not registered, the call is immediately treated in such a way that resources are not reserved or used. For, example, the call may be diverted to a HUNT DN, as explained later.

Communications between the Core Switch 24 and the ITG cards 22 are done through a suitable signaling protocol and hardware, e.g. Ethernet and/or SSD signaling. As the ITG card 22 emulates an XDLC card, SSD signaling is also used for IP Clients 16, 18. However, IP Clients 16, 18 require more messaging which cannot be easily handled by the SSD signaling. For instance, when a call is initiated to an IP Client 16, 18 the core switch 24 requests the Leader ITG card to provide a physical TN. The SSD signaling is not adapted to this kind of messaging. So, a connection through Ethernet (UDP) between the Core Switch 24 and the ITG cards handles this messaging.

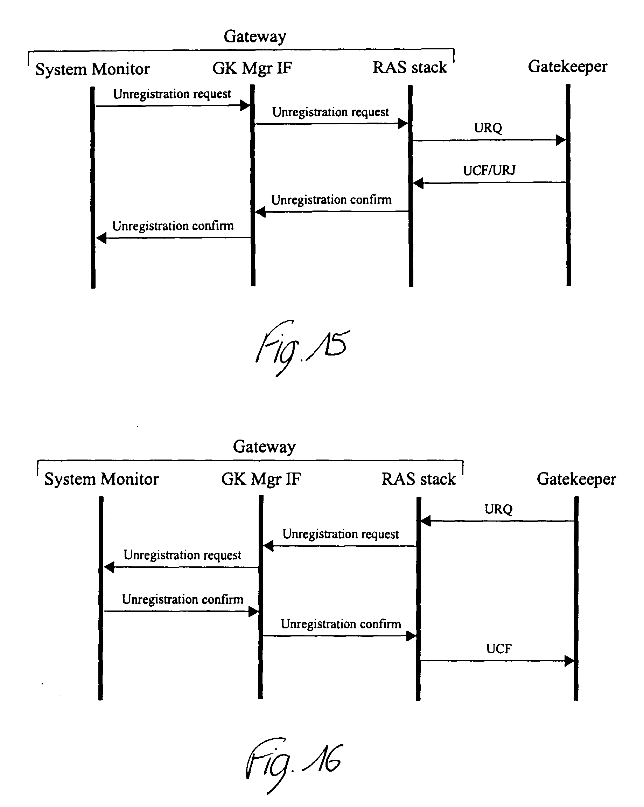

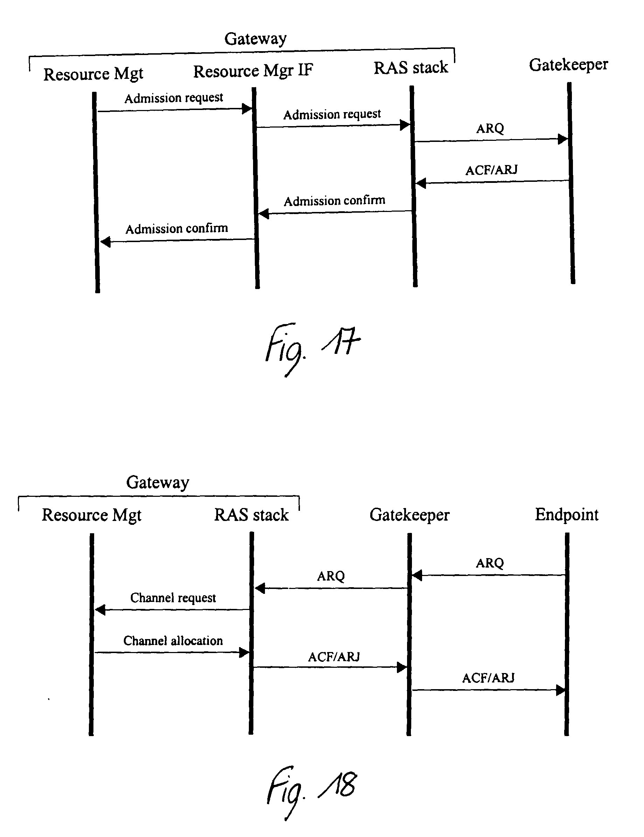

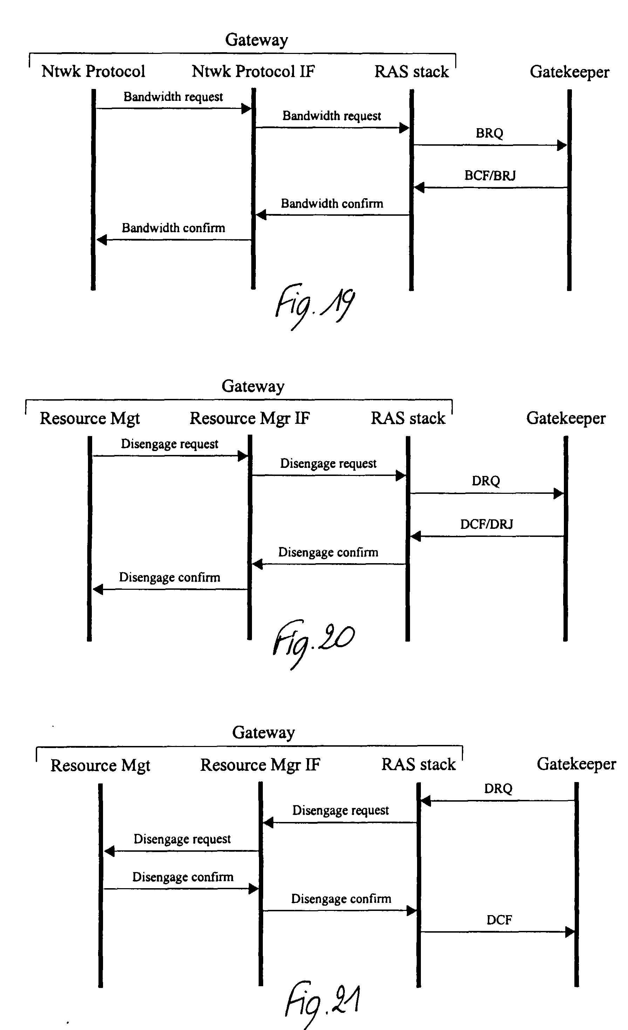

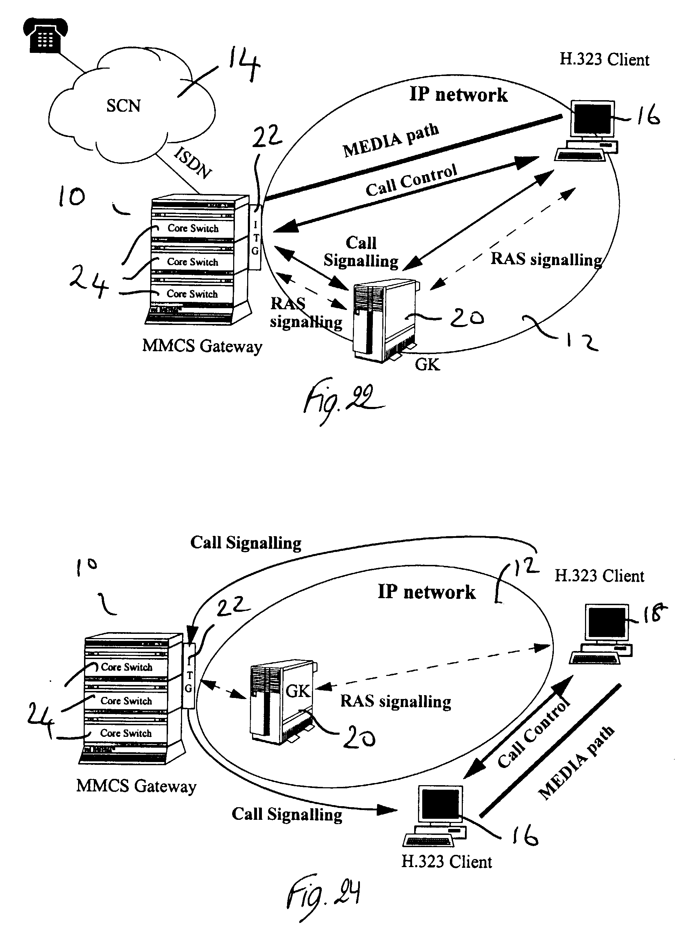

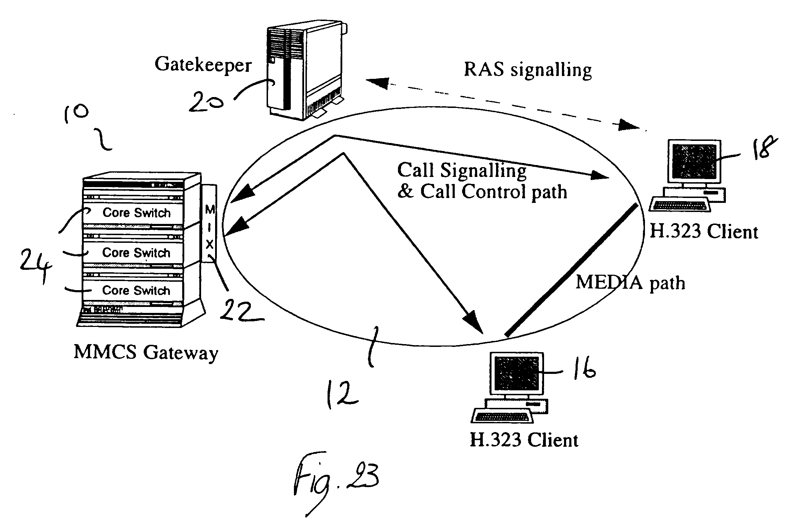

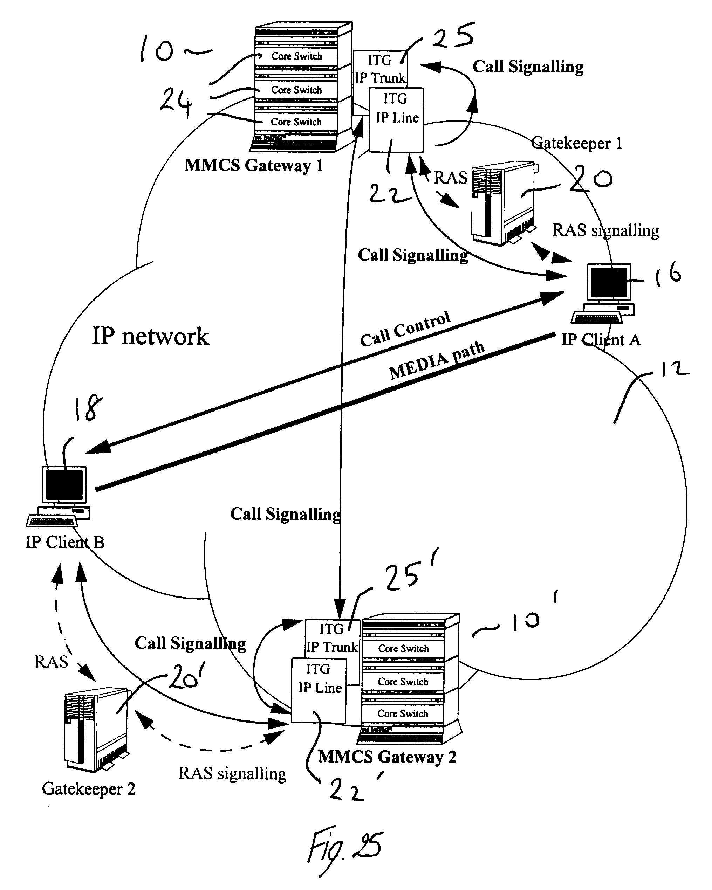

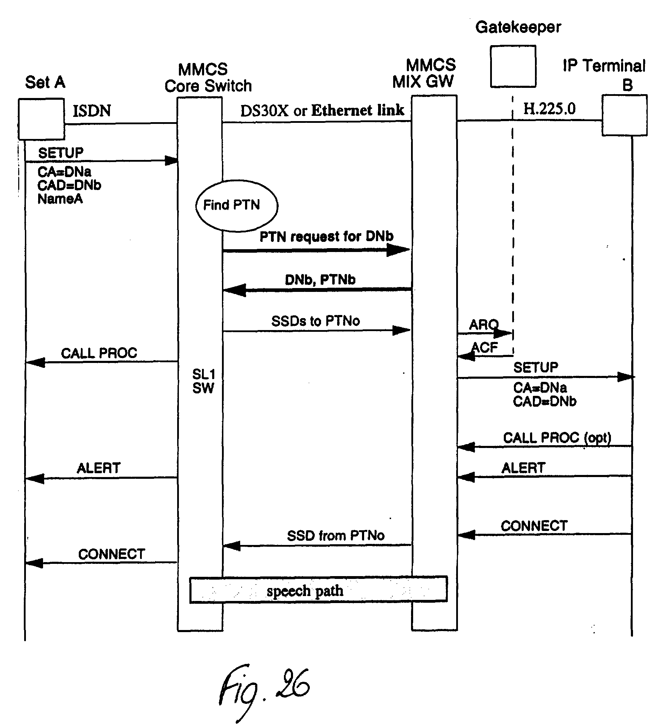

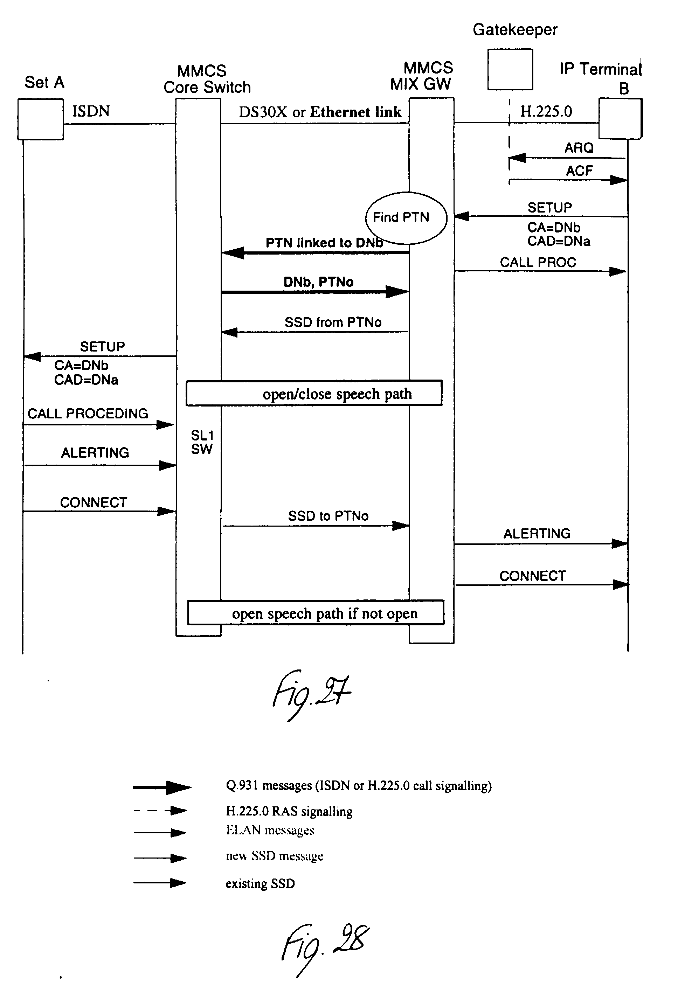

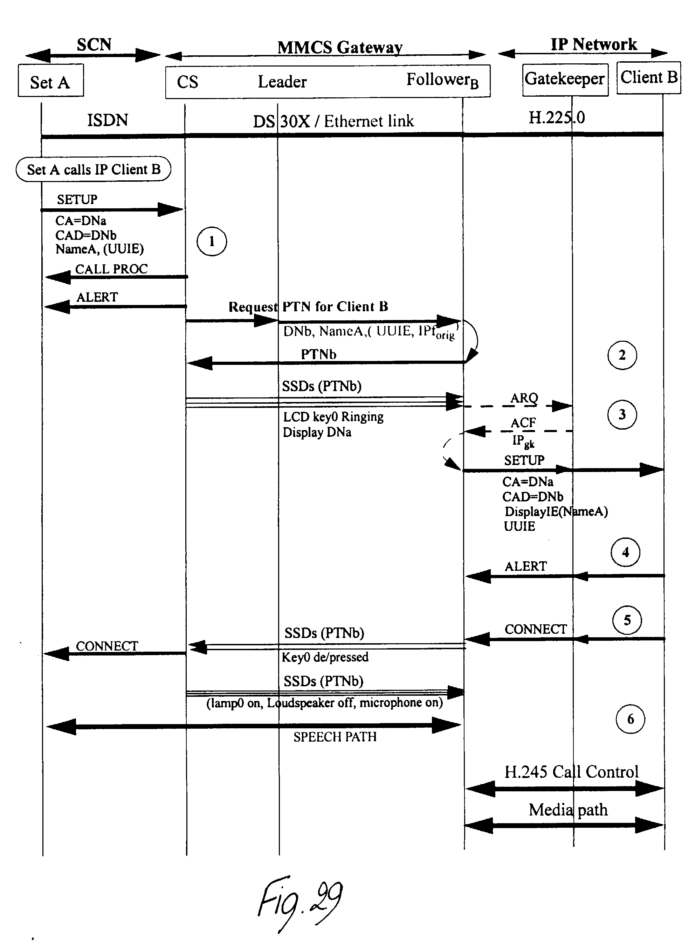

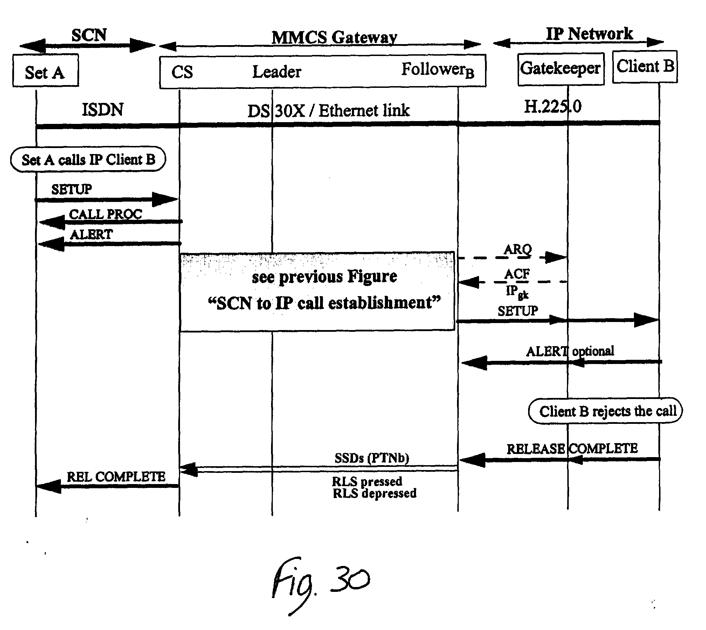

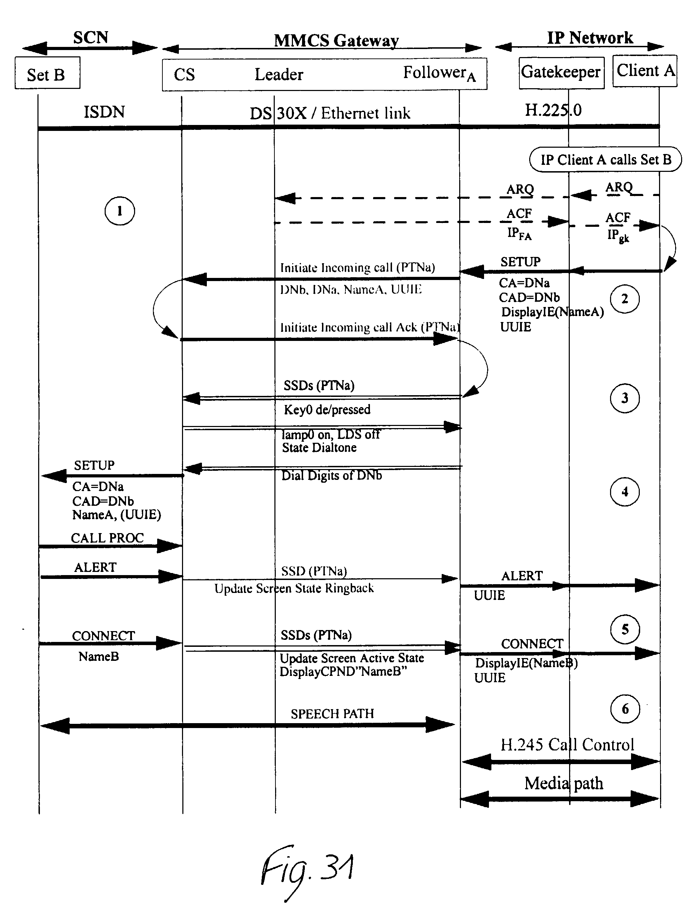

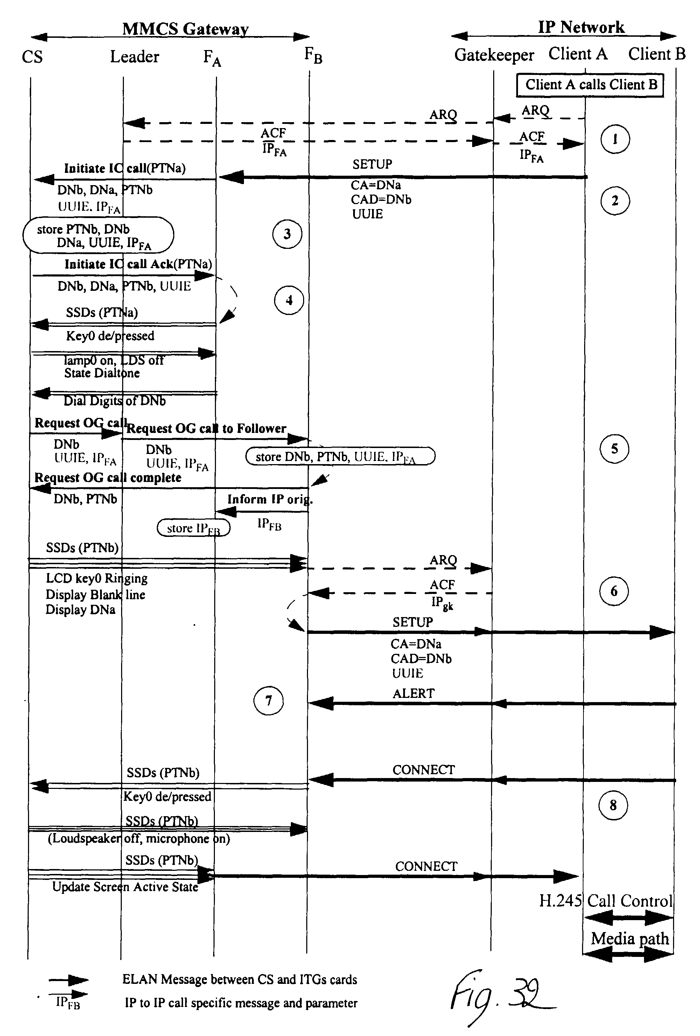

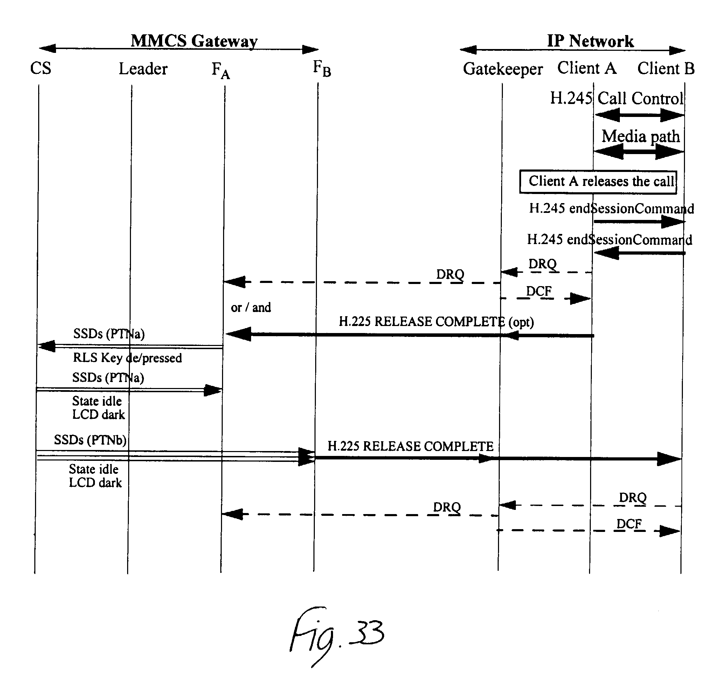

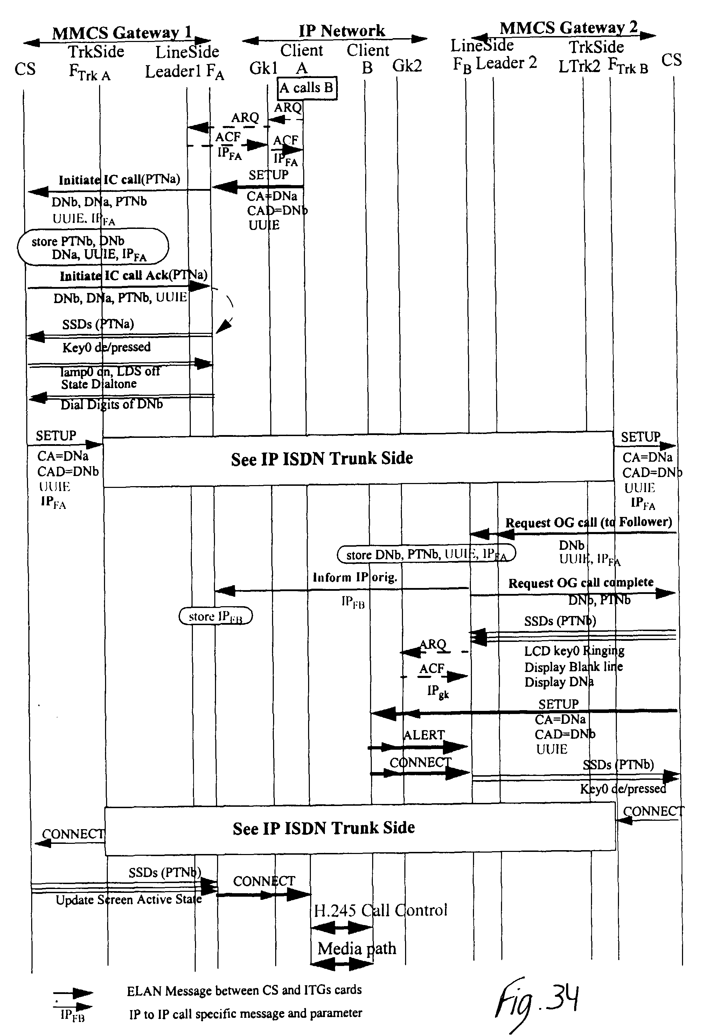

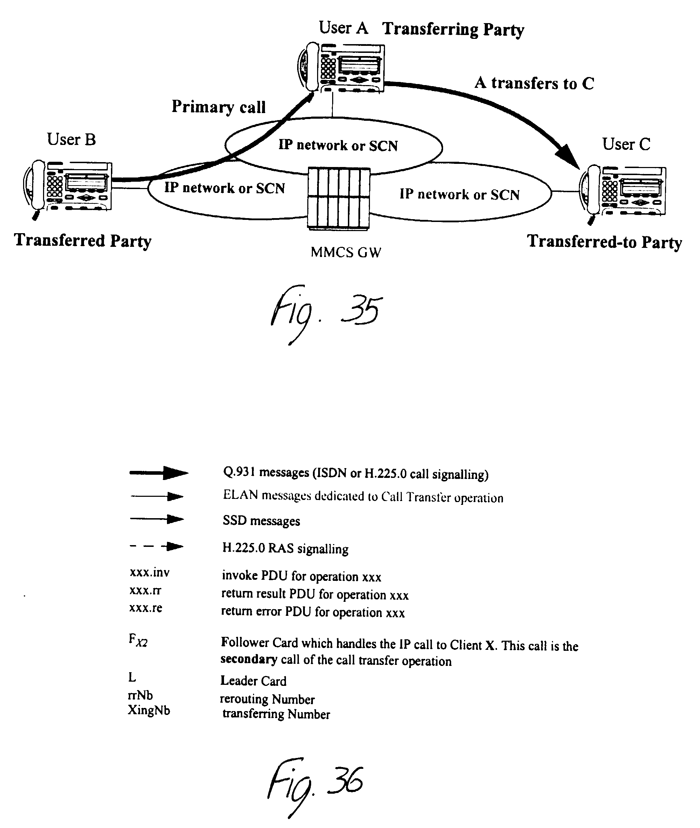

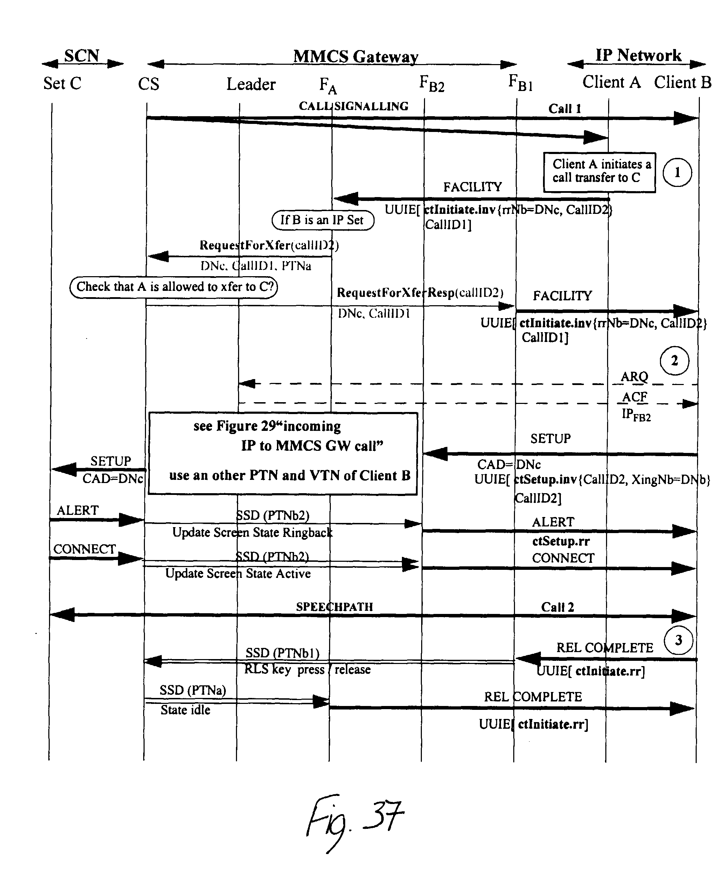

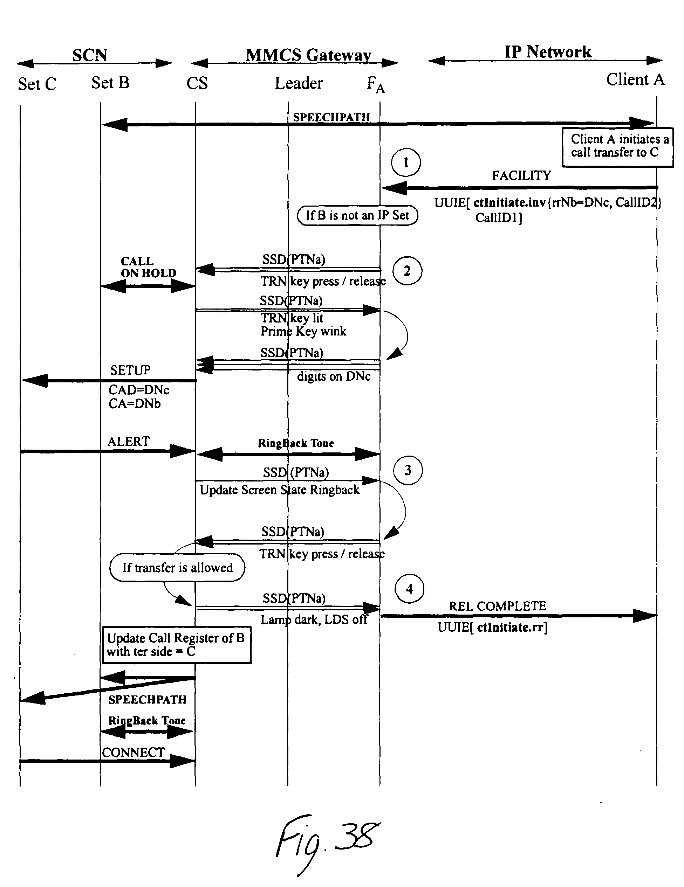

Fig. 8 on page 34 shows the two signaling paths for the communications between the Core Switch 24 and ITG cards 22-4, 22-5, 22-6. Messages that cannot be sent through the SSD route 41 are sent through another route such as an Ethernet route 47. A module 44 is the interface between the SL1 task 42 and the UDP/IP API 45, 46 from VxWorks 48. When VolP is configured, a new task is spawned by the module 44 on the core switch 24. This task is responsible for reading the messages coming from the UDP pipe.

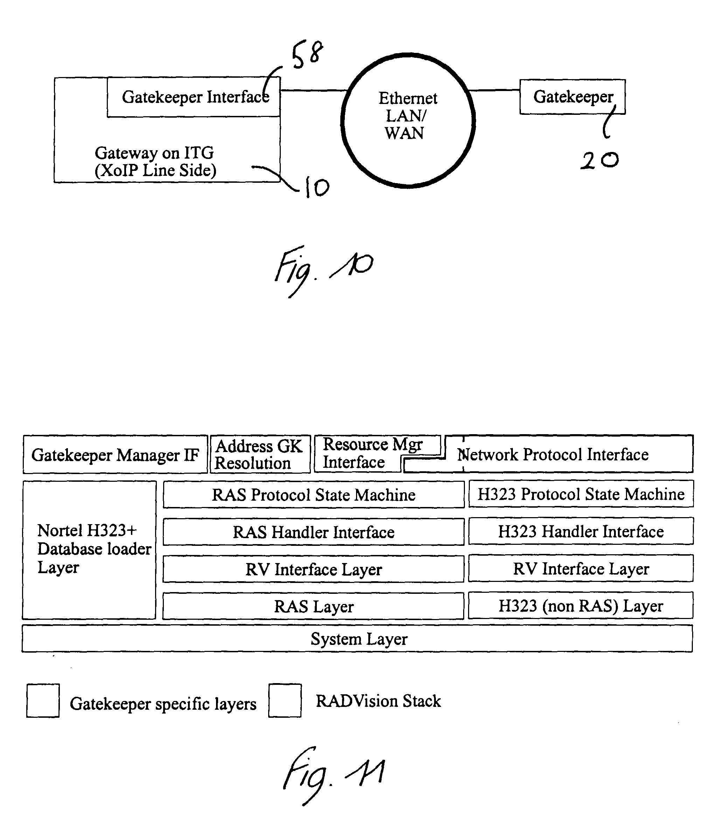

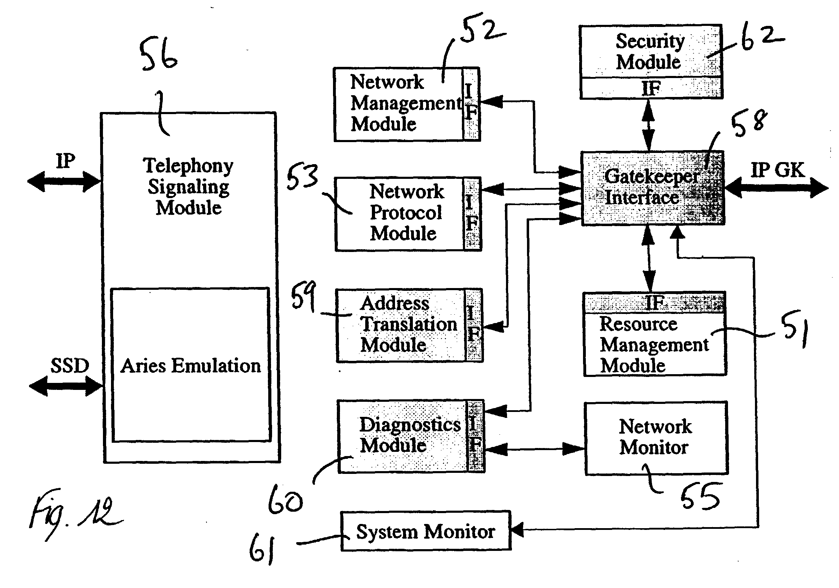

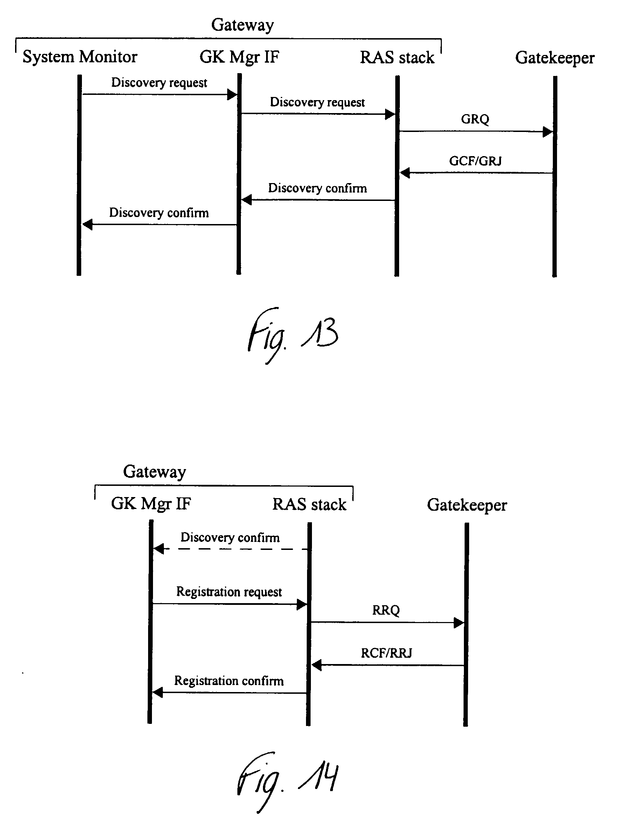

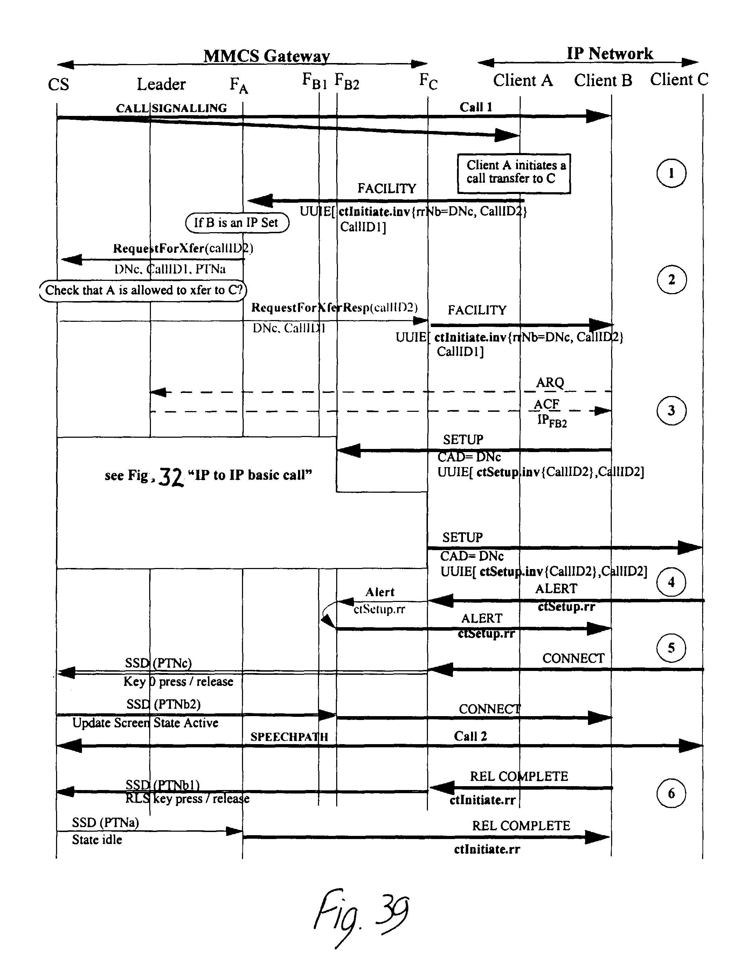

To send messages to a card 22-4, 22-5, 22-6 the SLI task 42 communicates directly with this module 44 through an interface handler 49. When a message from a card 22-4, 22-5, 22-6 is received by the module 44, it informs the SL I task 42 via an RFC call.
The task can start up in two ways:
Cold Start if the database has VoIP line side configured
Service Change when a craftperson configures VolP line side
The ITG operation is separated into distinct areas, each fitting one of the functionalities required from the ITG card 22. The ITG gateway software architecture is divided into two main components, the DSP component 32 (Fig. 7) responsible for processing the voice and FAX data from the core switch 24 and the IP based packet network, and the host component 34 responsible for interfacing with the core switch 24 and the IP network 12. Fig. 9 illustrates the different modules of the host component 34.

A Network Management Module 52 is responsible for communications between the ITG card 22 and the craftsperson. The connection can be made over ethernet or serial. The client applications available to the craftsperson for access to the ITG card 22 can be a PC running MAT, a telnet session, or a serial link. An SNMP agent is used to generate traps to indicate events on the ITG card 22.

An Elan Signaling Module 54 handles messaging to and from the core switch 24 by using the ELAN connection 30. It connects with a 10-baseT ethernet driver to access the ELAN, to relay messages to/from the network protocol module 53 so as to interact with the core switch call processing. It also connects with the resource management (51) on the leader card 22-4 to transmit the requests from the core switch 24 to obtain a physical TN assigned to a call going out on the IP network 12, and their responses. The module 54 is also responsible for interfacing Leader/ Backup-Leader card and Followers of different modules. Communication is mainly needed between the Resource Management module 51 of the Leader card 22-4, and the Network Protocol Module 53 of Follower cards 22-5, 22-6 for the first one to provide the second one with call processing information (PTN, IP address ofGK, UUI IE...). At restart time, and in case of warm/cold start on the core switch 24, this module 54 is in charge of reestablishing the connection between Core Switch 24 and Leader Card 22-4. This module 54 operates on all ITG cards 22.

The Network Monitoring module 55 is in charge of assessing the conditions on the ethernet segment on which the ITG card 22 is located. First, the vxWorks IP and TCP stacks gather some statistics for each interface, which can indicate a degraded condition, such as loss of packets and other measurements. Alternately, by periodically sending RTCP messages to pre-determined hosts (the gatekeeper 20, the local IP router 33) an estimation of LAN load can be made. Whether this module 55 sits only on the leader 22-4, or on all cards 22, depends on whether the total gateway 10 needs to be located on one or several LAN segments. If several LAN segments are allowed, then several ITG cards 22 need to have this module active (at least one per LAN segment).

A Resource Management module 51 is responsible for managing system/network resource for the ITG XoIP platform and serves as Gateway to the H.323 network. The system monitor audits ITG card/ channel status. Below is a summary of the Resource Manager task responsibilities:
Address translation interface. This is only required when an Address translation module 59 is present. It only applies to outgoing call s for the leader card 22-4 to interface with the address translation module 59 and retrieve the end-point network address. Resource Control and Maintenance: this functionality contains a set of operations such as:
Task initialization (registration with leader, with MAT...)
Housekeeping (Channel Status Table maintenance)
L-BL Switchover operation
L-BL Database synchronization
Channel Allocation of Incoming and outgoing calls (Leader only)
Call processing information provision to Followers (Leader only)
The same channel allocation algorithm may be applied for outgoing calls as for incoming calls (the core switch 24 is not seizing a trunk but dealing with a virtual DN) and modify it in such a way that only Follower cards 22-5, 22-6 can be chosen to handle a call. This unloads Leaders and Backup-Leaders from some responsibilities generated by the Physical TN selection operation (on core switch request through Ethernet). This can be configurable depending on the system capacity. For systems including a restricted number of ITG cards 22, Leader and Backup-Leader may be configurably to handle calls to prevent reducing traffic capacity which would lead to numerous call rejections.
The resource manager module 51 stores a table providing current allocation of channels, Table 1

**Table 1:**

| **Channel Table** | | |
|---|---|---|
| | Possible value | Initialization Value |
| IP follower:port | IP v4/v6 address:channel | NULL |
| Status | Idle | Idle |
| | Reserved | |
| | Busy | |
| | Disabled | |
| Reservation Time | Time Stamp | 0 |
| Physical TN | | NULL |
| callRef | cf H.323 | NULL |
| callld | cf H.323 | NULL |

Where:
IPFollower:port corresponds to a channel of a follower card.
Status corresponds to the use of a follower card channel. *'Idle'* means that no call is going on for that channel. *'Reserved'* means that Gatekeeper has sent a request to make call on that channel but the call is not yet going on. '*Busy*' means that a call is going on for that channel. *'Disable'* is used for maintenance (channel cannot accept call for the time being).
For outgoing calls (CS to IP), the reservation status changes directly from *'Idle'* to '*Busy*' as soon as a physical TN is granted.
For incoming calls (IP to CS), the Leader Card receives a request from the Gatekeeper, allocates a physical TN for the call and then changes reservation status from *'Idle'* to '*Reserved*' for the corresponding channel. The time of the request is also stored. Reservation Status is set to *'Busy'* when the follower card acknowledges that it has received an incoming call.
Reservation Time - this time corresponds to when a physical TN is granted. It is used as a timeout marker when TN allocation is made. If the physical TN is marked as reserved and time stamp is too old, the physical TN is re-allocated. This field is ignored if reservation status is different from '*Reserved*'.
Physical TN - this is the TN allocated by the Resource Management module 51 and used by the Core Switch to send X11 messages.
callRef- this information is used to link incoming calls with outgoing calls.
callld - this information is defined by H.323 standard and identify a call.
Search on this table can be made by: Channel, PTN or callRef

A Telephony Module 56 handles the receiving and sending of SSD messages according to the state of the H.323 call handled by the Network Protocol module 53. It interfaces with the XDLC emulation to retrieve SSDs and provides an API to the network protocol to receive and send these. It communicates with the network protocol module 53 to transmit and receive SSD messages, and operates on all ITG cards 22.

On each ITG card 22, instead of XUT emulation for analog trunk, the XDLC emulation module 57 is used to emulate stimulus messages. It communicates with the Telephony Signaling Module 56 to transmit stimulus messages.

DN-to-IP address translation may be handled by a variety of methods.
Preferably DN-to-lP translation is handled by the gatekeeper 20 using the RAS signaling. Optionally, an Address Translation module 59 may be provided. It collects IP-side information on each client and indexes it by the client's DN. It connects with the management module 52 to accept new configurations and with the network protocol module to perform DN translations. It is present in the leader card 22-4 only. The only manipulation required is to add a leader DN number in front of the internal DN provided by the core switch 24, before sending it to the gatekeeper interface 58.

The Network Protocol module 53 manages individual calls, receiving and sending SSD, ELAN and H.323 messages according to call status. This module 53 handles the gateway itself, and is present on all ITG cards 22.

As shown in Fig. 10, the Gatekeeper Interface Module 58 is the interface between the XolP Line Side gateway 10 and the gatekeeper 20. The H323 standard specifies 4 types of channels: RAS Signaling (registration, admission, status), Call Signaling (CONNECT, RELEASE, FACILITY, ...), Control channel (capabilities exchange, logical channel(s) management, ...) and Logical channel(s) (audio, video, data) The Gatekeeper Interface 58 is responsible for RAS signaling. It is also responsible for forwarding call signaling when the Gatekeeper routed call signaling model is used (for security and management reasons). The tasks done by the Gatekeeper Interface 58 may be:
Gateway (un)registration to the gatekeeper
RAS messages validation (timeout, out of sequence RAS, ...)
RAS interface with other XolP modules
Interface with IPLL Gatekeeper (DN registration, resource status update, leader card registration and DRQ forward)
No local address translation is required when the routed call signaling model is used. In this case call signaling messages are directly sent to the Gatekeeper 20. To reduce the size of the CPU on the leader card 22-4, the leader card 22-4 need not be required to perform routed call signaling to follower cards 22-5, 22-6. Each follower card 22-5, 22-6 then has to register itself. But following a request from the Gatekeeper 20, the leader card 22-4 may be responsible for allocating a port of a follower card 22-5, 22-6 for incoming calls.

The gatekeeper interface logical layers are shown in Fig. 11. Being the interface with the gatekeeper 20, the bottom layers are symmetrical to those of the gatekeeper 20 itself Upper layers are providing the interface to each module of the XolP. The RAS stack is based on the same architecture as the one used by IPLL Gatekeeper. Responsibilities are:
System Layer: This layer provides base OS calls in order to be platform independent. RAS Layer: This is a protocol stack handling H225 RAS messages from the Gatekeeper 20. As for an IPLL Gatekeeper, this stack is provided by RadVision (RV). It provides a mechanism to register callback procedures which are used for incoming RAS messages. RADVision Interface Layer: encapsulates RADVision API for upper layers in order to stay vendor independent.
RAS Handler Interface implements the RAS call back functions.
RAS Protocol State Machine manages timers and error conditions for receiving incorrect or out of sequence RAS messages.
Nortel H323+ Database loader Layer: it implements a Nortel proprietary protocol between the Gateway 10 and the Gatekeeper 20. The Gateway 10 sends to the Gatekeeper 20 the list of valid DN through this interface.
Gatekeeper Manager Interface is responsible for communication set up with the Gatekeeper 20 during ITG boot or shutdown sequence. It implements *discovery, registration* and *unregistration* procedures as described in H323. It also implements *DN upload* mechanism.
Address Gatekeeper resolution: this interface provides the ability to request address resolution from the Gatekeeper 20. This is used when local resolution (address resolution module 59) fails. Gatekeeper resolution requests should normally not be used when call signaling messages are always sent to the Gatekeeper 20.
Resource Manager Interface: this interface is responsible for communications between ITG Resource Manager module 51 and the Gatekeeper 20. It implements mechanisms for *resource creation/destruction, admission* and *status* requests, as well as *disengage* messages.
Network Protocol Interface. This can be split into two: RAS specific messages handling and non-RAS messages handling. It implements mechanism for *bandwidth* changes, *status* and *request in progress* RAS messages.
H323 layers: These layers handle non-RAS messages of the H323 standard.

Fig. 12 shows Gatekeeper Interface interactions (and only those) with other modules. Module Interface (IF): this is an interface layer specific to communications between a given module and the Gatekeeper Interface 58. This is implemented on each module in order to ease re-usability of the Gatekeeper Interface.
Network Management Module 52: this module can be used to configure the Gatekeeper Interface 58 (like the well known discovery address). Configuration data are sent to the Gatekeeper Manager Interface.
Network Protocol Module 53: this module interacts with the Gatekeeper interface 58 for a call signaling channel which is routed through the Gatekeeper 20. This is also used for bandwidth change, status and RIP RAS messages. Interactions are done through the Network Protocol Interface layer.
Address translation module 59. When such a module is present it implements a local address resolution mechanism in order to speed up call setup. If address resolution fails locally, a request may be made to the gatekeeper 20 through the address resolution interface. The module 59 is optional. Address resolution may be done in the gatekeeper 20.
Diagnostics Module 60: this module is responsible for diagnostics and alarms. It includes alarms specific to the Gatekeeper Interface 58 (RAS reject messages).
System Monitor 61: this module is responsible for starting a discovery and a registration process.
Security Module 62: this module is responsible for Authentication of the Gatekeeper 20 and incoming RAS messages based on tokens.
Resource Management Module 51: this module interacts with the Gatekeeper Interface 58 for resource creation/destruction, status and admission RAS messages. This is done through the Resource Manager Interface layer.

Messages shown in Figs. 13 to 21 refer to Gateway-Gatekeeper communication (e.g. registration and admission). The Gateway 10 exchanges two types of messages with Gatekeeper 20: H323 standard messages (RAS - Registration Admission Status) and Nortel proprietary messages. The H323 standard messages (RAS) messages correspond to the standard definition and their detailed description, including fields, can be found in the H225 recommendation. ARQ/DRQ messages, even if standard in their definition, have been slightly extended in their use.

Gatekeeper discovery is the process that the Gateway 10 uses to determine which Gatekeeper 20 to register with. By default it is done manually, the Gatekeeper Interface is configured by the administrator for a gatekeeper and alternate gatekeepers. But if these addresses are not provided and only in that case, the discovery process is automatically started (Fig. 13, GRQ - GatekeeperRequest, GCF - GatekeeperConfirm, GRJ - GatekeeperReject). If it fails (GRJ message), an alarm is sent to the Diagnostics module 60.

All ITG cards 22 register (Gateway registration messages see Fig. 14, RRQ - RegistrationRequest, RCF - RegistrationConfirm, RRJ - RegistrationReject) to the Gatekeeper 20 after Gateway discovery is completed by the Leader card 22-4. If the registration fails, the Gateway 10 tries alternate gatekeepers 22. If it also fails, an alarm is sent to Diagnostics module 60. An alternative Gatekeeper address can be sent in an RCF message of the primary Gatekeeper. This address, even if different from the one datafilled, is the one to be used so that the primary Gatekeeper can send the address of a backup/mirror Gatekeeper. Alternate Gatekeeper addresses datafilled are only used when Gateway fails to connect.

All ITG cards 22 register as gateway for the client terminal type. Leader and Backup Leader cards provide each other with addresses in the 'alternateEndpoints' field. The Gatekeeper is aware of which card is the leader card as it is specified when downloading the DN table.

Both the Gateway 10 and the Gatekeeper 20 can start the unregistration process (Gateway unregistration messages, see Figs. 15 for gateway-gatekeeper messages and Fig. 16 for gatekeeper-gateway messages, URQ - UnregistrationRequest, URJ - UnregistrationConfirm, URJ - UnregistrationReject). This is done by the gateway 10 when a card 22 is brought down. If the Gateway 10 receives an unregistration reject from Gatekeeper 20 an alarm is sent to Diagnostics module 60. The Leader card 22-4 can send an URQ if the Backup Leader card shall be used. The Gatekeeper 20 can send an URQ to all ITG cards 22 if the alternative Gatekeeper must be used. In this case the ITG cards 22 must send an RRQ to the alternate Gatekeeper.

The Gateway 10 requests access to the LAN through ARQ message (Gateway to Gatekeeper admission messages ARQ - AdmissionRequest, ACF - AdmissionConfirm, ARJ - AdmissionReject, see Fig. 17). If access is not granted, an alarm is sent to Diagnostics Module 60.

The Gatekeeper 20 to Gateway 10 ARQ message (Gatekeeper to Gateway admission messages see Fig. 18 ) is proprietary in its use and allows concentration.

In accordance with an aspect of the present invention the gateway 10 may request QoS changes from the gatekeeper 20 and vice versa. For example, the gatekeeper 20 or the gateway 10 may request a change in LAN bandwidth allocation (se Fig.

The Gateway 10 preferably informs the Gatekeeper 20 that a call is being dropped (as the Gatekeeper needs to know about the release of bandwidth- Disengage messages, see Figs 20 and 21, DRQ - Disengage Request, DCF - Disengage Confirm, DRJ - Disengage Reject). The Gatekeeper 20 can also force a call to be dropped. All DRQ messages are preferably forwarded by the Gatekeeper 20 to the Gateway 10 for the Gateway 10 to know that call has ended. This is necessary for billing as 'release complete' might not always be sent.

Proprietary messages between the Gateway 10 and the Gatekeeper 20 have been implemented for the following reasons:
the Gatekeeper 20 must know the list of DN recognized by the Gateway (10 Gatekeeper requirement).
In order to give the right answer to incoming calls, the Gateway 10 must store the locally status of IP sets.
Leader and Backup Leader cards must tell the Gatekeeper 20 of their use.
In order to achieve concentration and as the Gateway 10 is doing resource management, the Gatekeeper 20 must request from the Gateway 10 a channel for each incoming call.
As a 'release complete' message might not always be sent at the end of call, the Gatekeeper 20 must tell the Gateway 10 when call is ended to perform billing.
Here is a list of proprietary messages:
DN upload
Once the gateway 10 has performed RAS discovery and registration with the 20, the core switch 24 through the leader card 22-4 sends to the Gatekeeper 20 a list of valid DN. This is done on a separate reliable TCP/IP connection. The TCP/IP port to be used is sent to the Leader card 22-4 in the RCF message. Once upload has been completed, the connection is closed, but the port remains available on Gatekeeper 20. Further updates are done incrementally using the same port.
Database download (optional)
Where local address resolution is available (optional Address resolution module 59), a copy of the DN address table is downloaded from the gatekeeper 20. This is done on request from the leader card 22-4 after the gateway 10 has performed RAS discovery and registration with the gatekeeper 20. It is preferably done on a separate reliable TCP/IP connection which is closed when the transfer is complete. Further, updates may be performed through RRQ and URQ messages.
Resource status (resource registration/unregistration)
The Gatekeeper 20 informs the Gateway 10 of resources which have registered, unregistered or which have failed polling. This is done through standard H323 ARQ and URQ messages.
Channel allocation and leader card registration
As the leader card 22-4 can perform channel allocation, the Gatekeeper 20 sends an ARQ to it for incoming calls. The leader 22-4 sends back an ACF with the IP address and port of the follower card 22-5, 22-6 to be used. For this reason, Leader and Backup Leader cards register to the Gatekeeper 20 in a special way. For example, the Leader and Backup Leader provide each other's address in an RRQ message, the address of the leader card is sent to the Gatekeeper 20 during DN upload.
End of call
The Gateway 10 must be aware of call end in order to perform billing. This is usually seen using 'release complete' message. In some cases, this message is not used and a DRQ is sent. For this reason all DRQ messages sent or received by Gatekeeper 20 are forwarded to Gateway 10.
It is necessary to match a DN to the corresponding IP address for outgoing calls. The present invention includes:

### Full internal address resolution

The address resolution is downloaded from the gatekeeper 20 during start up. The table is dynamically updated by the gatekeeper 20 which forwards registration/unregistration endpoint information to the gateway 10. If a local resolution cannot be achieved, the gatekeeper is sent a resolution request.

### Partial internal address resolution

The gateway 10 stores a table of the most recently used and/or most called addresses. if an address is not matched internally a request is made to the gatekeeper 20.

### Full gatekeeper address resolution

This is a preferred solution and is covered by standard H323.
The operation of the above embodiments will now be described in detail. The H.323 Standard defines four communication channels for call establishment:
H.225 RAS Signaling between End Point/Gateway and Gatekeeper
H.225 Call Signaling (Q.931 messages)
H.245 Call Control (Master/slave determination, Set capacity exchange) media Channel (voice)

In certain embodiments of the present invention, the Gatekeeper and MMCS Gateway call signaling routed model is preferably used; i.e. all call signaling goes through Gatekeeper 20 and MMCS Gateway 10. However, the present invention is not limited thereto. For example, call control and the media path may be or may be not routed through the gateway 10 for IP client-IP client calls. The present invention includes the following possibilities:
call signaling from and to the client goes to the gateway 10 via the gatekeeper 20 (Fig. 22). RAS signaling goes to the gatekeeper 20 from the client. Call control goes between the client and the gatekeeper.
call signaling and call control go through the gatekeeper 20 to the gateway 10- see Fig. 23.
call signaling and call control go between the client and the gateway 10. RAS signaling goes to the gatekeeper 20 from the client.
As one example, in case of an IP client 16 - SCN 14 call, all H.323 channels can go through the MMCS Gateway 10 (see Fig. 22). The media path and call control are handled between the IP client 16 and the gateway 10 through the IP network 12. The RAS authorization signaling is handled between the client 16 and the gateway 10 and the gatekeeper 20. For a call between IP clients 16, 18 (Figs. 24, 25) call signaling goes via the gateway 10. The RAS authorization signaling is handled between the calling client 16 and the gateway 10 and the gatekeeper 20, whereas call control and the media path is between the clients 16, 18. In this way double compression/decompression per call is prevented. If the called IP client 18 is not served by the same gateway as the calling client 16 (Fig. 25) the media path and call control still pass directly through the IP network without involvement of the GK 20 or the GW 20 and therefore without double encoding/decoding. Call signaling and RAS authorization is carried out between the client 16, 18 and the local gatekeeper 20, 20' or gateway 10, 10', respectively. After authorization and address resolution for the called party the IP address of the called party is forwarded to the calling client 16 so that the call can be set-up through the IP network 12 independently of the GW 10, 10' or the GK 20, 20'. To provide the signaling path between the gateways 10, 10' each gateway 10, 10' is associated with a trunk side functionality 25, 25' for routing the messages through the IP network 12. For example, the gateways 10, 10' may be provided with trunk side IP gateway cards 25, 25' for handling trunked connections between MMCS' 10, 10'.

In the following the Call Signaling exchange between an SCN set, the MMCS Gateway, the Gatekeeper and one or more IP Clients is described.

### Basic Call Overview: IP<->SCN

An overview of the Call Signaling exchanged between an SCN calling set and an IP Client 16 and between an IP Client 16 and an SCN receiving set for various embodiments of the present invention is shown in Figs. 26 and 27. More detailed flows are shown in Figs. 29-31 The notation of Fig. 28 is used in the message flows of Figs. 29-31.

With reference to Fig. 26 with a call from an SCN, e.g. a PSTN (set A) the first step is to find a PTN from the pool available. This request is done by the core switch to the gateway (MIX GW). Once a PTN is associated with a virtual TN the IP client profile (e.g. which supplementary services are available and authorized) is dynamically linked to the call. The access is requested from the gatekeeper via ARQ/ACF messages. Finally the call is set up with the IP client (IP terminal B). The call process from the IP client (see Fig. 27 is similar).

A more detailed flow is shown in Fig. 29 for an outgoing call to an IP network IP client IP B from an SCN set A. The call is first received by the core switch CS (24) which returns a Call Proceeding and an ISDN ALERT message. The SETUP message from the SCN 14 includes the DN of the called party DNb and of the calling party DNa (ISDN connection is assumed). The next step is to retrieve a Physical TN on the ITG card 22. The request for a PTN is done by the core switch CS to the ITG leader card via Ethernet which returns an available physical port of one of its ITG follower cards. While requesting a PTN, the core switch CS is also conveying call processing information (e.g. called party number, calling party name) for which no SSD messages currently exist. Once a PTN is associated to a Virtual TN, the call can go on using SSD signaling between the Core Switch CS and the ITG card. The ITG handles then the call to the IP network thanks to the DSP component 32 (voice compression and packetization) and the host component 34 (fig. 7, XDLC emulation, H.323 protocol interface).

The next step is to gain admission to the IP network 12. This is done by ARQ/ACF messages to and from the gatekeeper. Once admission is granted, an H225 SETUP message is sent to client B from its follower using the IP address of client B. In response to the H225 SETUP message the IP client B returns an H225 ALERTING message. If the call is accepted an H225 CONNECT message is sent from client B to the follower. The follower communicates with the core switch CS via SSD signaling. The CS then sends an ISDN CONNECT message to the SCN set A and the call set up is completed. The speech path goes between the SCN set A and the follower and the necessary code translations are made, e.g. from the SCN PCM speech to the compressed digital speech on the media path in the IP network 12.

A call to a busy IP client B does not generate any signaling between the core switch CS and the ITG card 22. Instead the status of the H.323 terminal is continuously stored with the associated VTN on the core switch CS which can directly provide the appropriate treatment (e.g. hunt, busy tone).

### Abnormal operation

When the Called IP Client rejects the H.225 SETUP message (see Fig. 30), an SSD RLS key pressed is sent to the Core Switch CS. If the called party is a traditional set, this SSD is ignored: in fact, on a Core Switch point of view it is not possible for a called Aries set to disconnect the call before it is answered. If the called party is an IP set, the calling party is disconnected

### Incoming IP to SCN Call

An incoming call from an IP client A on the IP network 12 is first seen on the gateway as an ARQ message (Fig. 31). The leader card selects a PTN from the pool (following load sharing criteria), reserves it and informs the gatekeeper to instruct client A to forward the received H225 SETUP onto the associated follower card thanks to the callSignalAddress information included in ACF message. When the follower receives the H225 SETUP, it retrieves the PTN which was reserved and generates an incoming call using SSD signaling on that PTN. The core switch then handles call termination with the SCN using ISDN signaling.

### Basic Call Overview: IP<->IP call

### IP to IP call managed by the same MMCS Gateway

When both calling and called IP Clients A, B (Fig. 32) are managed by the same MMCS Gateway, separate PTN's must be allocated to each client from the pool of available PTN's. Further, each client must be authorized by the Gatekeeper. As described previously for a call from an IP client the MMCS gateway first receives an ARQ from the calling party at the leader. The leader selects a PTN for both clients (PTNa and PTNb) from the available pool and stores them. The A follower informs the gatekeeper with an ACF to forward the H225 SETUP message from the client A to the A follower. The IP address of a follower (Fa) is returned to the client A in the ACF message. The client A sends an H225 SETUP message back to the A follower. When the A follower receives the SETUP message it retrieves PTNa and generates an incoming call (IC call) through the core switch CS using SSD signaling. The core switch CS initiates an outgoing call (OG call) via the B follower which retrieves the stored PTNb and obtains admission to the network from the gatekeeper with ARQ/ACF messages. The B follower then sets up a call to the IP client B using the procedure previously described. The following information has to be propagated between the respective Followers cards of the two clients:
The User to User IE (UUIE) which conveys specific IP parameters has to be propagated for the incoming IP->CS call part to the outgoing CS->IP call part.
The IP Follower (F_{A}) Address used for incoming IP->CS call part is also sent to the Follower Card (F_{B}) which handles the outgoing CS->IP call part. The Follower Card (F_{B}) informs also via ELAN the Follower Card (F_{A}) with its IP Address. So the Follower Cards can communicate together without conveying the data to the Core Switch. This direct communication is used to:

1) convey the H.225.0 ALERT message from called to calling IP Client and,
2) convey some specific supplementary services information as detailed later. To reduce traffic on the ELAN, when the resource manager of the Leader is requested to find an available Follower card (F_{B}) for the outgoing CS -> IP part of the call, the resource manager chooses if possible the same Follower card as Follower card (F_{A}) used for the incoming IP->CS call part.

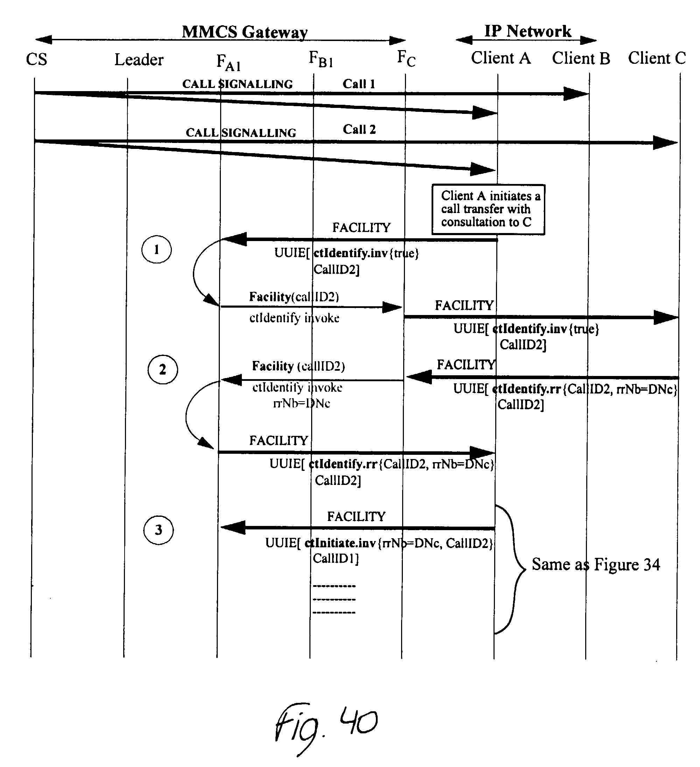

Fig. 33 details the IP to IP call termination. As H.225 may be closed during call termination procedures, the H.225 RELEASE COMPLETE message may not be sent by the IP client. In any case, H.225 RELEASE COMPLETE and Disengage Request (DRQ) RAS messages are a trigger for the ITG card to disconnect the call and to inform the Core Switch.

### IP to IP call managed by a different MMCS Gateway

When calling and called IP Clients are managed by different MMCS Gateways (see Fig. 34) the call is seen as two IP <->SCN calls back-to-back with a trunk call between the two gateways: the Trunk part of the IP call between the two MMCS Gateways is seen by MMCS Core Switch as an SCN trunk call, so a detailed description is not necessary. The message flows (Figs. 29, 31) between core switch and SCN and vice versa are applicable with the addition of a trunk call between the two MMCS gateways. To achieve this it is necessary to communicate some information from the first gateway MMCS gateway 1 to MMCS gateway 2. For instance, the UUIE has to be propagated from calling IP Client to MMCS Gateway 1, from MMCS Gateway 1 to MMCS Gateway 2 and from MMCS Gateway 2 to called IP Client.

### Non-call related operation

Specific operations are required in order to (re-)synchronize non-call related data between MMCS Core Switch, Leader/Backup-Leader cards and Gatekeeper. Several events may cause this (re-)synchronization:
- MMCS System (i.e. Core Switch and ITG cards) start-up
- Core Switch System load
- Gatekeeper, Alternative Gatekeeper switchover
- Leader, Backup Leader switchover
The following information needs to be updated:
- Gatekeeper IP address in the ITG Cards
- Core Switch configured IPSET DNs in the Gatekeeper
- Gatekeeper DN Status in the Core Switch
- Leader IP address in the other ITG cards, in the Gatekeeper and in the Core Switch

### Gatekeeper IP address notification to MMCS gateway

### DN table

### Purpose of the DN table

The DN table is a list of valid DNs (i.e. DNs of IPSETs declared in the core switch). This information is required by the gatekeeper to allow IP client registration. As IP clients register themselves using E.164 numbers, the gateway converts DNs into E. 164 before sending them to the Gatekeeper. This way, when an IP client registers to the gatekeeper, the gatekeeper is able to check if this IP client is known by the gateway. The DN table is built and sent to Gatekeeper either following IPSET service change or after core switch system load or at Gatekeeper request. Address of the leader card is also sent during full DN table download.

### Message flow

DN entries are maintained by the core switch. They are propagated to the Leader Card and the Gatekeeper. The Gatekeeper can then allow registration of endpoints with corresponding DN.
Data can be sent in two ways: fully or incrementally. The process can be initiated by any party at any time. A TCP/IP connection is used for all transactions. The TCP port to use is sent by the Gatekeeper in RCF message and remains available until unregistration.

**Incremental update** The Core Switch sends to the Leader Card an incremental update of a DN entry in one of the following case: New DN or Delete DN.
Remarks:
A DN change is seen by the leader card as a DN delete and new.
More than one DN can be added or removed in one message.
Leader card forwards changes to the Gatekeeper.
When the full DN table is loaded to the Gatekeeper, registration status is set to unregistered.

**Full DN upload:** The Core Switch sends to the Leader Card all DN entries in one of the following case:
Core Switch System load
Request from Leader card (after a request from GK).
Each DNTableDownload message contains N DNs (where N is to be defined depending on the number of VTNs that can be scanned during a timeslice). Each packet might contain redundant data. Data exchange is made through TCP/IP. The Leader Card reconstructs the whole table in memory before forwarding it to the GK with its own address (so that Gatekeeper knows which card is responsible of resource management).
Remark: 'DNTableUploadRequest' message is sent through UDP and contains the TCP port to be used for the DN table download.

### Impact on Core Switch

Each time a service change is performed on an IPSET concerning the DN, a message is sent to the leader and then to the gatekeeper in order to update the DN table. The following rules apply to the messages sending;
- for REQ=NEW, no check is performed on the DN sent in the message for the case it has already been defined for another VTN and thus, already been sent to the gatekeeper.
- for REQ=CHG, only the "Add" message is sent if the old DN still exists for one or more VTN(s).
- for REQ=OUT, no messages are sent if the removed DN still exists for one or more VTN(s).
In the same manner, when the entire DN table is downloaded to the gatekeeper, there is no check performed by the core switch in order to remove DNs which exist for several VTNs. In every cases, the leader card is responsible for removing redundant DNs.

### Impact on leader

The leader is responsible for removing the redundant DNs sent by the core switch.

### Impact on gatekeeper

The Gatekeeper maintains a table with E. 164 numbers with their registration status.

### DN registration

When an IP Client gets registered or unregistered by Gatekeeper through RRQ/RCF or URQ/UCF RAS signaling, the Gatekeeper informs the MMCS Core Switch of this registration status. This is done by:
- standard RRQ and URQ messages between Gatekeeper and Leader card,
- DNRegistrationStatus messages between Leader card and Core Switch

At reception of a DN Registration Status message, the Core Switch updates the *Registration* flag of all the IPSETs (i.e. all the VTNs) which have the same DNa.

### Abnormal Feature Operation

This section covers cases of abnormal operation e.g. database inconsistencies between the ITG leader DN database and the core switch DN tree, as well as some cases involving core switch restart or initialize. One of the main facts to consider, is that, in the case of a call to the IP network, the state machine of the MMCS software has reached the "ringing" state before the ITG has had a chance to start on the protocol. This means that, in most cases of abnormal termination, the call is given the 'no answer' treatment by the core switch. In all cases, the elimination of single points of failure is the priority.

### Simple call abnormal operation

The simple call abnormal operation includes dialing an invalid DN from an IP client, trying to reach an IP client that is not registered with the system, insufficient resources on the core switch, or an IP client through a congested network. In case a call from an IP client is denied a H.225 RELEASE COMPLETE message is sent to the IP client instead, with a RelComp Reason code appropriate to the situation.

The fact that an IP client dialed an invalid DN is determined at the core switch. H.225 requires sending a RELEASE COMPLETE message to the IP client, with invalidRevision in the ReleaseCompleteReason field

The gatekeeper keeps track of IP clients present on the network, and informs the ITG leader of their presence in real-time. This information is not extended to the core switch, and a call to an absent IP client is given the no-answer treatment by the core switch.

If the system lacks resources to establish a call (such as ITG ports, tone units, or available talkslots), the call is denied even though the resources may not be needed per se (talkslots for IP-to-IP calls). When such a condition occurs on the core switch, the call is taken down. In case of an IP originator, the RelComp Reason is gatekeeperResources or noBandwidth.

If the call is rejected by the far end of an IP-to-PSTN call, the ReleaseCompleteReason is mapped to the corresponding Cause IE code as specified in section 8.2.2.8 of the H.225 document.

If the ITG leader can be made aware of degraded QoS to a given IP client, no call attempt is made on the IP network to that IP client. In this case, signaling is returned to the core switch to mark the call as ringing until the no-answer processing triggers.

Incoming calls from IP clients in a congested situation are assumed to be dealt with by the gatekeeper.

When a call coming in from the IP network attempts to use a resource that was just removed or disabled by a maintenance or service change operation the offending call will be denied by the core switch software. The case of calls from the PSTN is handled by the core switch software.

### Supplementary Services

### Call Transfer

### Definition

In all the following sections, a call (called primary call) is established between User A and User B. User A (called Transferring Party) transfers User B (called Transferred Party) to User C (called Transferred-to Party). User A, B and C can be SCN sets or IP clients.
Call Transfer is implemented on a mixed SCN/IP network as detailed in Fig. 35.

### Call Transfer methods

On an IP Network, the H.450.2 Standard defines call transfer with the rerouting methods (with or without consultation). On an SCN Network, MMCS Core Switch only implements call transfer by joining the primary and secondary calls (call A-B and A-C). Call transfer is handled either by the MMCS Core Switch or by the Transferred-to IP clients depending on the Users set type (i.e., SCN sets or IP clients) as detailed below

### Gatekeeper Interaction

The Gatekeeper routed model is preferably used for an H.323 basic call. As the Gatekeeper supports only H.323 basic call, call transfer operations are transparent for the Gatekeeper.

### Notations

The notations of Fig. 36 are used in the message flows of Figs. 37 to 44

### Call transfer operations

When the transferring party is a SCN set, call transfer by joining the two calls is handled by the MMCS Core Switch whether User B and C are SCN sets or IP clients.
Notes:
No call transfer indication (ctComplete or ctUpdate invoke) is provided to the IP Transferred or Transferred-to Clients.
As the Transferring SCN set is not a set managed by the MMCS Core Switch (MMCS supports only IP sets), the MMCS Core Switch is not available to prevent a double compression/decompression if the Transferred and the Transferred-to Parties are IP Clients.
When the transferring party is an IP Client, specific methods are required in this case and is explained below.

### Transferring and Transferred Parties are IP Clients, Transferred-to Party is an SCN Set

As shown in Fig. 37 call transfer by rerouting is handled by the Transferred IP Client.
When IP Client A transfers the primary call, a ctlnitiate invoke is sent to Follower card (F_{A}), If this primary call is an IP to IP call, the APDU is conveyed by the Follower card F_{A} via ELAN to the Core Switch (Note that Follower card F_{A} was informed during call establishment ifB is an IP Client or a SCN set). The Core Switch checks if Client A can transfer the primary call. In this case, the received information is sent via ELAN to the Follower card (F_{B1}) which handles the IP call to B. The Follower card F_{B1} rebuilds the ctlnitiate invoke and sends it to B.

At reception of this message, the transferred Client B initiates a new call which is handles by Core Switch like a basic call. The Core Switch uses another VTN available for this IP Client B for this secondary call.
Note: if transfer is not allowed from A, Core Switch sends a reject to Follower card F_{A} which builds a ctlnitiate return error and sends it to Transferring Party A.

### Transferring Party is an IP Client, Transferred and Transferred-to Parties are SCN Sets

If the Transferring Party A is an IP Client (see Fig. 38), and Transferred B and Transferred-to C Parties are SCN Sets, the call by join method is used to transfer B to C. Call transfer is handled by MMCS Core Switch. As Follower card F_{A} knows that B is an SCN set, at reception of a ctlnitiate invoke, Follower card F_{A} sends SSDs messages to initiate call transfer on MMCS Core Switch. At reception of an ALERT message from the Transferred-to party C, Core Switch sends via ELAN a RequestForXferComplete message in order that Follower card F_{A} sends the SSDs messages to complete the transfer.
Notes:
the TRN key is hard-coded for the IPSET in the Core Switch and in the ITG cards.
The Transferred-to party C can an IP Client or a SCN Set.

### Transferring, Transferred and Transferred-to Parties are IP Clients

If Transferring, Transferred and Transferred-to Parties are IP Clients (see Fig. 39), call transfer by rerouting is handled by the Transferred IP Client. The H.225.0 ALERT message which contains the ctSetup.rr APDU is directly conveyed from the Transferred-to Follower to the Transferred Follower Card..

### Transfer with consultation

When a secondary call is already established between IP Client A and the Transferred-to Party C, A transfers B to C using the "Transfer with Consultation" method: a ctIdentify invoke is sent from A to C in order to know if C can participate in the call transfer.

If Transferring and Transferred-to Parties A and C are IP Clients (see Fig. 40), the ctIdentify invoke (respectively ctIdentify response) is transparently conveyed to C (respectively to A) via the Follower cards F_{A} and F_{C.} (Note that Follower cards F_{A} and F_{C} was informed during call establishment that they handle the same IP to IP call).

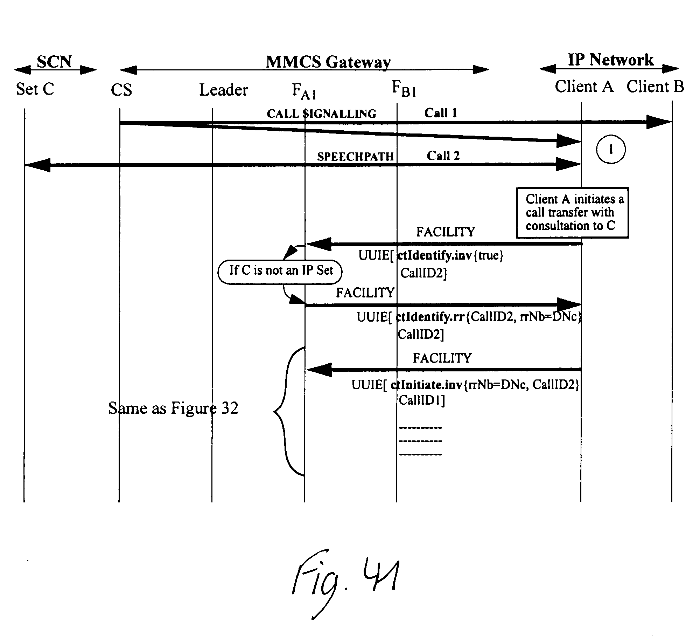

If Transferrin Party A is an IP Client and Transferred-to Party C is a SCN set (see Fig. 41), at reception of the ctIdentify invoke, the Follower cards F_{A} sends back a ctIdentify response to the Transferring IP Client A with DNc as rerouting Number.

### Call Forward

H.450.3 Call Diversion messages are used only for Call Forward All Calls feature activation. No H.450. 3 messages are used for call processing. All call diversion processing is done in the Core Switch.

### Call Forward All Calls/Call Forward Unconditional

### Call Forward Activation/Deactivation

These following sections describes the Call Forward feature Activation/Deactivation from an IP Client. Call Forward feature can be activated if the Radvision H.323 stack supports H.450.3 *activateDiversion* and *checkRestriction* operations and if the IP Clients provide this information.

### Local activation

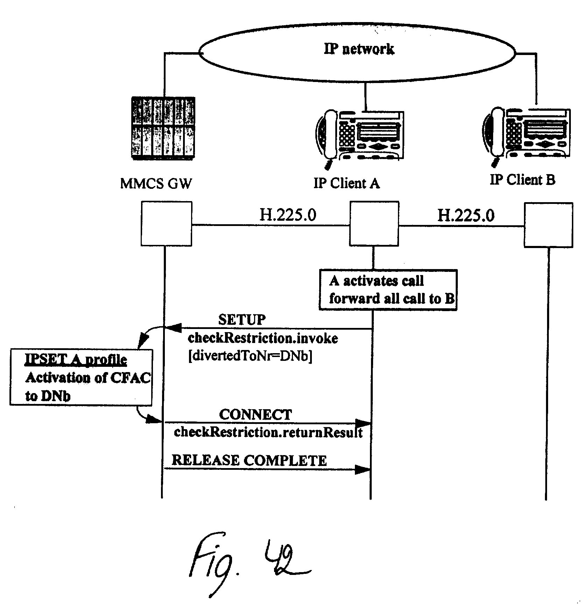

An IP Client A activates CFAC by sending to the diverted-to party a H.225.0 SETUP message with the H.450.3 *checkRestriction invoke* operation (see Fig. 42). As call signaling is routed to the MMCS gateway, the MMCS gateway:
- intercepts this message,
- activates CFAC to the diverted-to party in the MMCS Core Switch and
- sends back to IP Client A a H.225.0 CONNECT message with the H.450.3
*checkRestriction returnResult* (respectively *checkRestriction errors*) operation if CFAC is activated (respectively is not be activated) on the MMCS Core Switch.

### Remote activation

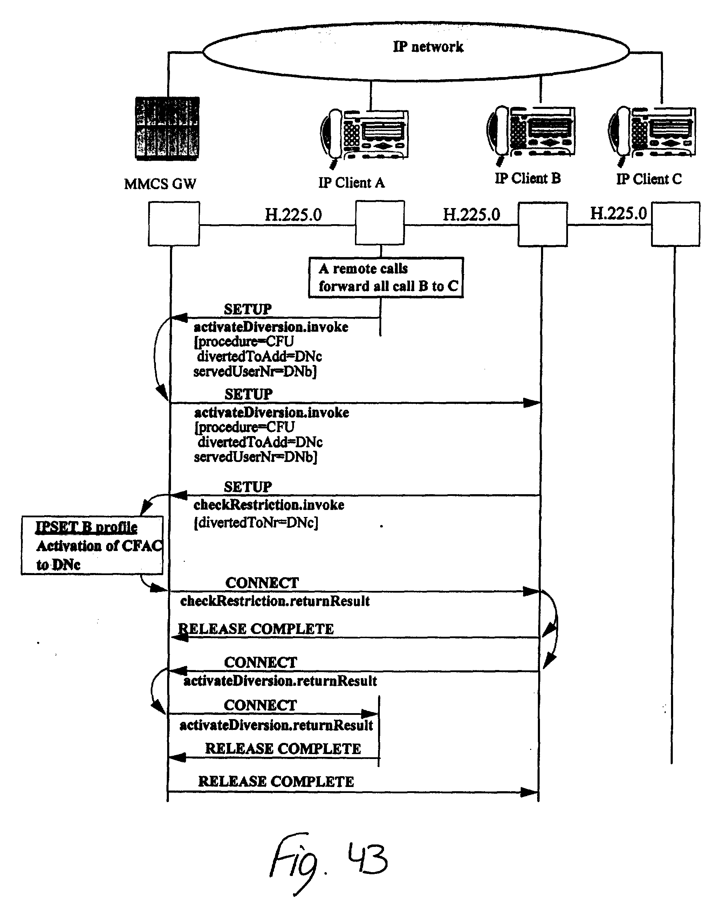

An IP Client A activates remote call forward of B (served party) to C (diverted-to party) by sending to the served party a H.2250 SETUP message with the H.450.3 *activateDiversion invoke* operation (see Fig. 43). This SETUP message is transparently conveyed by the MMCS GW to the served party. Then the same message flow occurs as for the local activation.
Notes: the H450.3 protocol allows activation of CFU, CFB or CFNR by this way. But on the MMCS Core Switch only CFU can be activated by an User party. CFB and CFNR is configured by the Administrator. Therefore H.450.3 operations with other profile than CFU are rejected by the MMCS Gateway.
Note that B must be an IP Client and has to be is the same IP zone than IP Client A. C can be an IP Client in the same or a different IP zone or can be a traditional set.

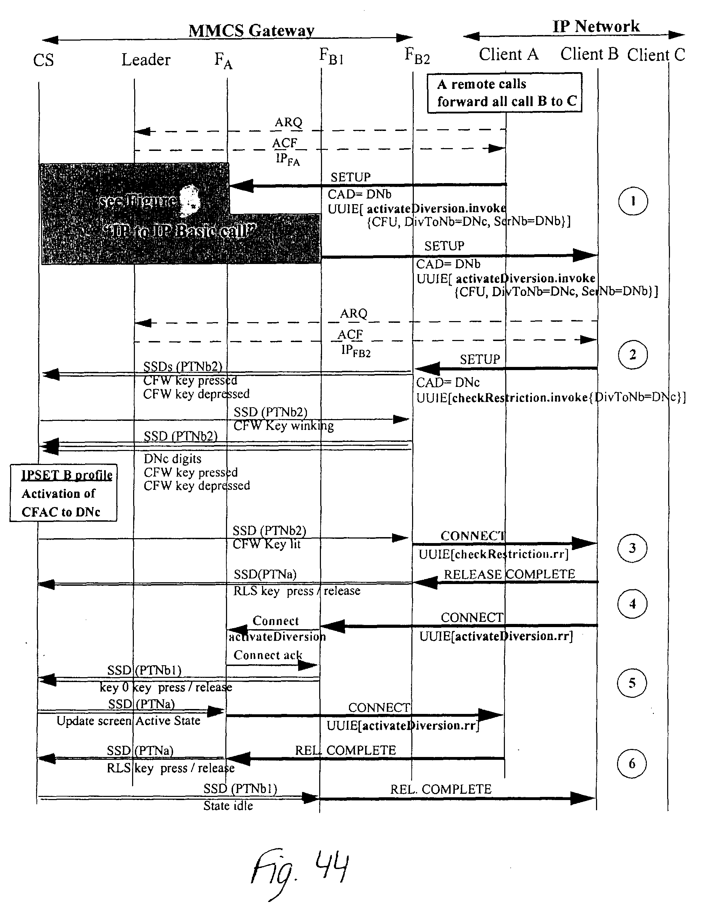

Fig. 44 details the corresponding MMCS Gateway internal message flow: the activateDiversion invoke is conveyed in the UUIE like other basic call IP parameters. Note that the CFW key is hard-coded for the IPSET in the Core Switch and in the ITG cards.

### Call Forward feature operation

Call Forward All Calls (CFW) allows all incoming calls to a terminal to be automatically forwarded to a pre-selected destination, within or outside of the switch. Call Forward All Calls is supported on IP Clients.

### Call Forward No Answer

Call Forward No Answer (CFNA) automatically forwards an unanswered call to another DN after a customer specified number of rings. The class of service Call Forward No answer Allowed (FNA) activates the feature on a TN basis. Customer options can be defined for DID, non-DID and local calls to deny CFNA for all stations, to CFNA to an assigned hunt DN or a flexible CFNA DN defined per TN.

Calls terminating to a IP Client not answered within a given time frame can be subjected to CFNA redirection. In addition, a IP Client which initiates a call to a set or terminal can be subject to CFNA redirection. Furthermore, a IP Client DN can be defined as a CFNA DN.

### Call Forward Not Registered

Call Forward Not Registered is handled by the Nortel proprietary Hunting feature: When an IP Client is not registered in the Core Switch, the call is immediately forwarded to HUNT DN if configured, otherwise intercept treatment is provided.

### Hunting

Hunting allows calls which encounter busy DNs to be automatically routed to another DN. Hunting continues along a hunt chain until an idle DN is found, the end of the hunt chain is reached, or the maximum number of hunt steps is exhausted. Short Hunt hunts along the DN keys defined on a station.
The following three types of hunt chains are supported for calls terminating to IP Clients
- Circular hunting
- Linear hunting
- Secretarial hunting
Short hunting is not applicable to IP Client, which supports only a single directory number.

For calls originated from IP Clients, all four types of hunting can be applied.

### IP Clients - Virtual TNs Configuration

In order to create IP clients through use of VTNs, phantom loop(s) must firstly be created and VTNs are taken from that phantom loop. Up to 1024 VTNs can be configured on a single phantom loop. Once the phantom loop has been created, IP clients (VTNs) can be configured on it through MAT. MAT is a PC based tool which craftspersons use to perform terminal administration through a graphical user interface. The program then converts the input into a script and "drives" the terminal administration overlays by loading the correct overlay and automatically entering the desired response for each prompt.

### RADIUS client operation

Implementation of a RADIUS (Remote Authentification Dial In User Service) client on all ITG cards allows per-call information to be sent to an external machine for billing purposes. Only the accounting part of the protocol is implemented.
- ITG card sends a Start record when a call starts.
- ITG card sends an End record when the call is released.
- The End record contains QoS and amount of data sent.
- Both records contain the Called and Calling Party numbers, and the call ID, for call identification and ulterior correlation with CDR records generated by the core switch.
- The RADIUS records are sent out on the maintenance interface, to maximize security.
No correlation is made between the RADIUS record and the corresponding CDR records from the core switch. This part is left to the external billing machine. Note that there can be a difference between call duration found in the CDR and RADIUS records, due to the time elapsed between the moment the call is marked answered on the core switch and on the ITG card.

### Configuration

The MAT interface provides a UI for the configuration of:
- Enable/disable of RADIUS record generation.
- IP address ofthe external billing machine.
- IP port number ofthe external billing machine (default is 1813).
- Key number for check summing RADIUS record data (the desired security is still TBD).
This data is configured at the Node level and is distributed to all of the ITG cards associated with the Node.

### Messaging

The RADIUS client sends two records to the network listener: one at the start of the call and one at the end. The messages are sent by the Follower card actually processing the voice call (i.e. not the DCHIP or Leader if they aren't handling the voice data). The RADIUS protocol uses UDP for message exchange. The client sends a message to the listener and waits for an acknowledgment. If no acknowledgment is received, the client retransmits the record, using the standard exponential backoff scheme. The data is stored on the card until an acknowledgment is received at which time it is discarded. The client will store a maximum of 100 records, which allows for 2 start and 2 end records for each of the 24 ports.

### Start Record

The Start record is sent when the call is answered. It contains the following fields:
a) Calling party number,
b) Originating IP address and port (the port used for the RTP channel),
c) Called party number,
d) Destination IP address and port (the port used for the RTP channel),
e) Call ID,
f) Call start time,
g) Call setup duration (time from call initiation to call answer),
h) Codec used.
Snapshot of remote Gateway's QoS at time of call connect.

### End Record

The End record is sent when the call is released, rejected, or abandoned. It contains the following fields:
a) Calling party number,
b) Originating IP address and port,
c) Called party number,
d) Destination IP address and port,
e) Call ID,
f) Call start time: the precision on this measurement is TBD, but the higher the precision, the more likely the discrepancies between it and the corresponding duration in the CDR record produced by the core switch,
g) Call duration (time from call answer to call release),
h) Codec used,
i) Number of bytes received,
j) Number of bytes sent,
k) Number of packets received,
I) Number of packets sent,
m) Snapshot of latency seen at the end of the call,
n) Packet loss,
o) Snapshot of the QoS at time of call release.

### Access Restrictions

Access restrictions are used to limit individual users' access to the exchange network, private network, services and features. These restrictions can control calls made or answered from certain telephones. The MMCS Core Switch performs access checks based on:
- the Class of Service (COS) of the individual station
- the Trunk Group Access Restriction (TGAR) code of the station
- the area and exchange codes dialed by stations with Toll-Denied COS
If any restrictions are detected when a call is placed, the call is denied and intercept treatment is applied as defined in the Customer Data Block.
For IP Clients, the three access checks can be configured, and the intercept treatment is given if a IP call is denied. No development effort is required to support Access Restrictions on IP Clients

### Calling Line Identification (CLID)

Calling Line Identification is provided to called IP Clients.

### Calling Line Identification Presentation/Restriction (CLIP/CLIR)

The Calling Line Identification Presentation/Restriction of an IP Client is configured on set basis with Class Of Service (CLS) DDGA/DDGD. As the H.225.0 standard does not support the presentation indicator in the Calling Party Number Information Element, the presentation of the calling party number (of either an IP Client or a traditional Set) can not be conveyed to the called Party if it is an IP Client. As the Calling Party Number is optional, this IE is not included in the H.225.0 SETUP message if the CLID is restricted.

### Connected Number / Presentation / Restriction (COLP/COLR)

As H.225.0 standard does not support the Connected Party Number Information Element in the H.225.0 CONNECT Message, the connected number is not provided to/from an IP Client. Note that with the future H.323+ evolution, COLP/COLR will be supported.
However in case of ISDN SCN call to IP client, Core Switch builds and sends the connected IE in the ISDN CONNECT if necessary.

### Calling/Connected Name

The H.225.0 standard does not define any particular IE to convey the Calling/Connected Name.
The Calling/Connected Name is provided by the MMCS Gateway to an IP Client in the H.225.0 Display Information Element. If the Calling (respectively the Connected) party is an IP Client, the Calling (respectively the Connected) Name is built according to the IP Client name configured in the MMCS Core Switch whatever the name sent by this Calling (respectively this Connected) terminal.

### Calling/Connected Name Presentation/Restriction (S)

Calling/Connected Name Presentation indicator can also be conveyed in the H.225.0 Display Information Element. Class of Service NAMA/NAMD is used to allow or restrict the IP Client name presentation.

### Remote Call Forward

Remote Call Forward is a Nortel feature which facilitates the programming of Call Forward All Calls from a remote station through the use of Flexible Feature Code (FFC).

### Call Forward Busy

Call Forward Busy (CFB) is a Nortel feature which allows a DID call encountering a busy DN to be forwarded to the attendant if the busy station is call Forward Busy Allowed (FBA).

### Internal Call Forward

Internal Call Forward (ICF) allows a user to selectively forward only internal calls to the Internal CFW DN. This feature is activated /deactivated on a per telephone basis using the ICF key and the SPRE/FFCs from SL-1/digital telephones and 500/2500 type telephones, respectively.
ICF is not supported on IP Clients.
But, an IP Client DN can be programmed as an ICF DN.

### H.323 Call Waiting

IP Call Waiting allows alerting a user that another call is being requested while already on the call. By configuring several VTNs (i.e. several DNs) on the same IP Client (i.e. on the same IP address), the MMCS Gateway can present several calls on the same IP Client.

### MADN

IPSET use Multi Appearance DN (MADN) feature with the following limitations:
- MCN key is not supported
- all the sets which have the same MADN are IPSET (VTN) and all these IPSETs represent the same IP Client
- the call to a MADN is presented to only one idle VTN

### Message Waiting Indication

Message Waiting Indication (MWI) allows notifying a set that a local or remote Message Center or Meridian Mail holds a message for it. This indication appears on the set either via a lamp or a key/ lamp pair or via a tone heard when the set goes onhook. As the ITG line Line Side gateway does not offer the capability of exchanging proprietary non call related messages, the core switch is not able to notify the IP client that a message is waiting for it. The MWI information is only known by the core switch and by the Meridian Mail.

### 3 Way Calling

3 Way Calling (i.e. three party conference) is a low priority requirement. It is not supported as it is not planned to implement the H.323 Multipoint Control Units.

### End To End Signaling

End To End Signaling (EES) enables a set to send tones through an established connection.
For IP client to IP client calls, as the media path is direct between the endpoints, EES, if it is supported by the IP clients, is transparent to the core switch. For IP client to PSTN call (including calls to Meridian Mail), EES, if it is implemented on the IP client, is fully supported. The only restriction concerns the way the tone transmission can be affected by packet loss.

While the invention has been shown and described with reference to preferred embodiments, it will be understood by those skilled in the art that various changes or modifications in form and detail may be made without departing from the scope and spirit of this invention.

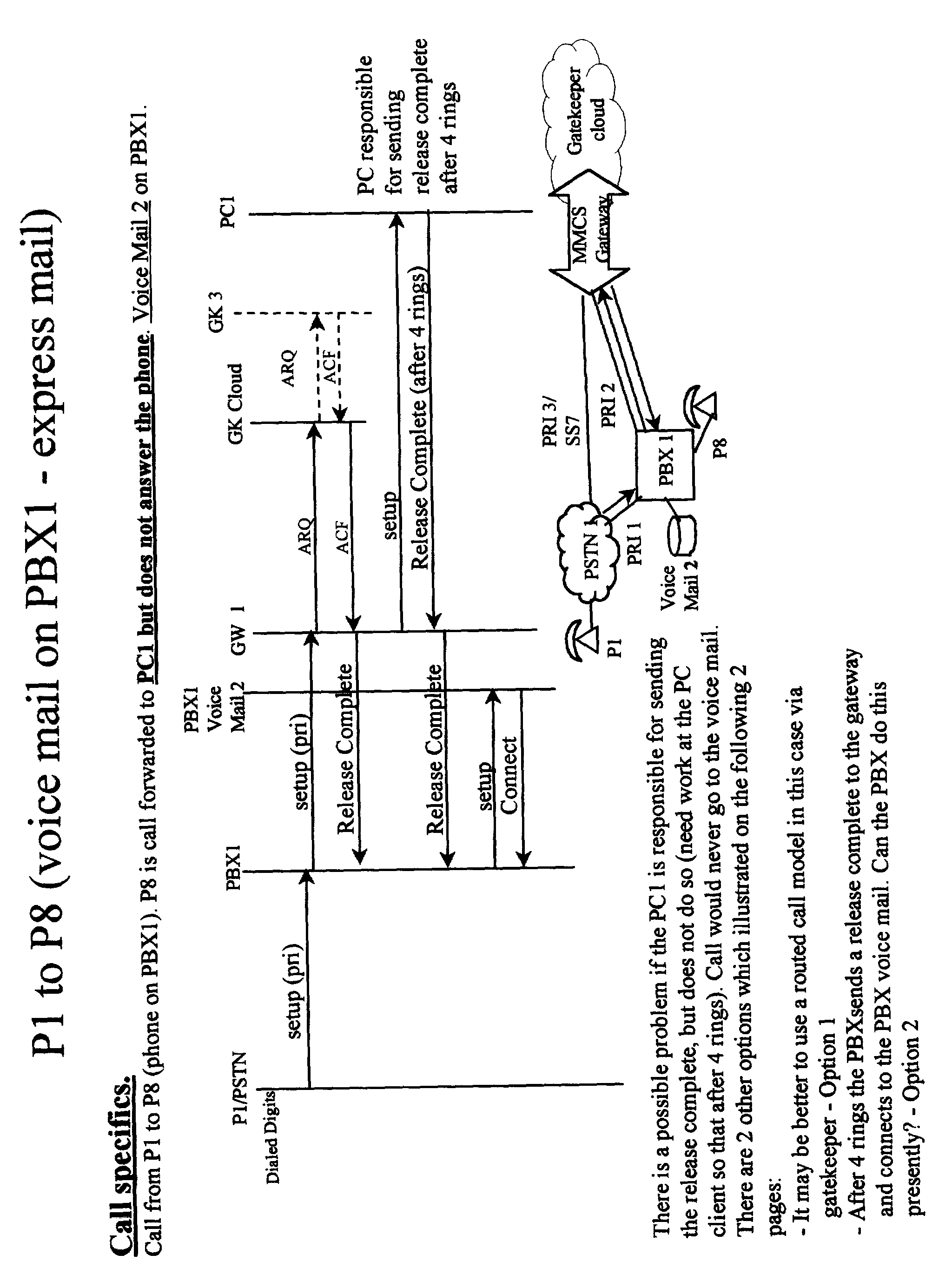

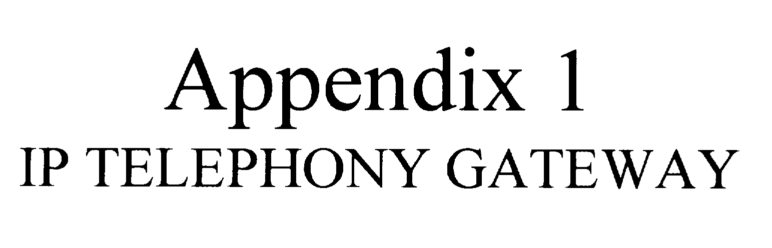

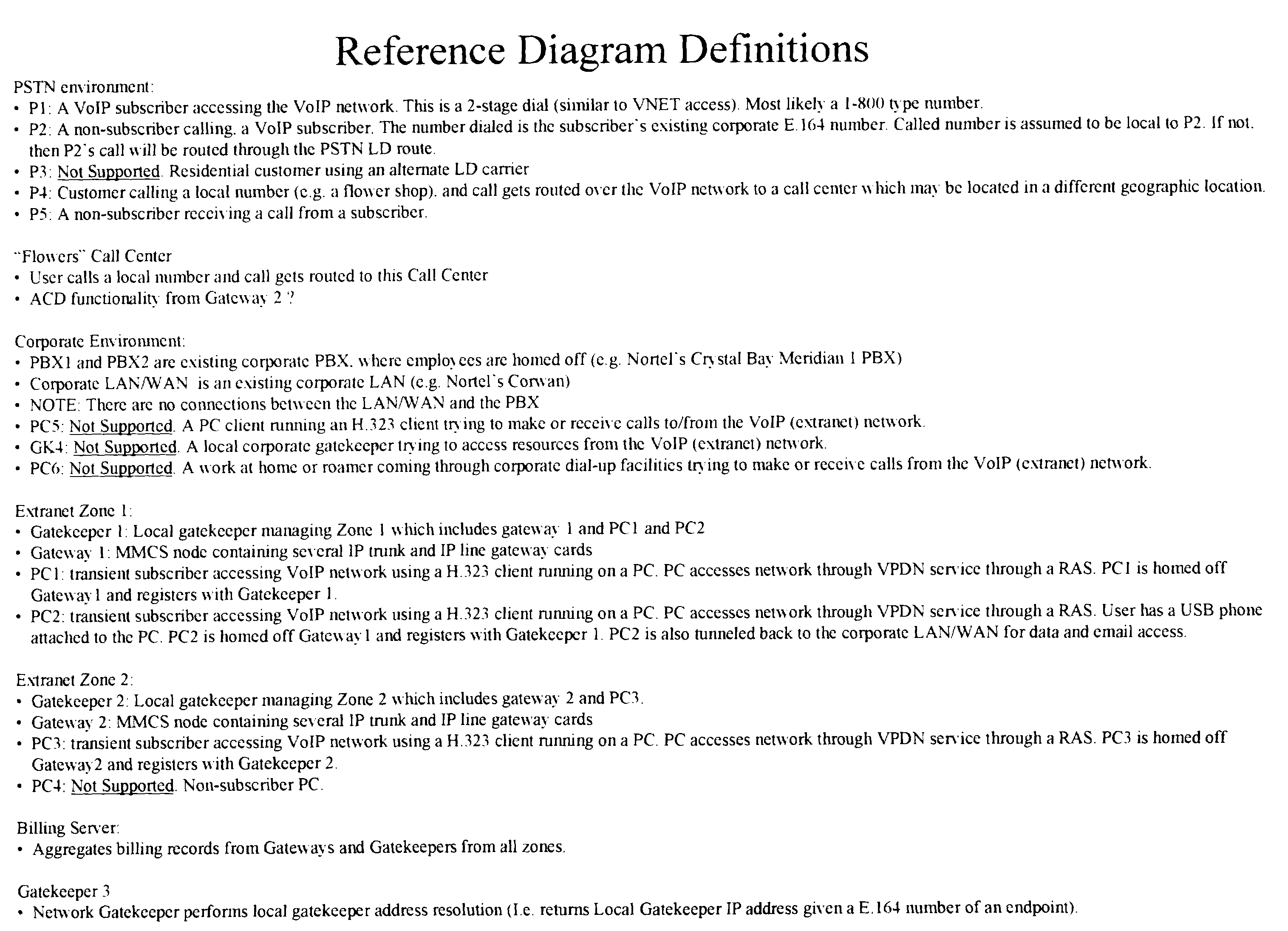

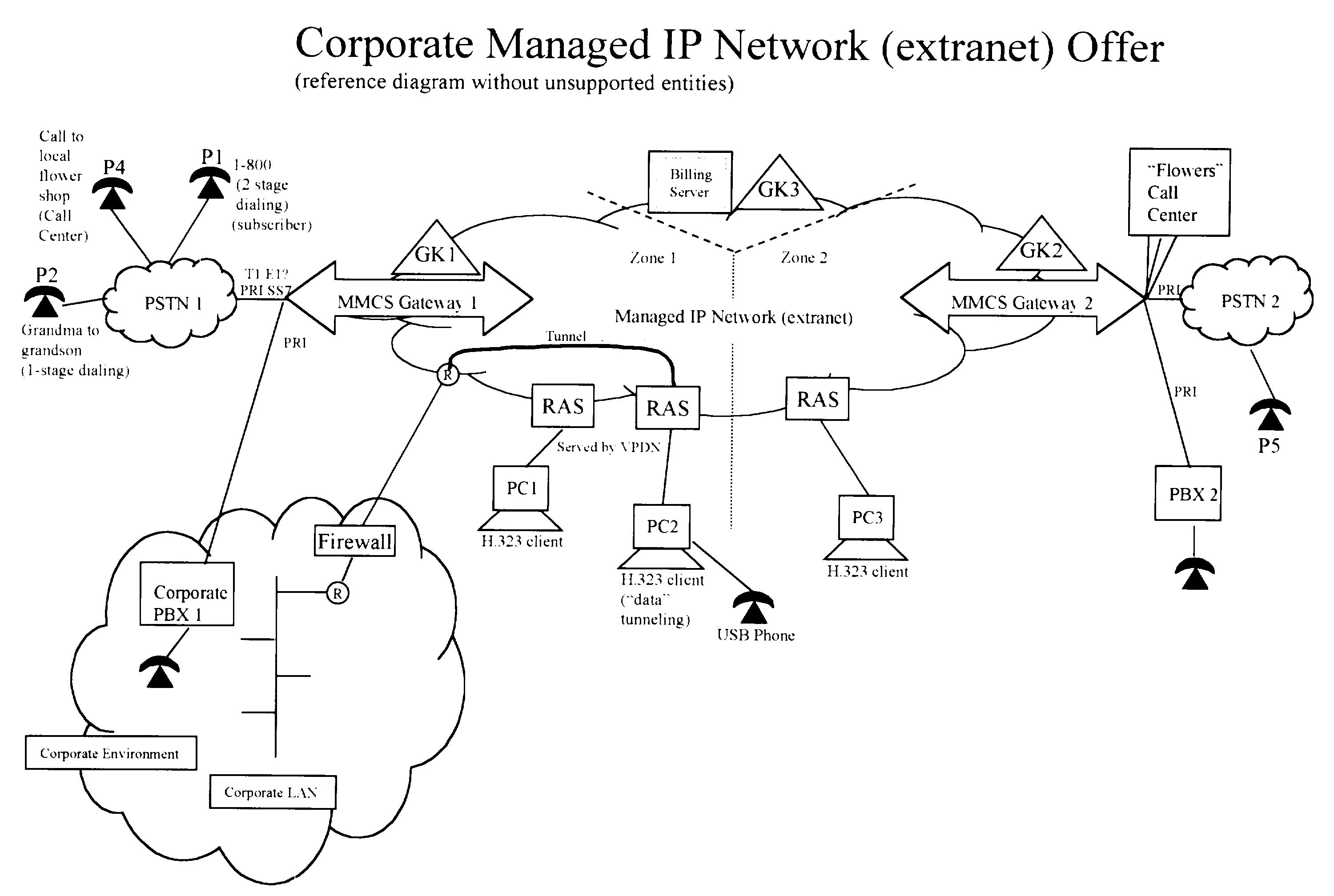

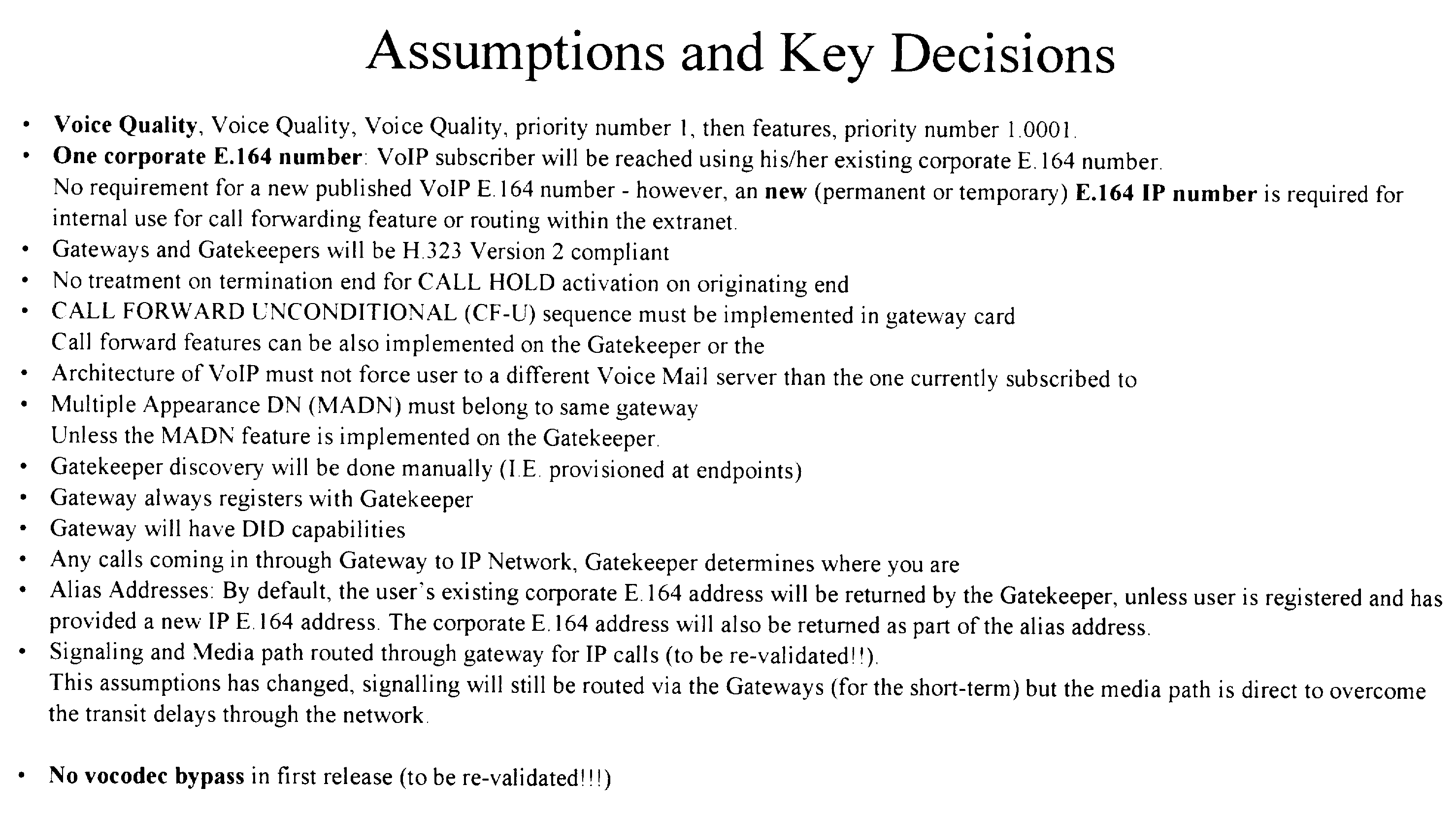

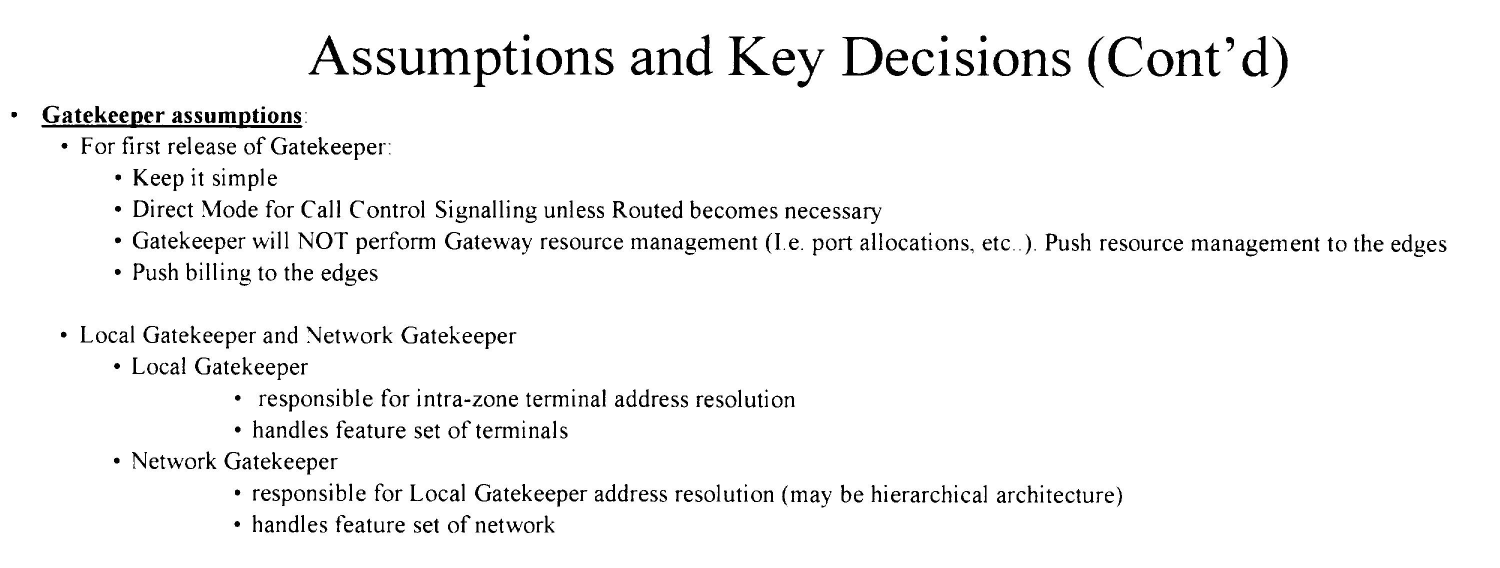

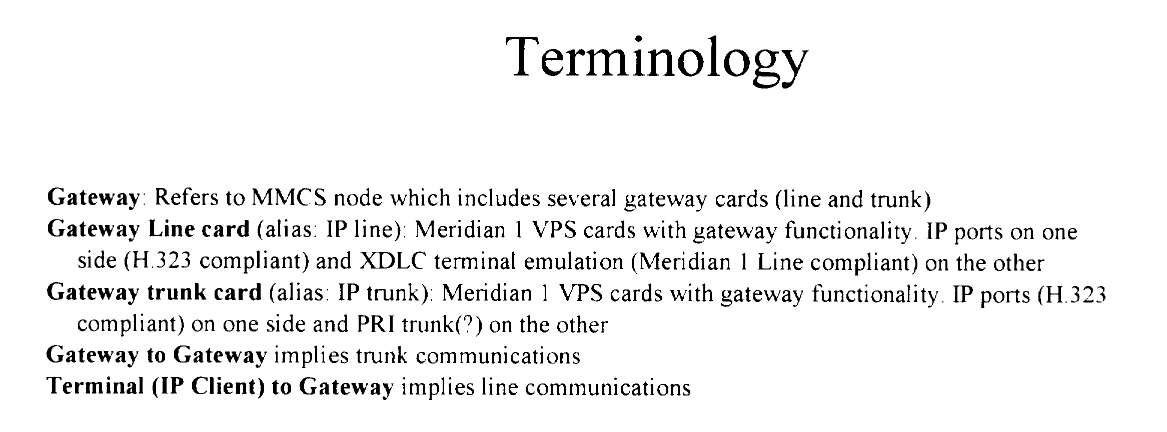

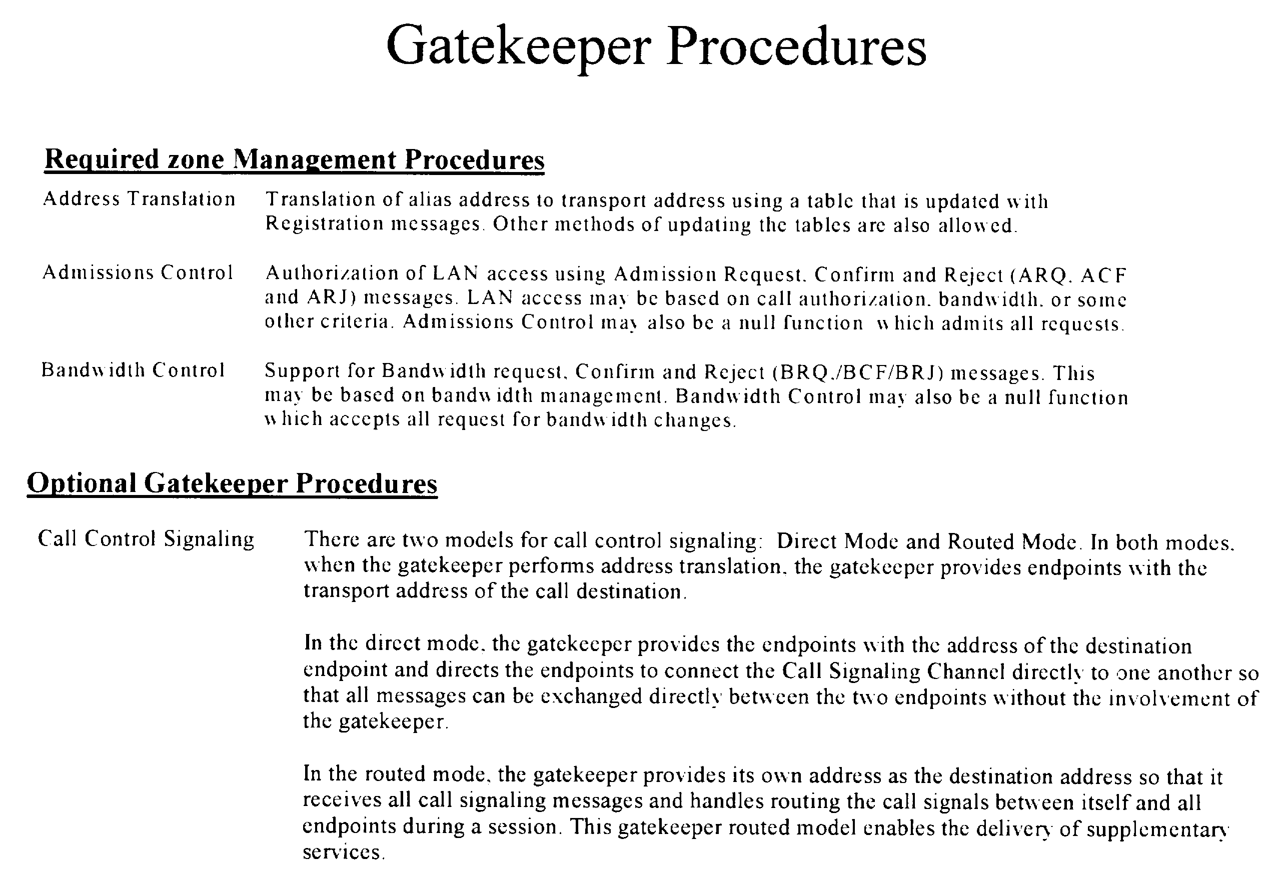

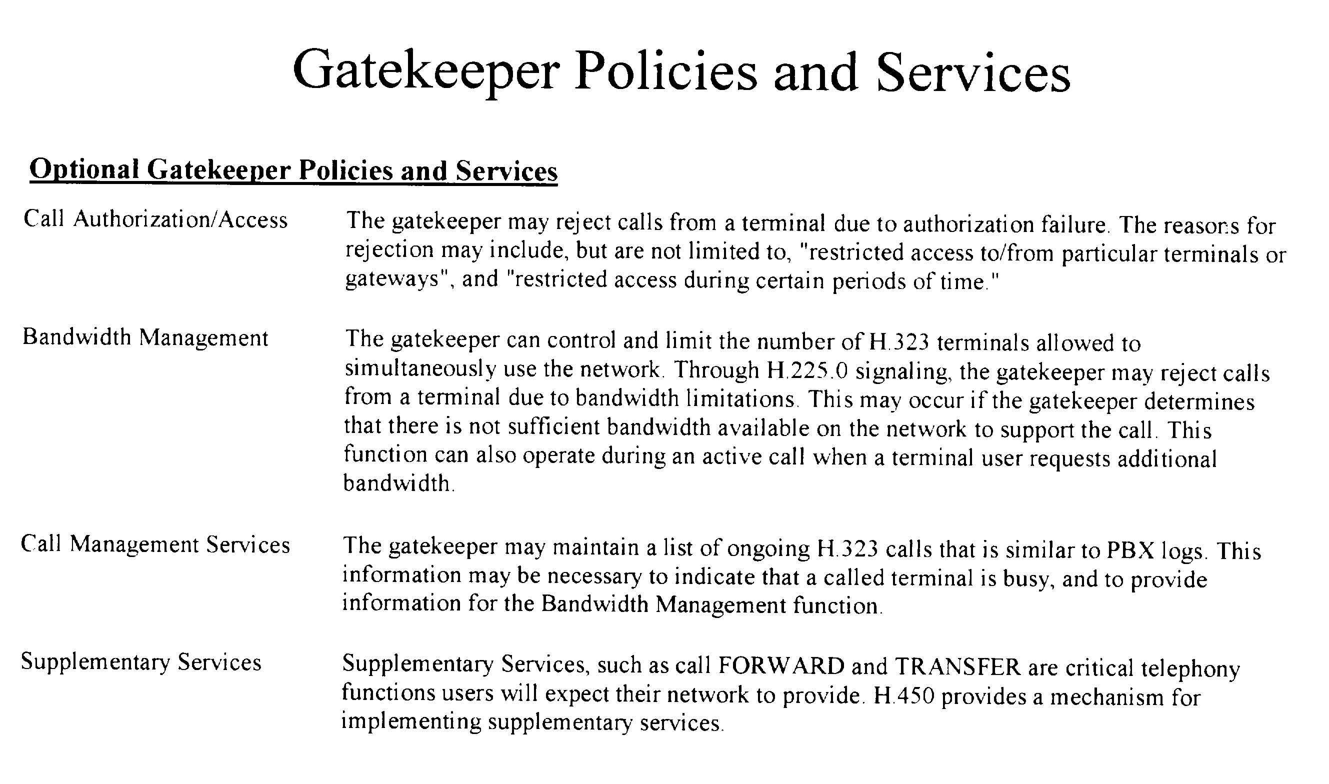

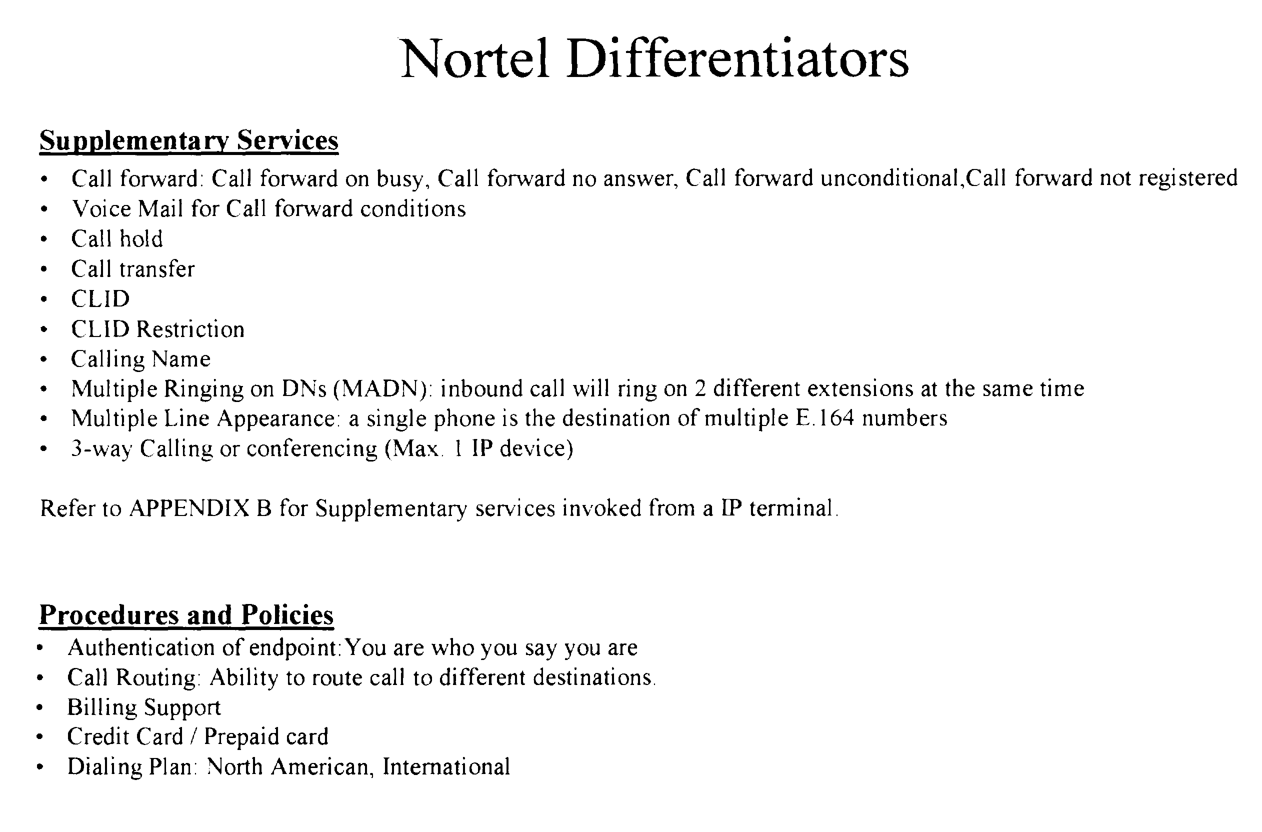

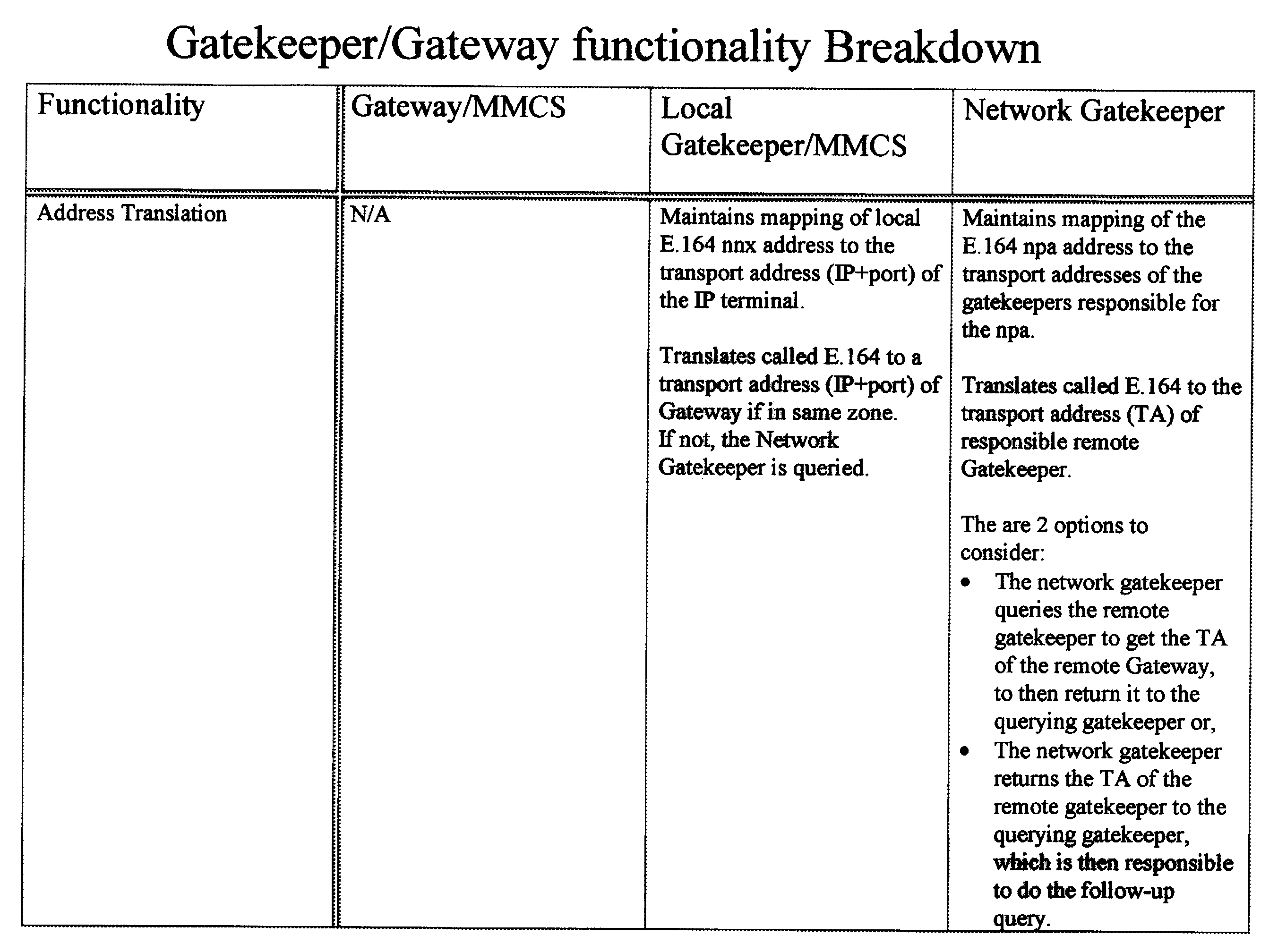

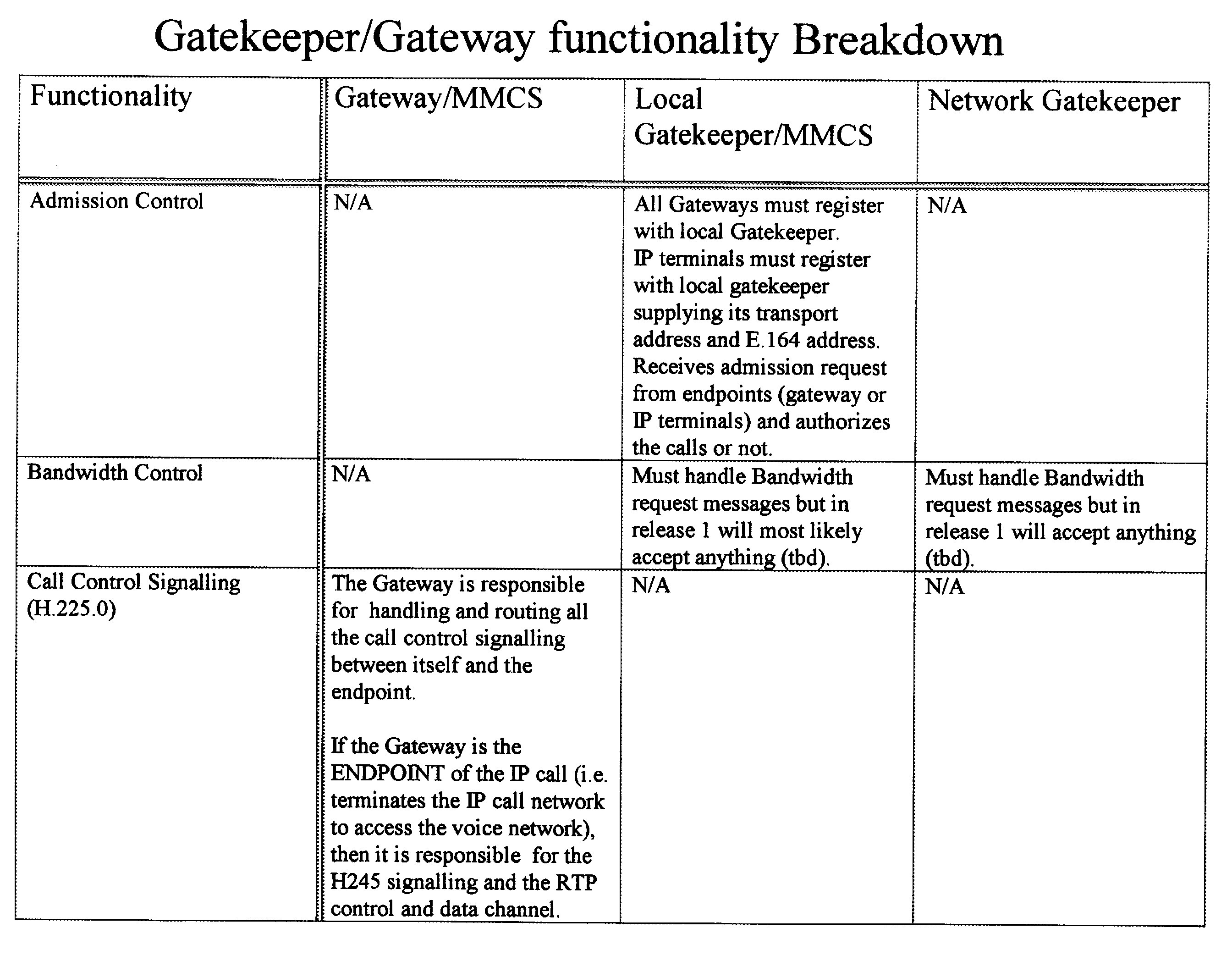

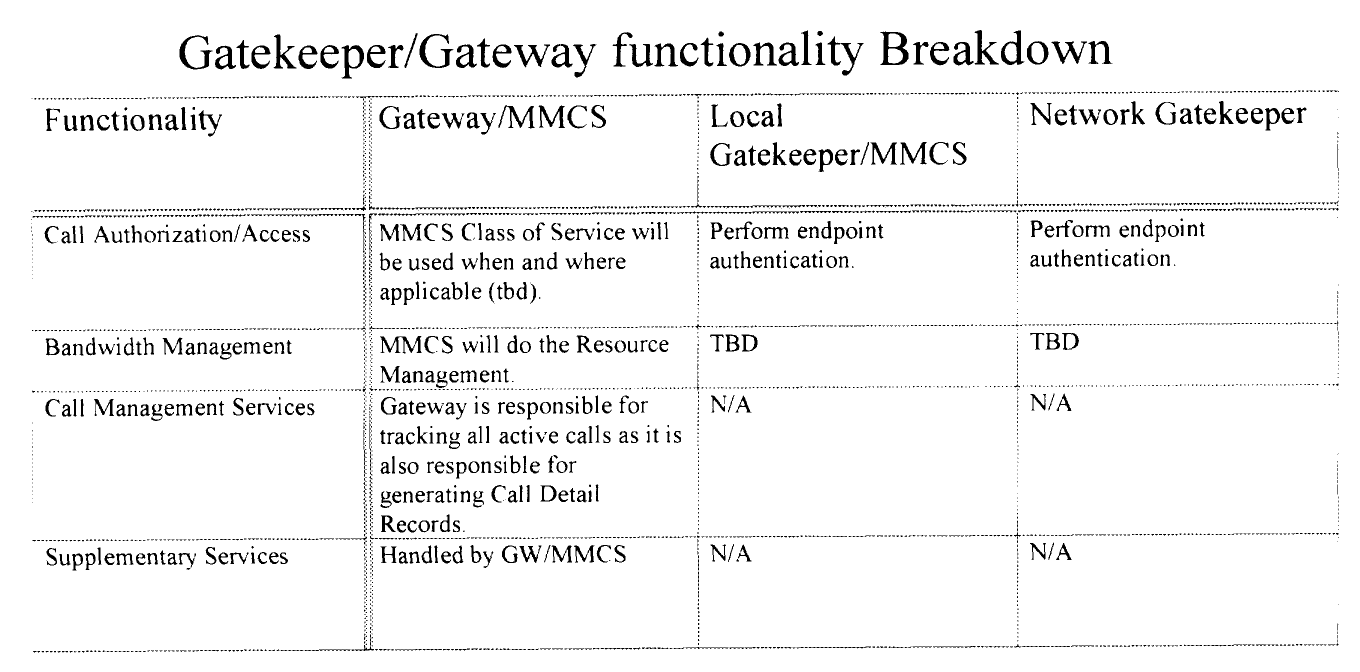

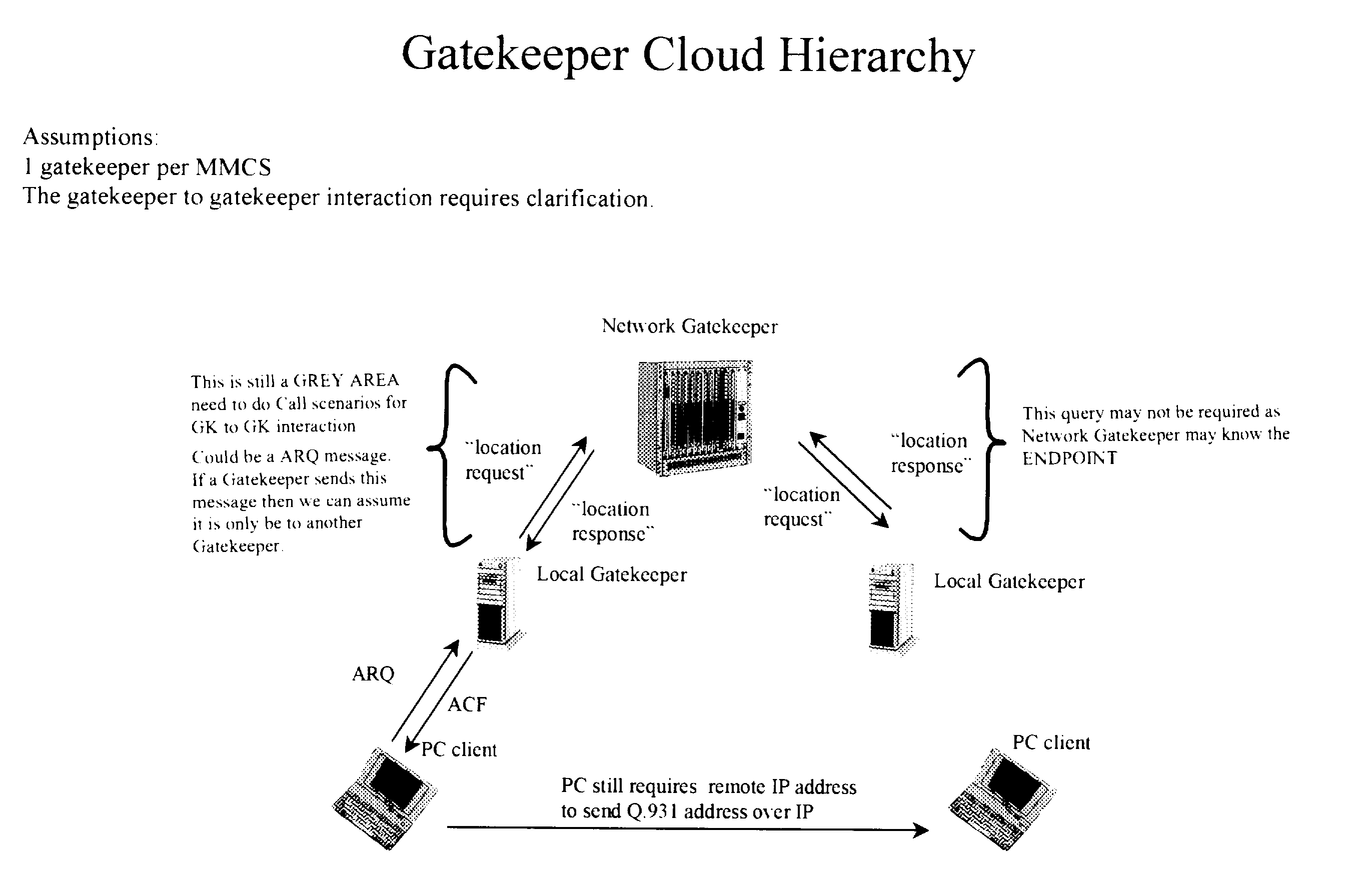

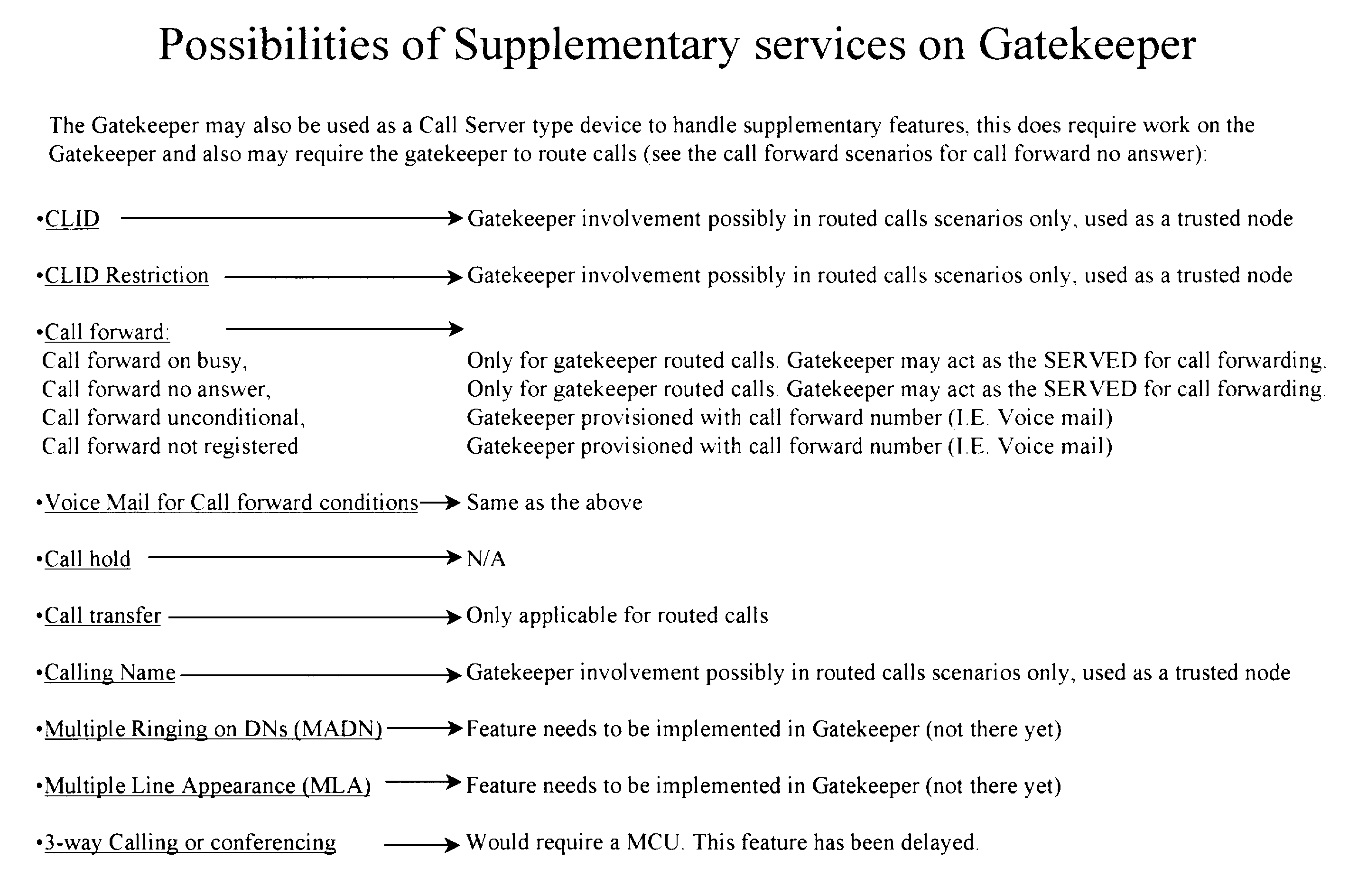

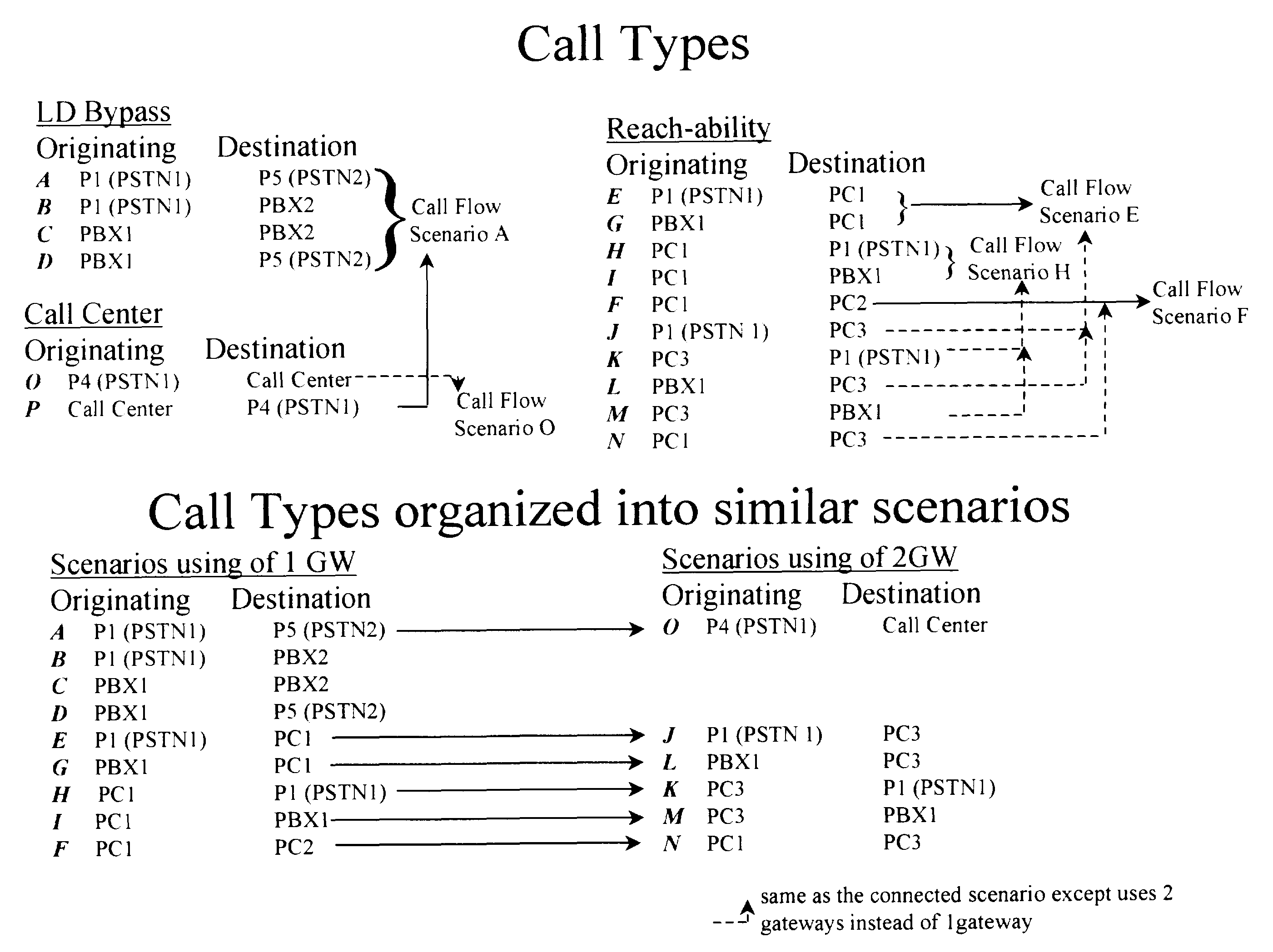

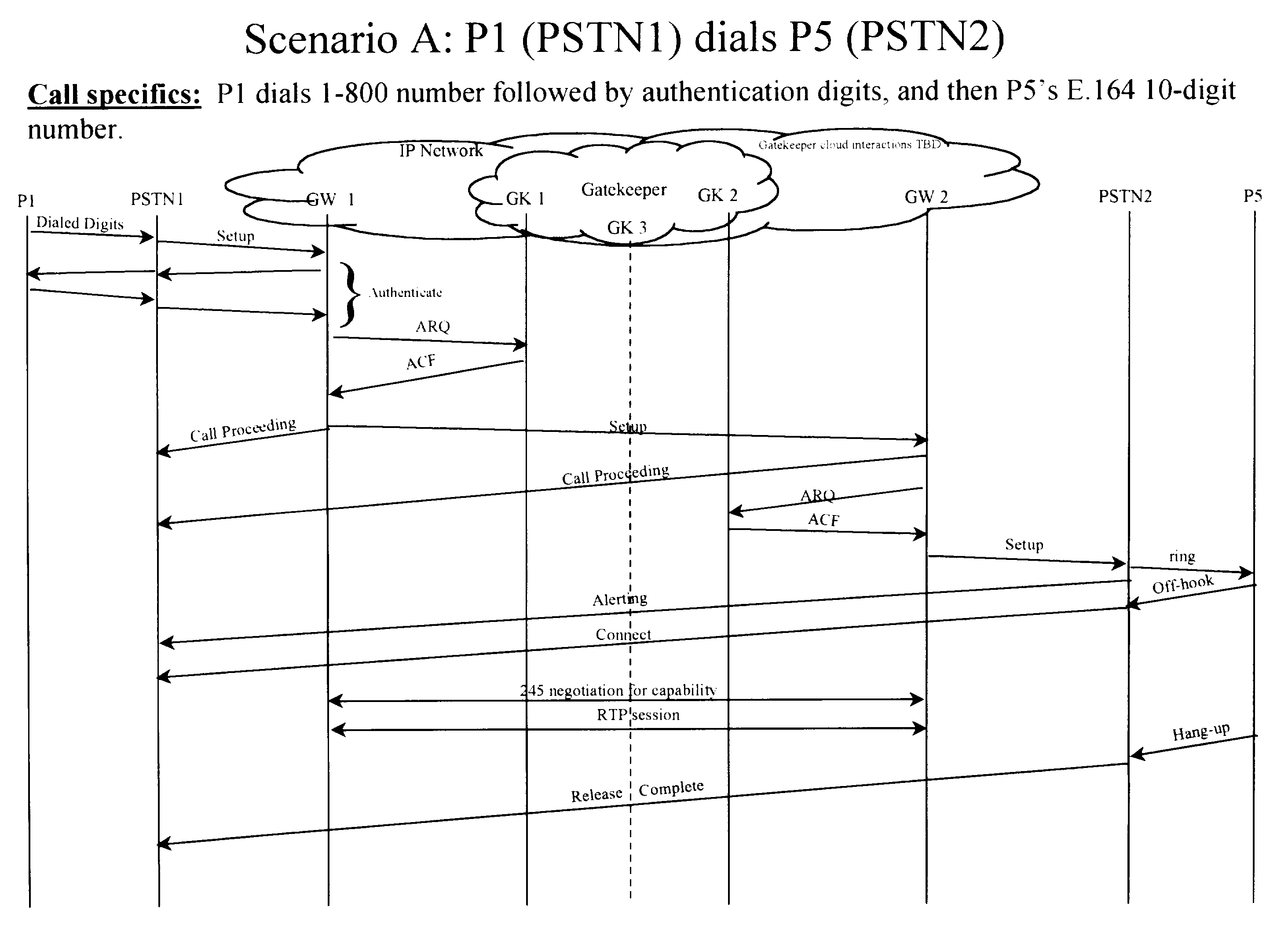

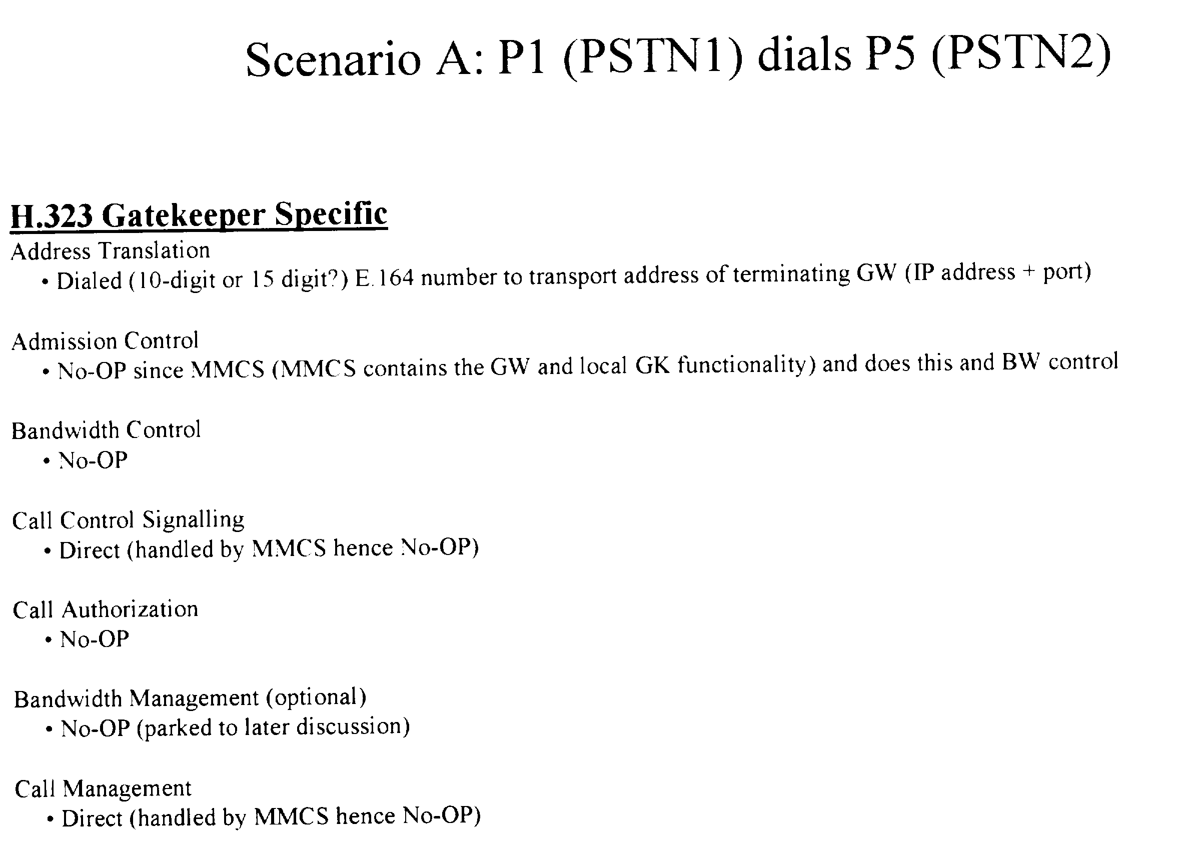

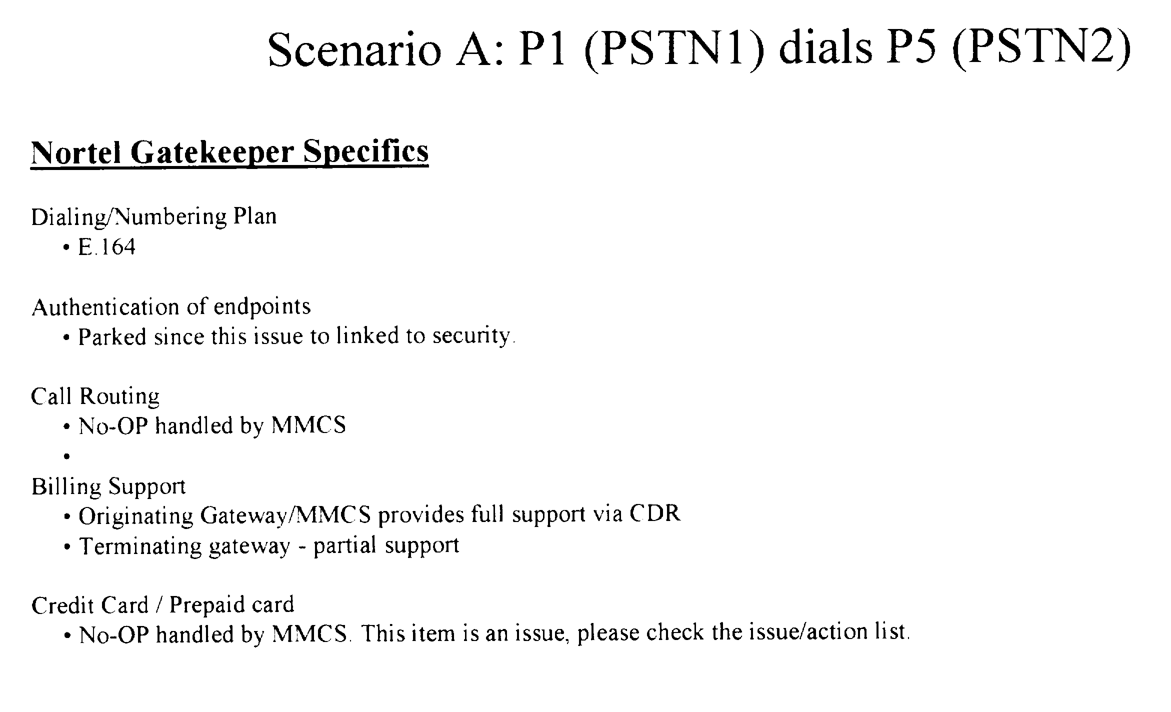

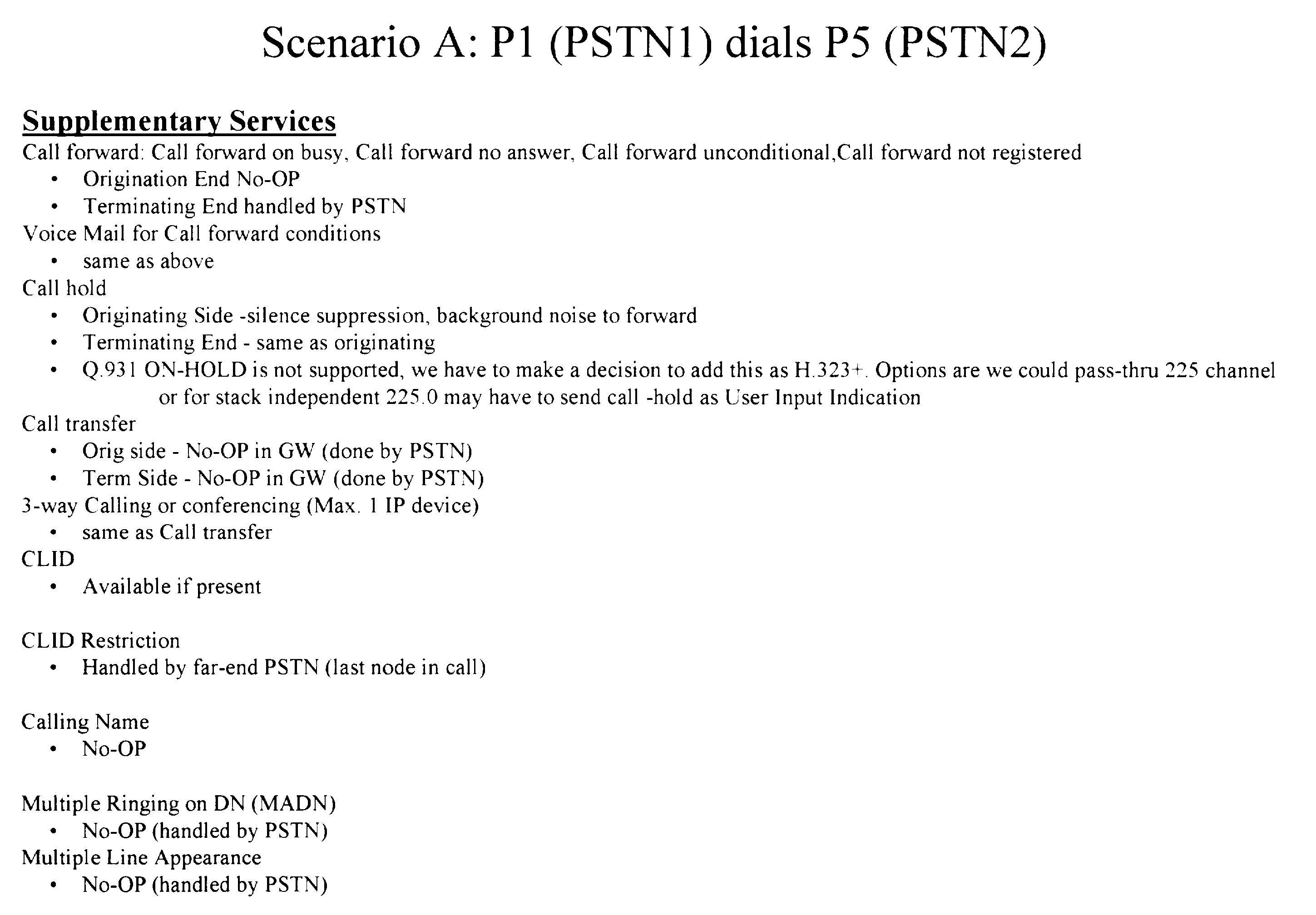

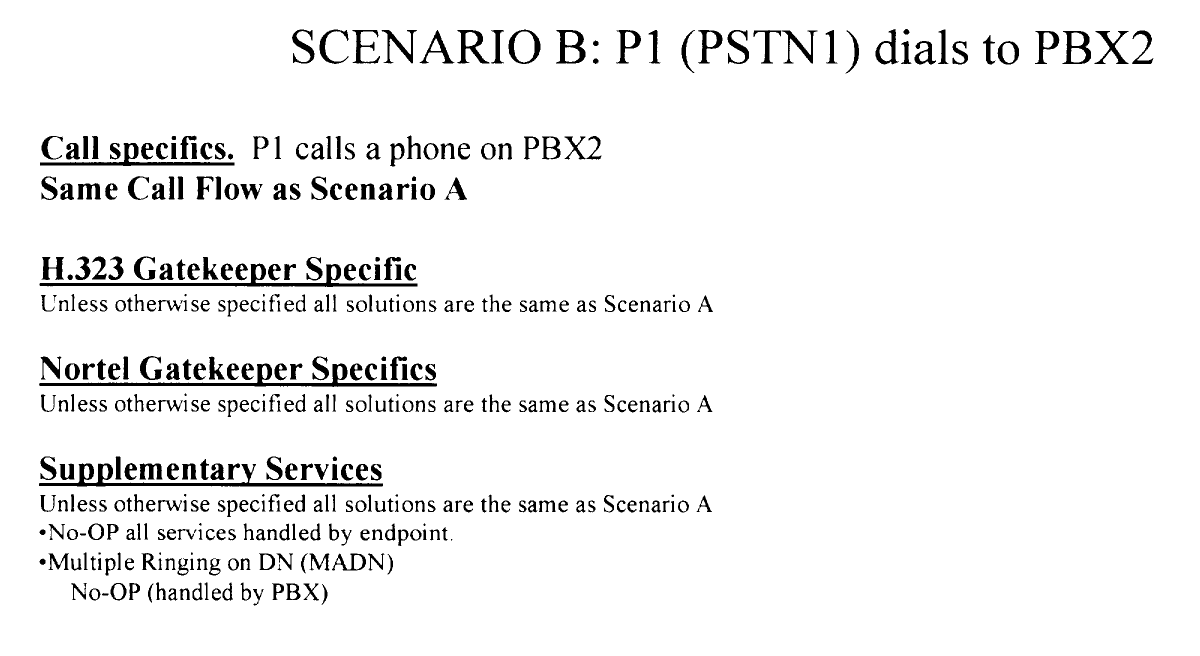

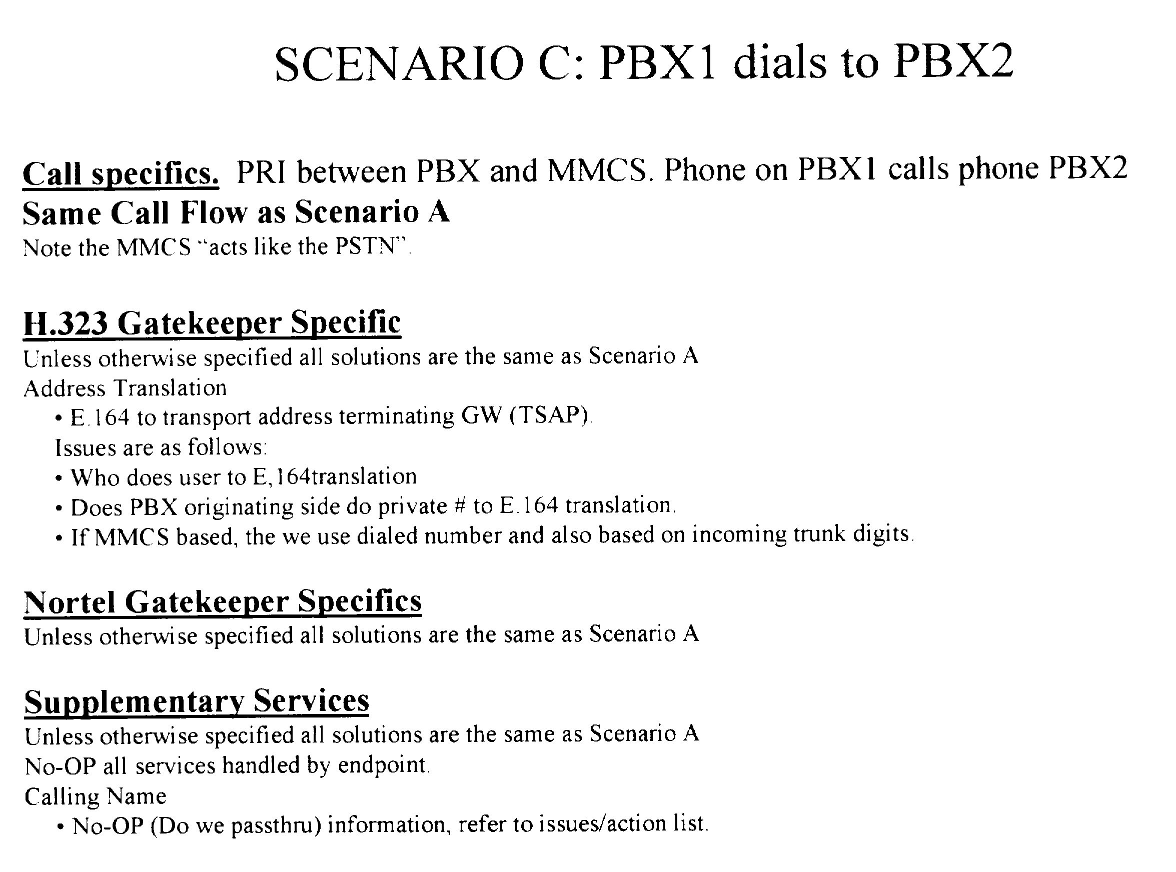

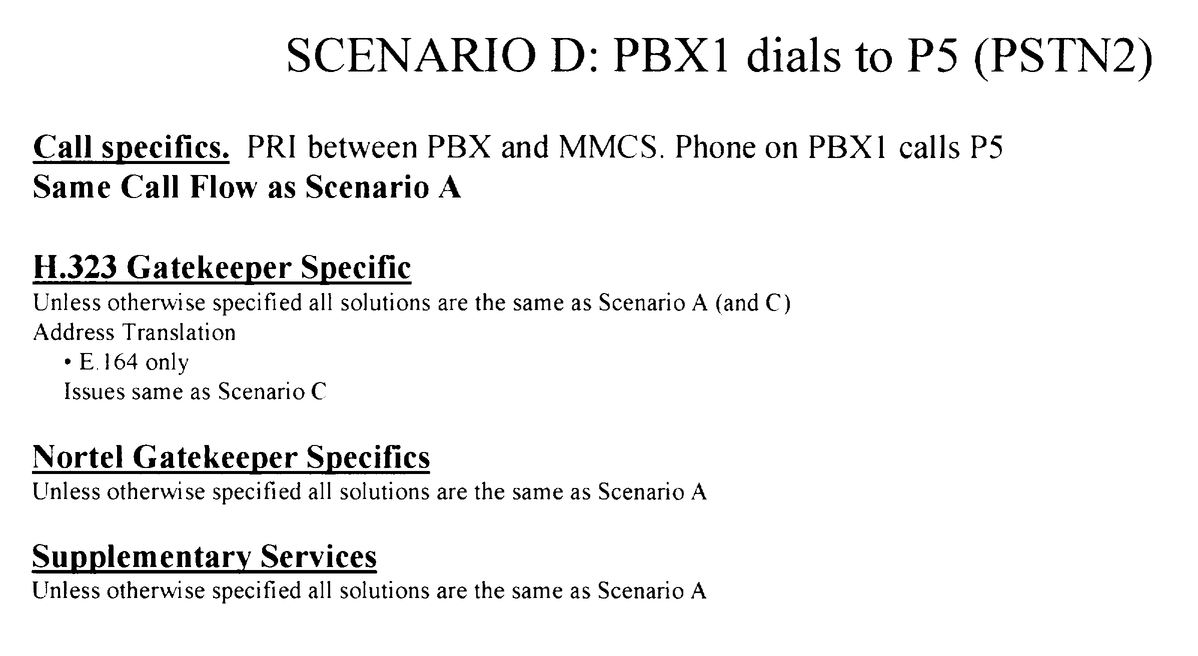

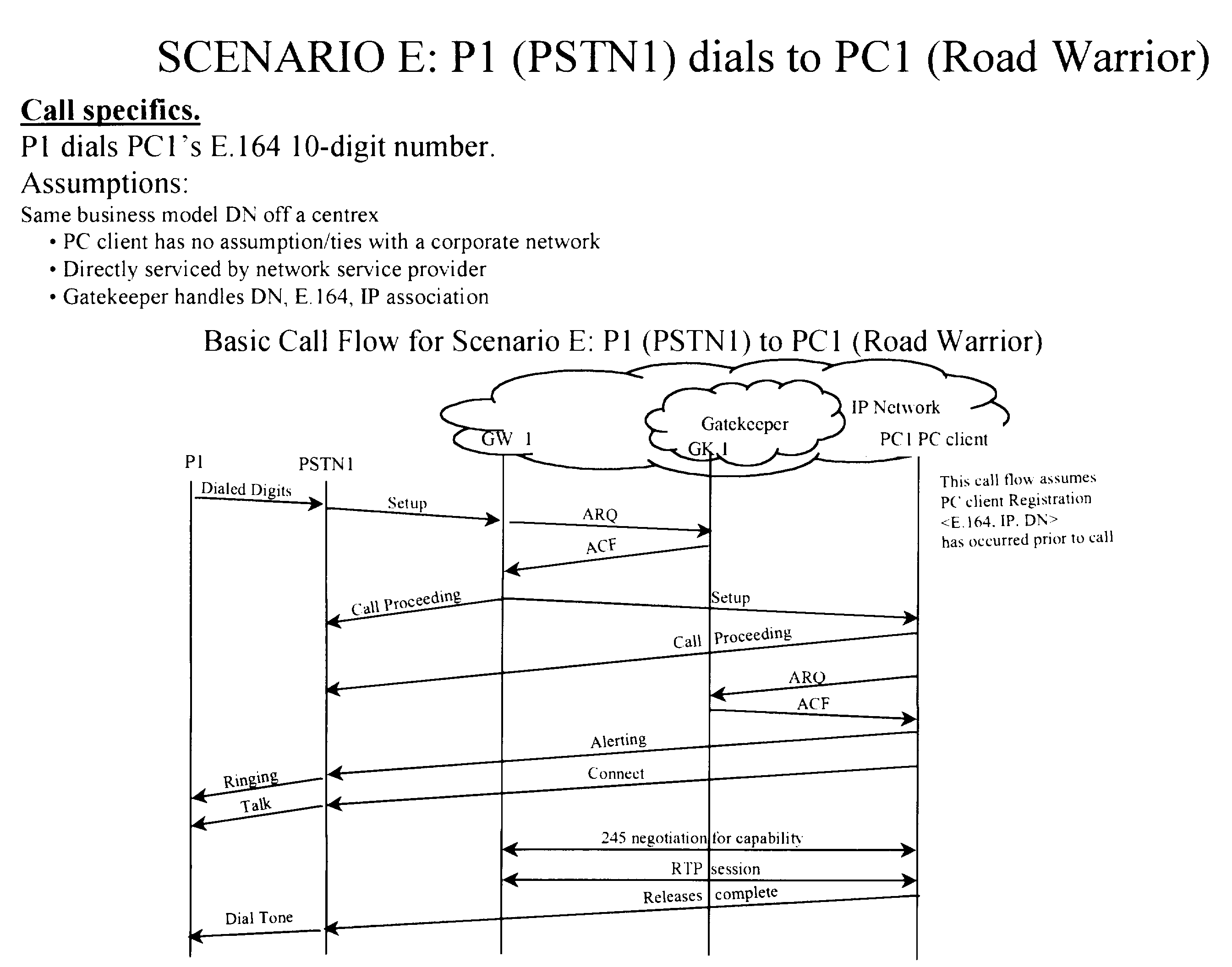

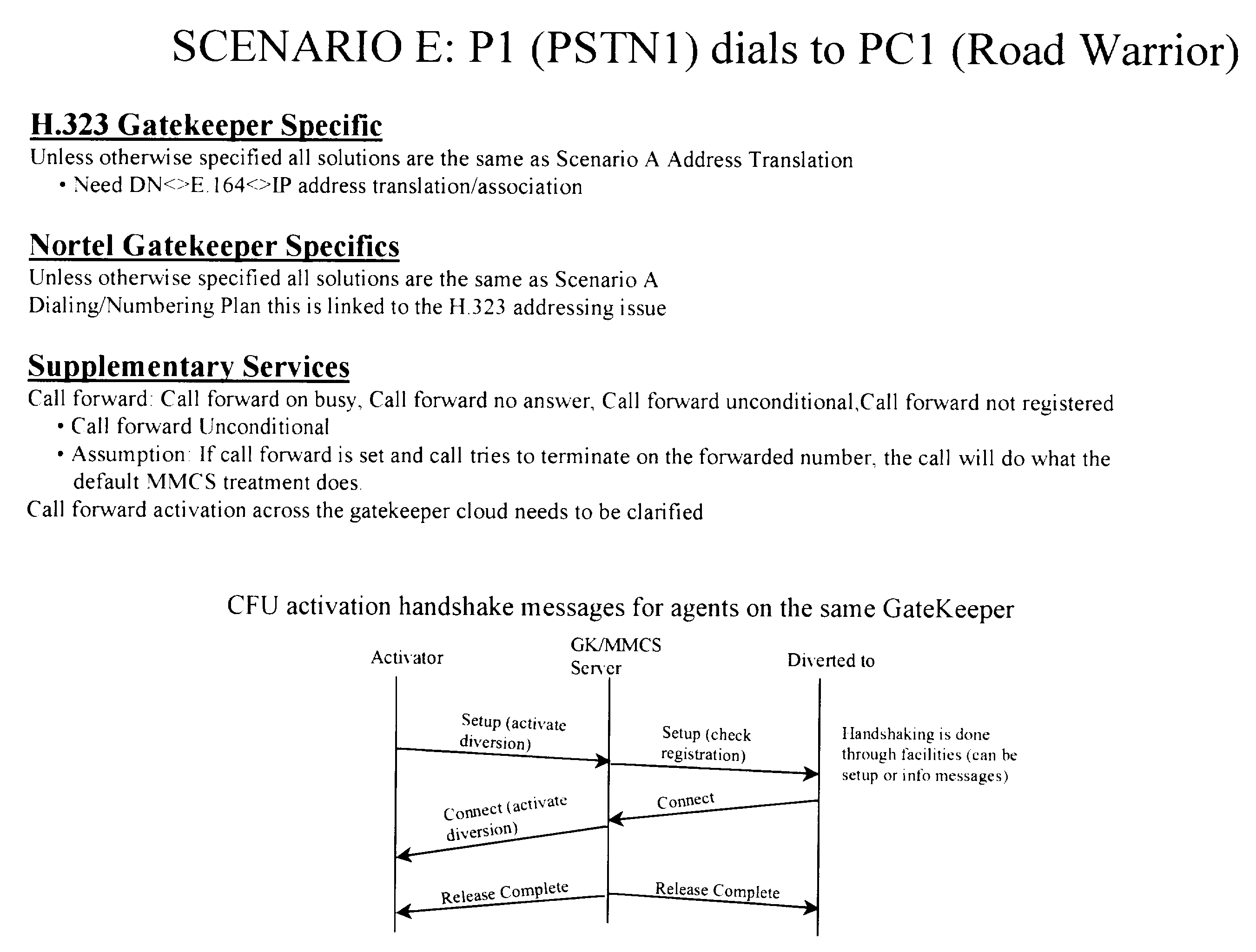

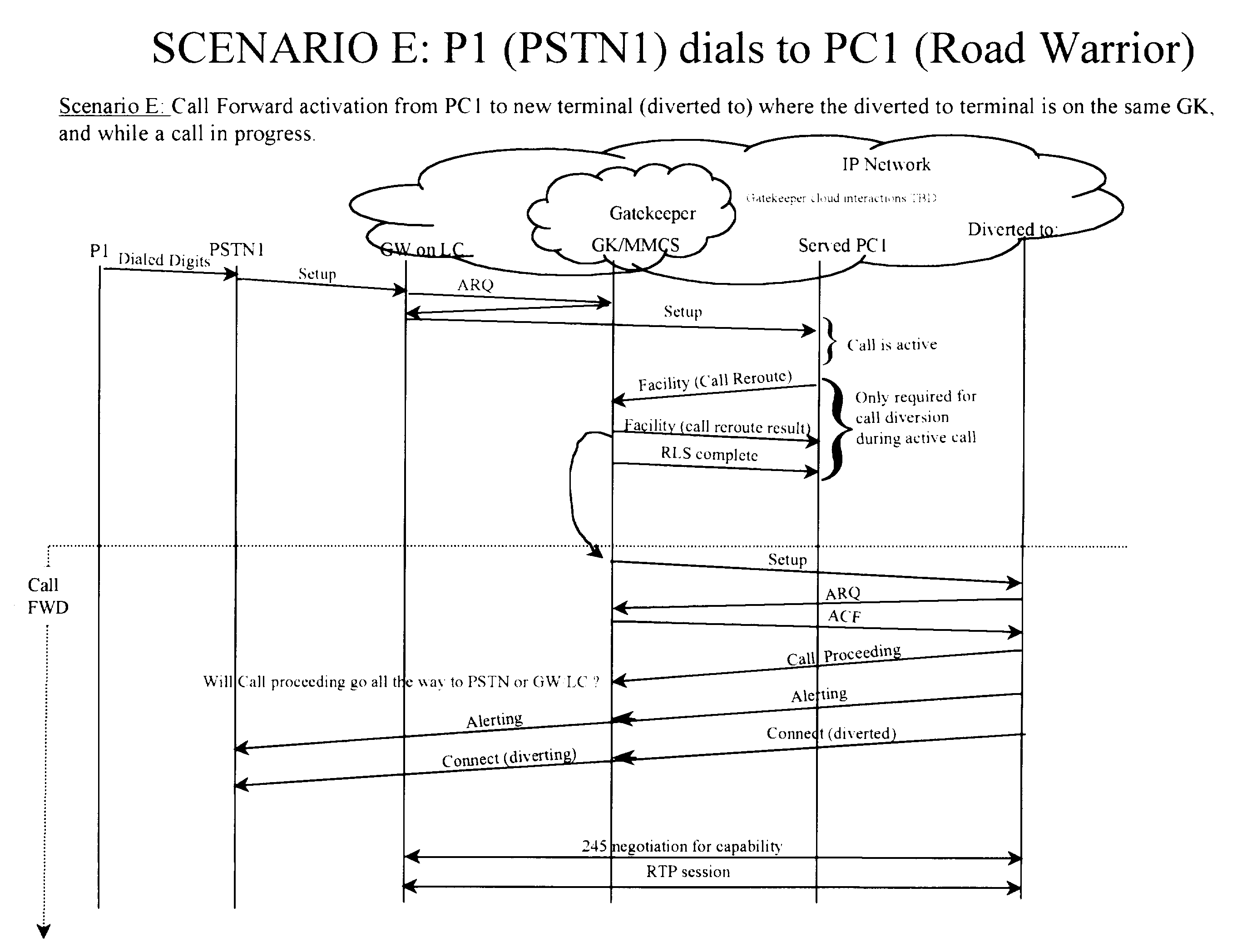

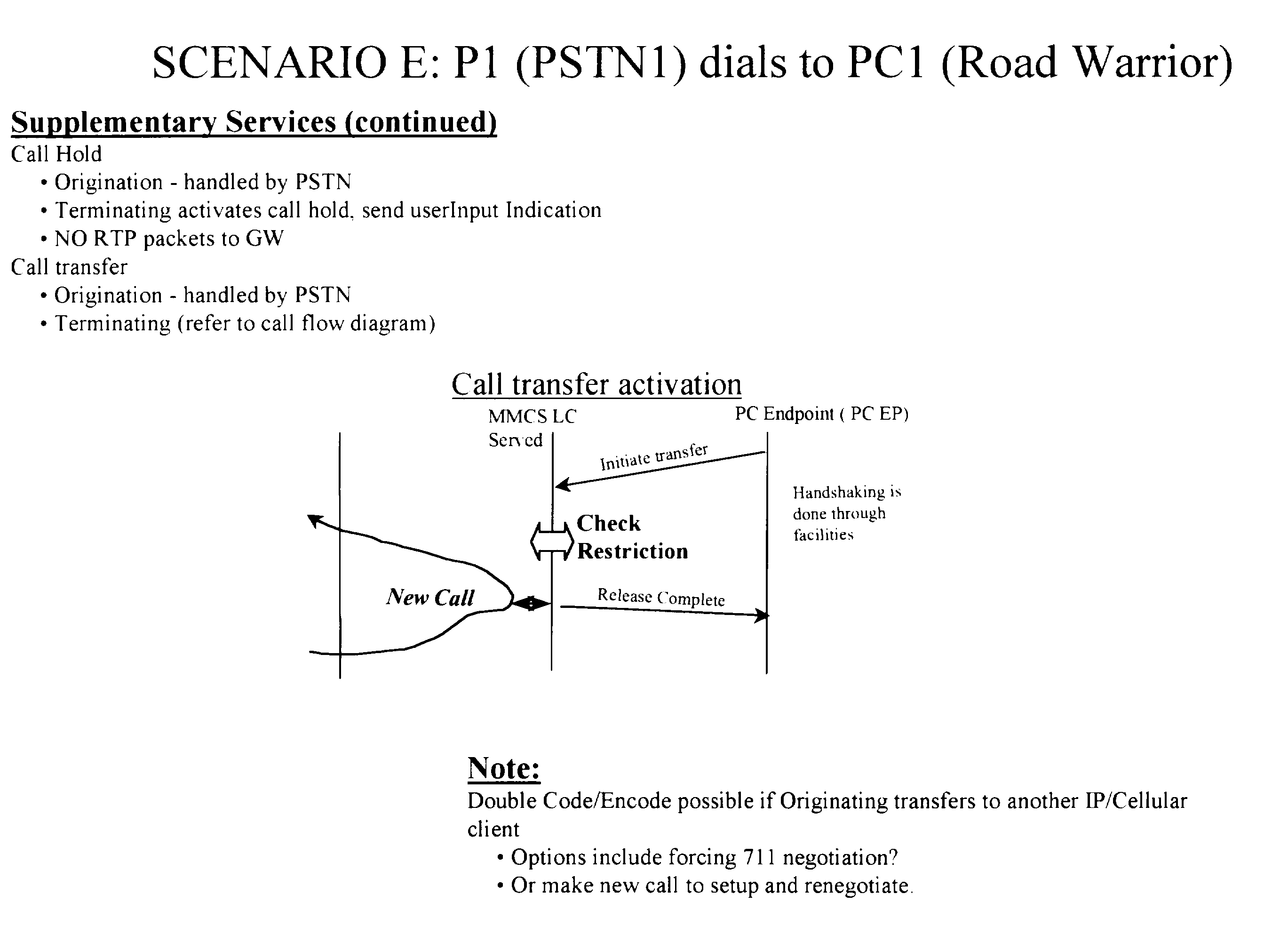

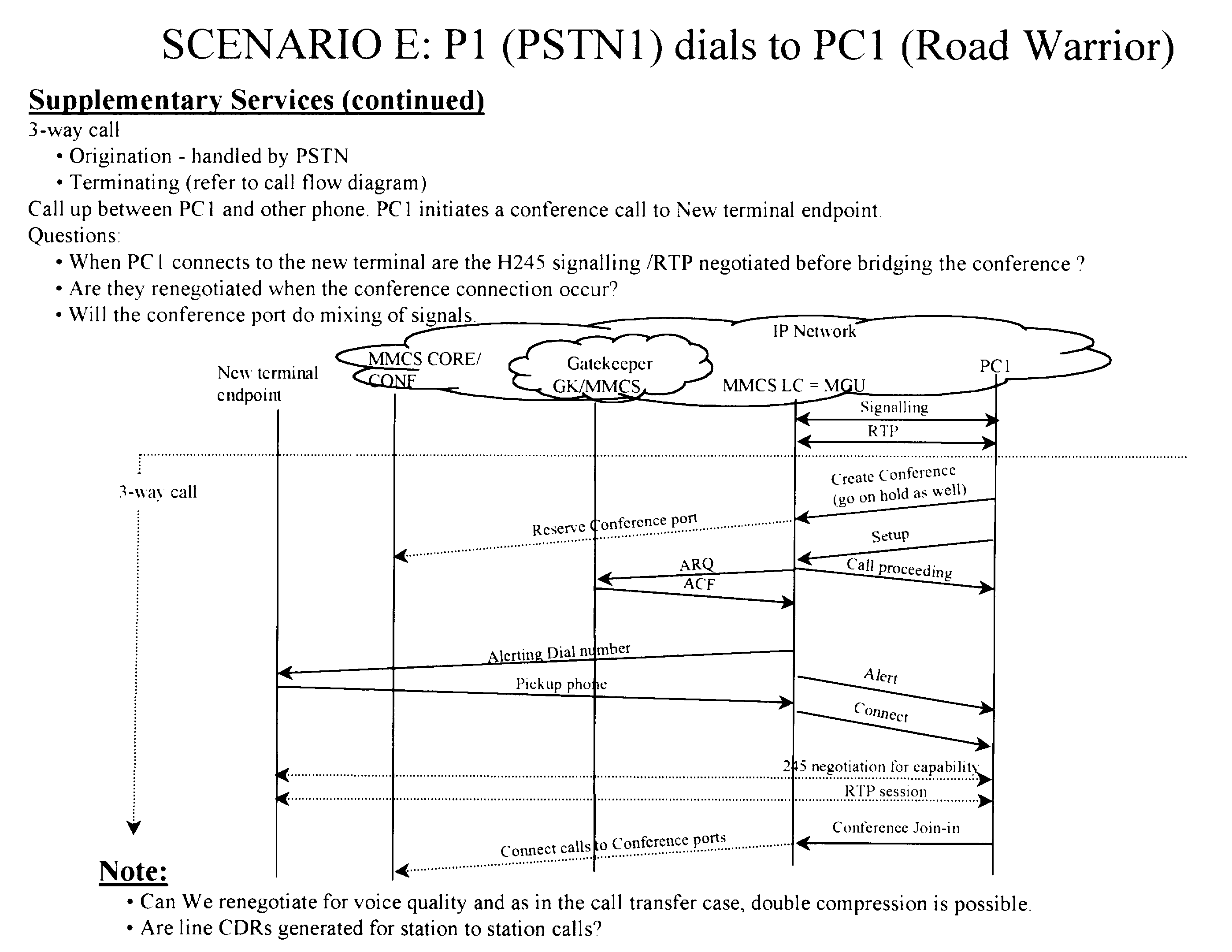

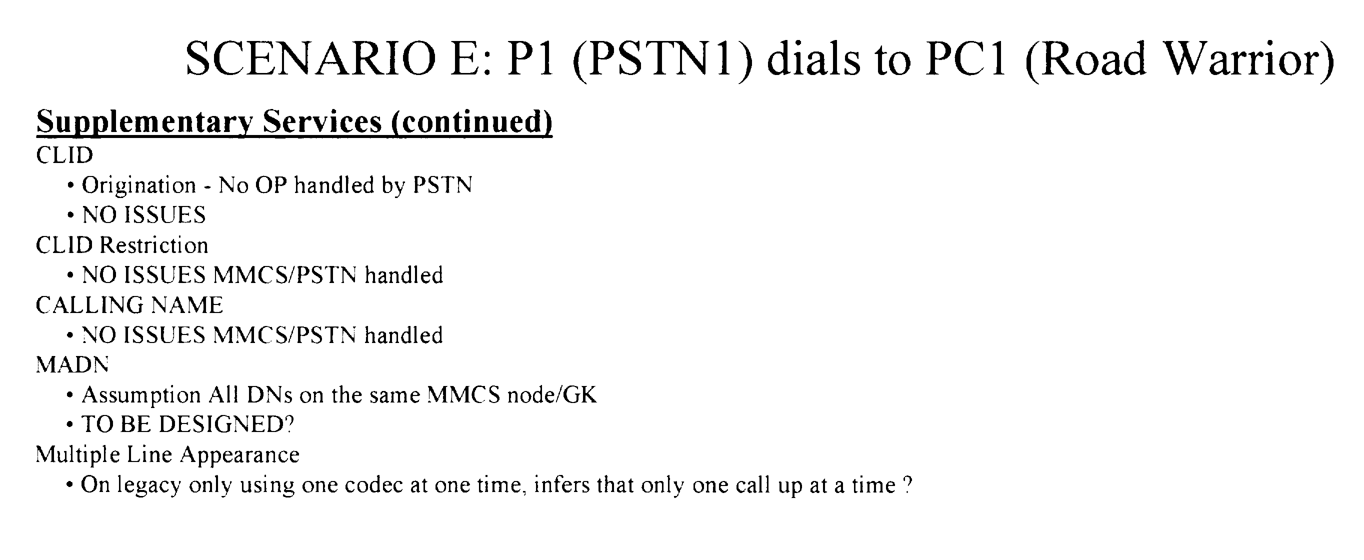

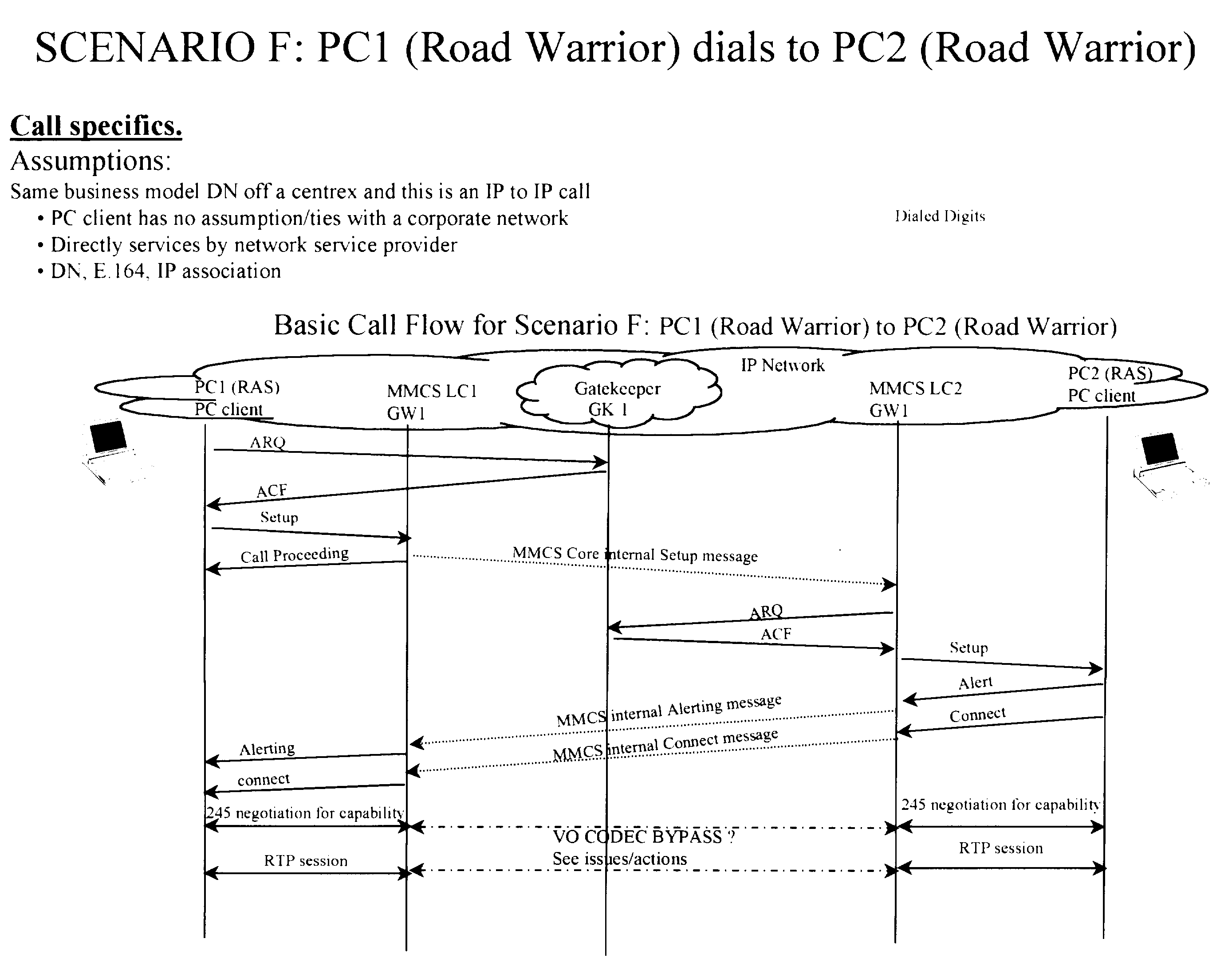

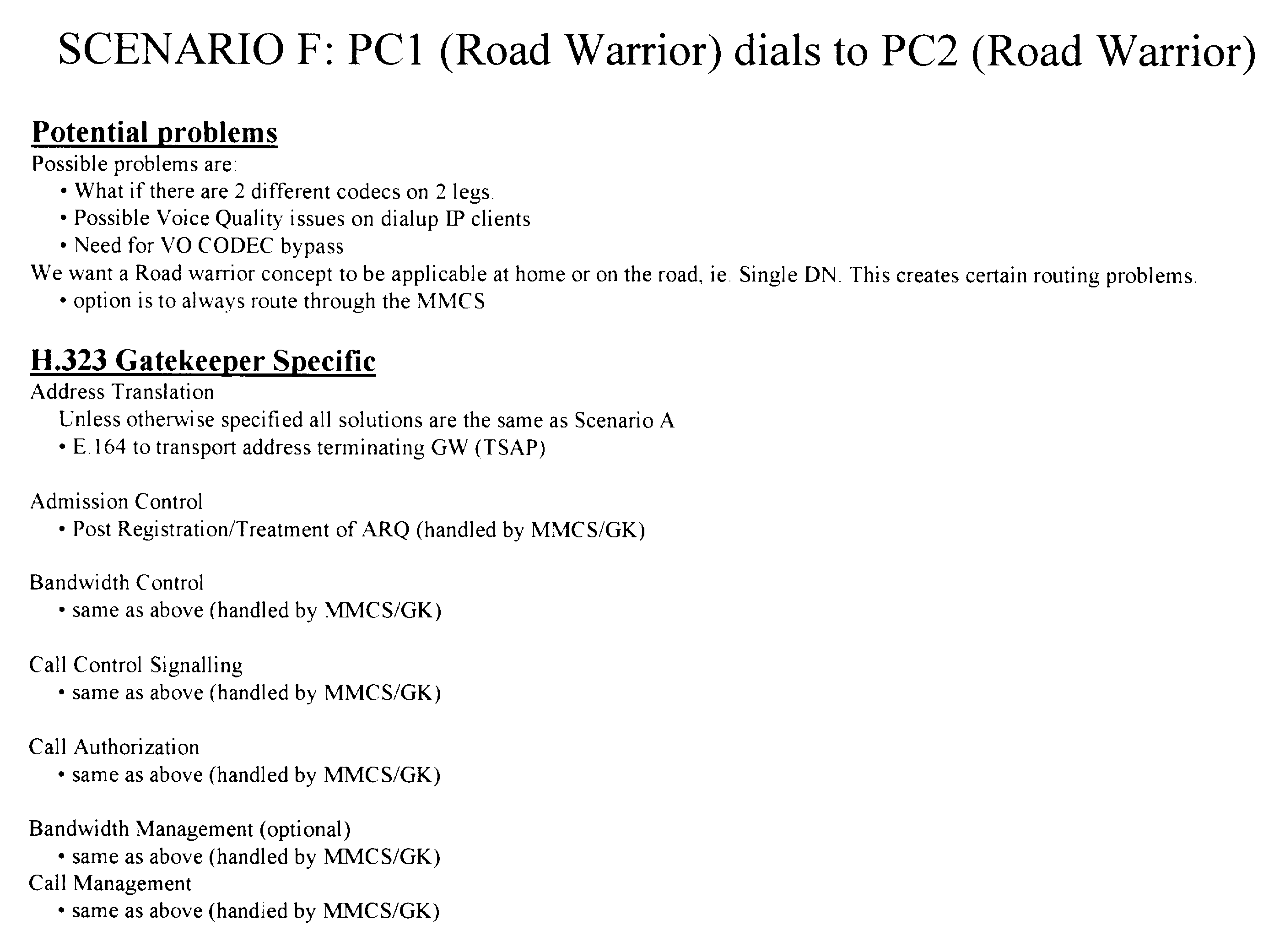

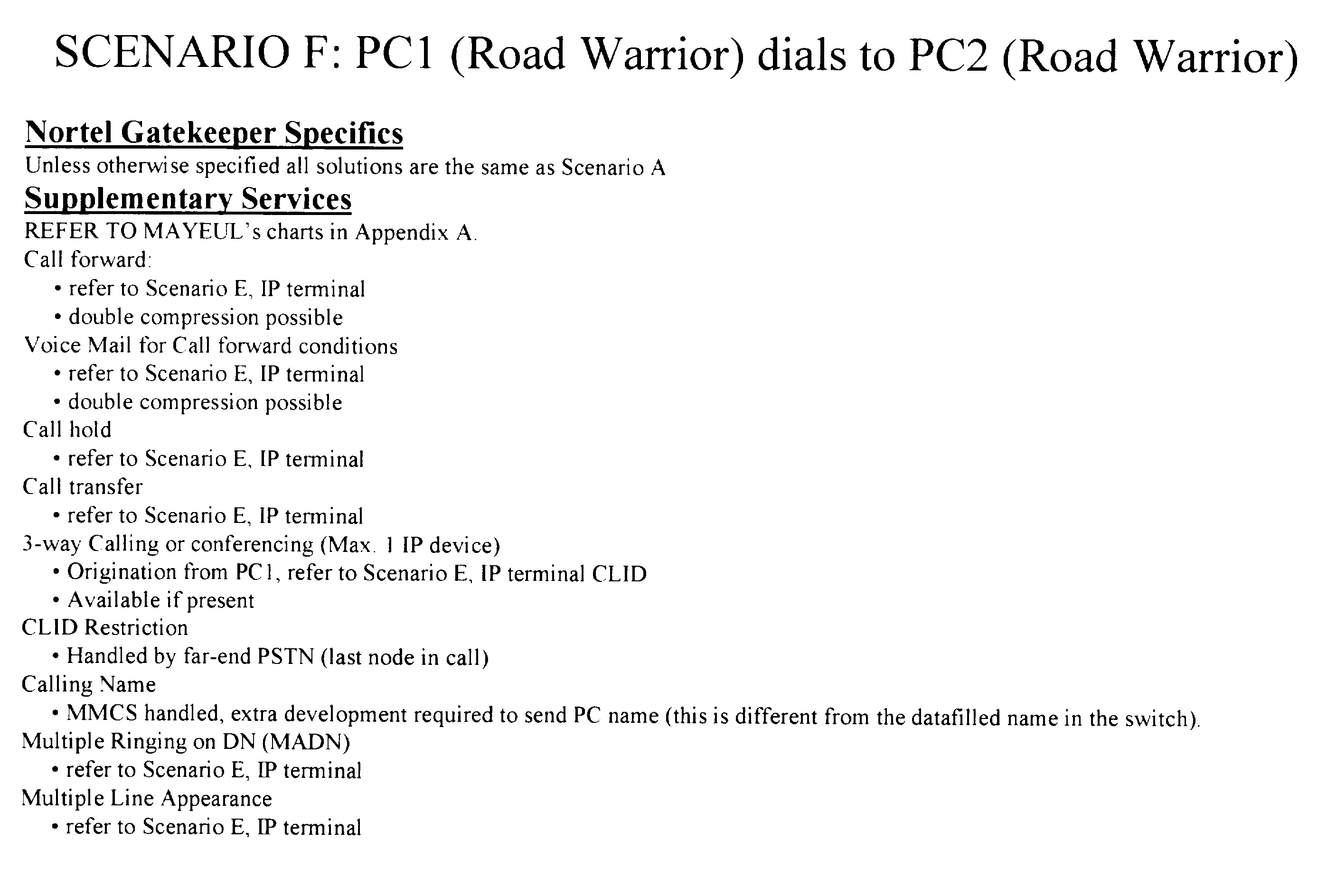

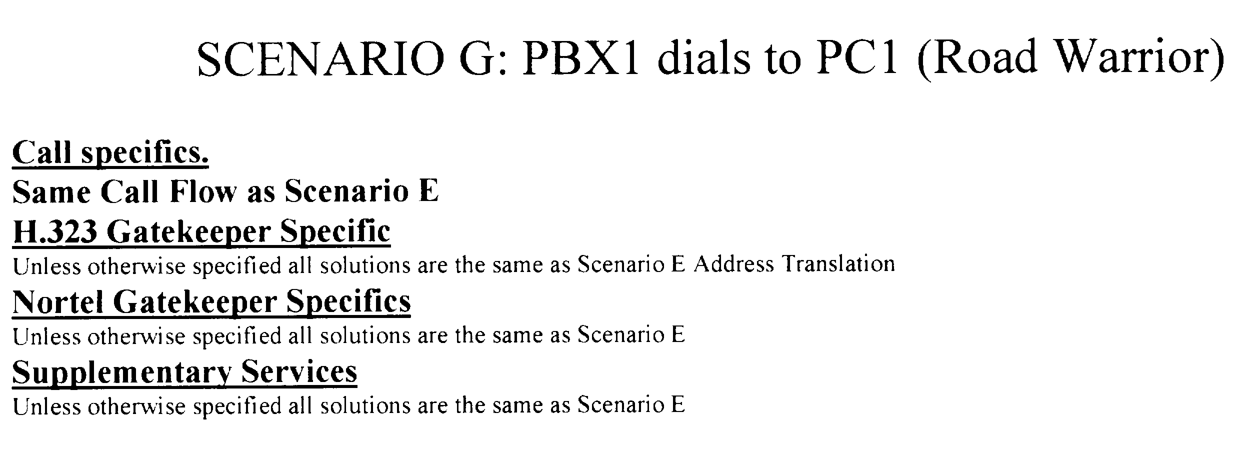

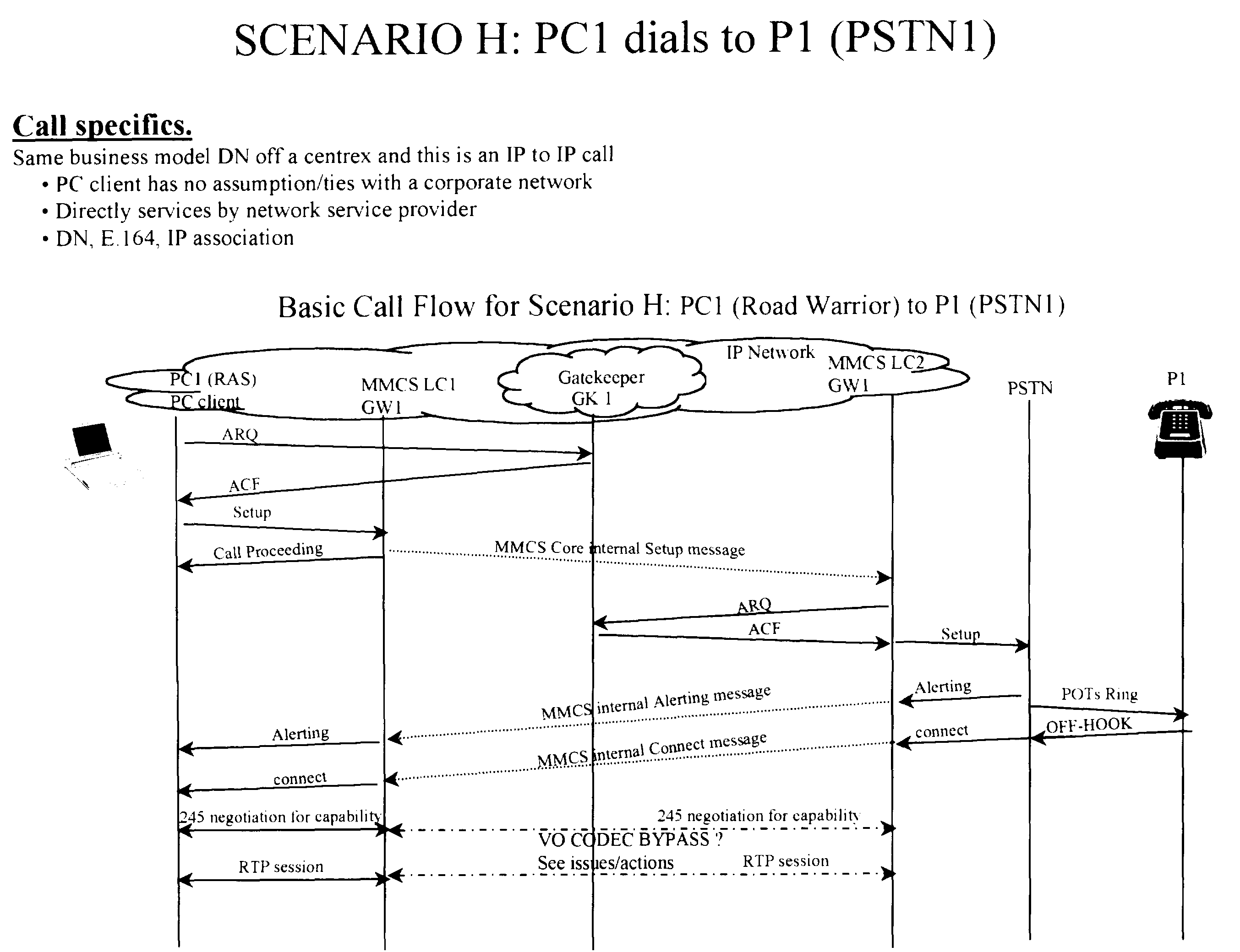

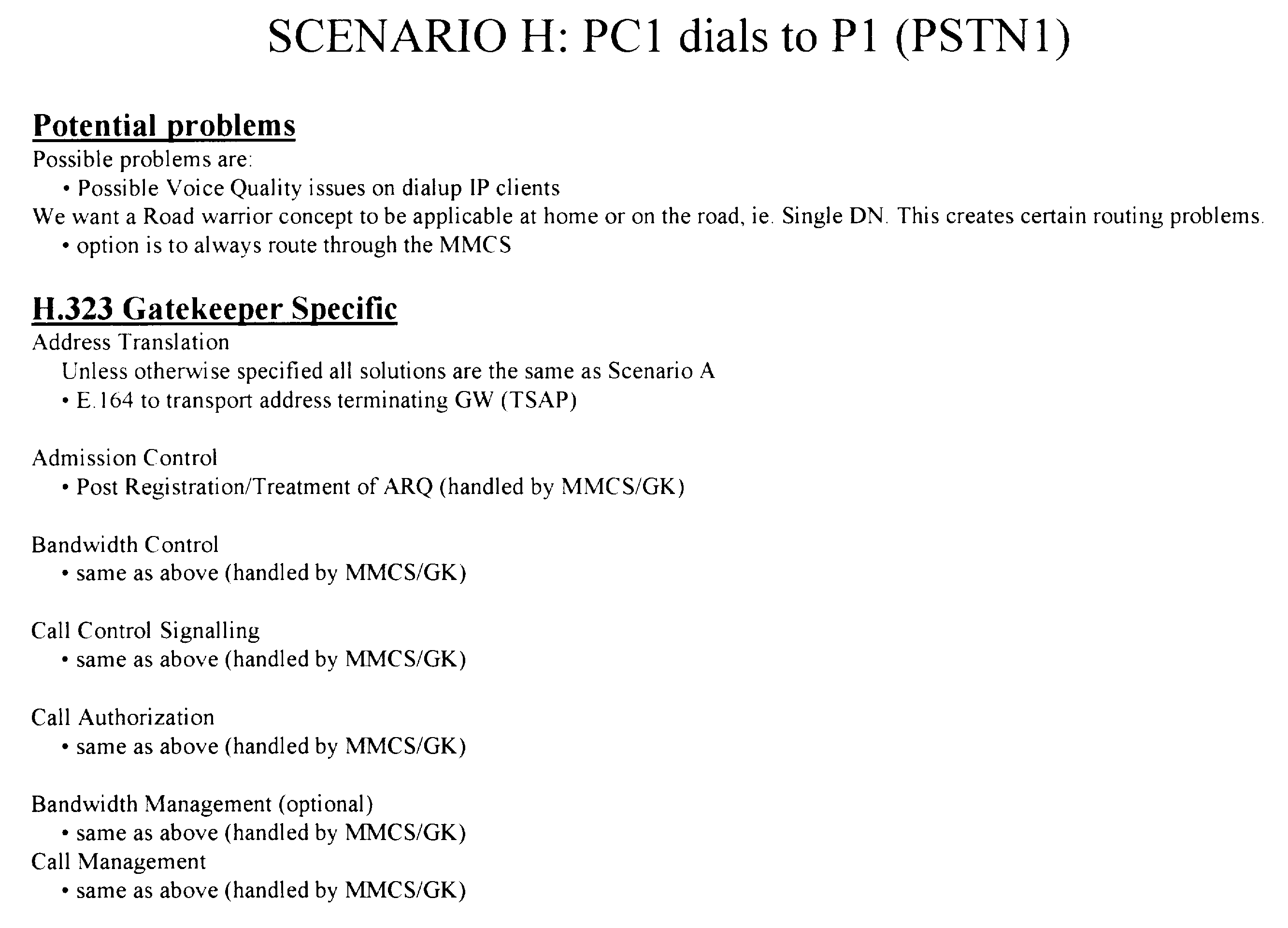

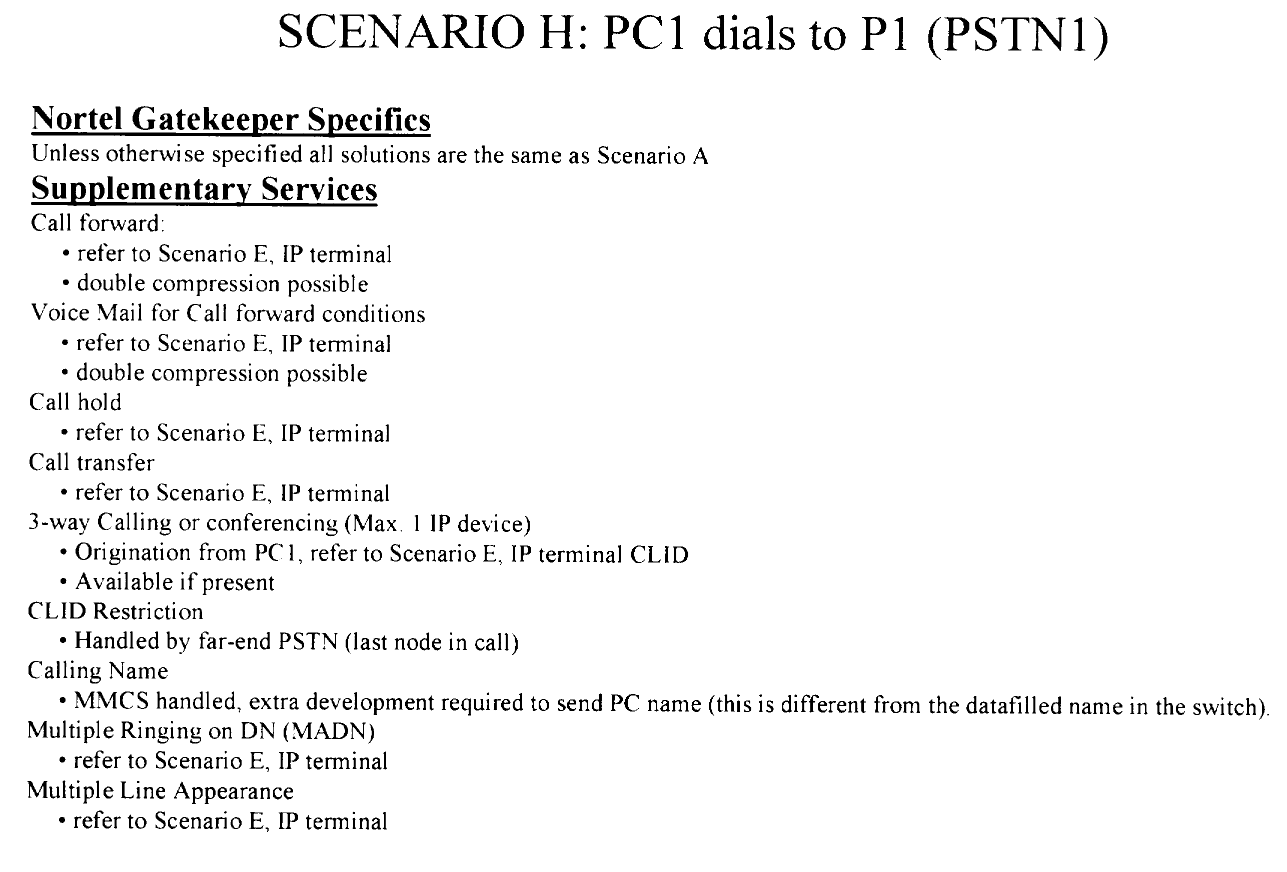

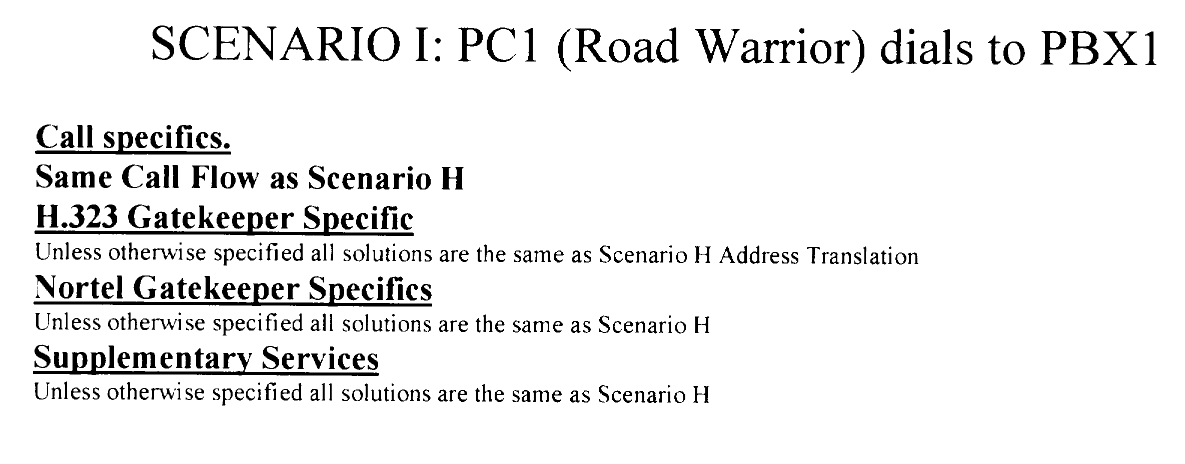

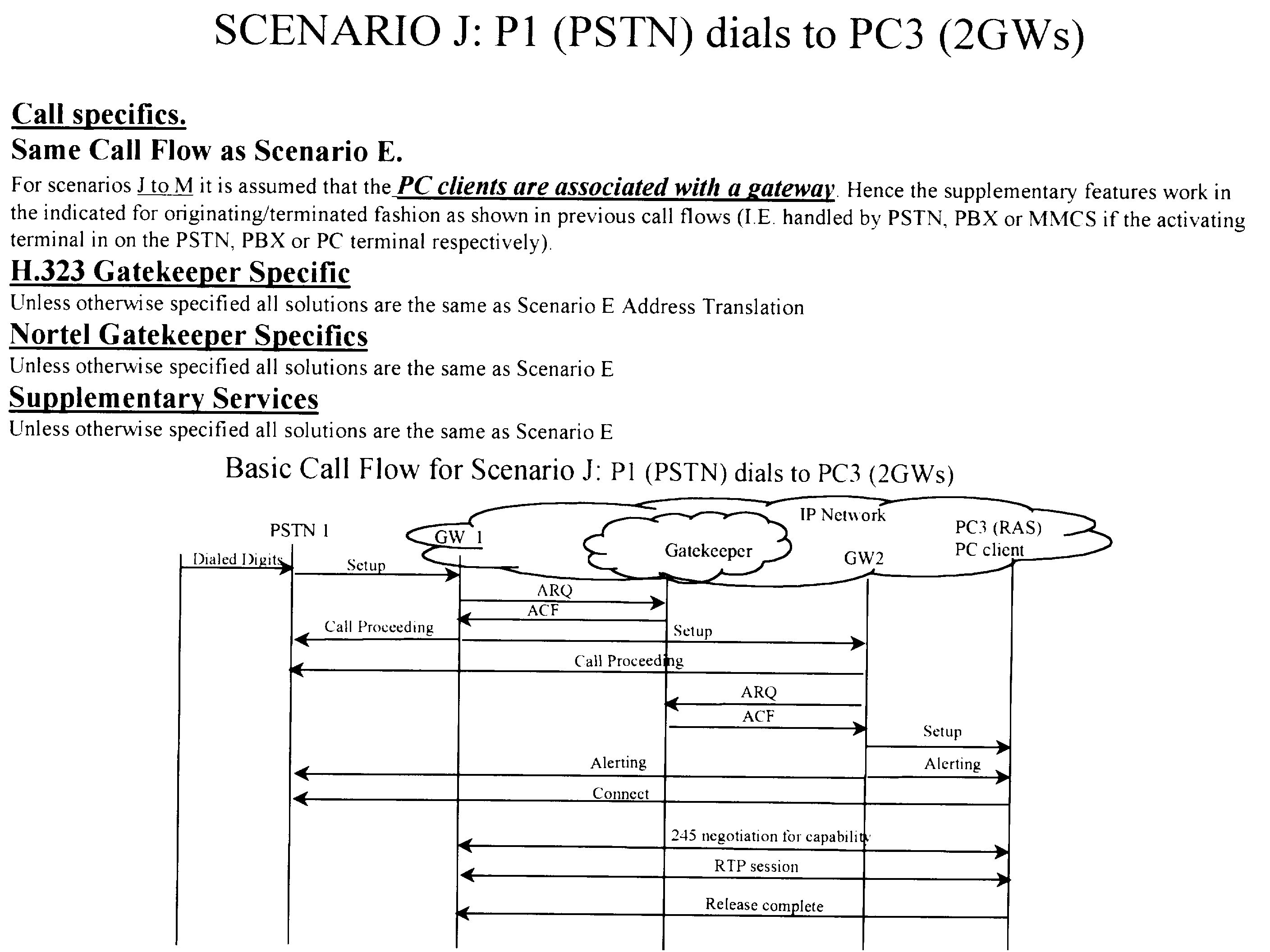

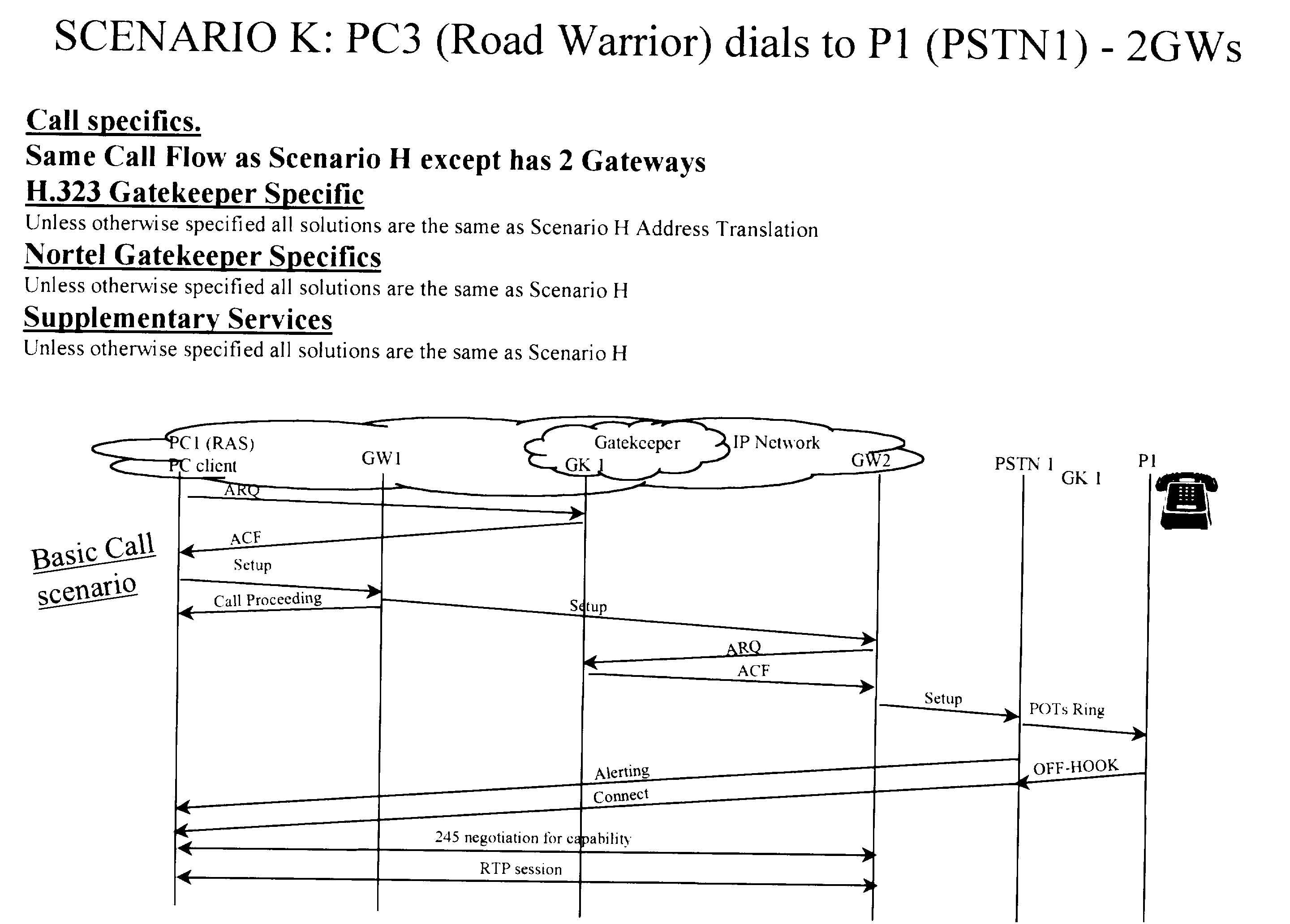

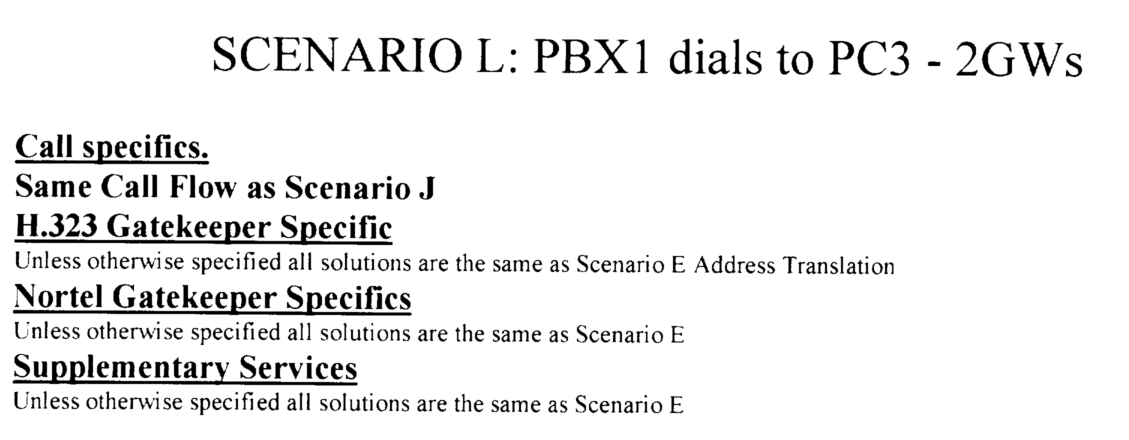

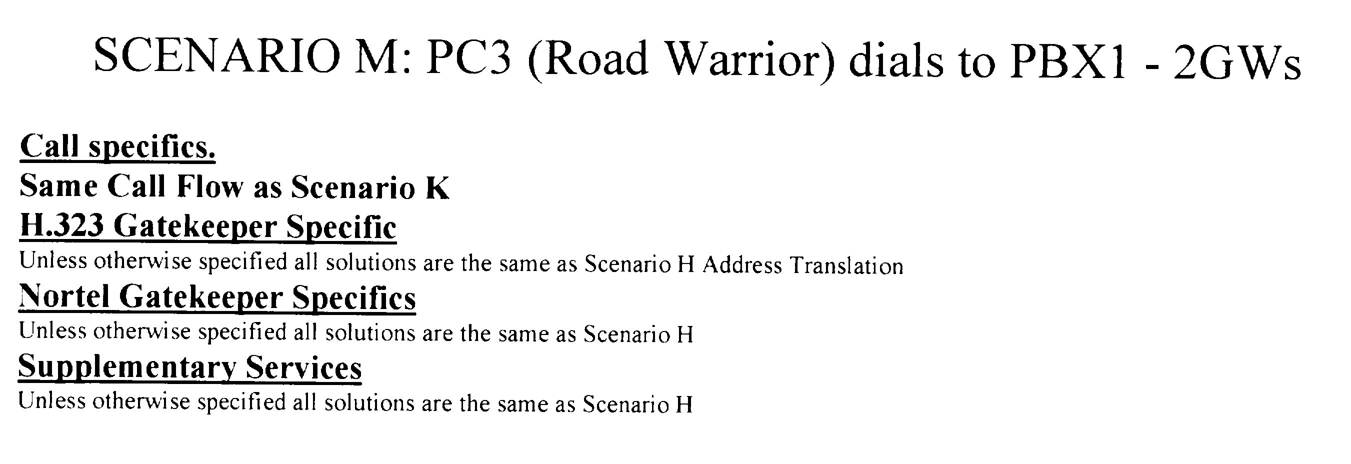

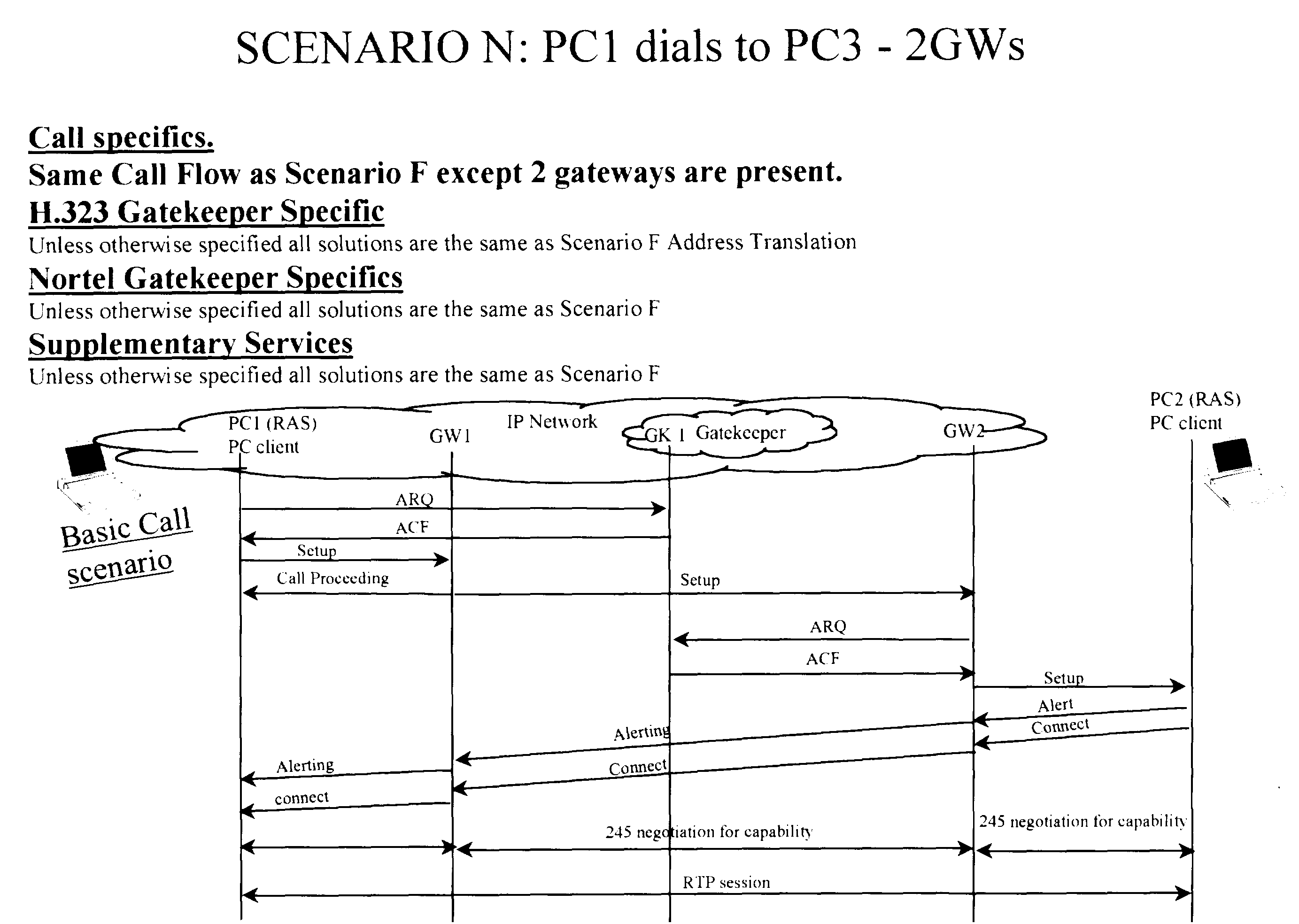

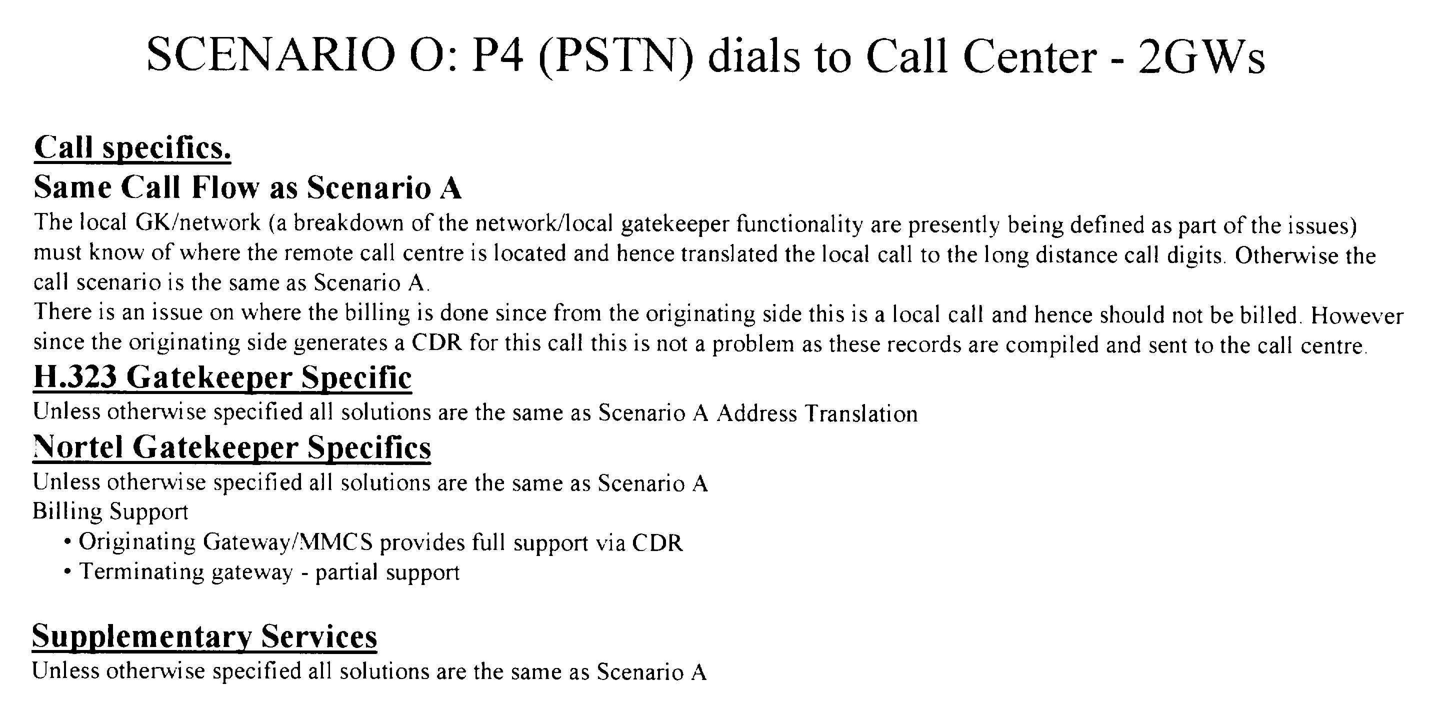

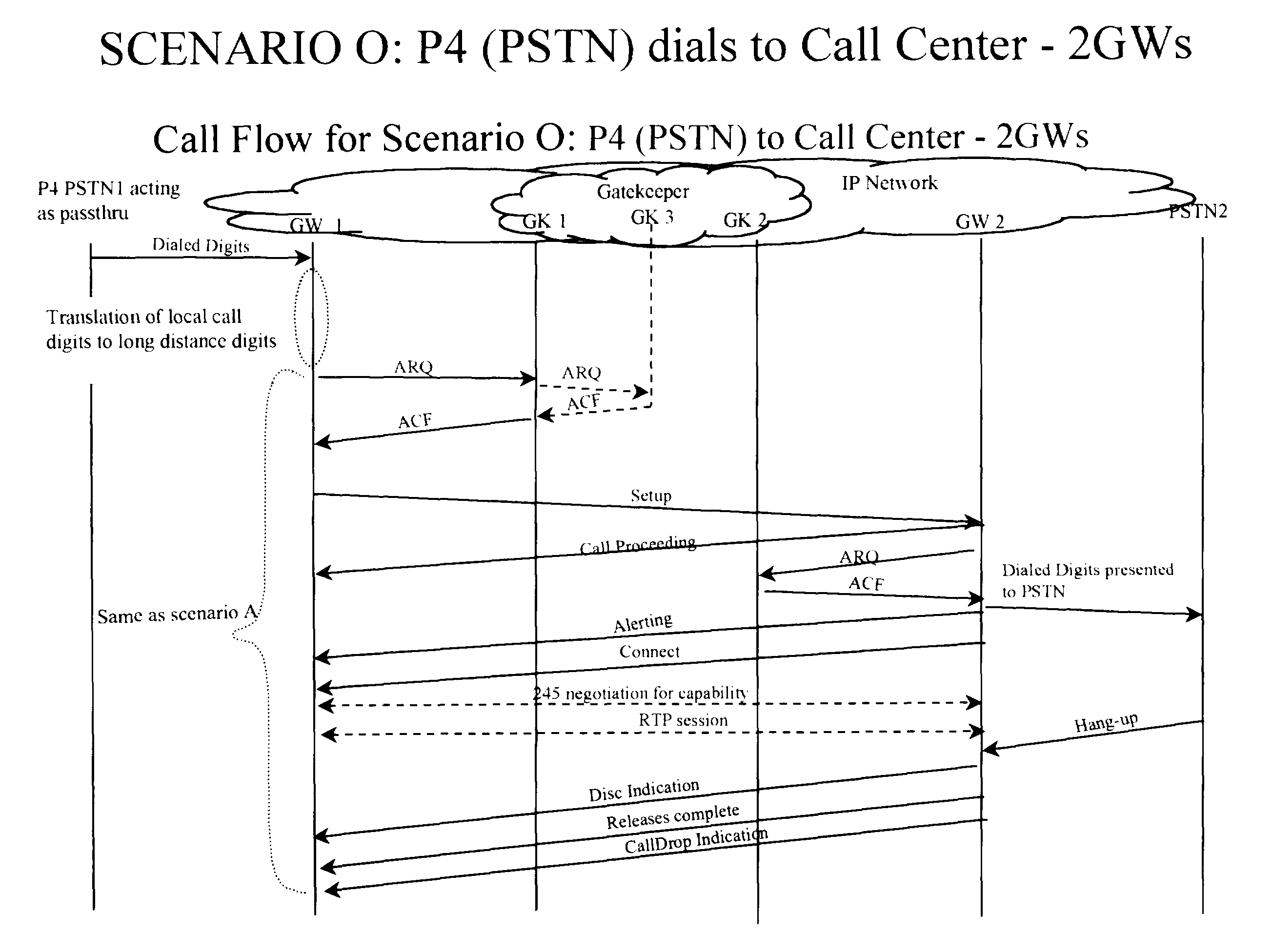

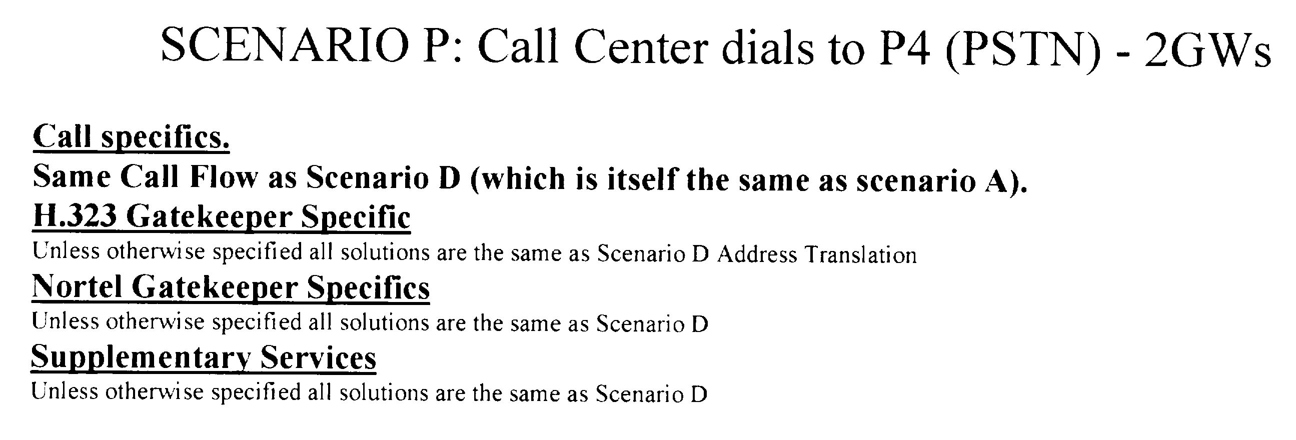

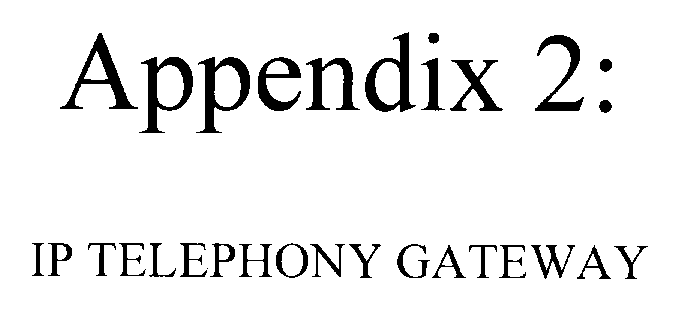

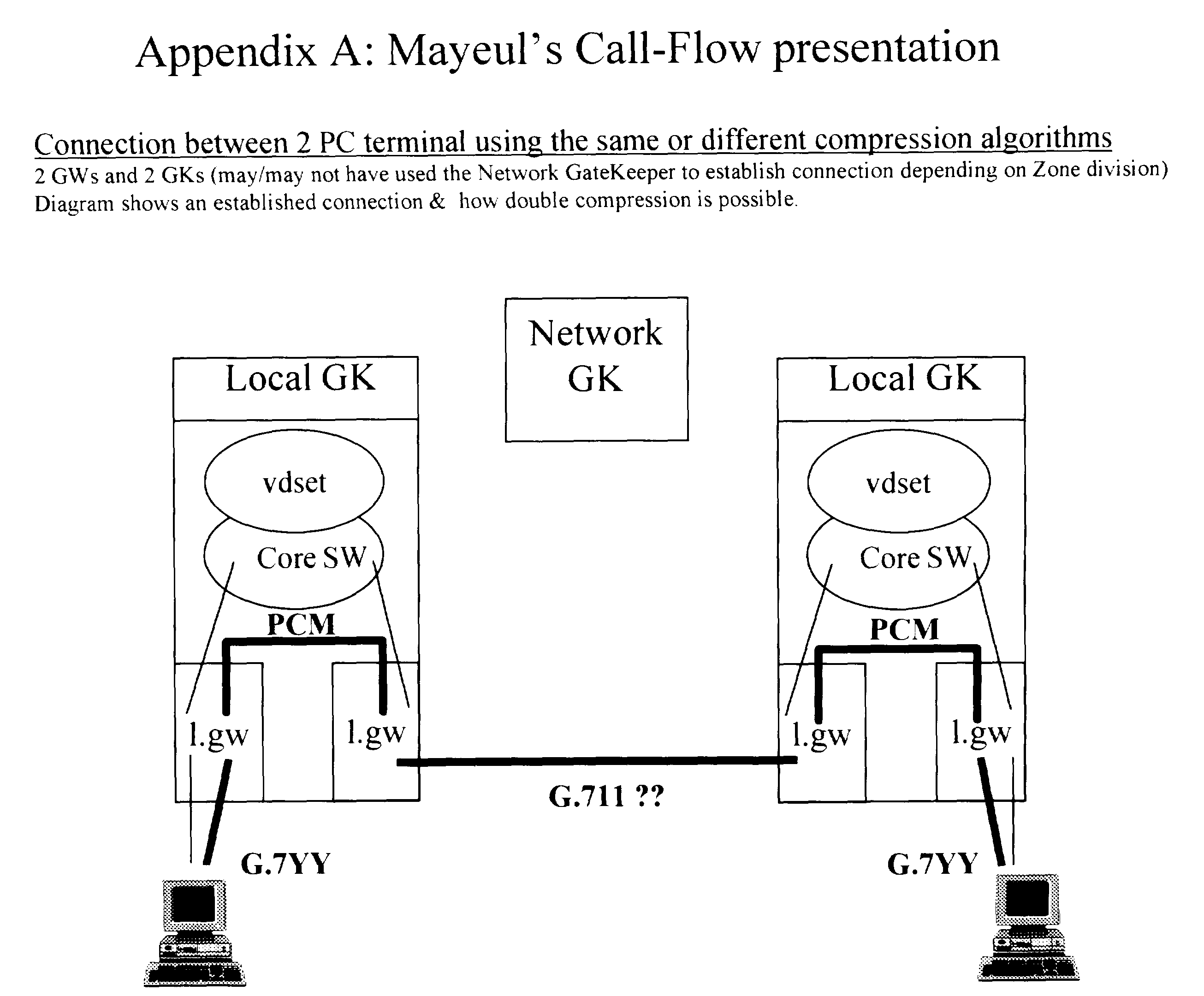

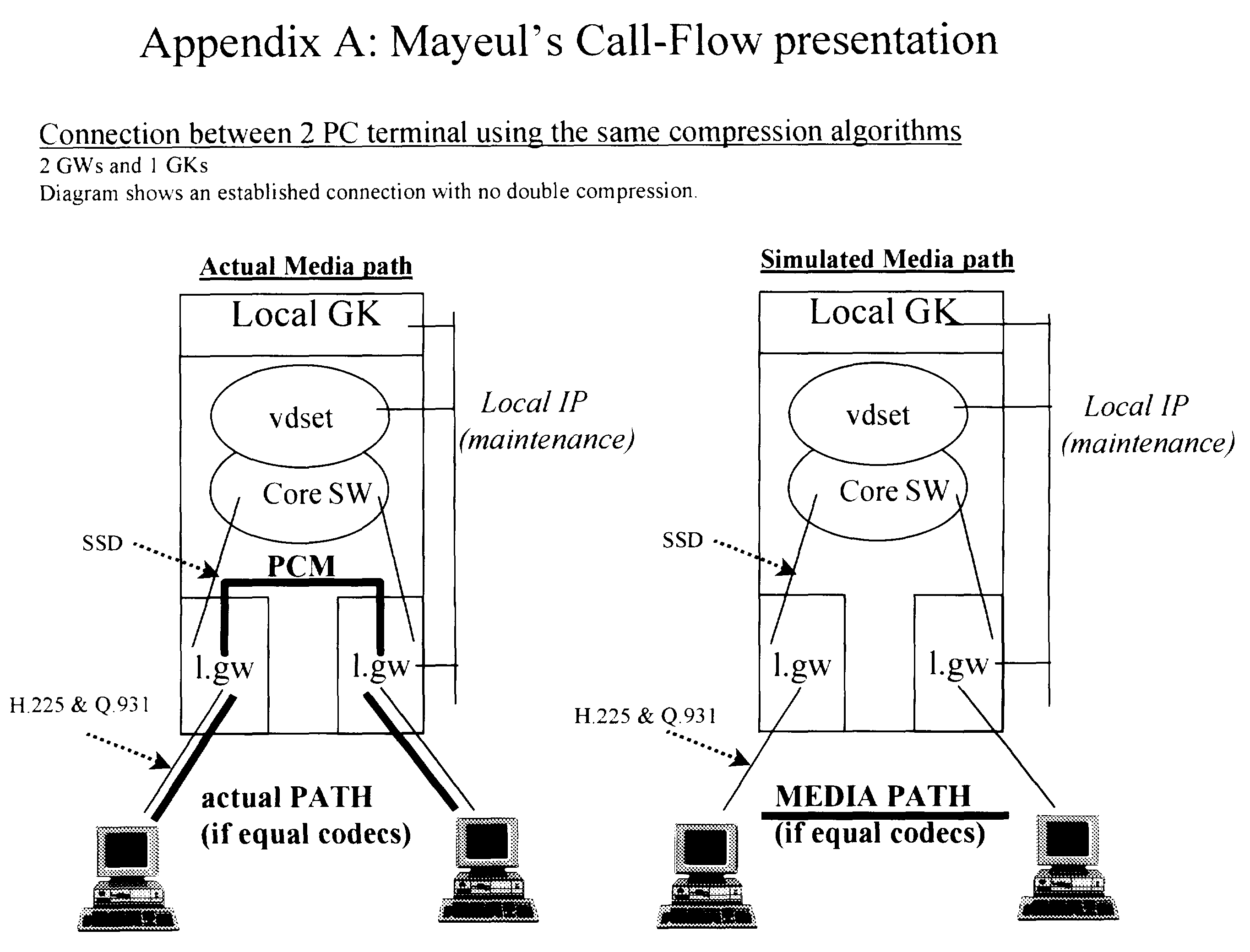

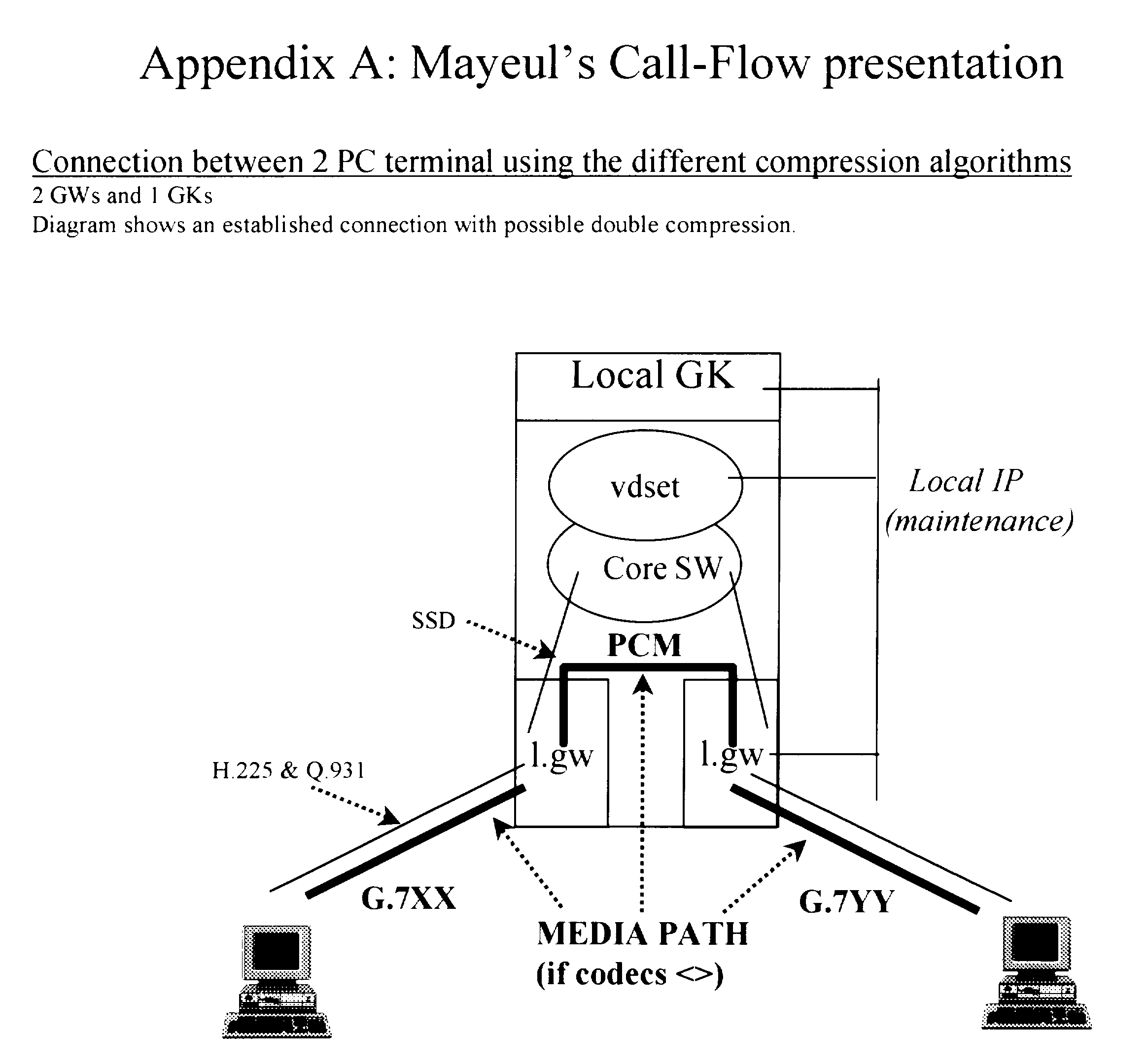

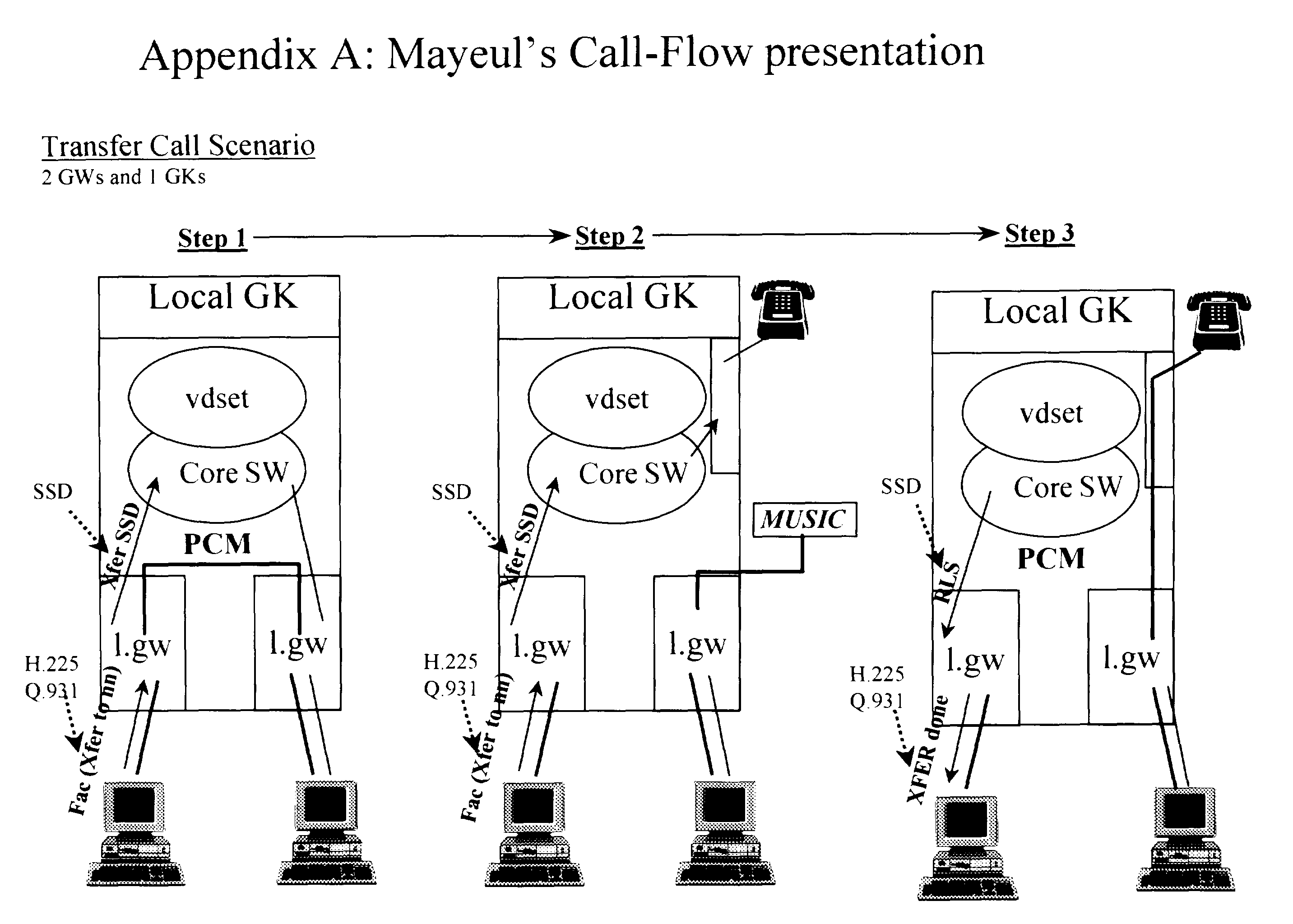

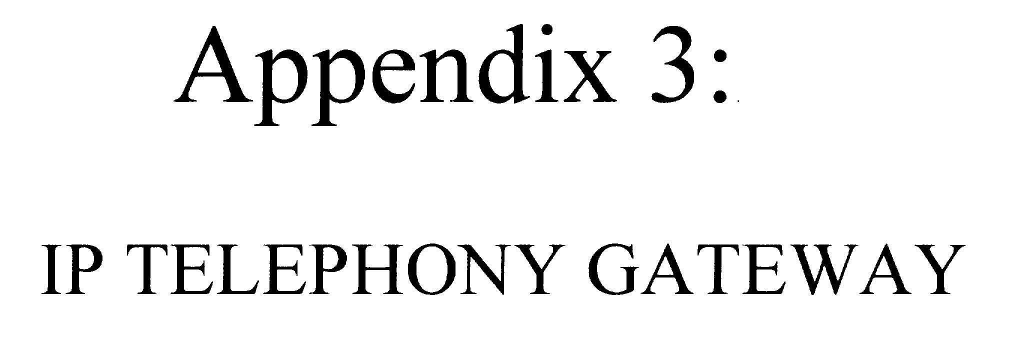

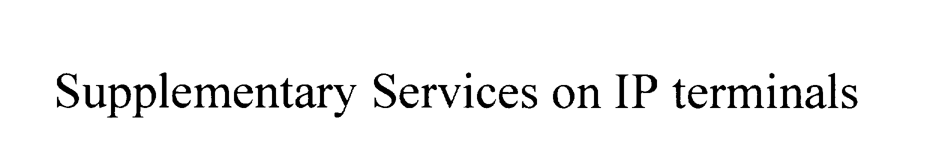

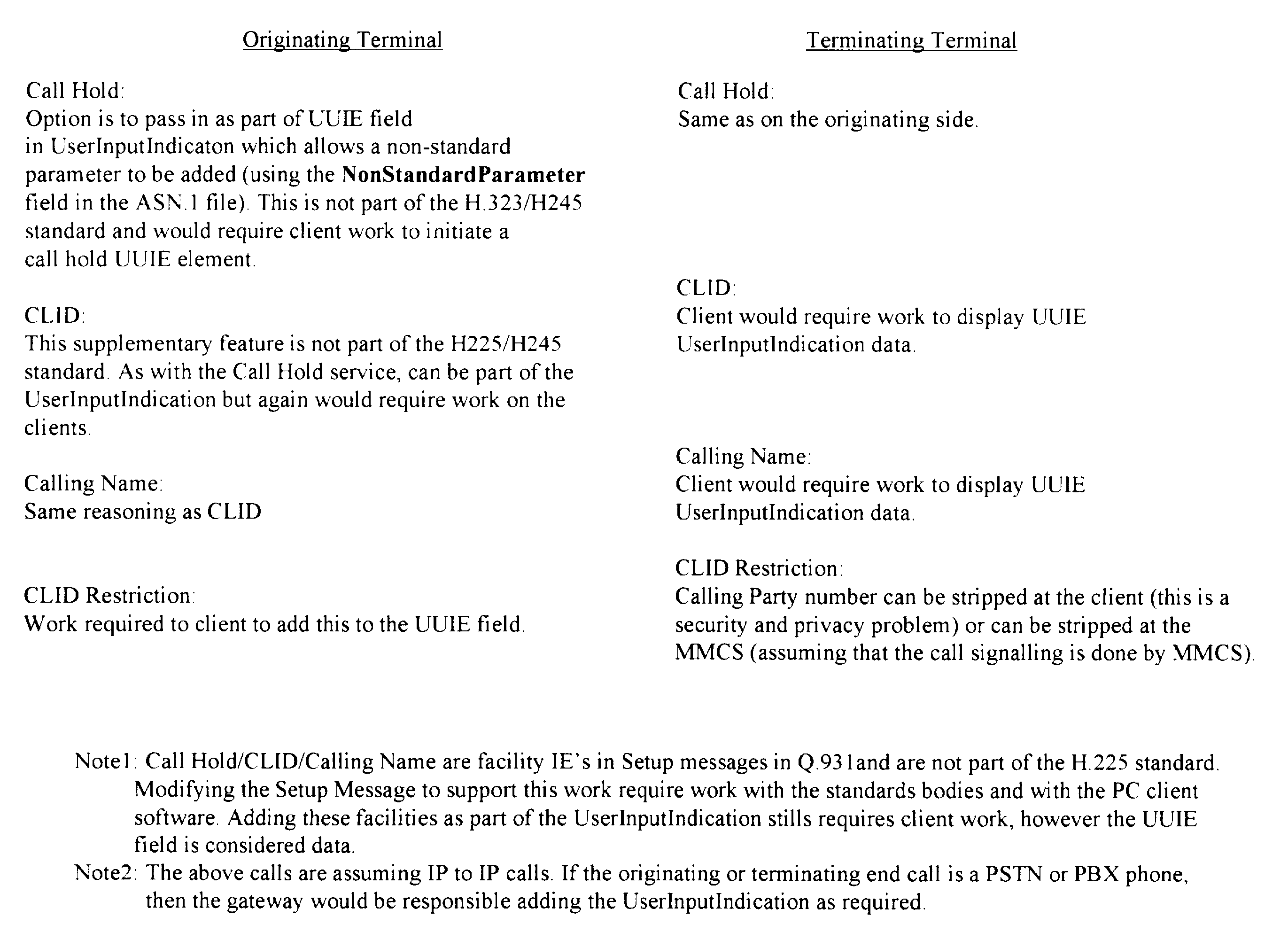

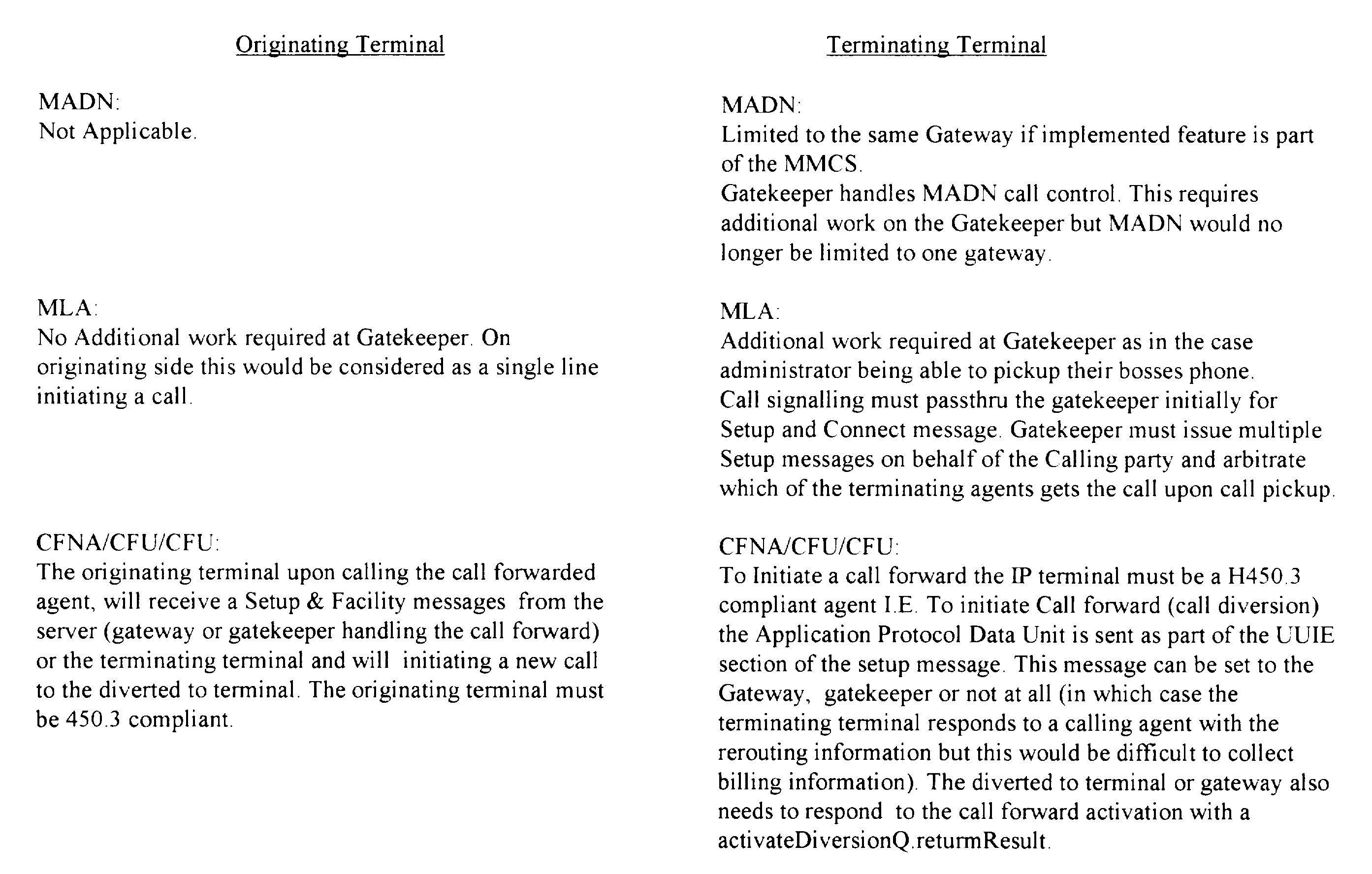

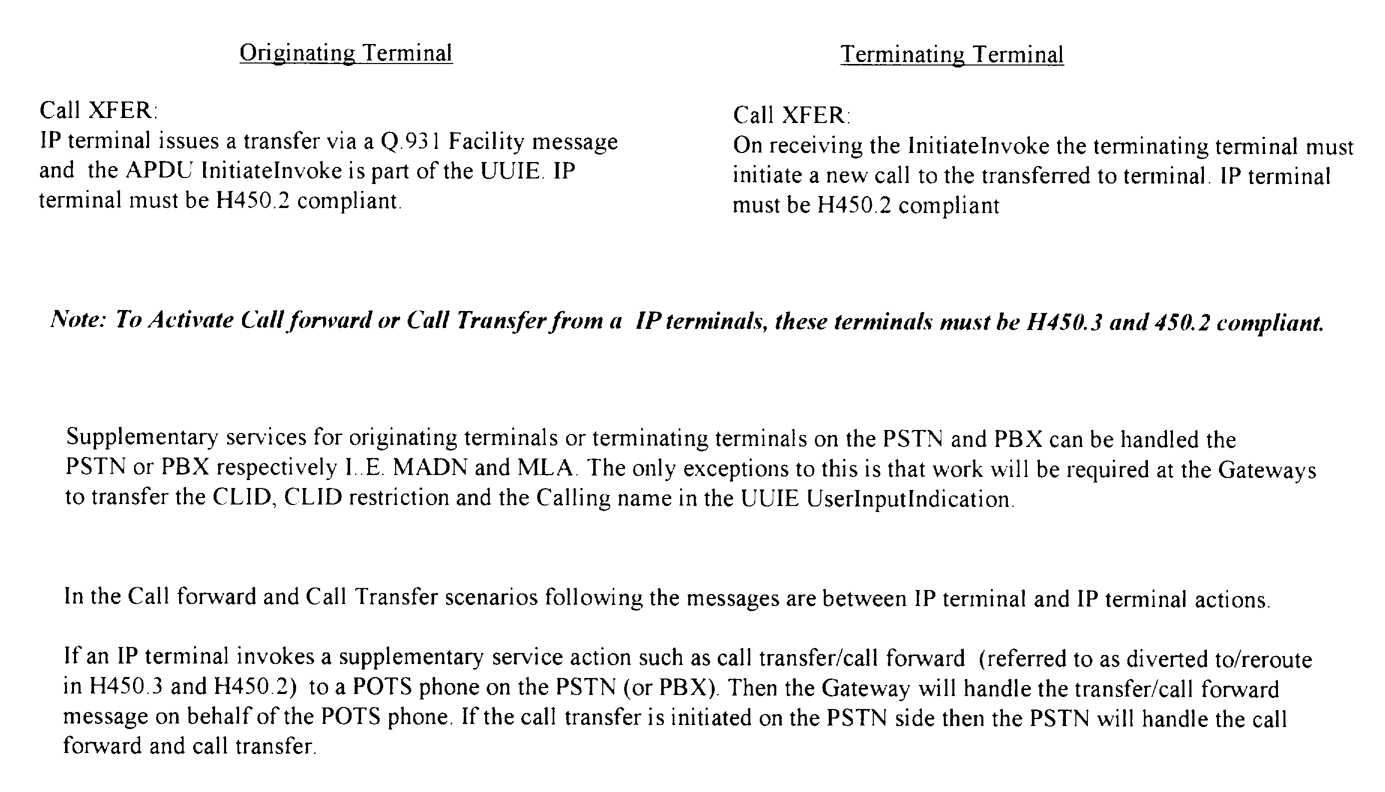

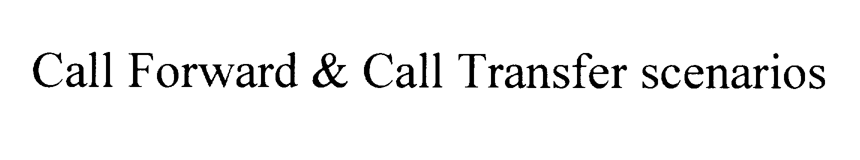

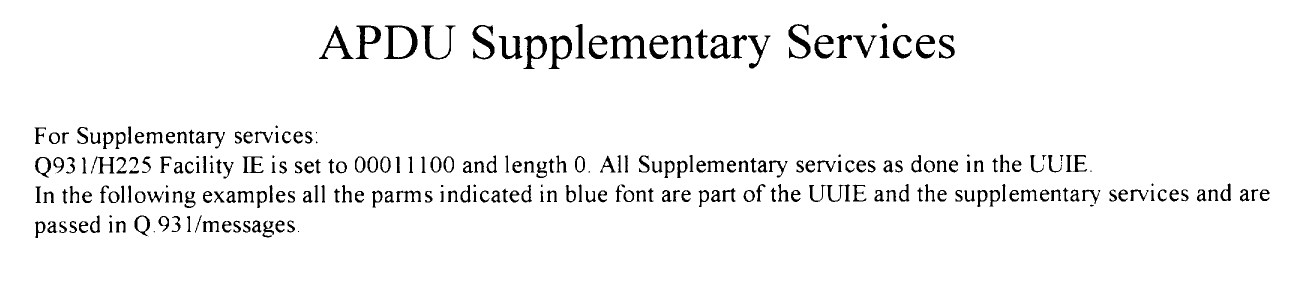

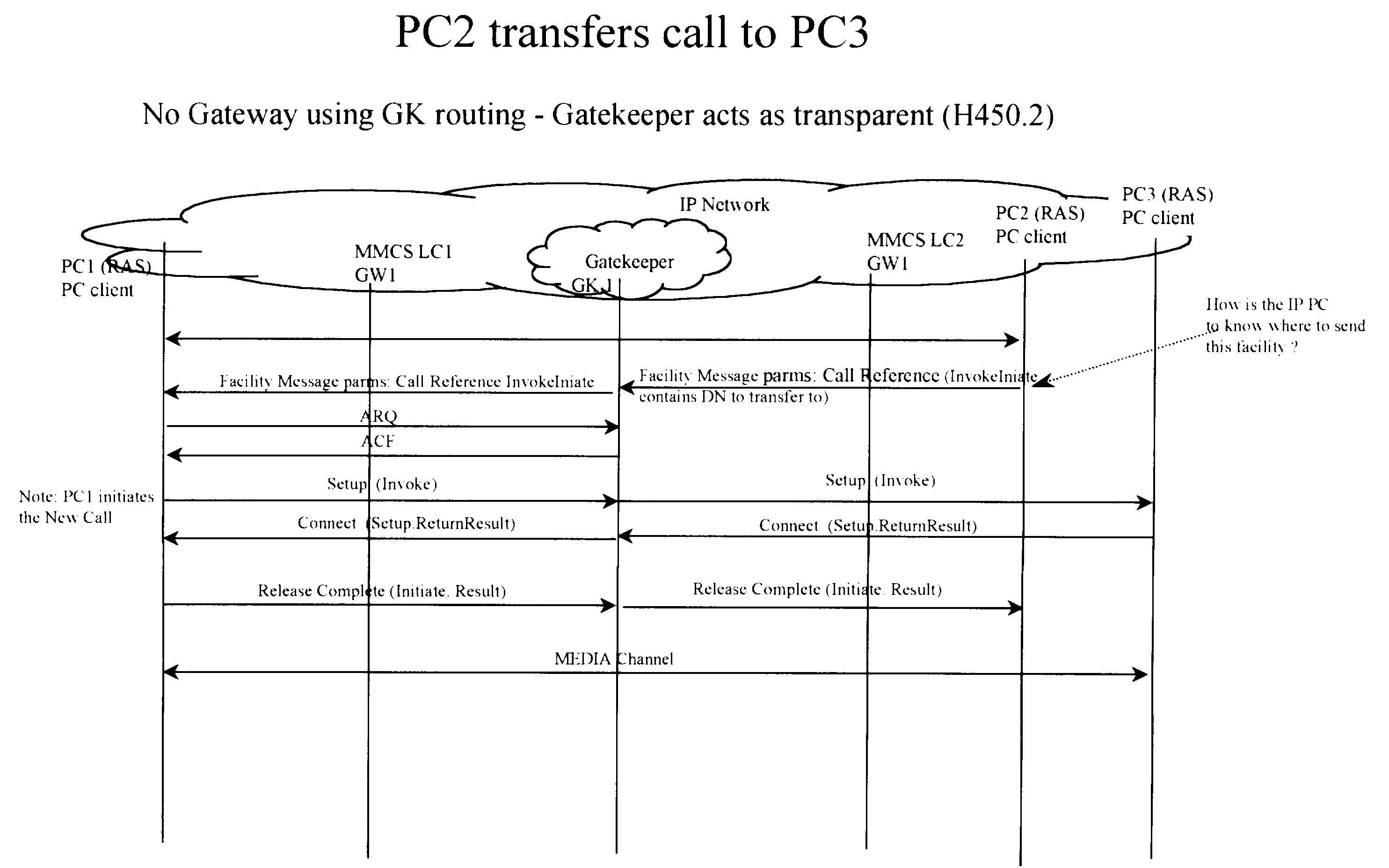

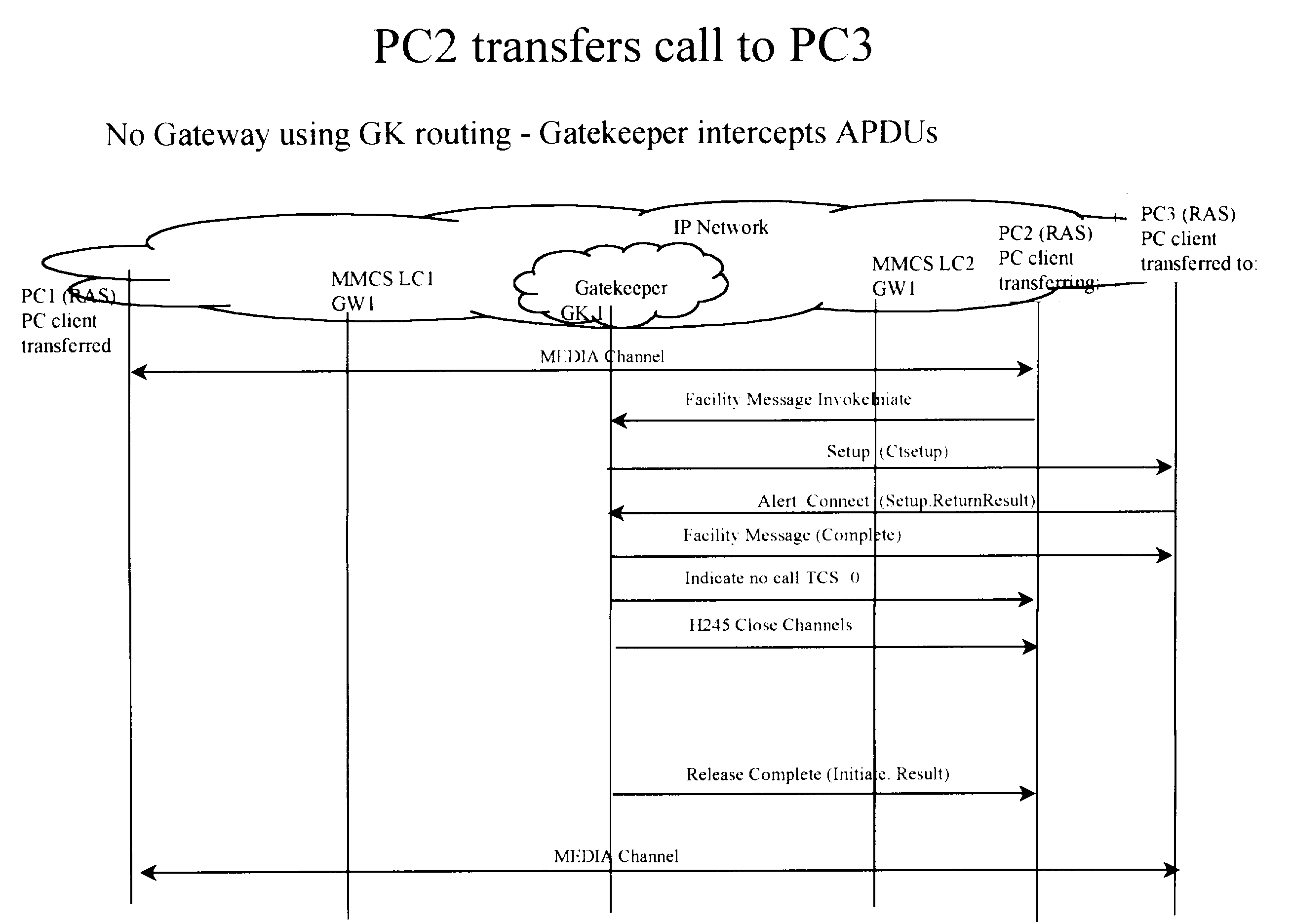

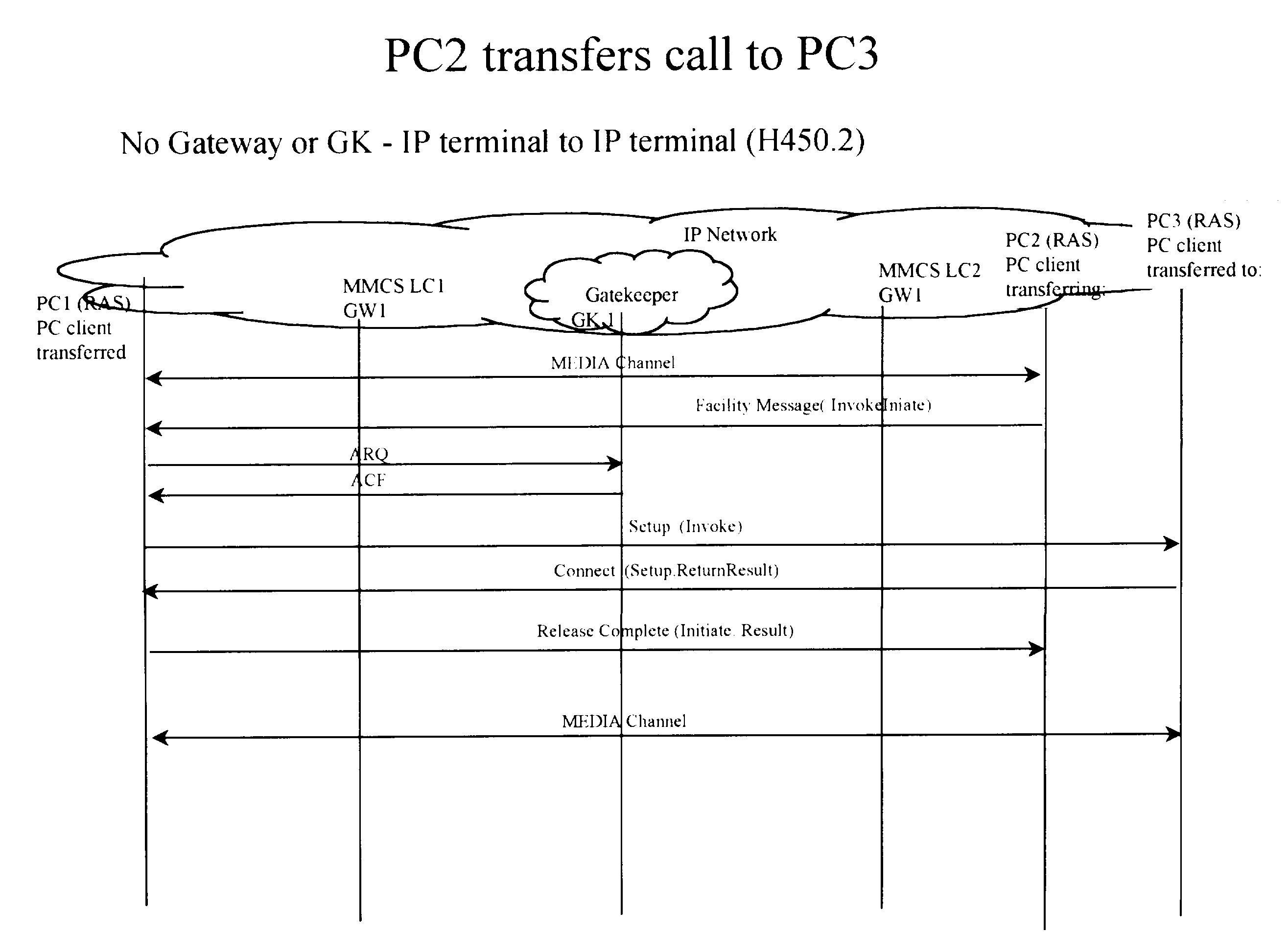

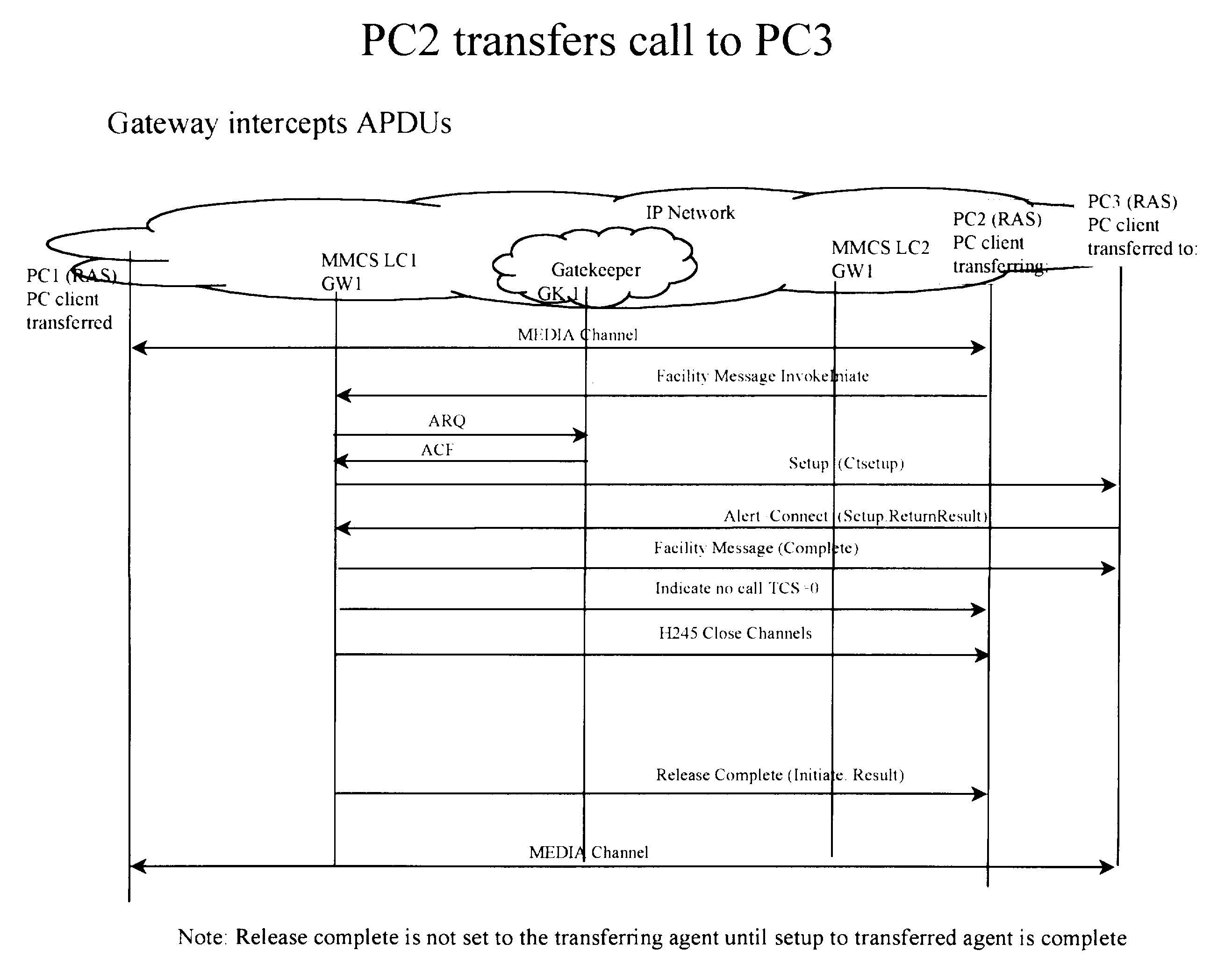

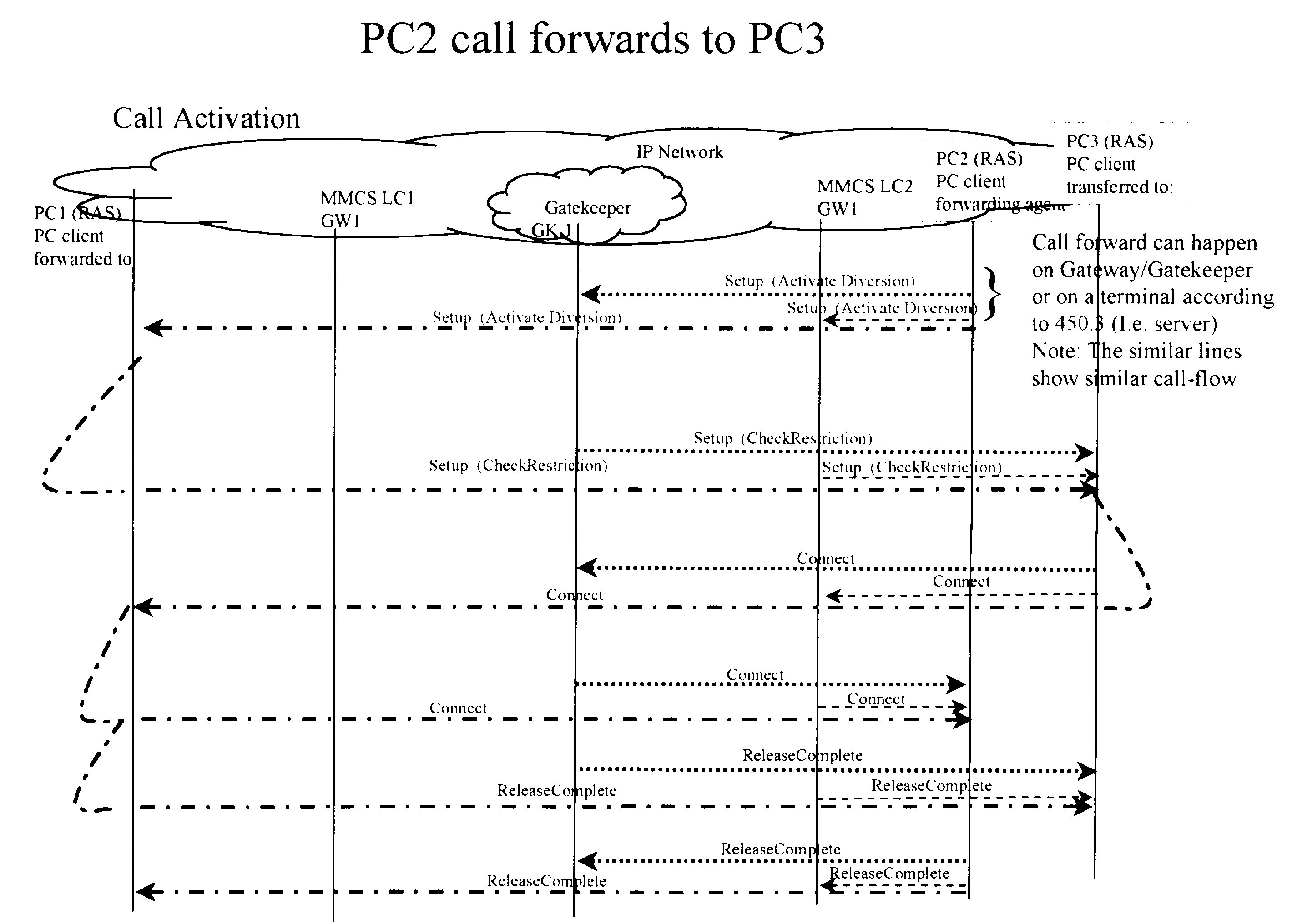

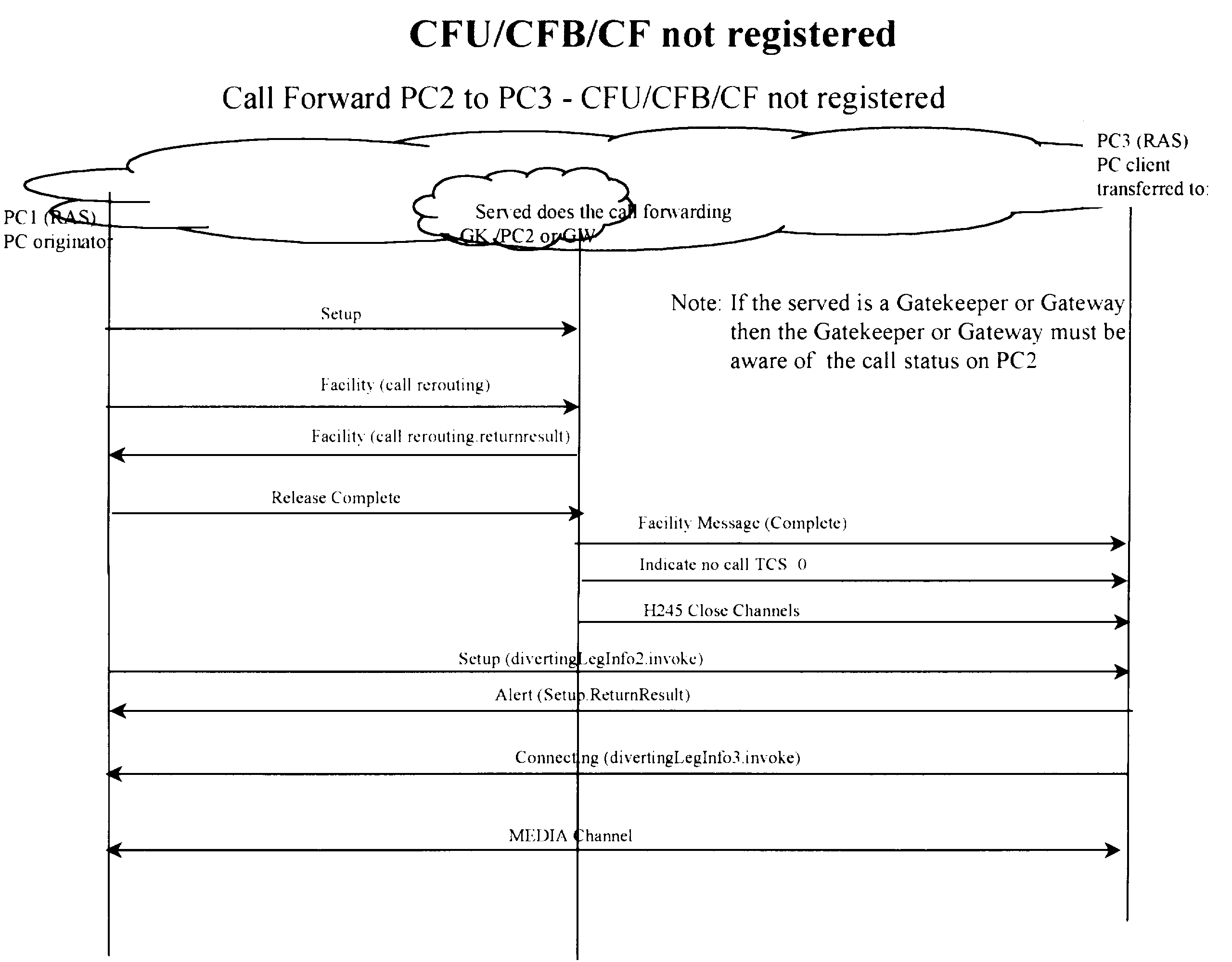

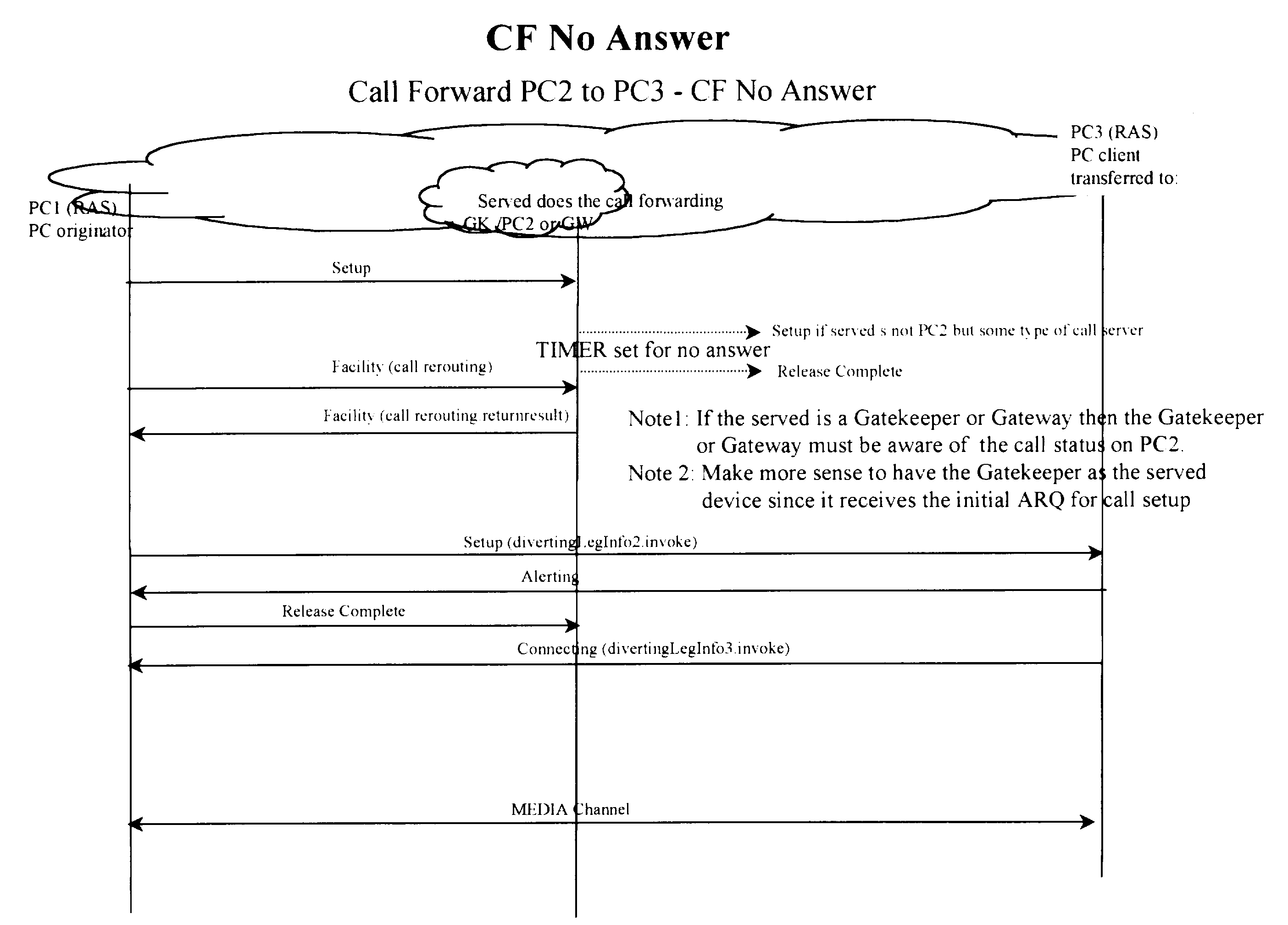

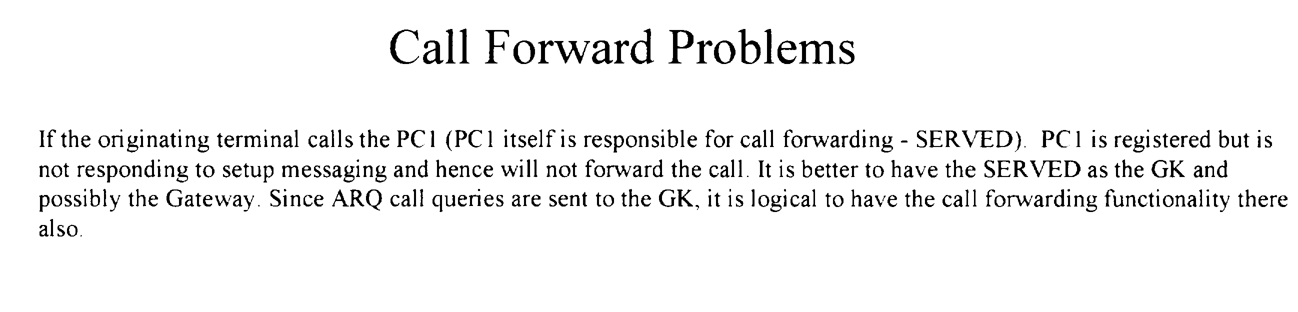

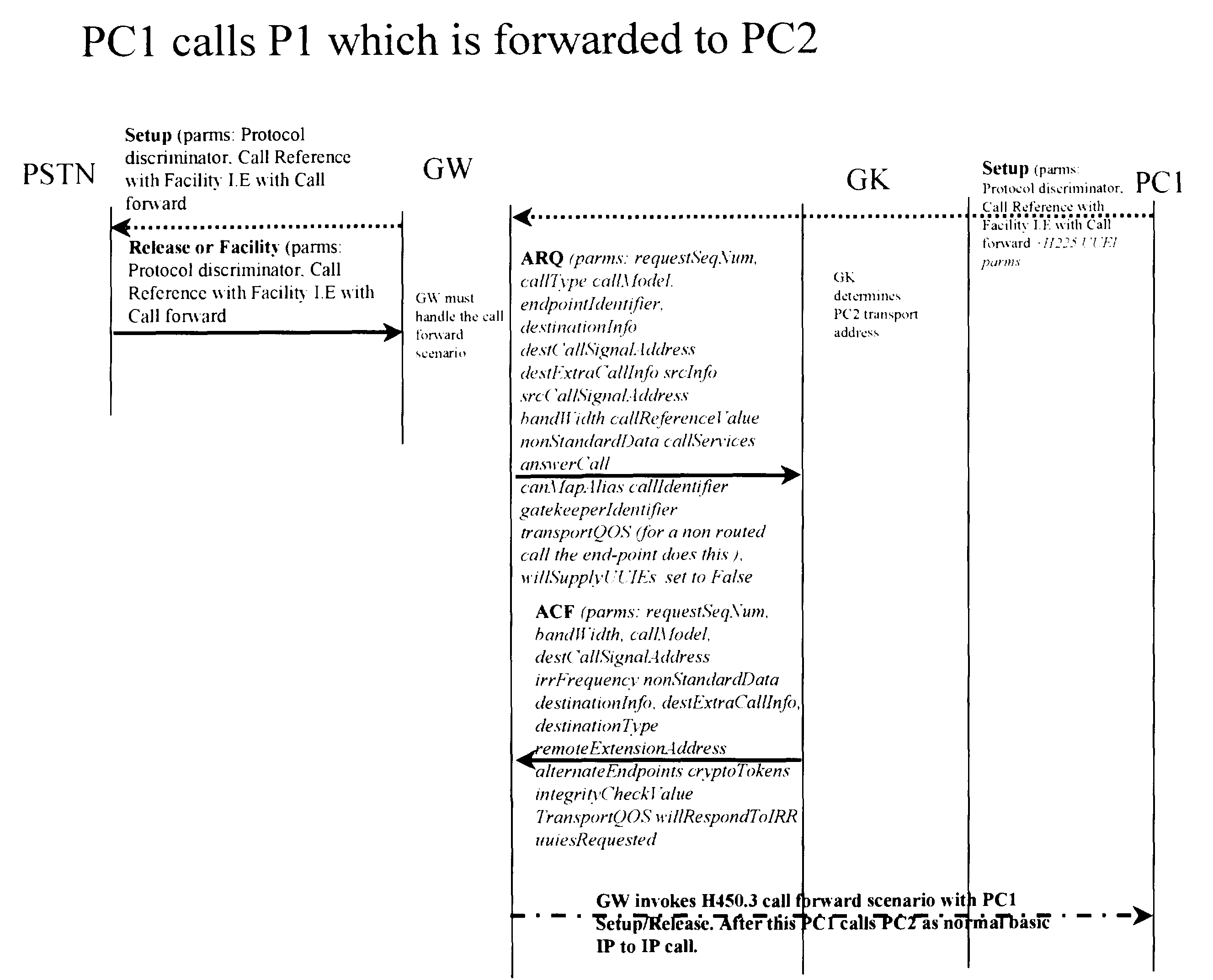

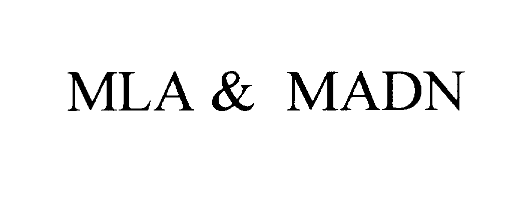

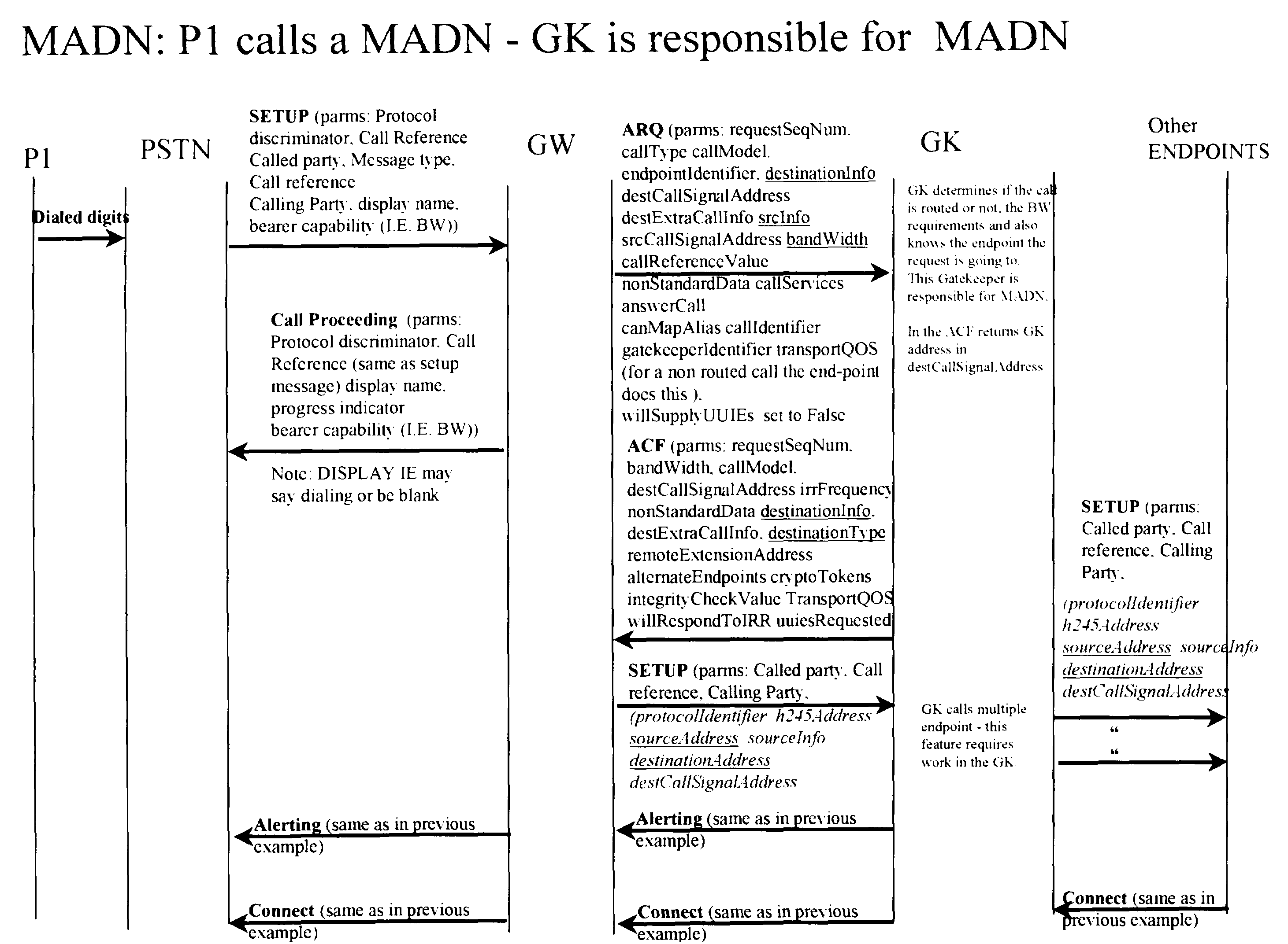

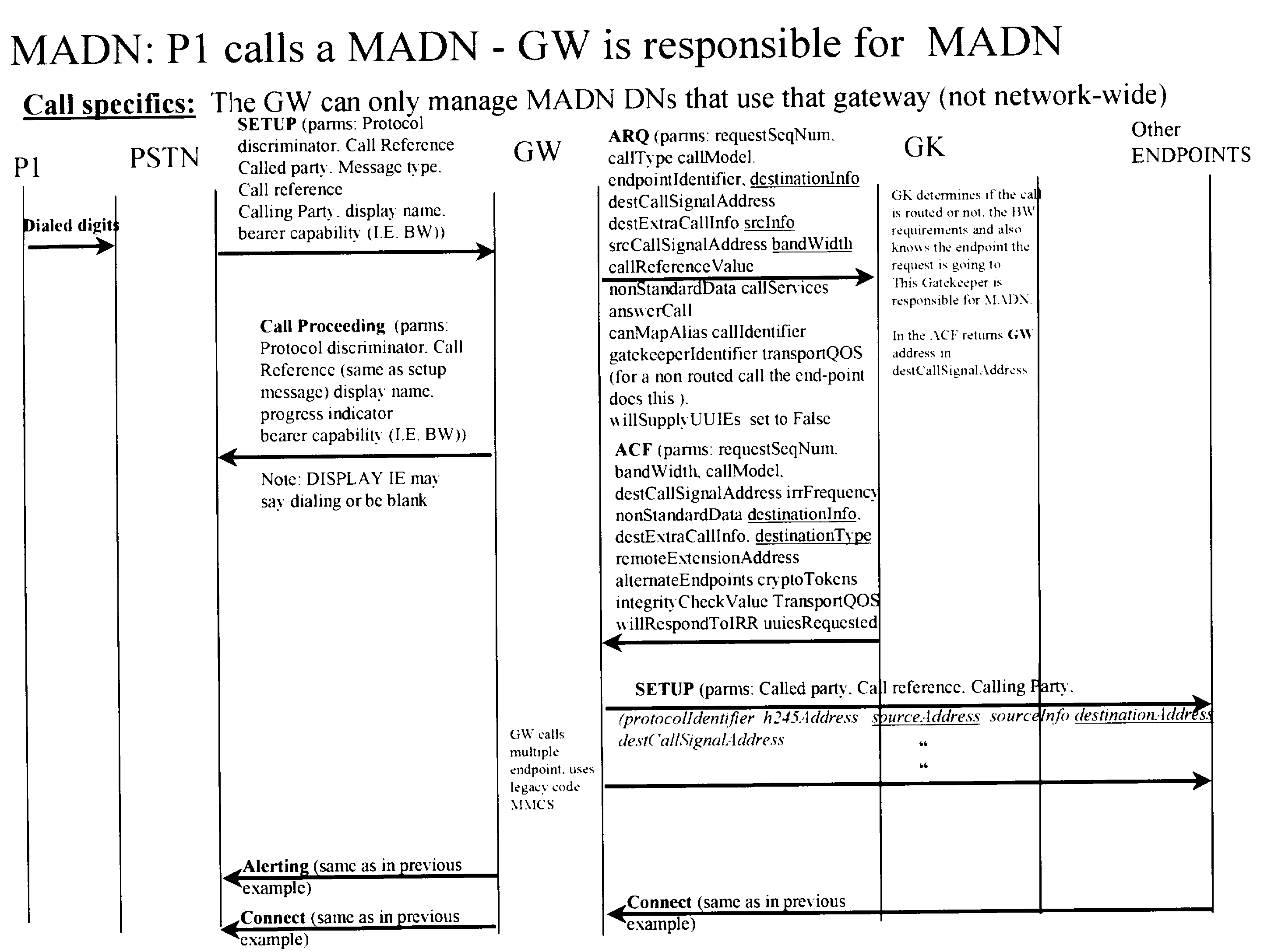

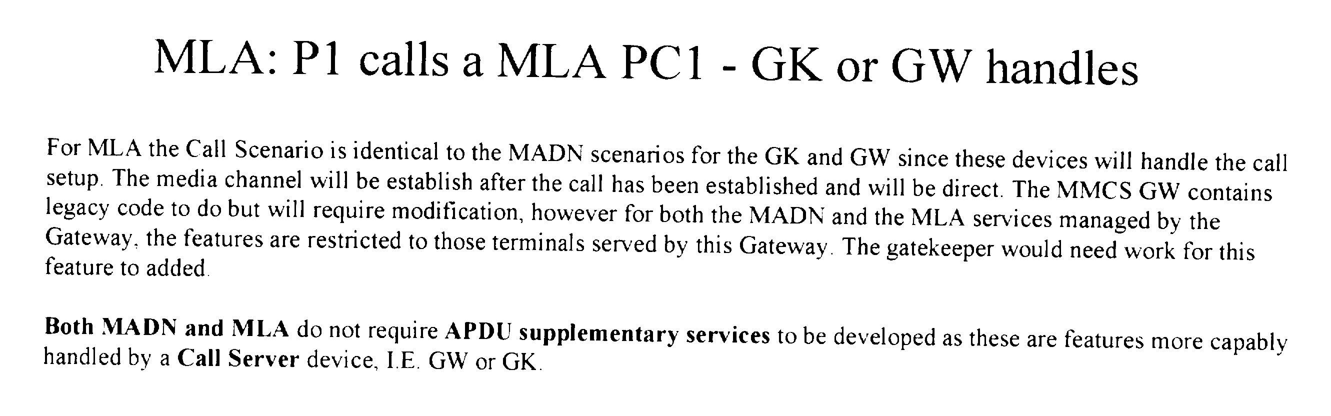

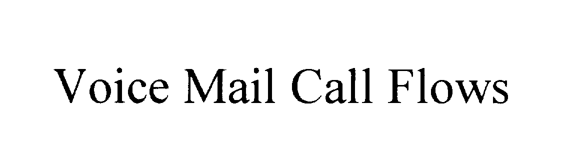

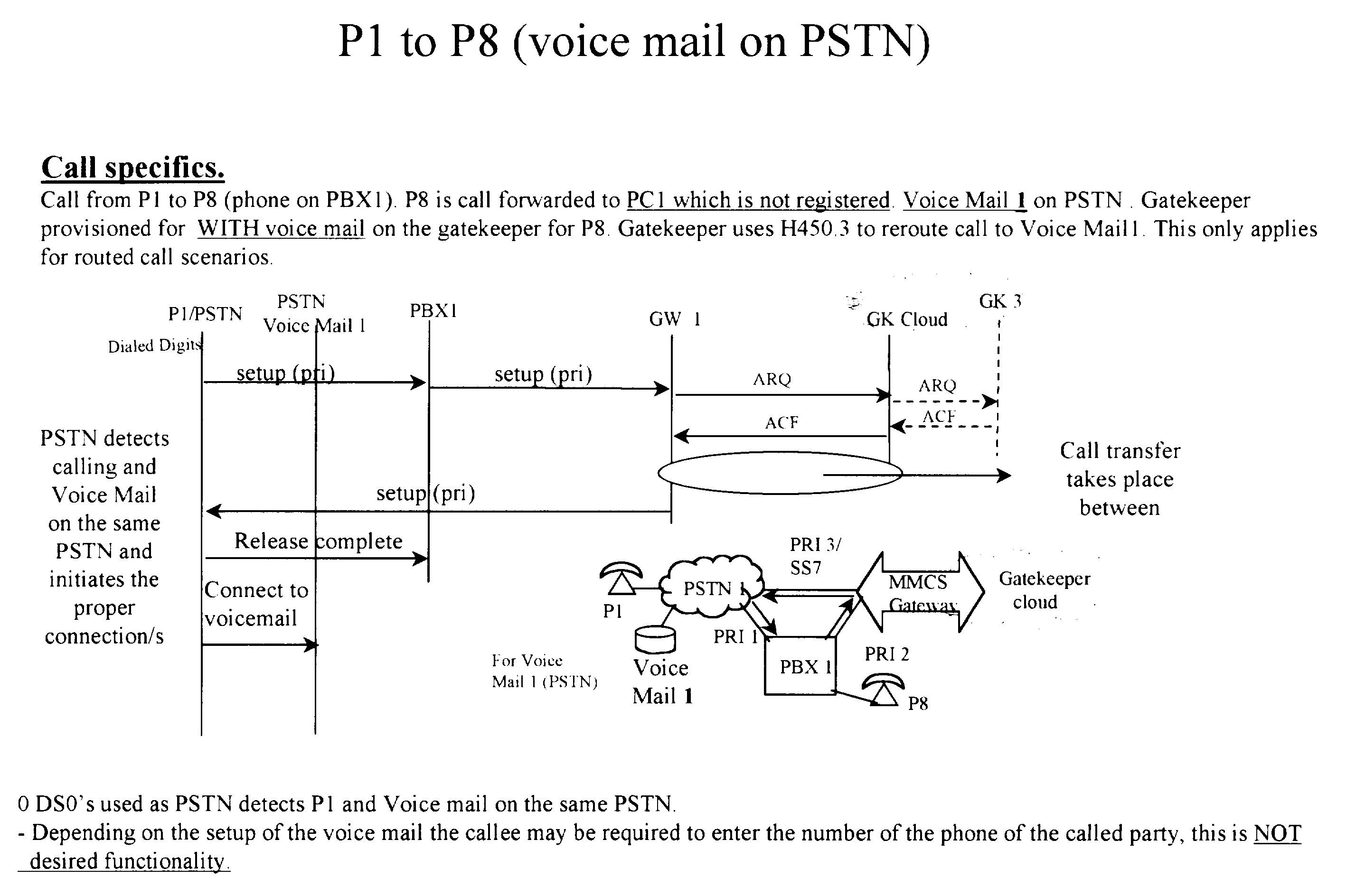

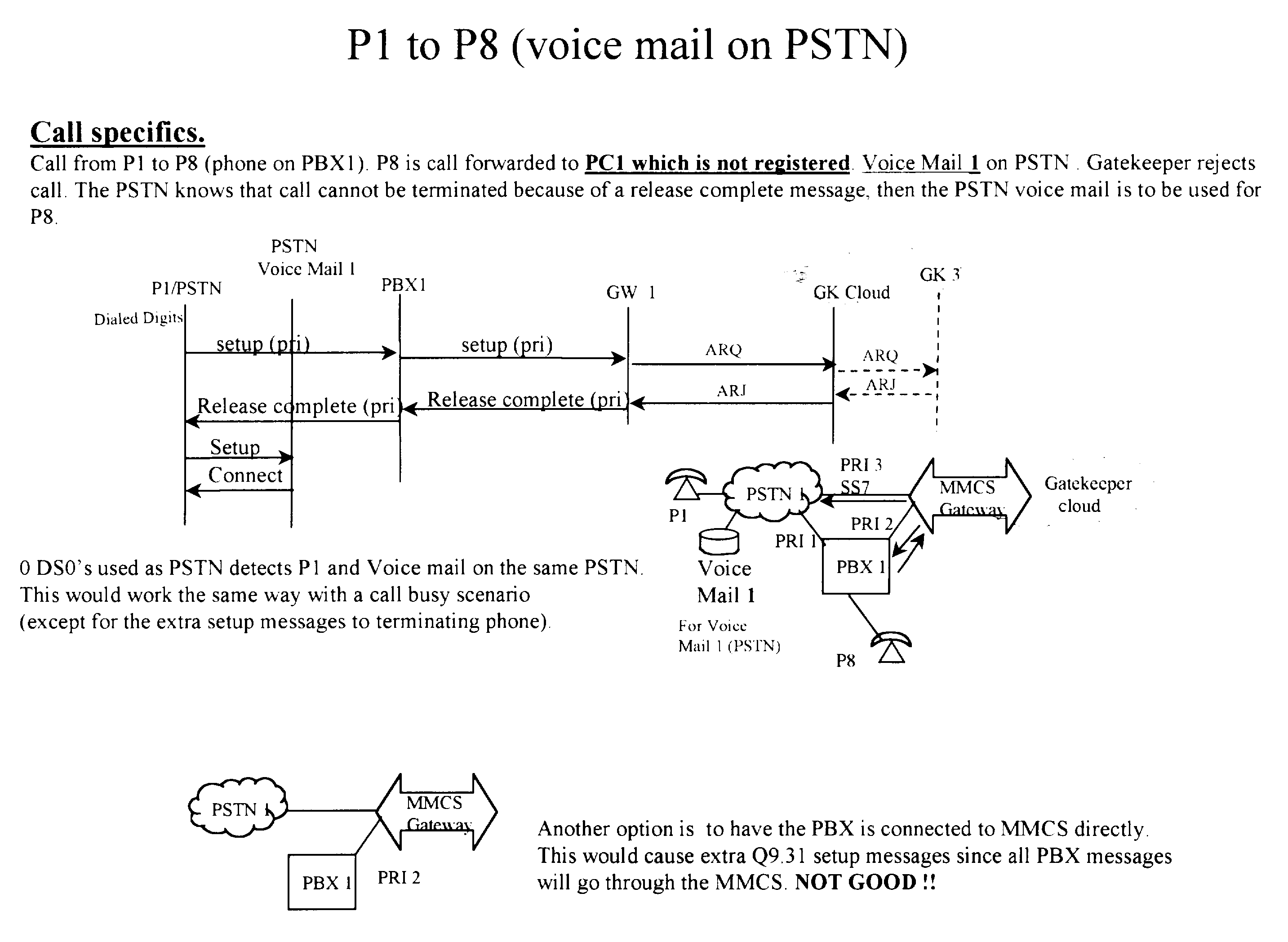

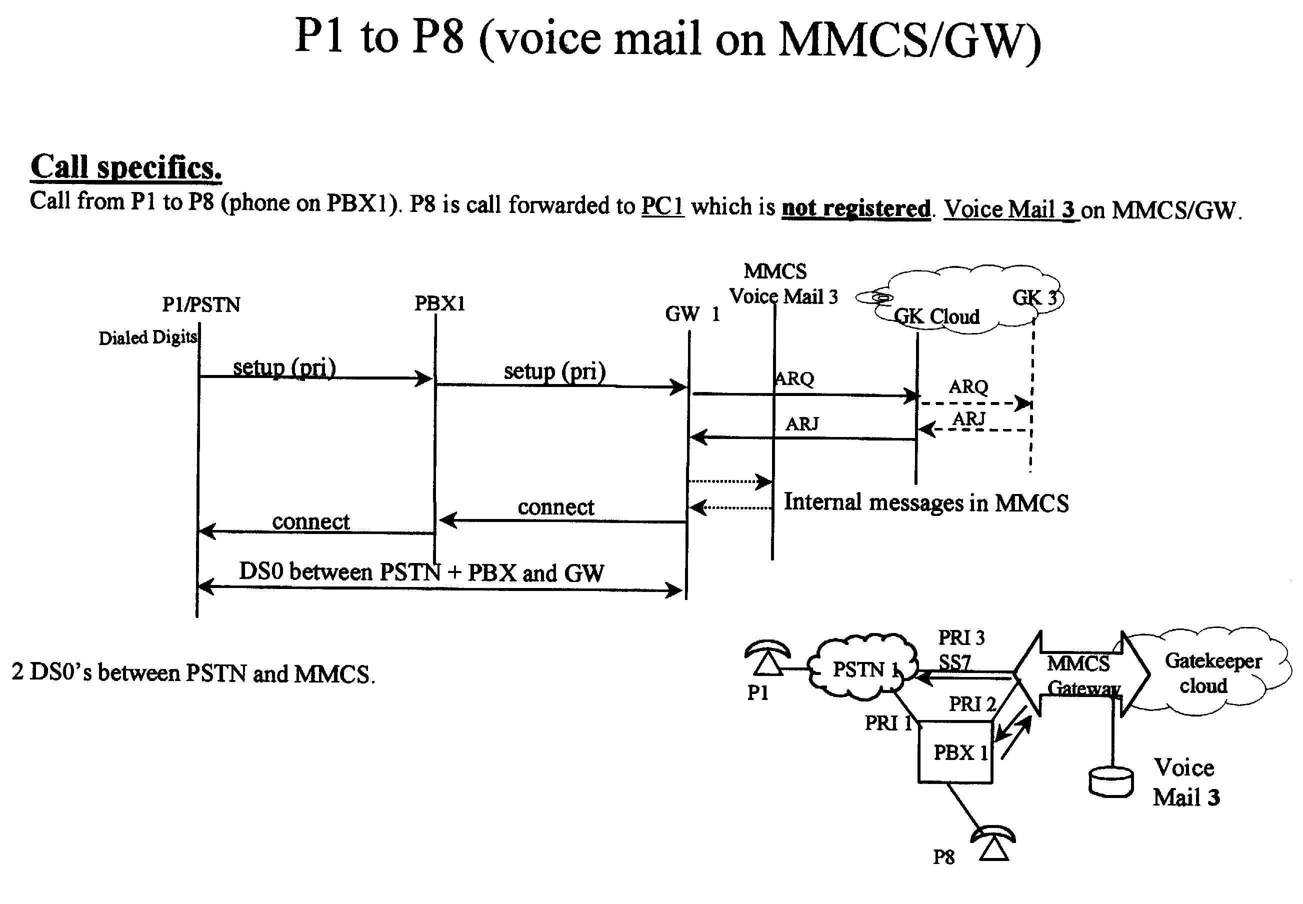

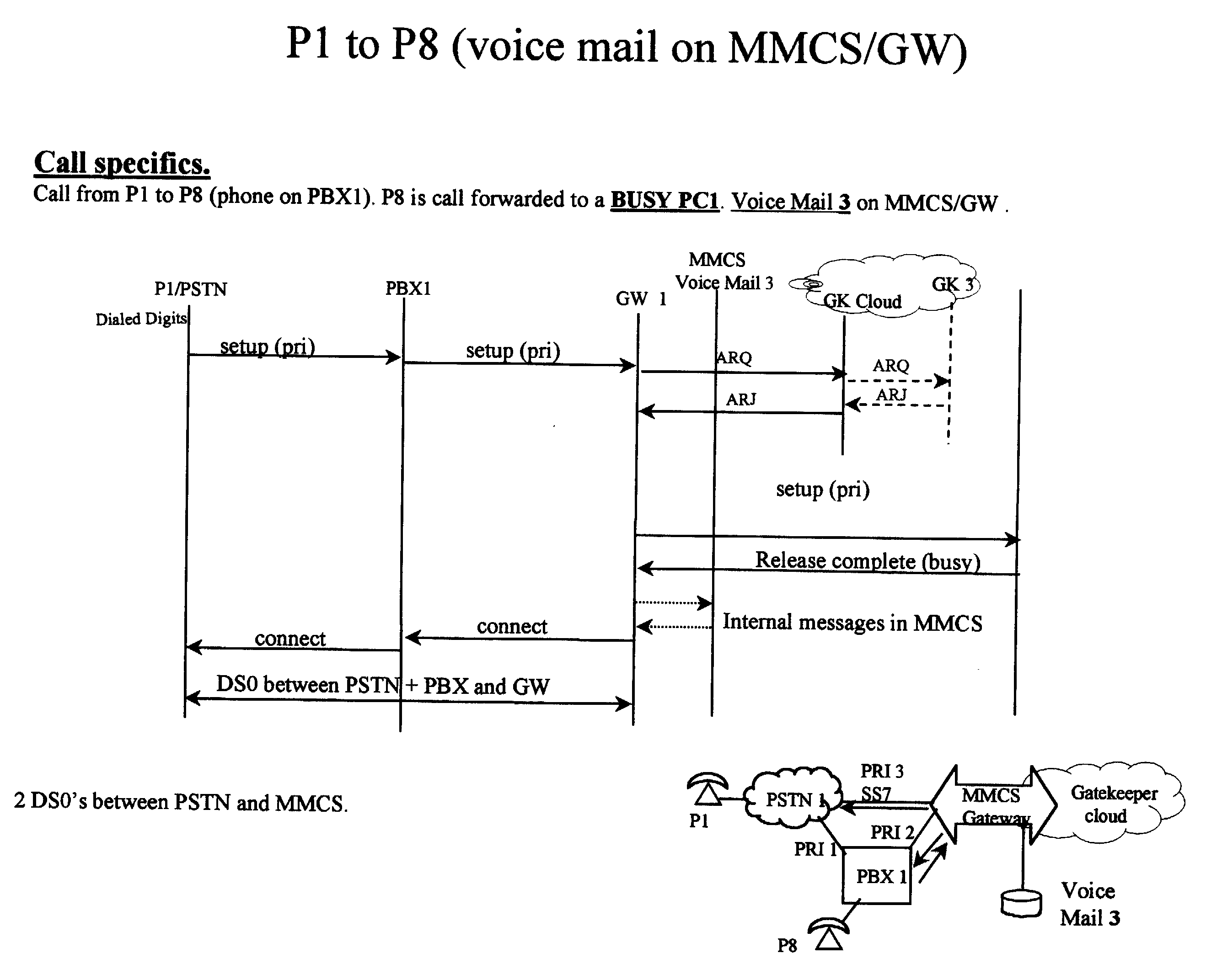

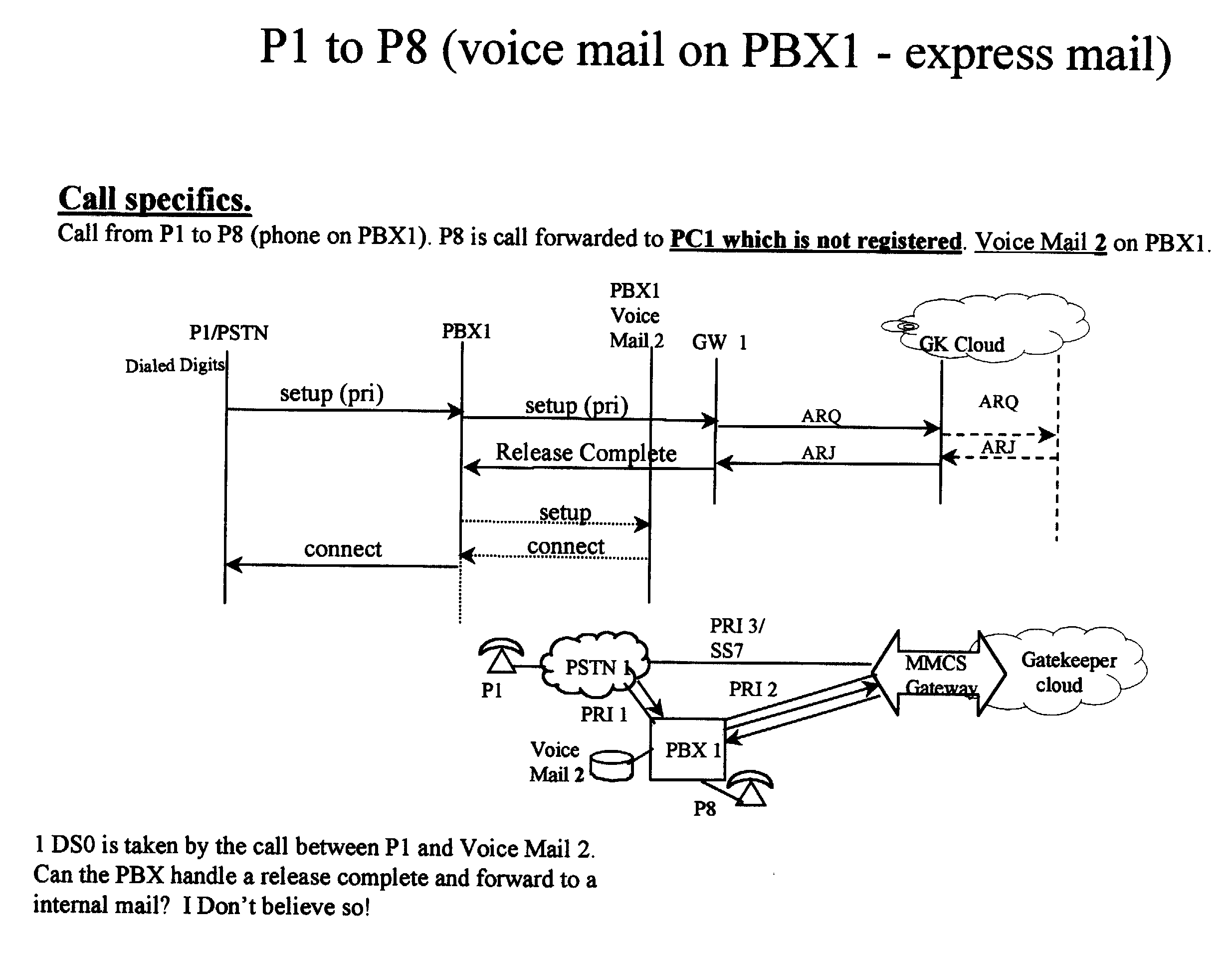

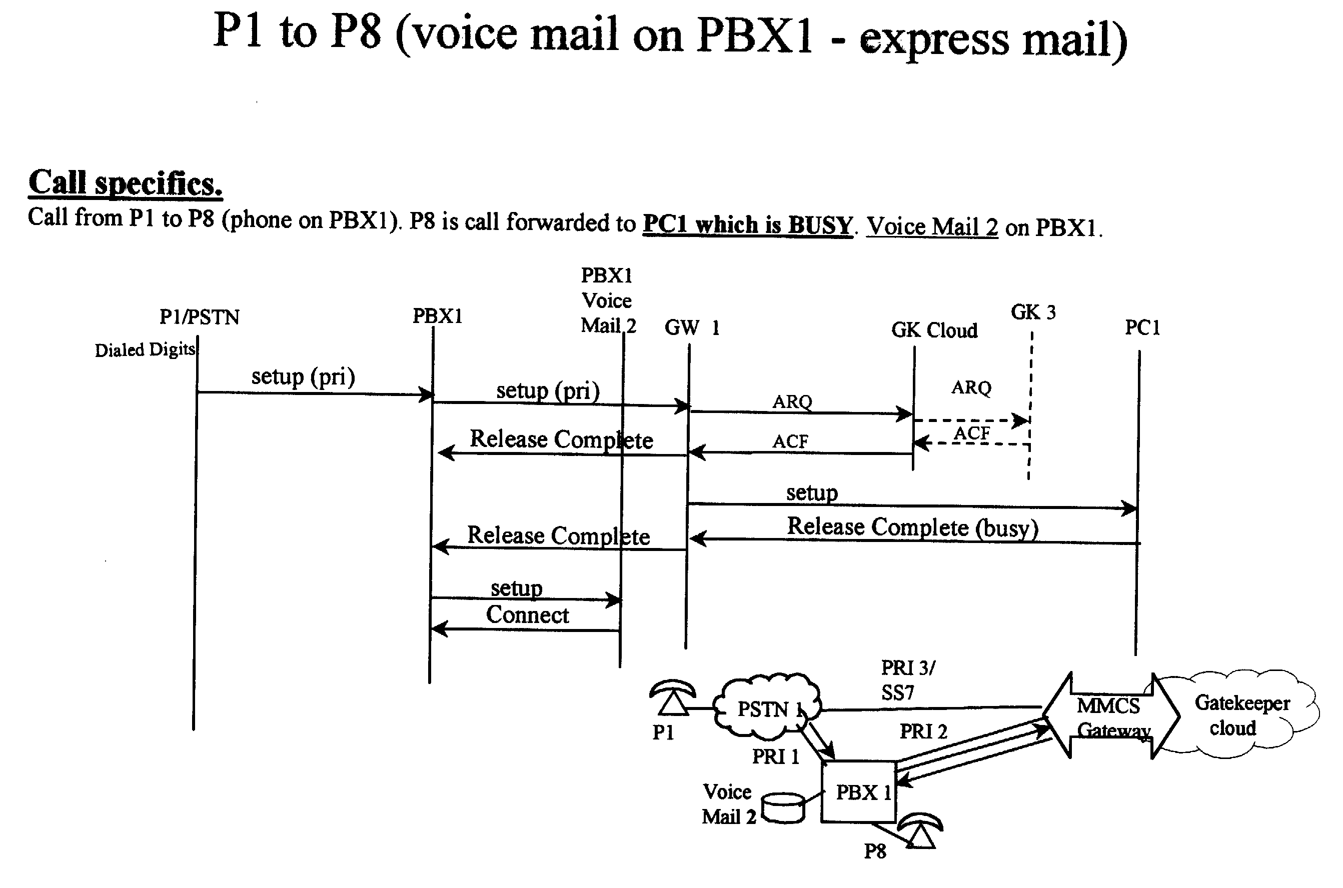

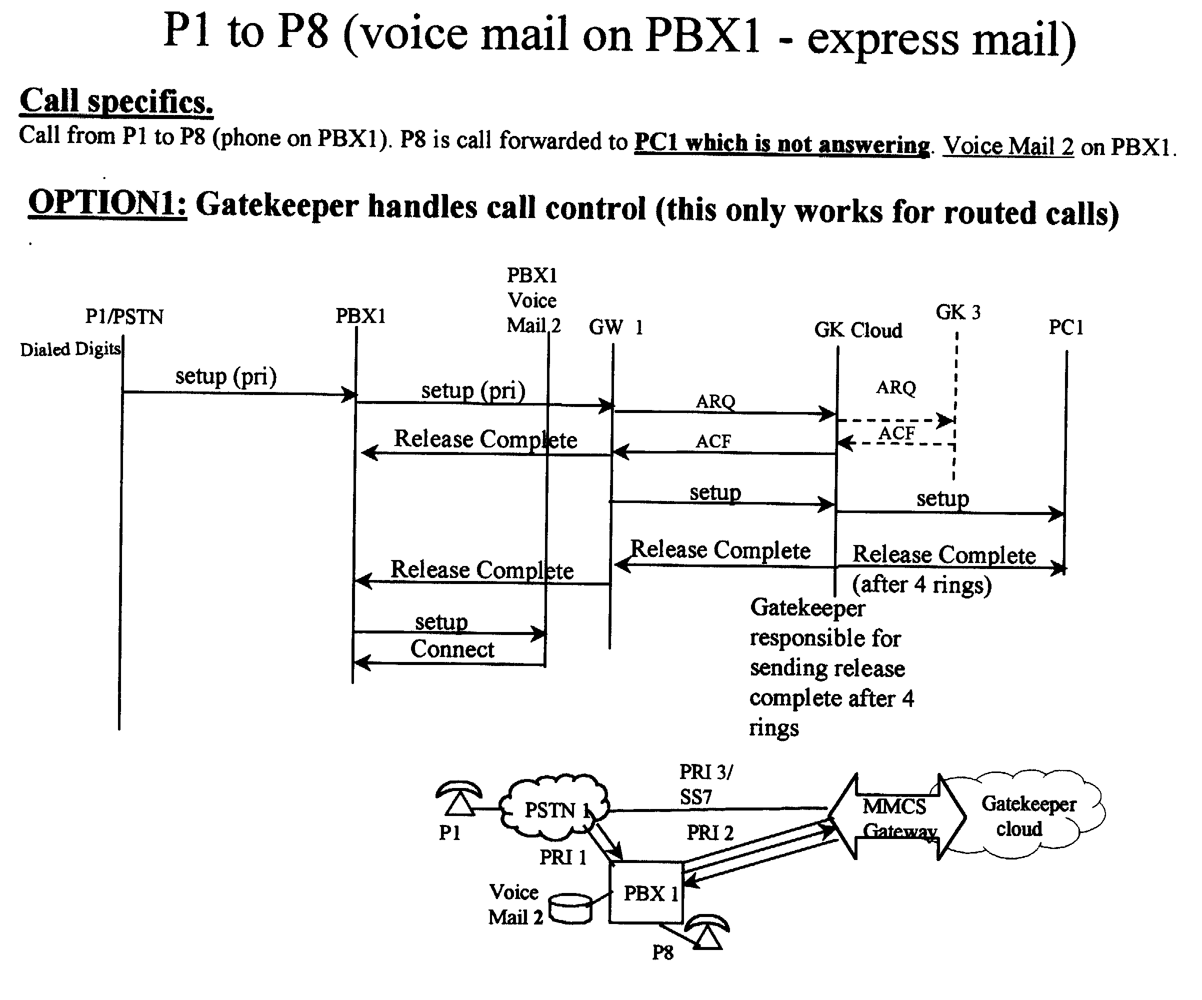

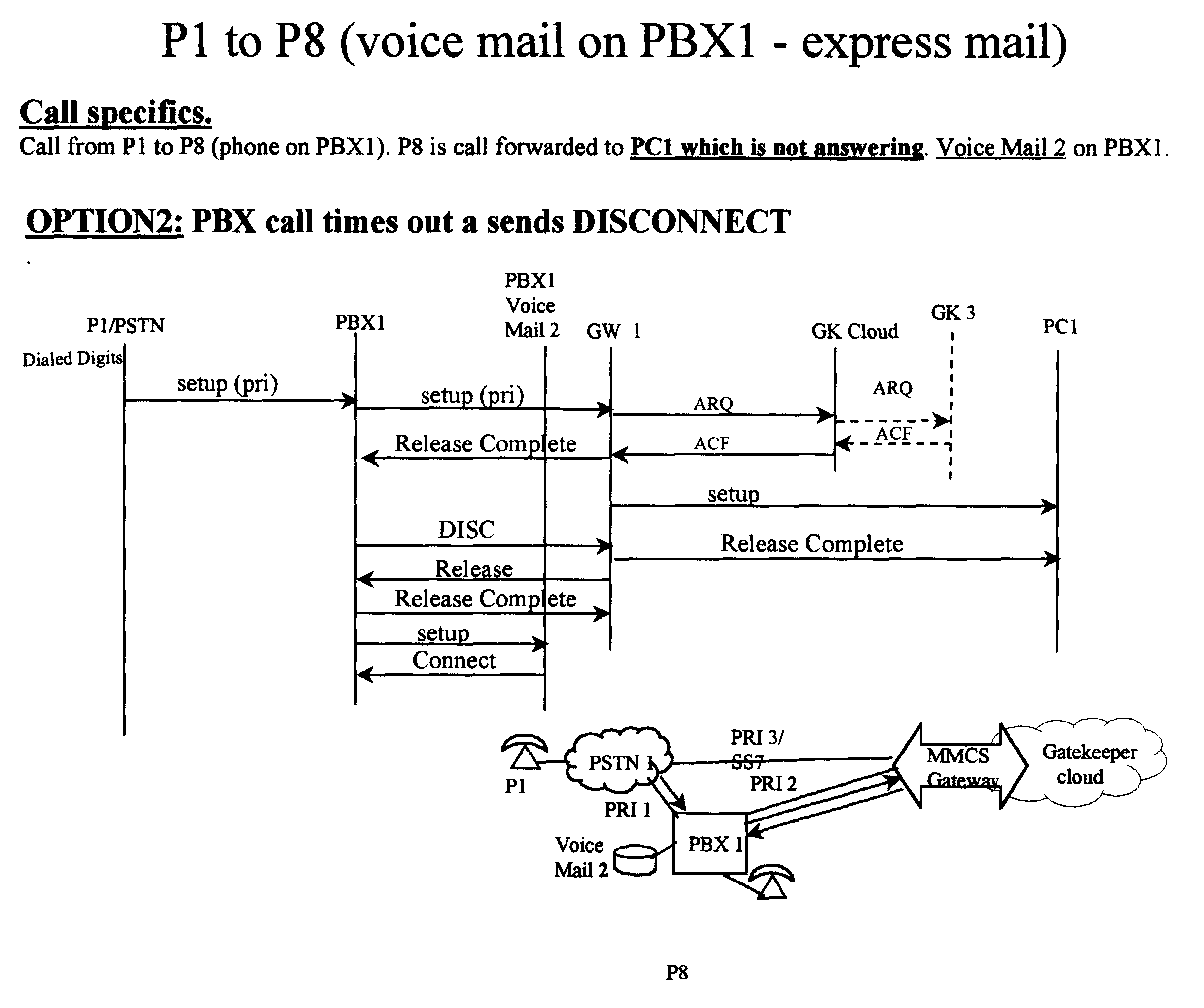

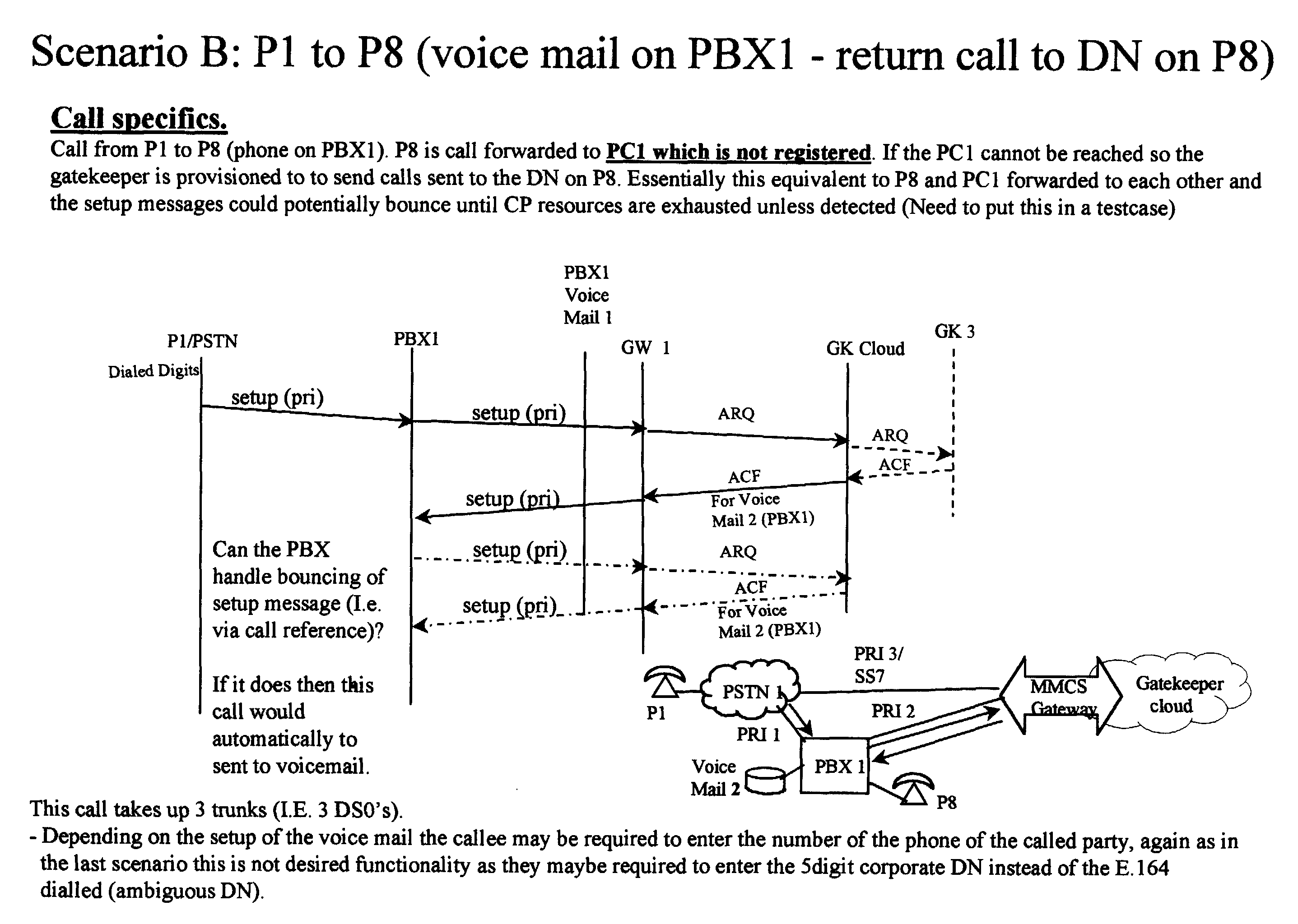

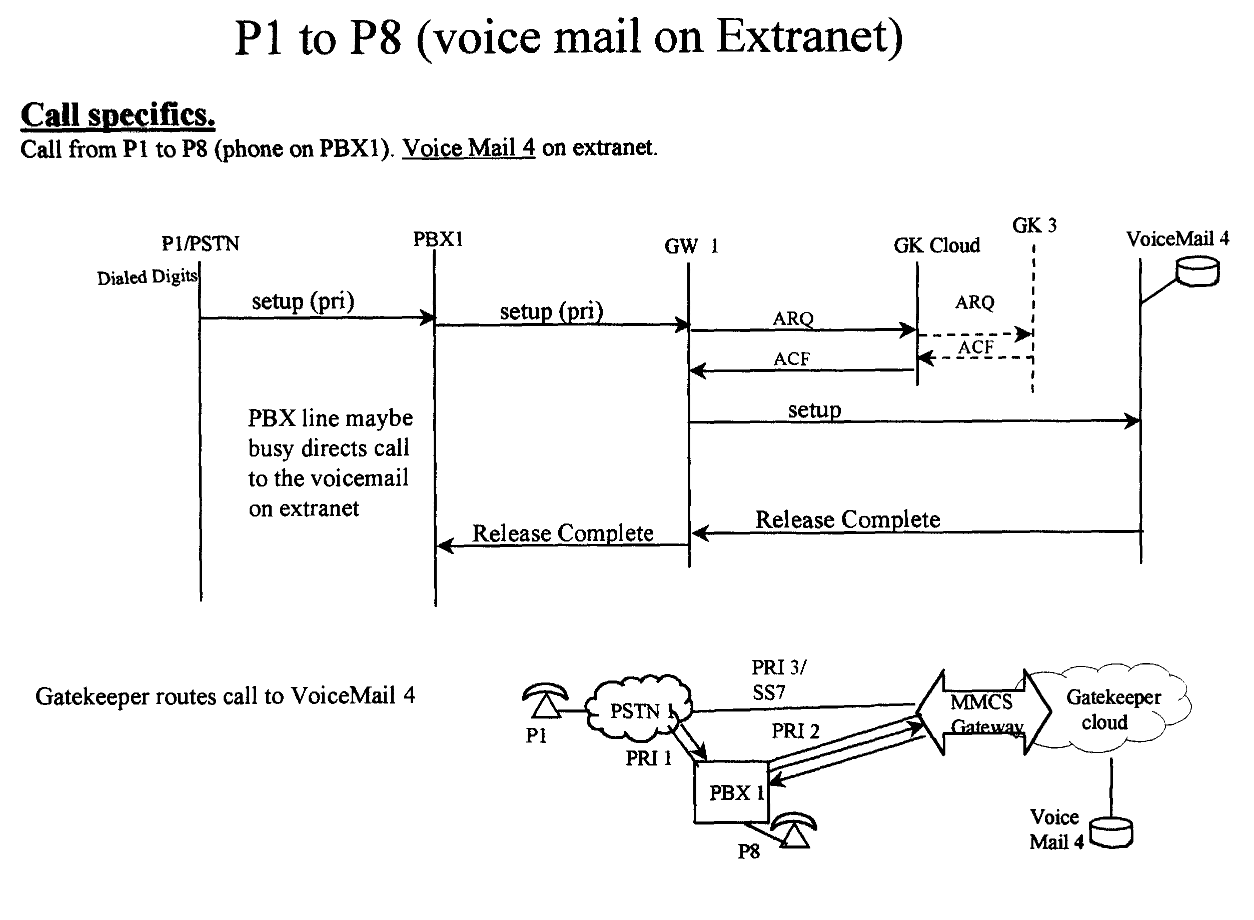

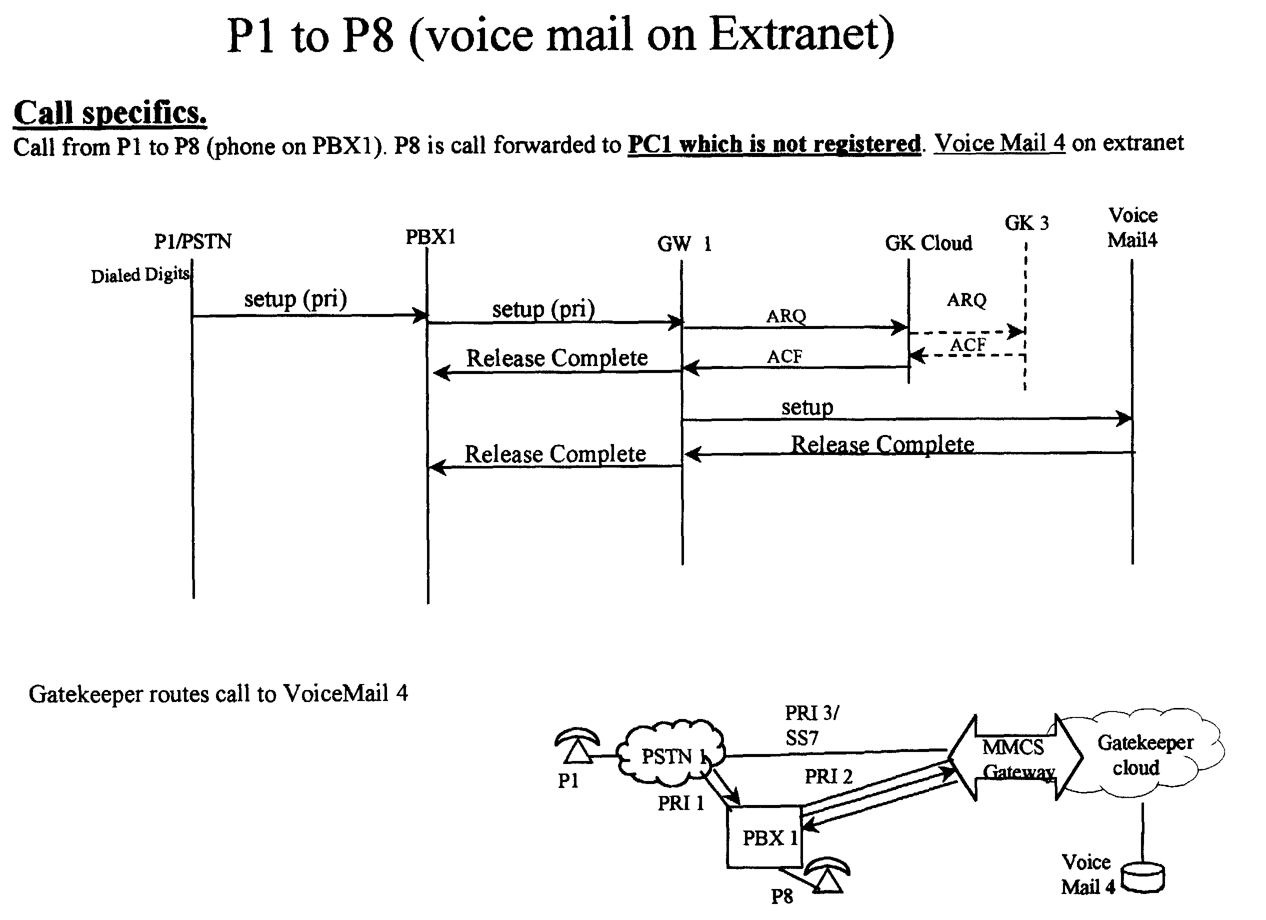

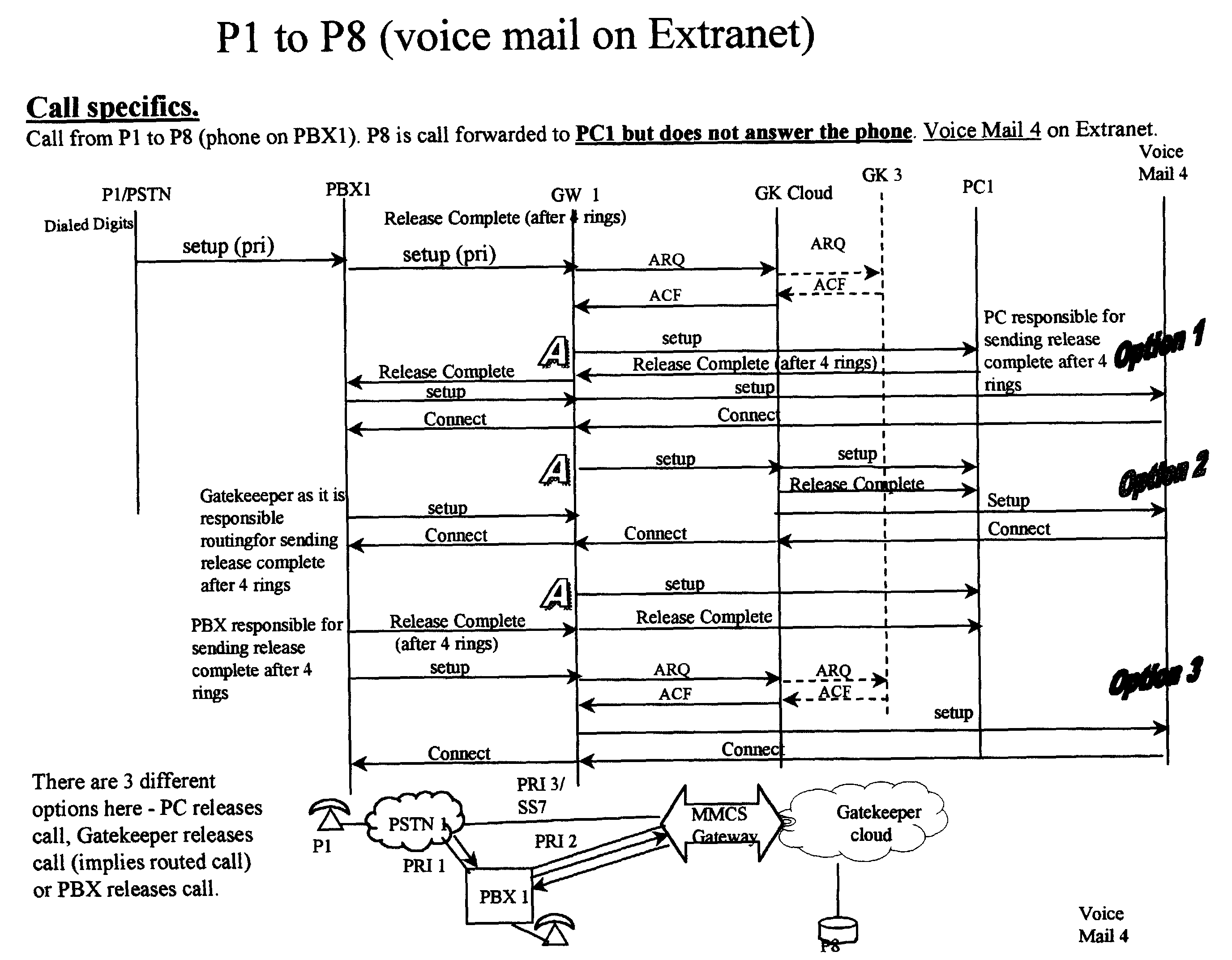

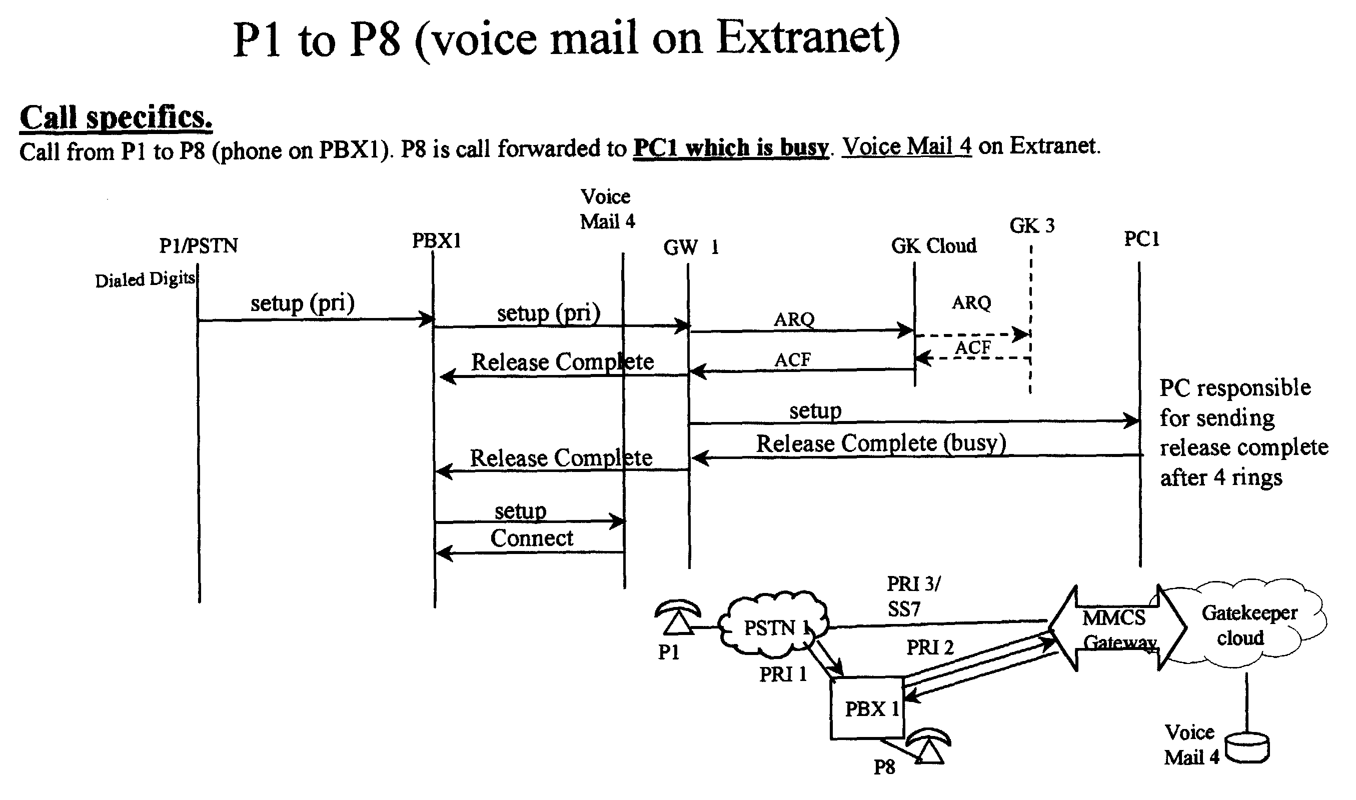

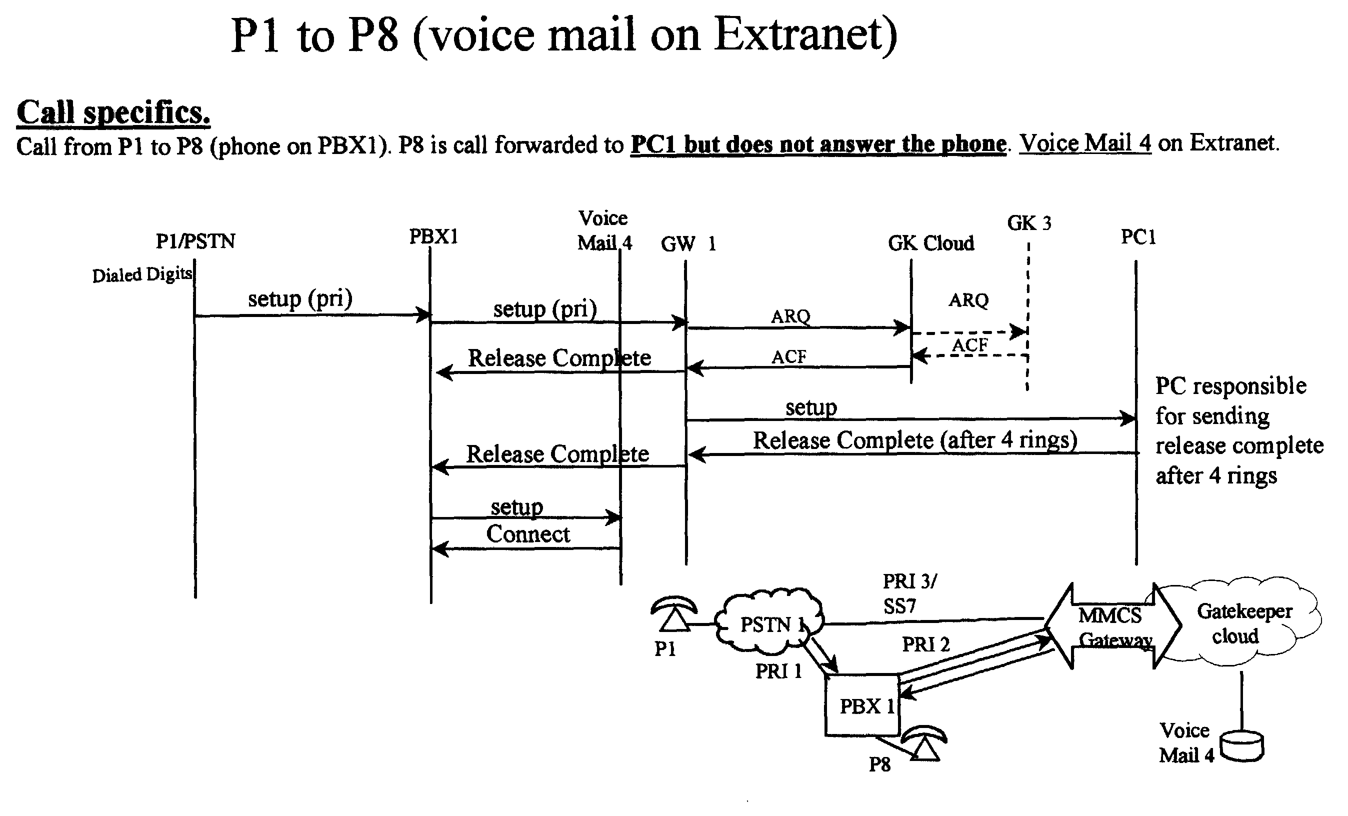

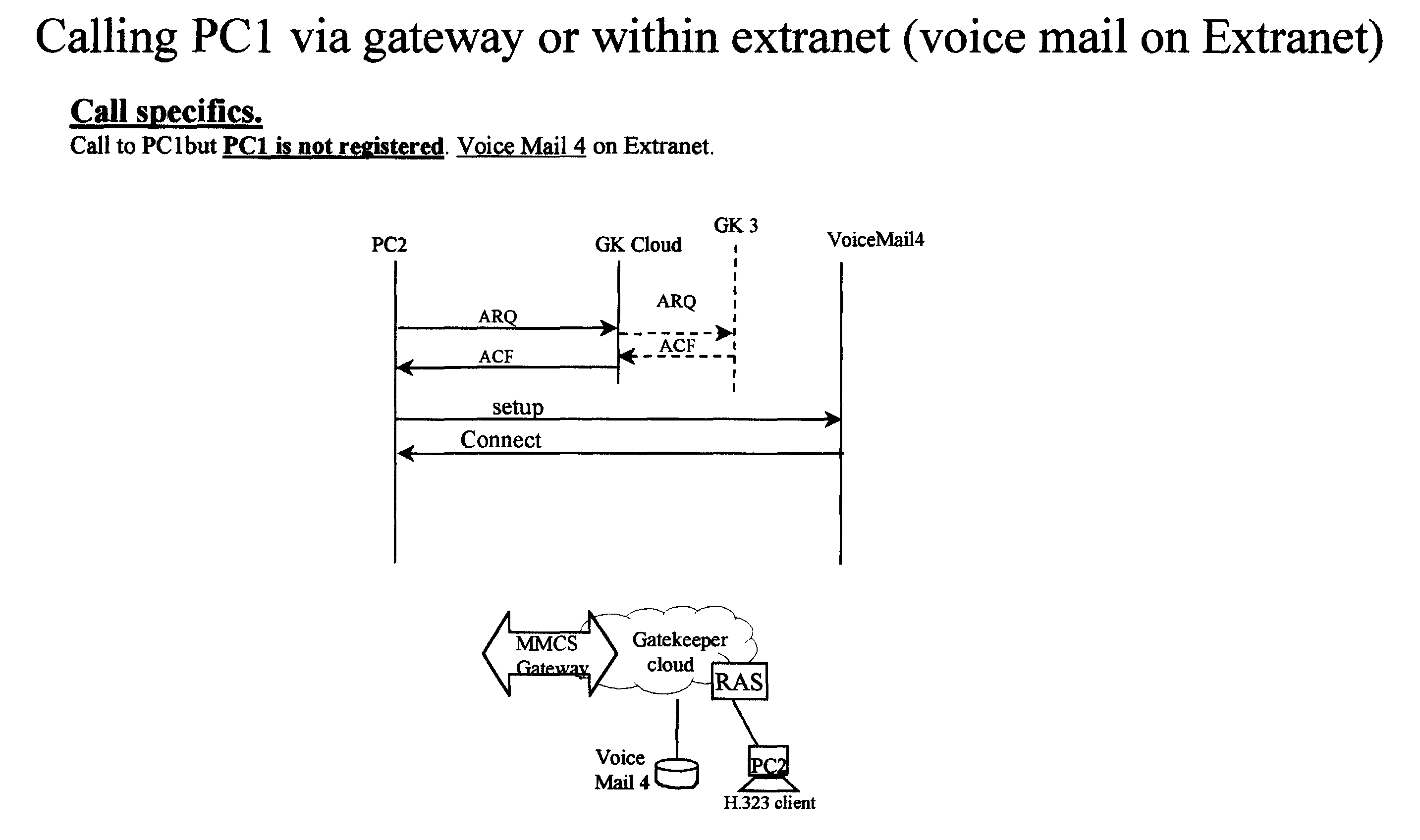

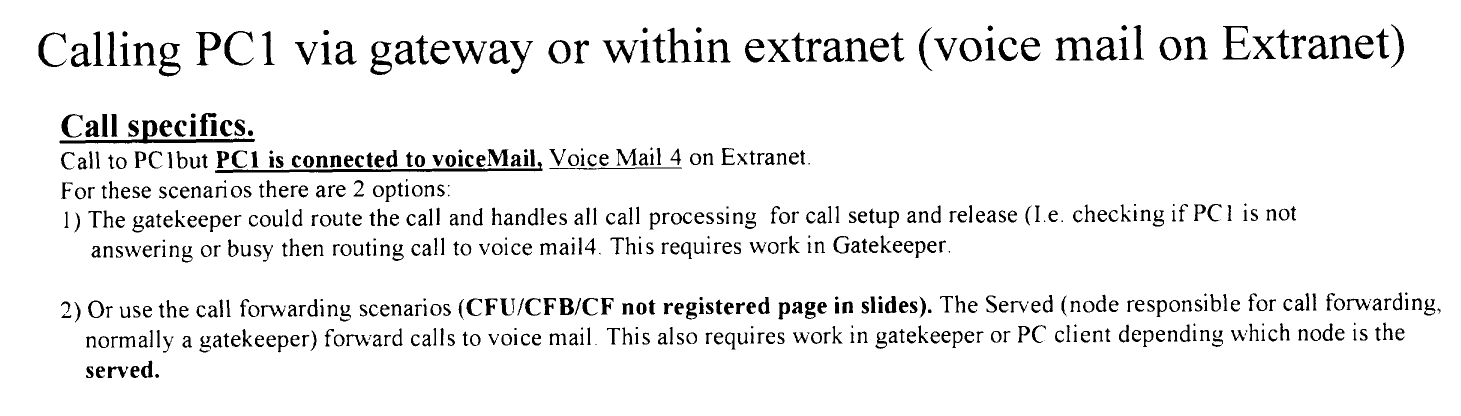

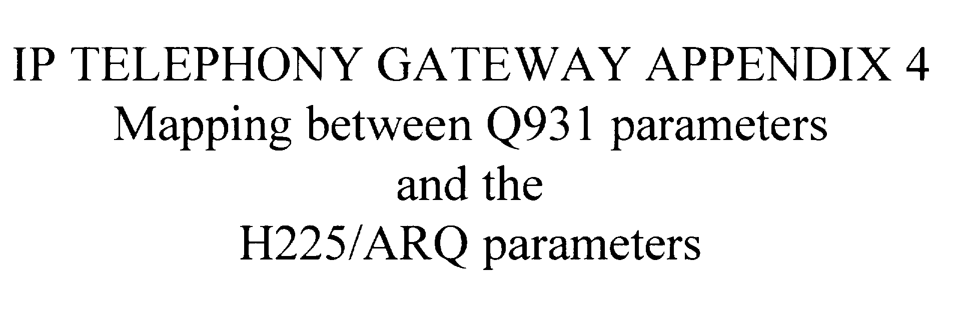

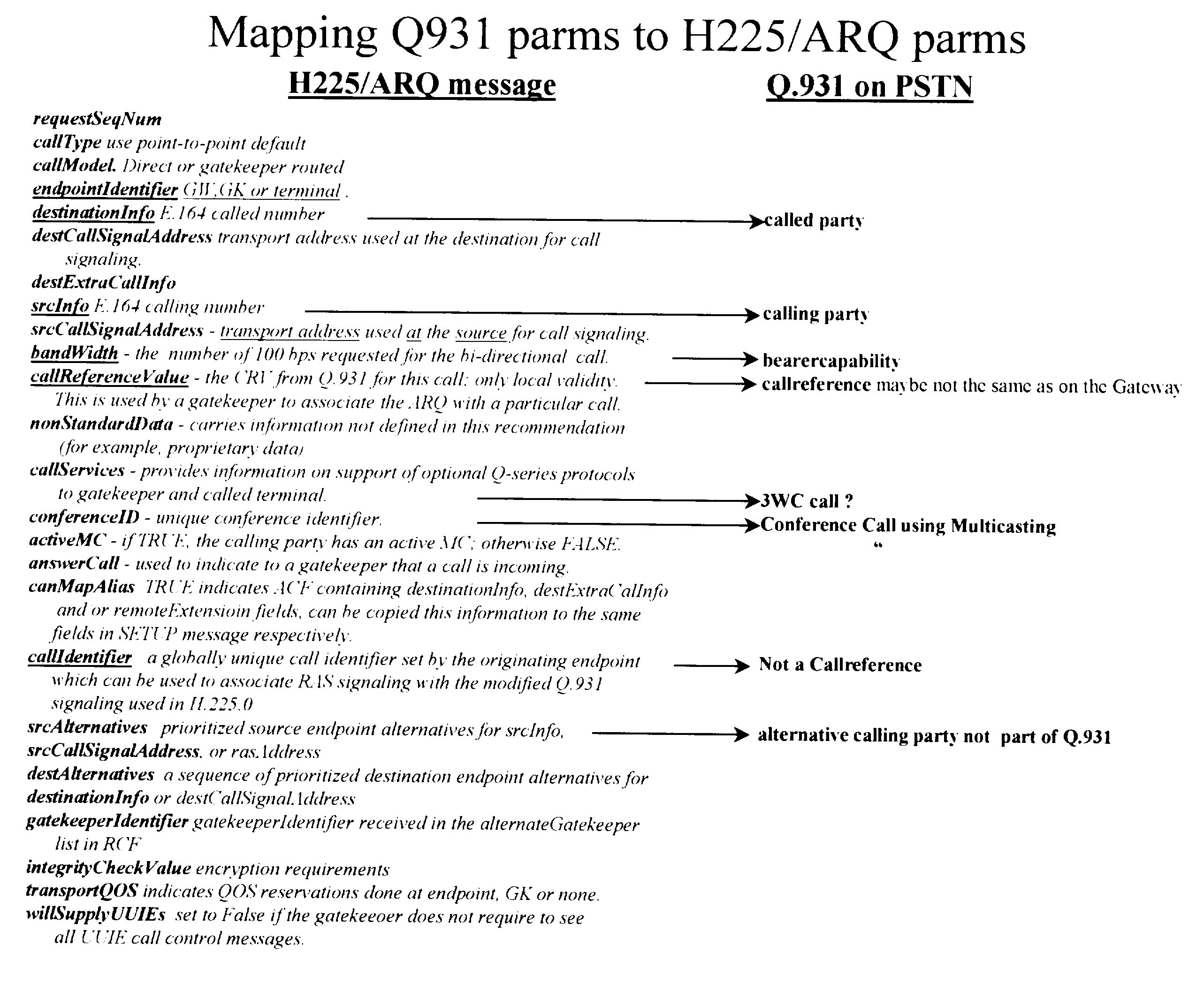

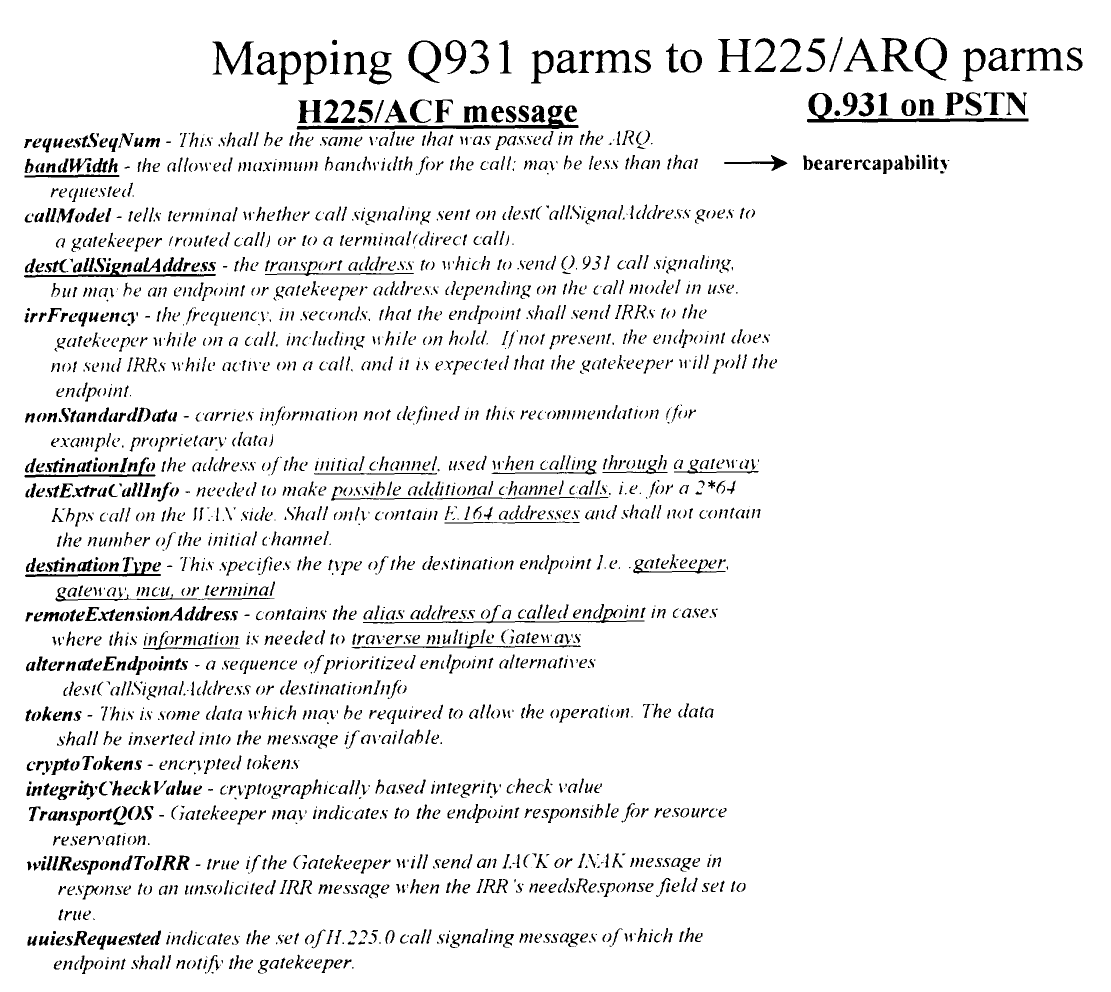

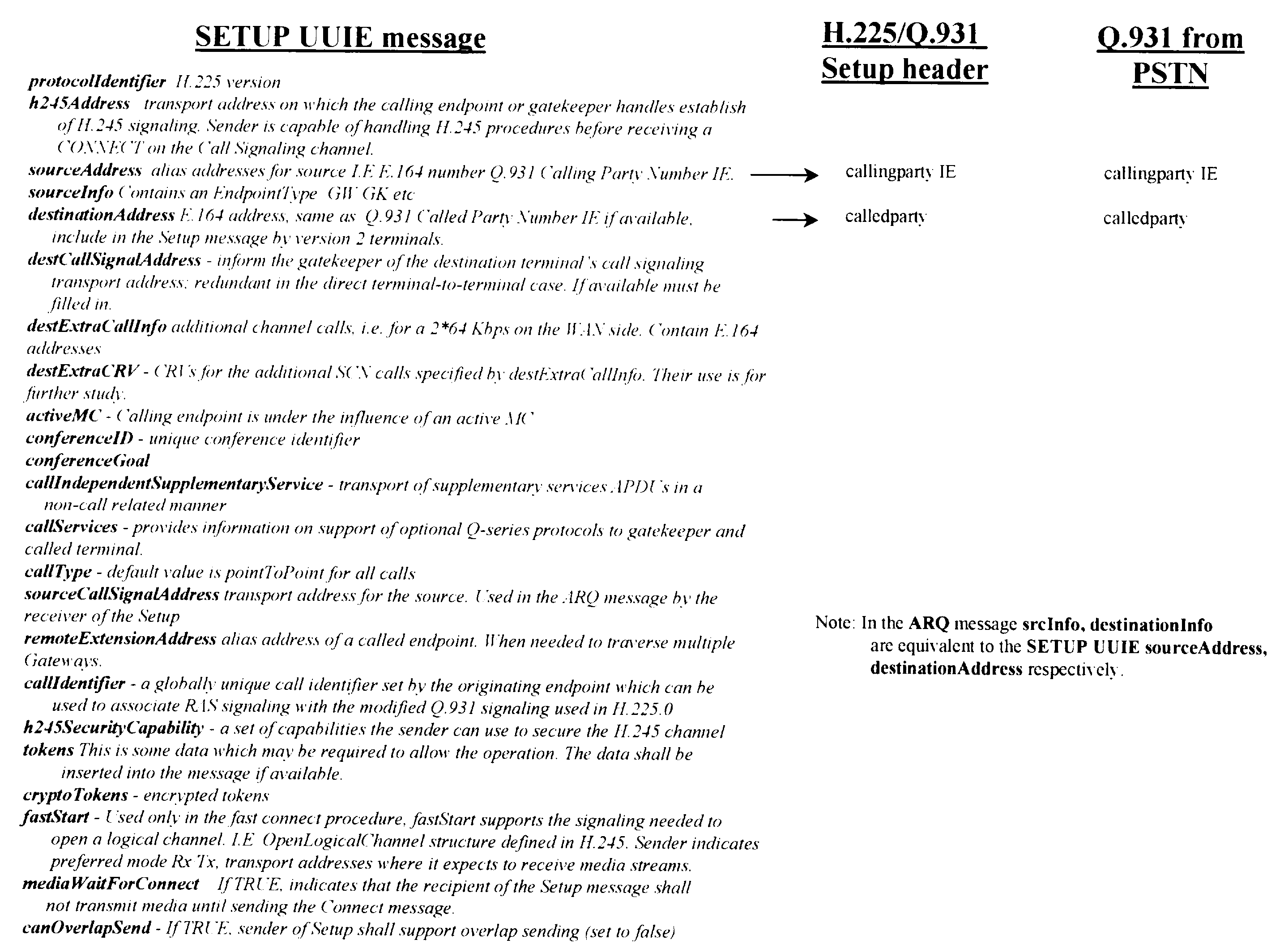

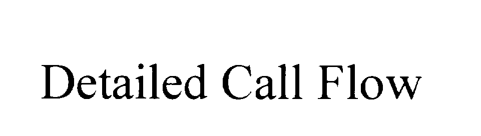

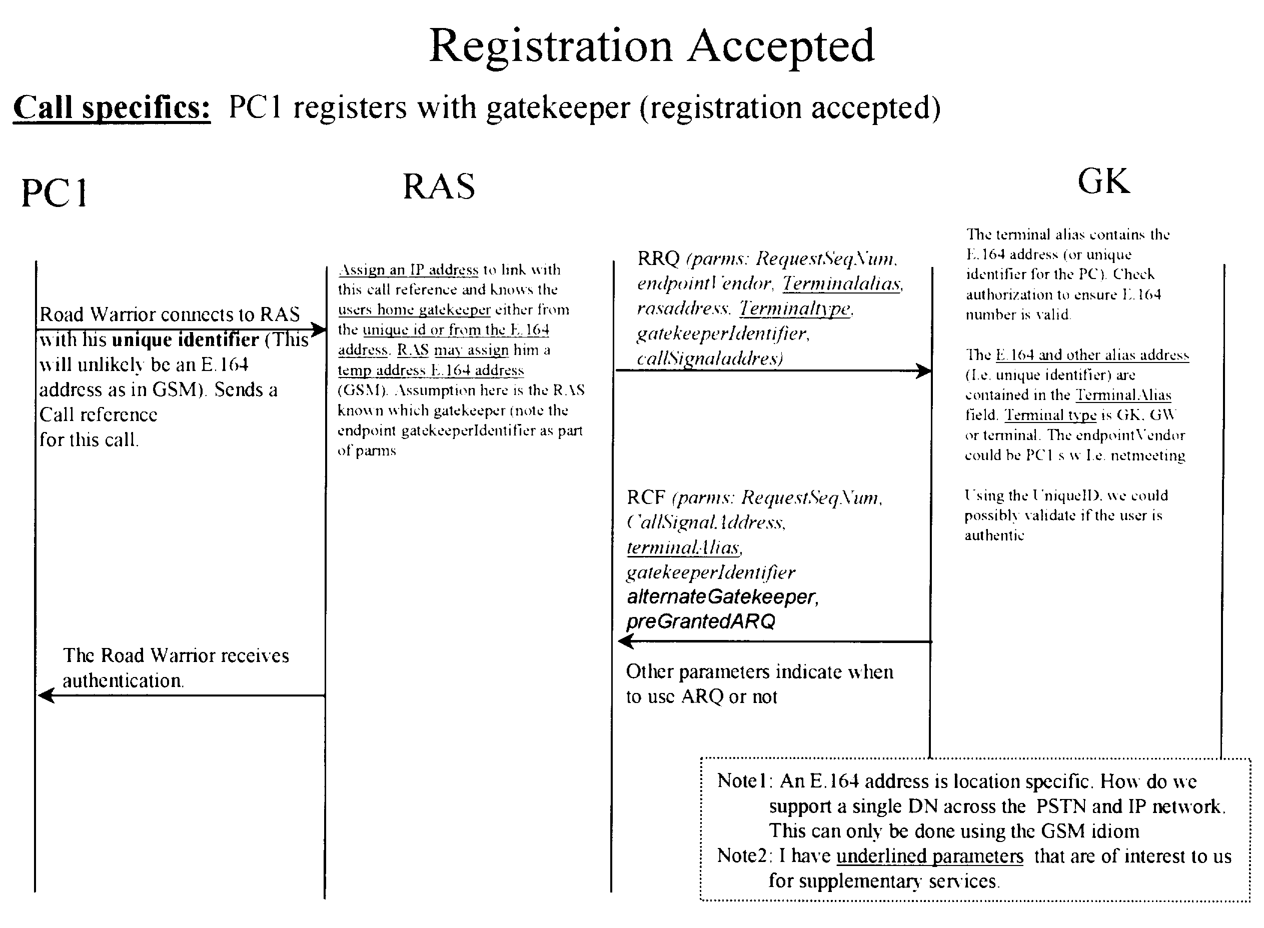

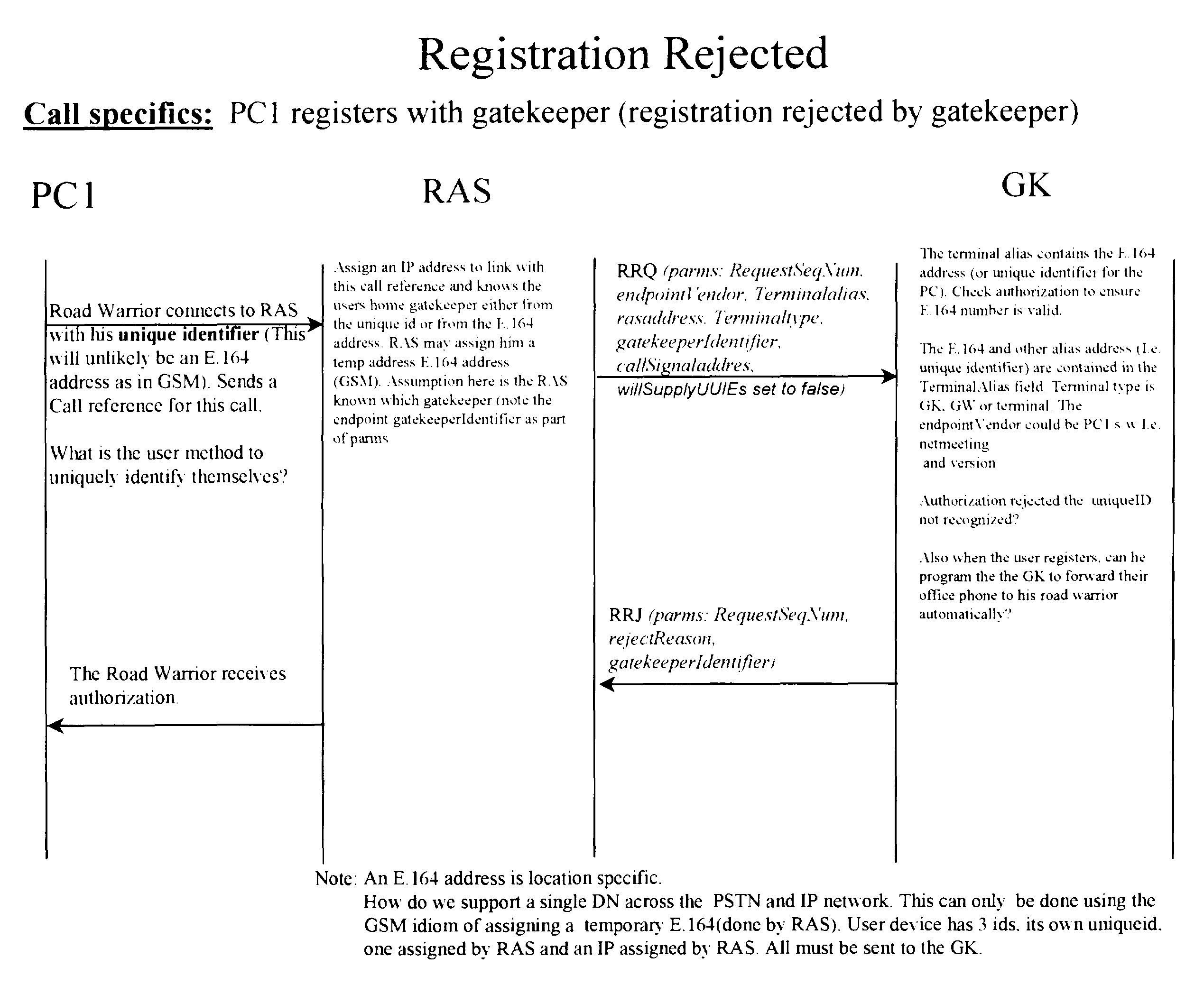

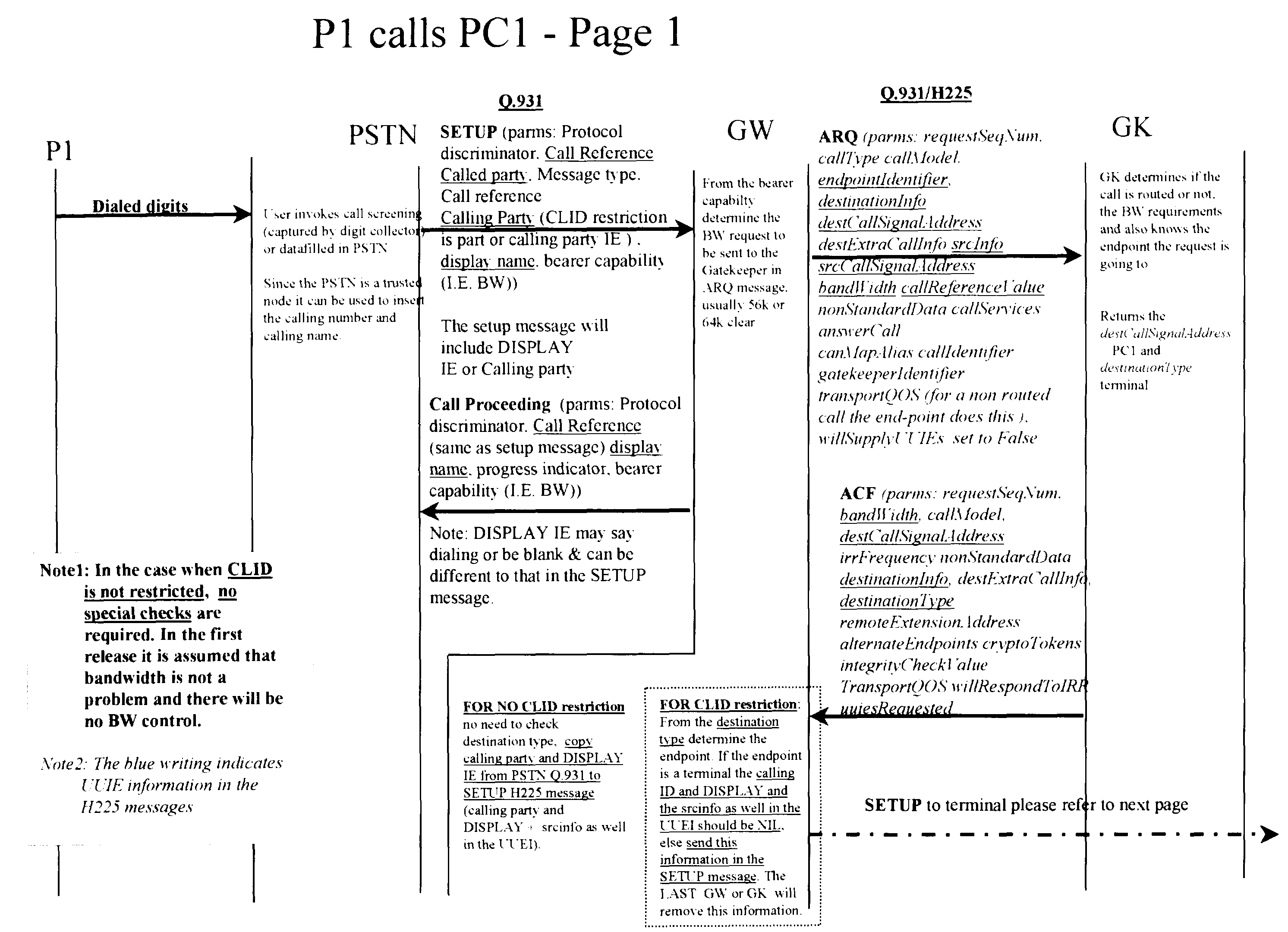

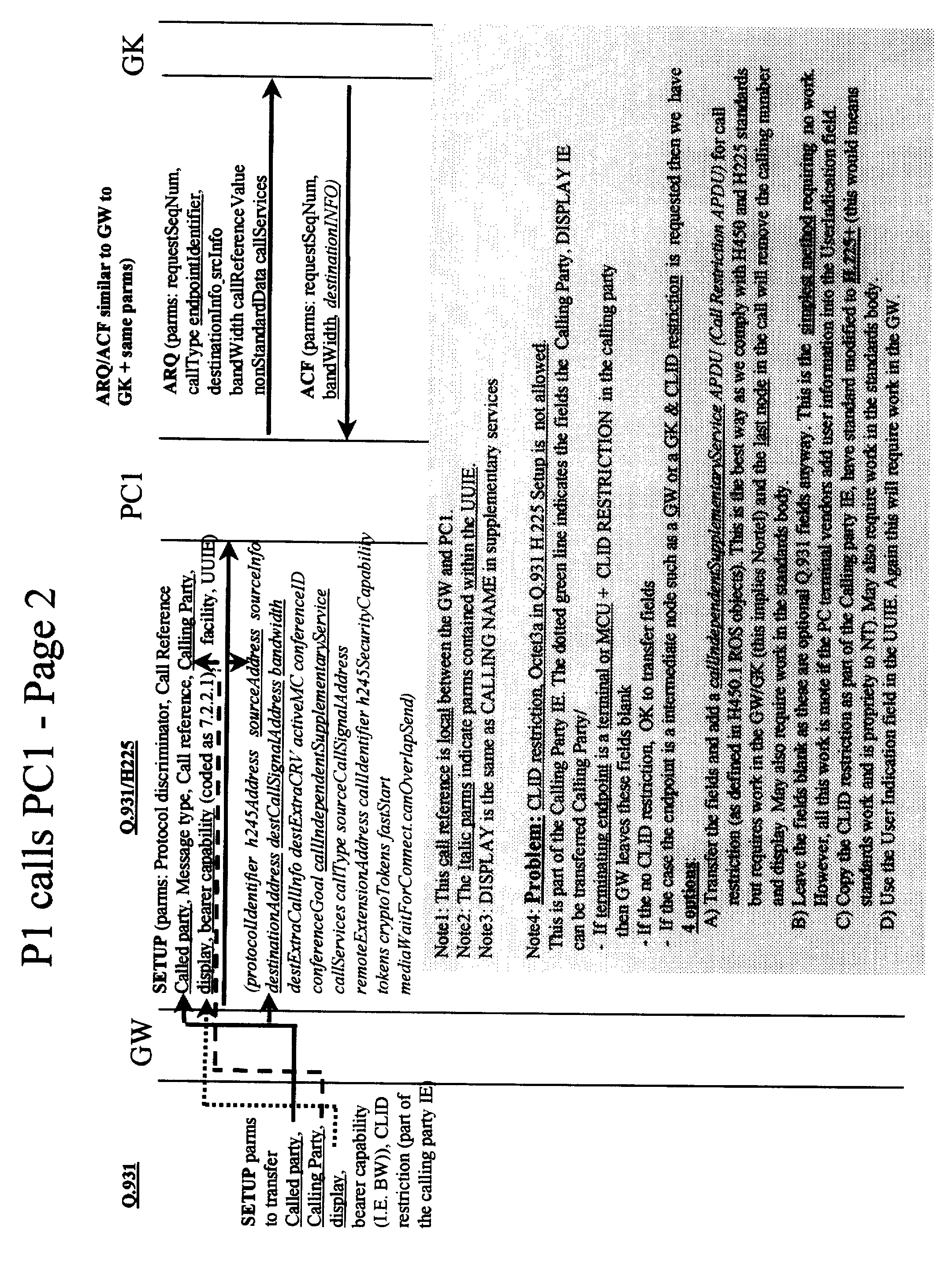

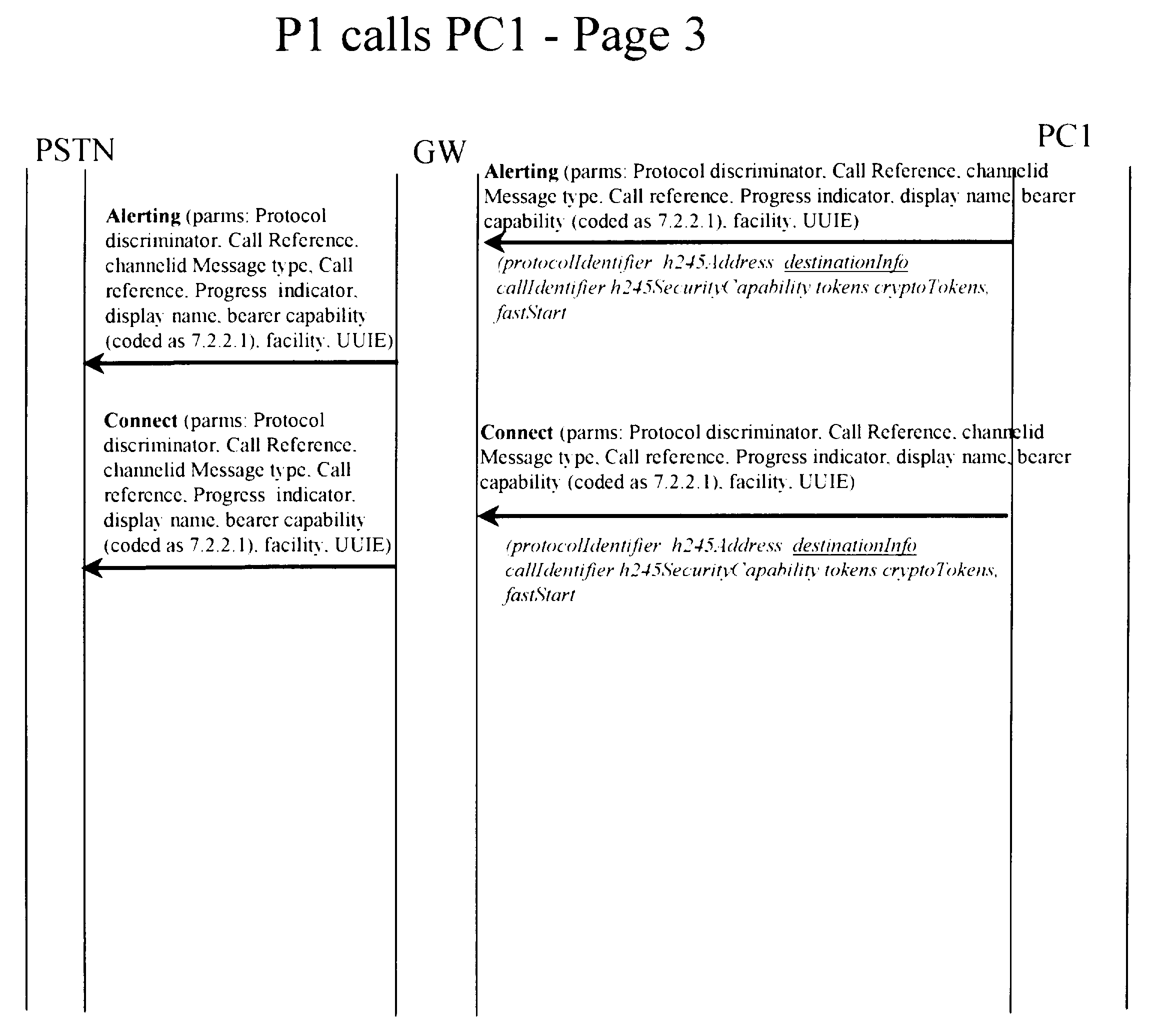

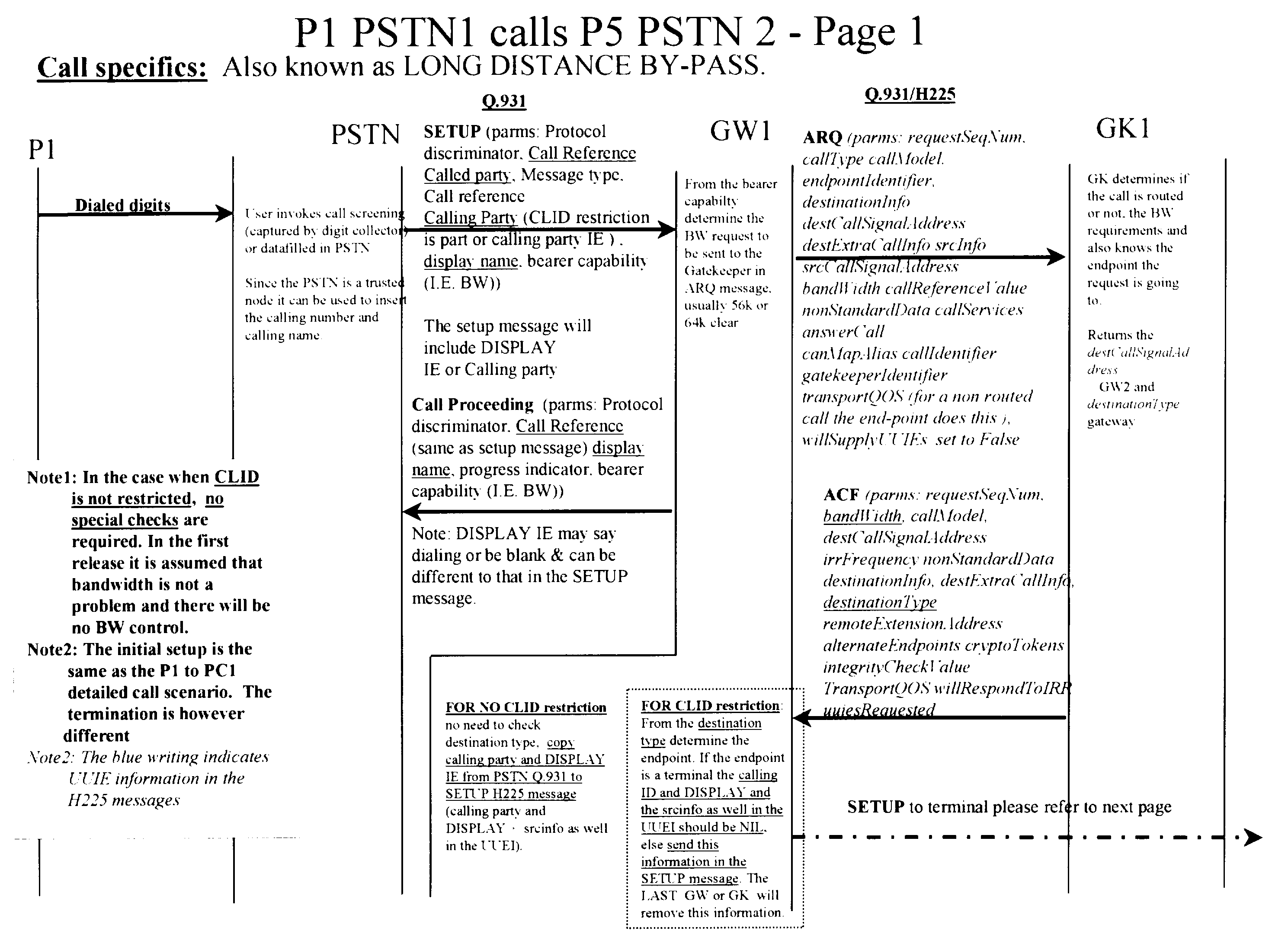

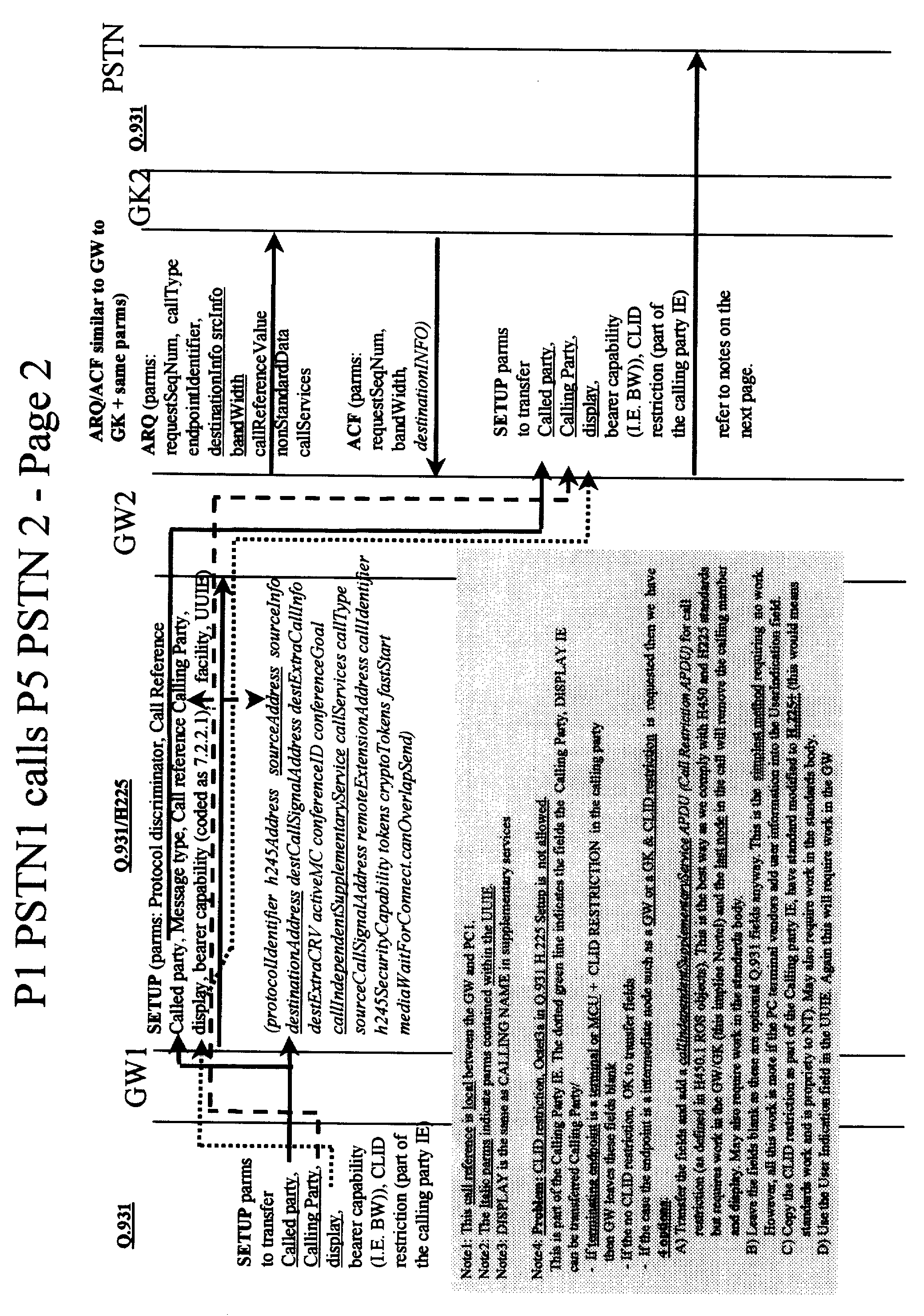

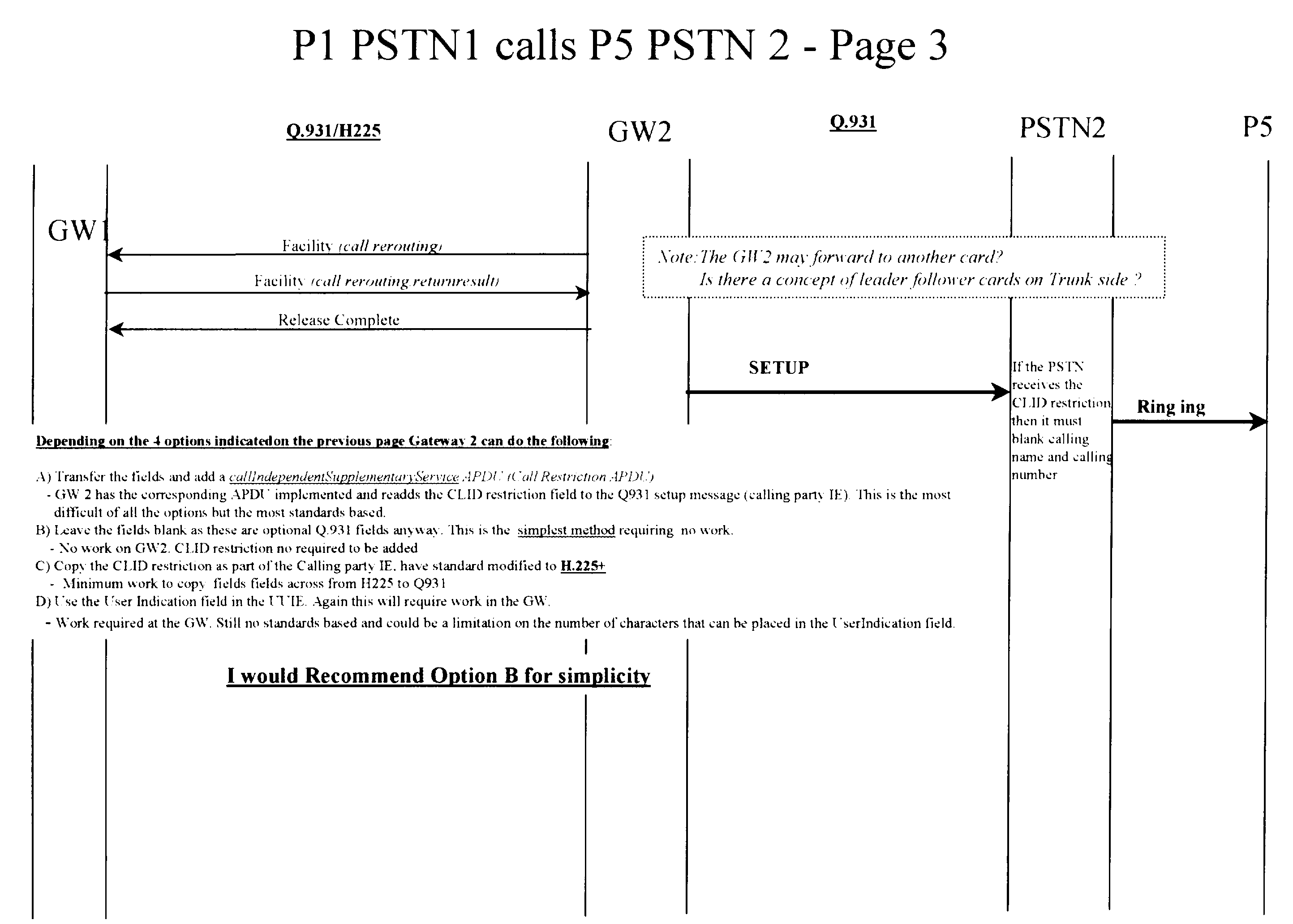

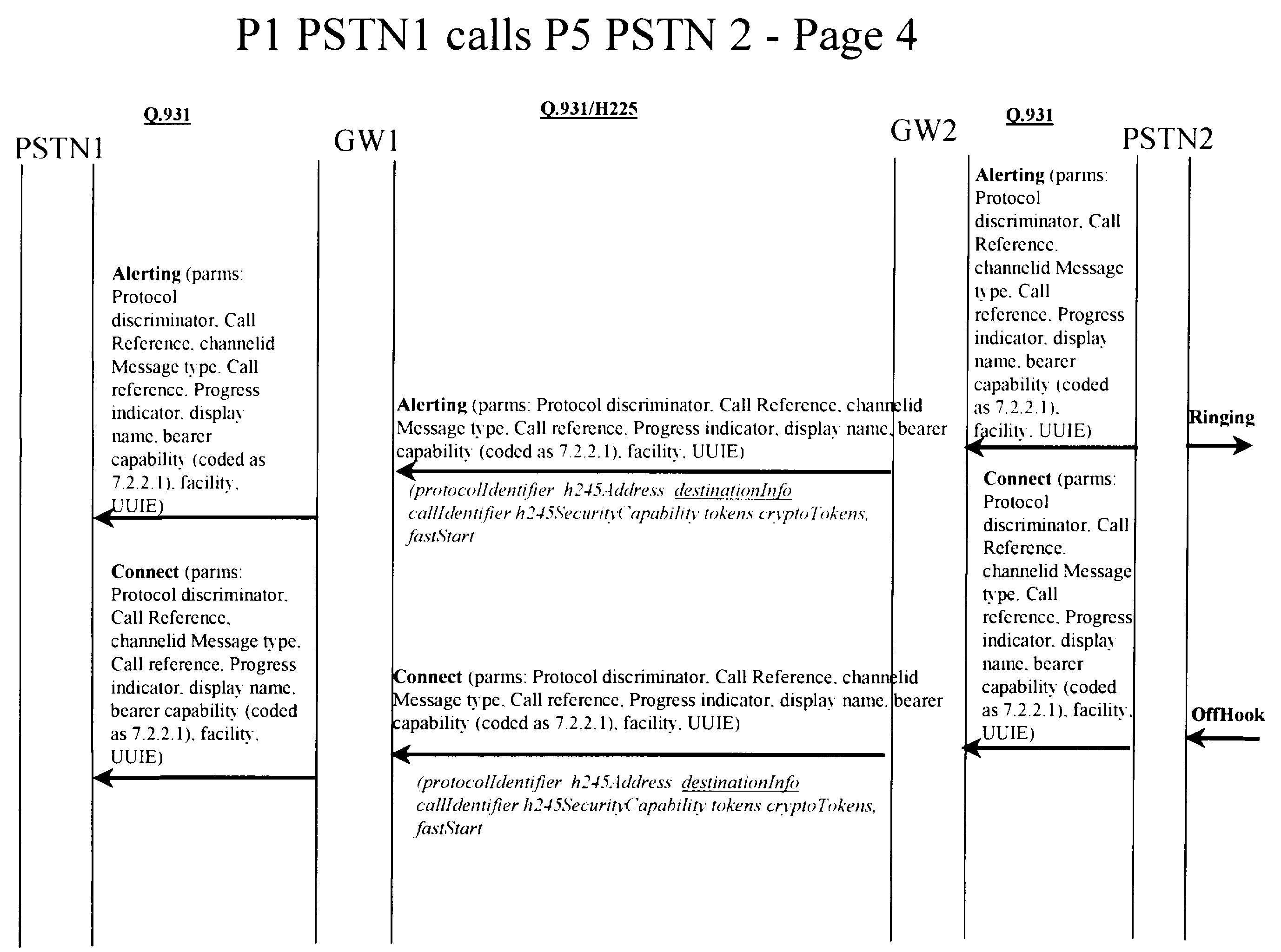

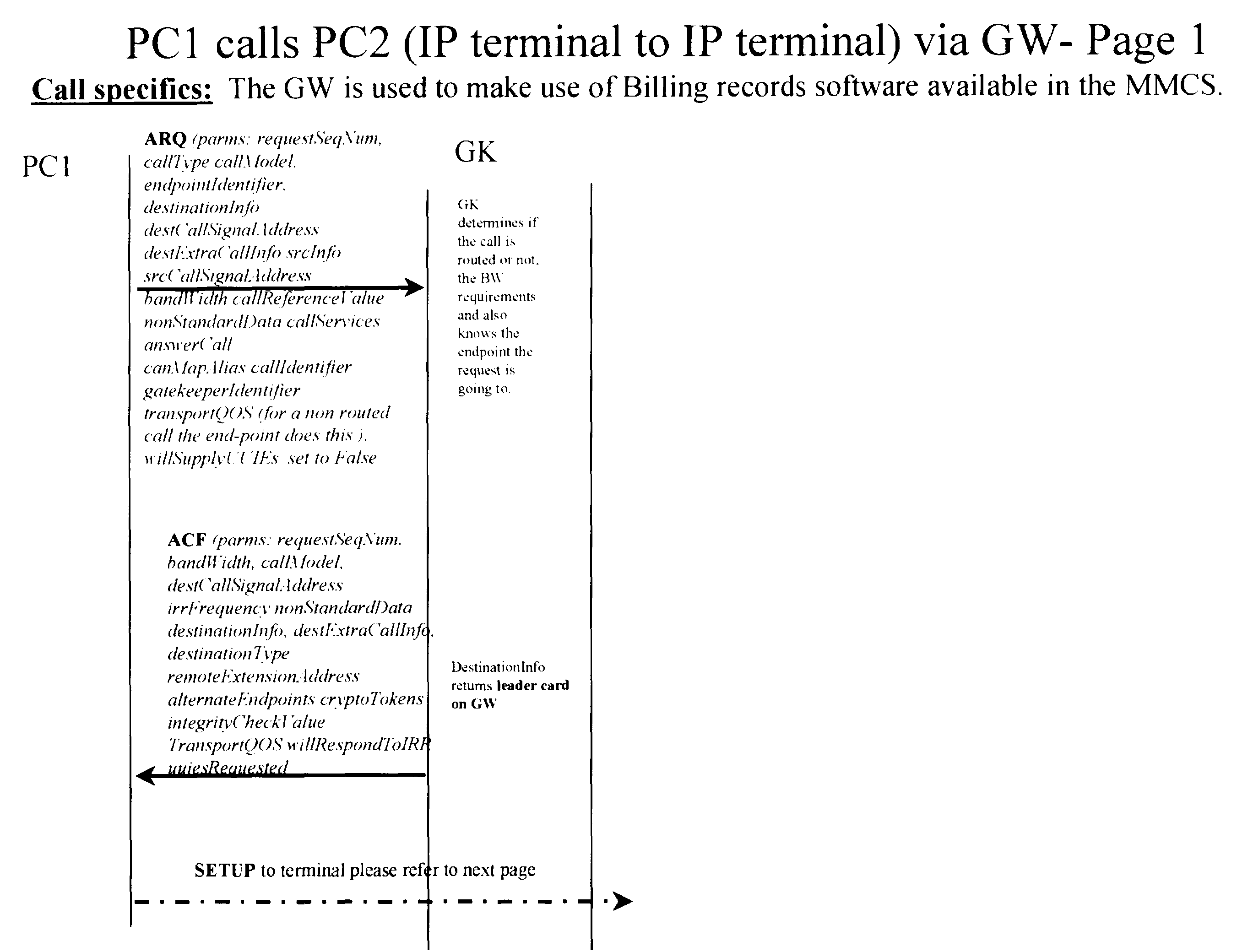

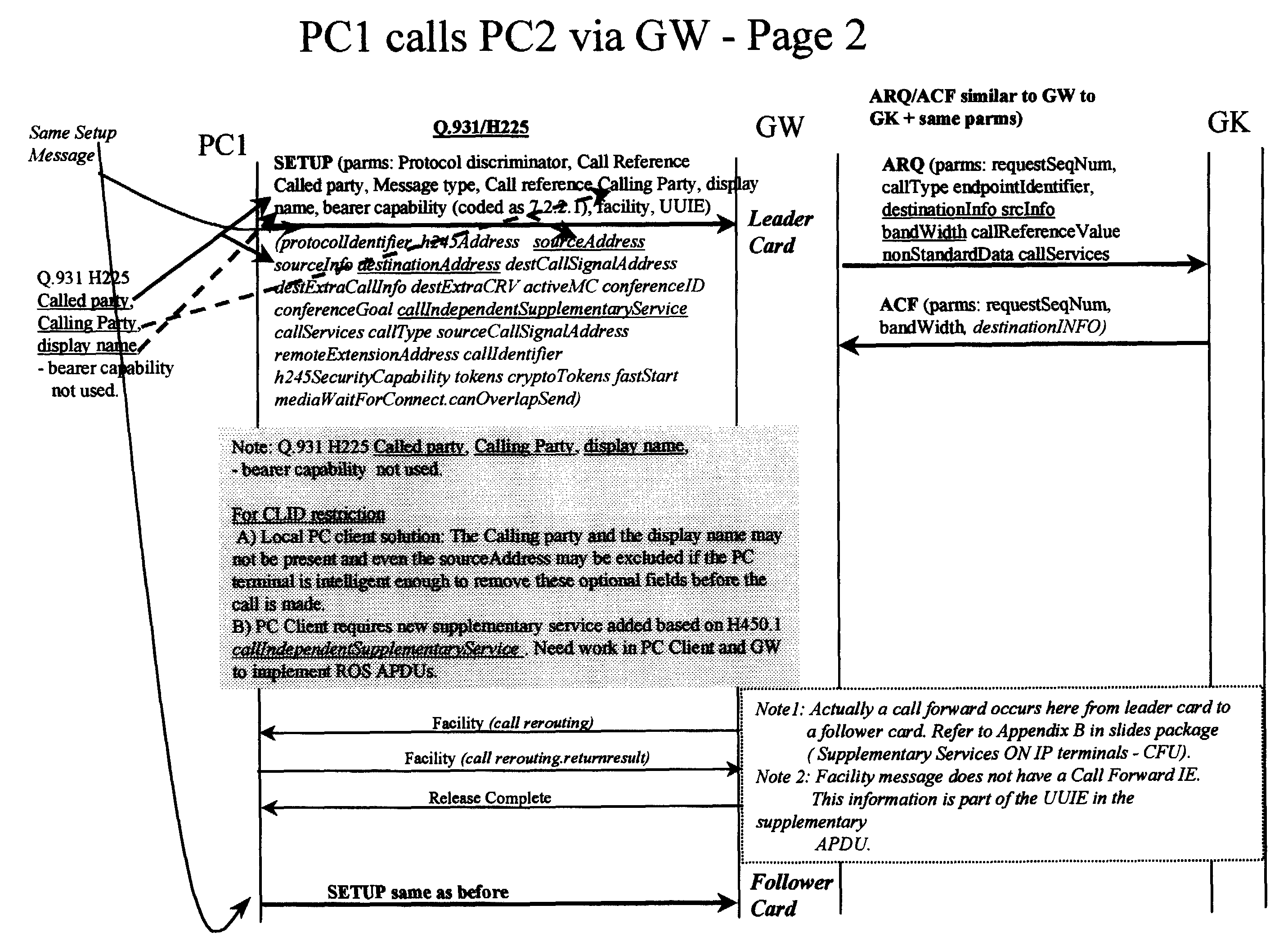

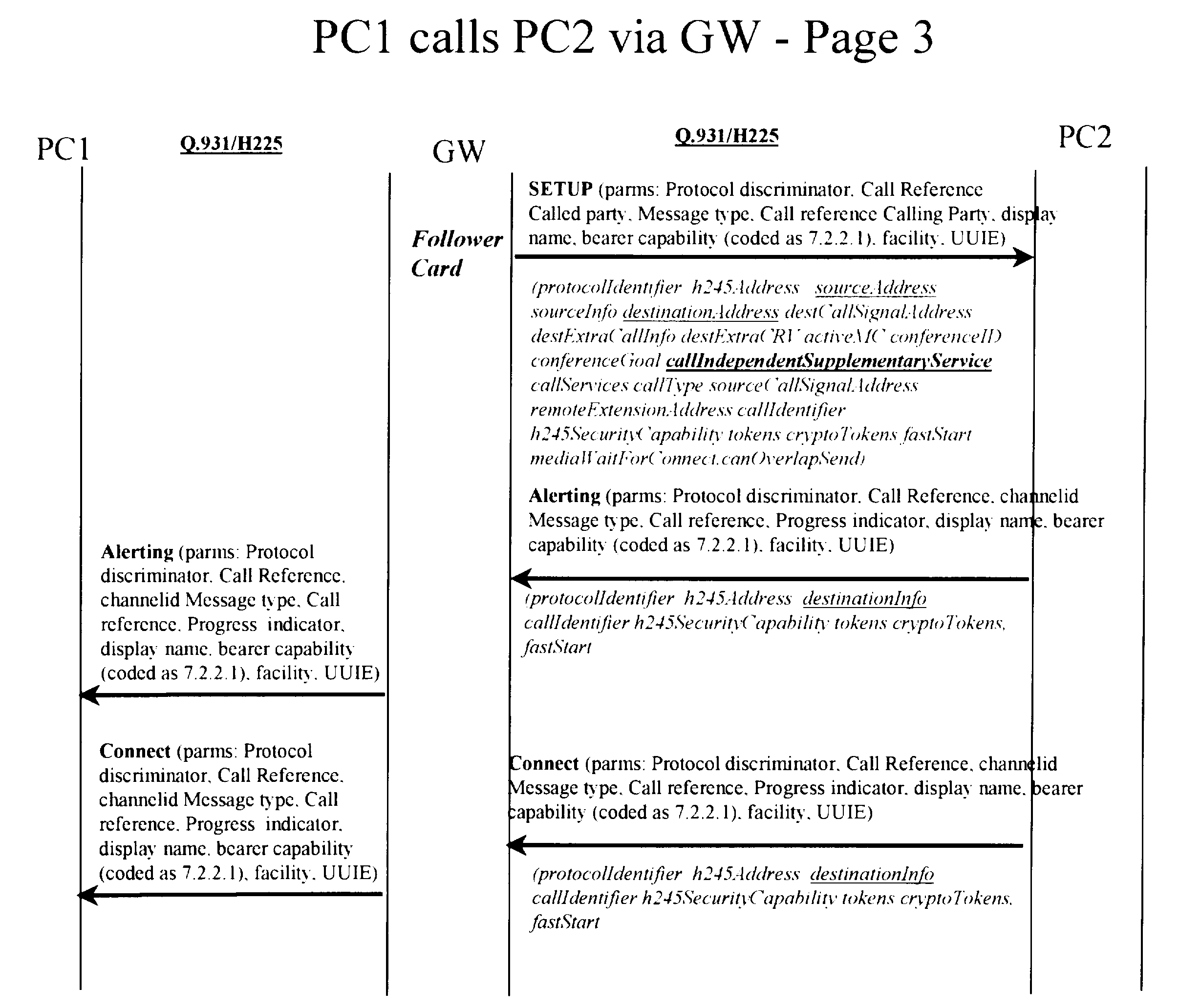

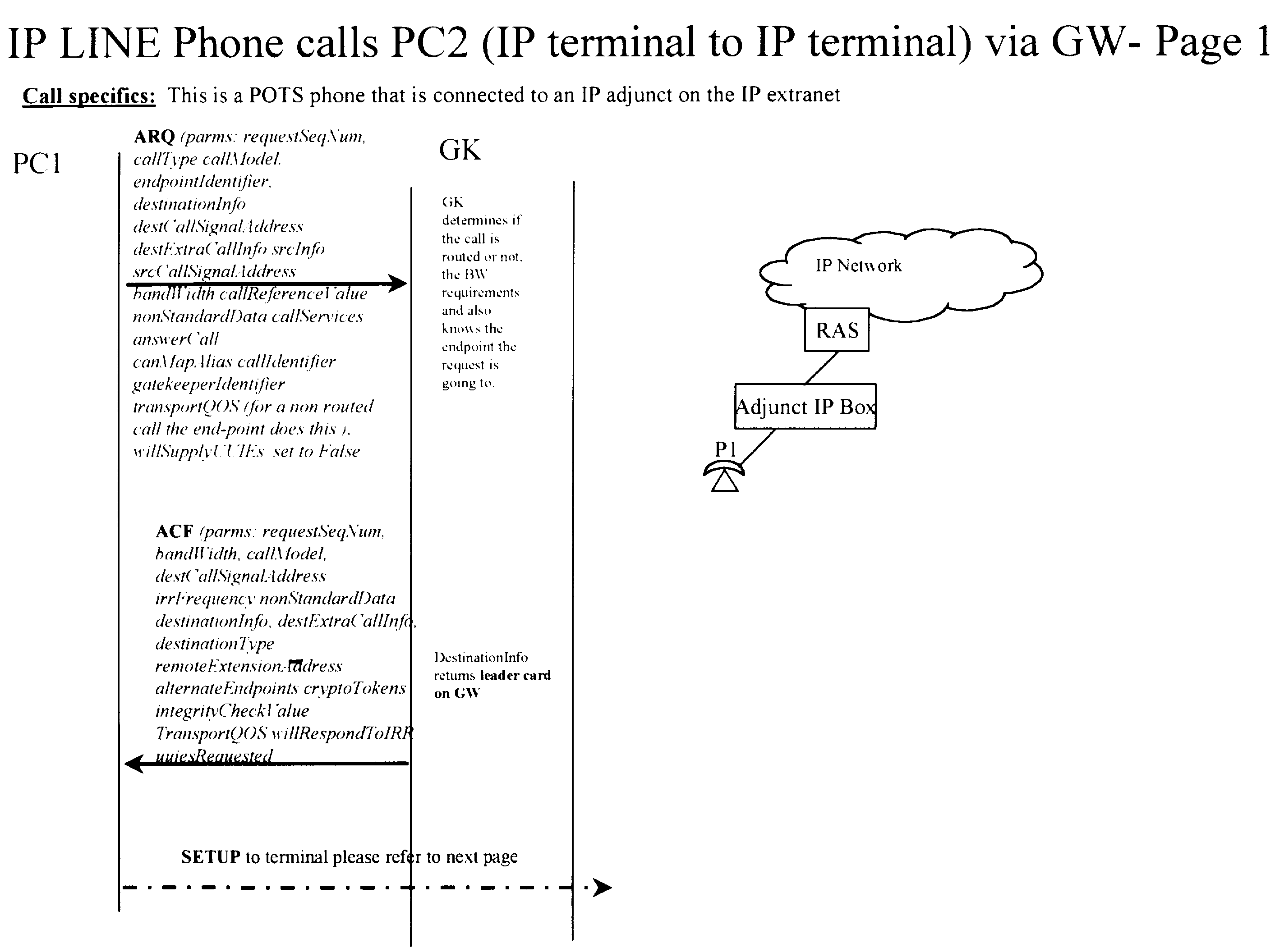

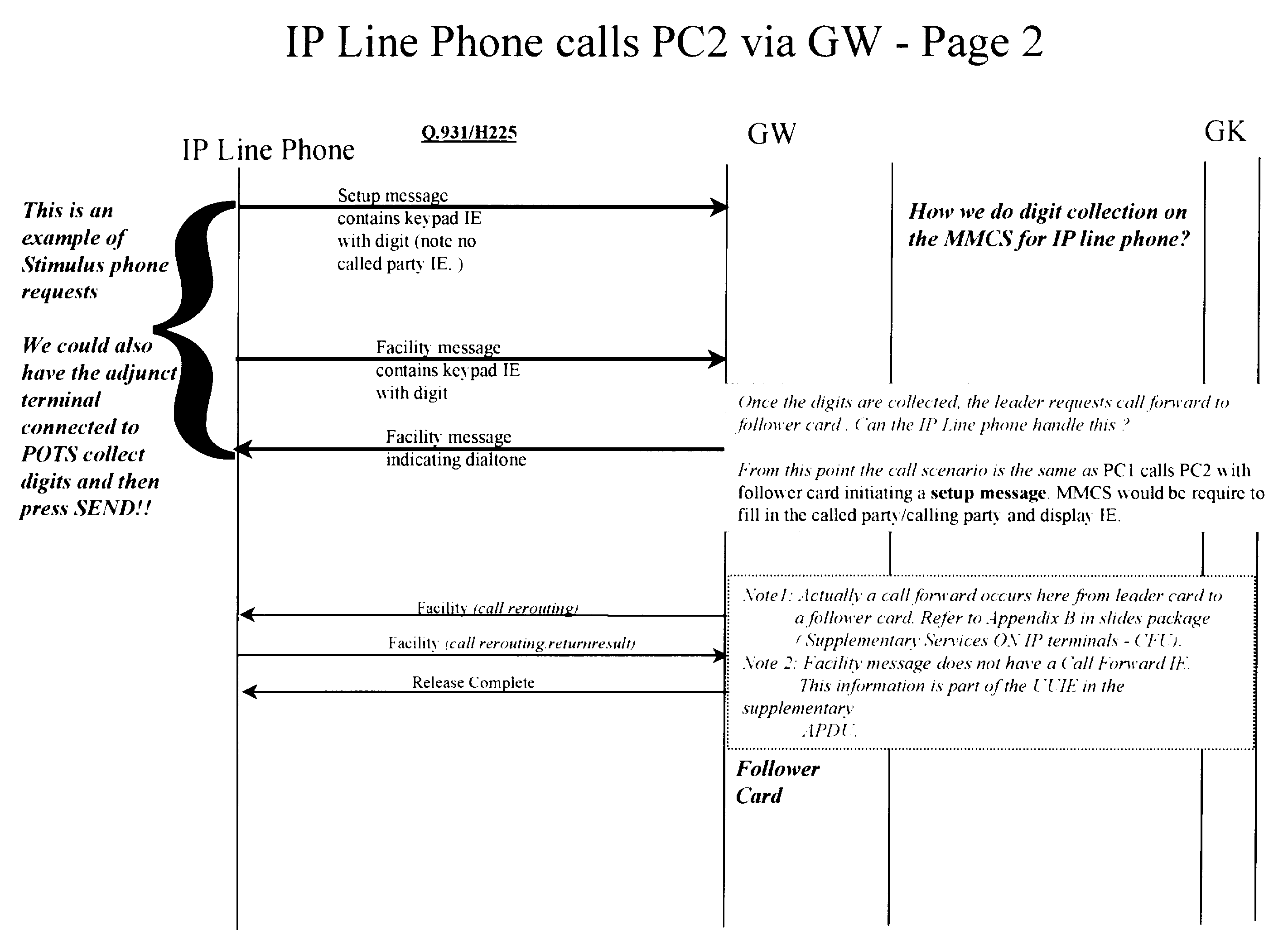

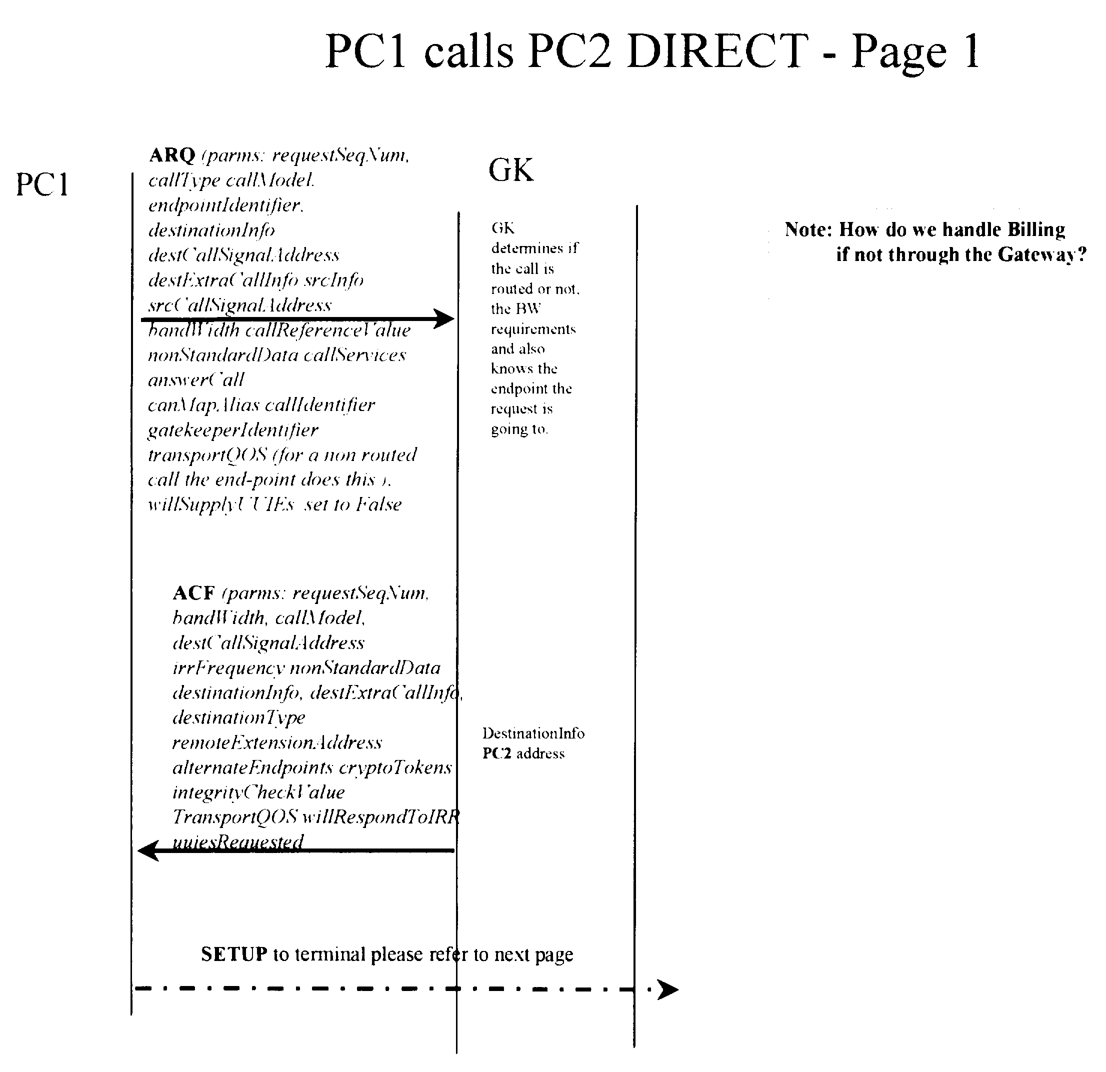

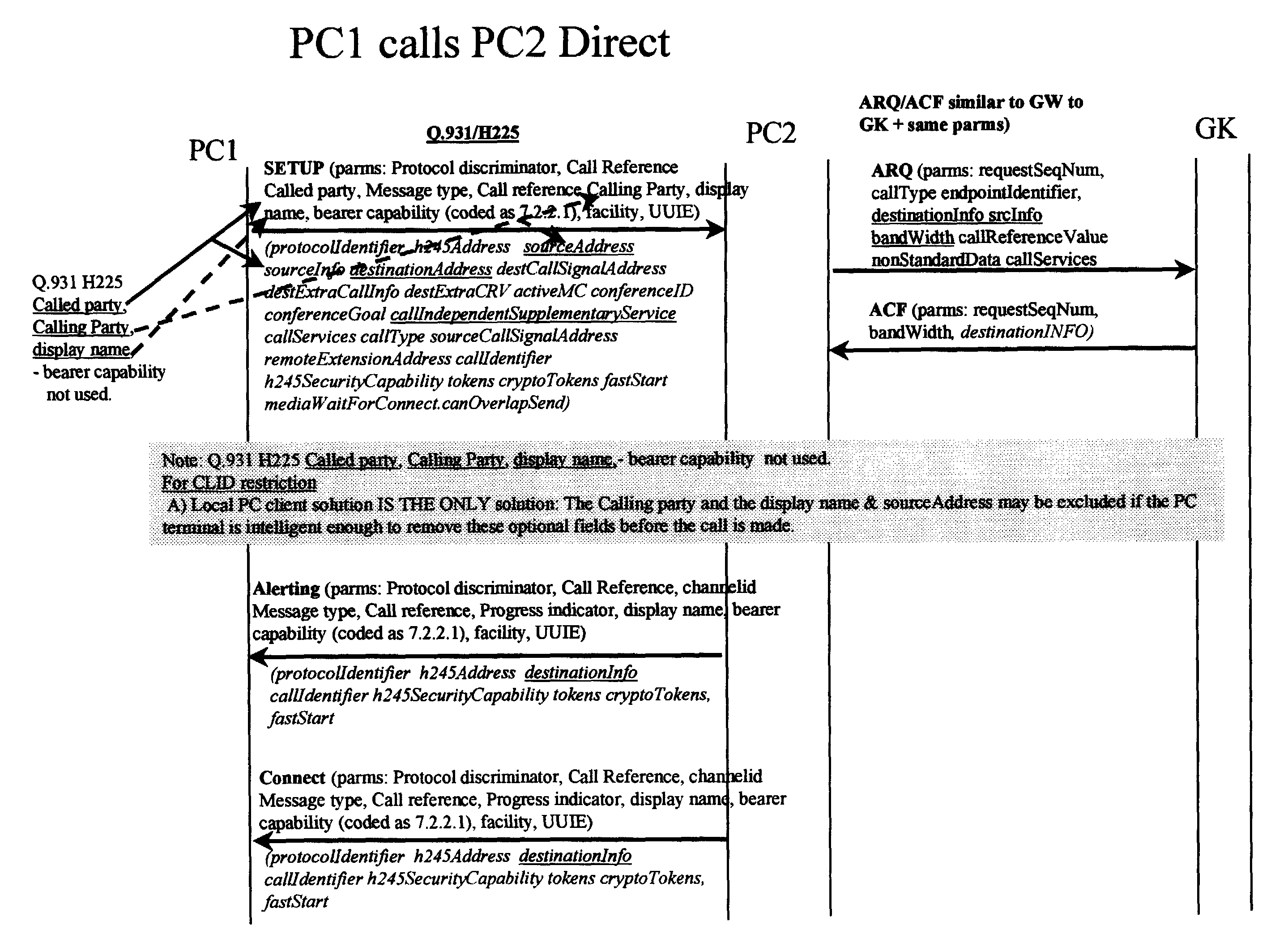

## Claims

1. A gateway for use between between an IP network and another network, the gateway being adapted to handle calls between IP terminal devices connected to the IP network as well as calls between an IP terminal device and a terminal device connected to the other network, the gateway being further adapted to provide at least one supplementary service for calls to or from an IP terminal device.

2. The gateway according to claim 1, wherein the supplementary service is chosen from at least one of:
originating restrictions;
- a terminating restriction;
- call forwarding;
- calling line identification;
- CLID restriction;
- calling name display;
- call transfer.

3. The gateway according to any previous claim, wherein the gateway is adapted to provide the supplementary service on a call between two IP terminal devices and/or to provide the supplementary service on a call between an IP terminal device and a terminal device connected to the other network.

4. The gateway according to any previous claim, wherein the gateway comprises a shared pool of ports on the line side which are usable for a connection to an IP terminal device.

5. The gateway according to any previous claim, wherein the gateway is adapted to dynamically associate an IP terminal device client's subscriber data with a call.

6. The gateway according to any previous claim, wherein the gateway is adapted to perform address resolution for calls to IP terminal devices.

7. The gateway according to any previous claim, wherein the gateway is integrated with a switch.

8. An IP network for connection to another network, the IP network being adapted for handling calls between IP terminal devices connected to the IP network as well as calls between an IP terminal device and a terminal device connected to the other network, the network being further adapted to provide at least one supplementary service for calls to or from an IP terminal device.

9. The IP network according to claim 8, wherein the supplementary service is chosen from at least one of:
originating restrictions;
- a terminating restriction;
- call forwarding;
- calling line identification;
- CLID restriction;
- calling name display;
- call transfer.

10. The IP network according to claim 8 or 9, wherein the network is adapted to provide the supplementary service on a call between two IP terminal devices and/or is adapted to provide the supplementary service on a call between an IP terminal device and a terminal device connected to the other network.

11. The IP network according to any of claims 8 to 10, wherein the network is adapted to dynamically associate an IP terminal device client's subscriber data with a call.

12. The IP network according to any of claims 8 to 11, wherein a voice call between two IP terminal devices without double encoding/decoding of the voice data.

13. The IP network according to any of claims 8 to 12, further comprising a gateway, the gateway being adapted to provide the supplementary service.

14. The IP network according to any of claims 8 to 13, wherein the gateway comprises a shared pool of ports on the line side which are usable for a connection to an IP terminal device.

15. The IP network according to any of claims 8 to 14, wherein the network is adapted to route call control signals for a call between two IP terminal devices through the gateway or the IP network is adapted to route call control signals for a call between two IP terminal devices through the IP network and call signaling though the gateway.

16. A method of operating a gateway between an IP network and another network, the gateway being adapted to handle calls between IP terminal devices connected to the IP network as well as calls between an IP terminal device and a terminal device connected to the other network, the method including the step of providing at least one supplementary service for calls to or from an IP terminal device.

17. The method according to claim 16, wherein the supplementary service is chosen from at least one of:
originating restrictions;
- a terminating restriction;
- call forwarding;
- calling line identification;
- CLID restriction;
- calling name display;
- call transfer.

18. The method according to claim 16 or 17, wherein the supplementary service is provided on a call between two IP terminal devices and/or is provided on a call between an IP terminal device and a terminal device connected to the other network.

19. The method according to any of the claims 16 to 18, further comprising the step of dynamically associating an IP terminal device client's subscriber data with a call.

20. A method of operating an IP network connected to another network, the IP network handling calls between IP terminal devices connected to the IP network as well as calls between an IP terminal device and a terminal device connected to the other network, the method comprising the step of providing at least one supplementary service for calls to or from an IP terminal device.

21. The method according to claim 20, wherein the supplementary service is chosen from at least one of:
originating restrictions;
- a terminating restriction;
- call forwarding;
- calling line identification;
- CLID restriction;
- calling name display;
- call transfer.

22. The method according to claim 20 or 21, further comprising the step of dynamically associating an IP terminal device client's subscriber data with a call.

23. The method according to any of claims 20 to 22, further comprising the step of routing a voice call between two IP terminal devices without double encoding/decoding of the voice data.

24. A gateway between an IP network and another network, the gateway handling calls between IP terminal devices connected to the IP network as well as calls between an IP terminal device and a terminal device connected to the other network, the gateway comprising a shared pool of ports on the line side which are usable for a connection to an IP terminal device.

25. The gateway according to claim 24, wherein the gateway is adpated to dynamically associate an IP terminal device client's subscriber data with a call.

26. A method of operating IP network having a gateway between the IP network and another network, the gateway handling calls between IP terminal devices connected to the IP network as well as calls between an IP terminal device and a terminal device connected to the other network, the method including the steps of:
routing call signaling for a call between two IP terminals though the gateway and routing voice traffic between two IP terminals without pasing via the gateway.

27. An IP network having a gateway between an IP network and another network, the gateway handling calls between IP terminal devices connected to the IP network as well as calls between an IP terminal device and a terminal device connected to the other network, the method including the steps of:
routing call signaling for a call between two IP terminals though the gateway and routing voice traffic between two IP terminals without pasing via the gateway.
